# EUROPEAN PATENT SPECIFICATION

(11) **EP 1 201 059 B1**
(45) Date of publication and mention of the grant of the patent: **12.11.2003**
(21) Application number: 00937953.8
(22) Date of filing: 01.06.2000
(51) Int. Cl.: H04L 12/00

(54) **IMPROVED NETWORK TOPOLOGIES FOR DEADLOCK-FREE ROUTING**
VERBESSERTE NETZWERKTOPOLOGIE FÜR VERKLEMMUNGSFREIE LEITWEGLENKUNG
TOPOLOGIES DE RESEAU AMELIOREES POUR UN ACHEMINEMENT EXEMPT D'IMPASSES

(30) Priority: 02.06.1999 US 323696; 02.06.1999 US 323962; 02.06.1999 US 323963
(43) Date of publication of application: 02.05.2002
(73) Proprietor: Sun Microsystems, Inc., Santa Clara, California 95054 (US)
(72) Inventor: STEELE, Guy, L., Jr., Lexington, MA 02421 (US); HELLER, Steven, K., Acton, MA 01720 (US); CASSIDAY, Daniel, Topsfield, MA 01983 (US); WADE, Jon, Wellesley, MA 02481 (US)
(74) Representative: Beresford, Keith Denis Lewis
(86) International application number: US0014899
(87) International publication number: WO00074307

(56) References cited:
- US-A- 5 170 482
- US-A- 5 721 819
- J. M. JOY, R. D. BERGERON: "The hypercube as a dynamically reconfigurable processor mesh" JOURNAL OF PARALLEL AND DISTRIBUTED COMPUTING 48, no. PC971402, 10 January 1998 (1998-01-10), pages 130-142, XP000739763

## Description

### Field of the Invention

The present invention relates generally to data processing systems and, more particularly, to improved network topologies for implementing deadlock-free routing.

### Background of the Invention

Networks comprise a number of nodes that are interconnected via links. As used herein, the term "node" refers to any device capable of communicating, such as a computer, router, switch, network processor, or symmetric multi-processor. The specific configuration of nodes and links in a network is referred to as the "network topology." "Reconfiguring a network" refers to changing the topology of the network (e.g. adding or removing a node).

Each node routes network traffic by interacting with internal buffers that store packets. Specifically, each of a node's links typically has an associated buffer ("receive buffer") that temporarily stores packets received via the link, and each of a node's links typically has an associated buffer ("send buffer") that temporarily stores packets before they are sent across the link. When a packet is received by a node that is not its destination, the packet arrives in one of the node's receive buffers. The node then determines which link to send the packet over using a routing algorithm. After the appropriate link is selected, the packet is stored in that link's send buffer for transmission. However, sometimes the node at the other end of the selected link is busy; in which case, the receive buffer for the link may be full. Thus, the packet cannot be sent and remains in the send buffer until the other node's receive buffer is emptied. As a result, network traffic can form congestion which can lead to deadlock.

Deadlock occurs when a cycle of multi-hop packets are each waiting on a busy node on the next hop. A "multi-hop" packet refers to a packet that is routed through at least one node before reaching its destination. A deadlock may occur, for example, in a network of three nodes (node 1, node 2 and node 3), where node 1 is waiting to send a multi-hop packet to node 2 (which is not the packet's destination), where node 2 is waiting to send a multi-hop packet to node 3 (which is not the packet's destination), and where node 3 is waiting to send a multi-hop packet to node 1 (which is not the packet's destination). Since each node is waiting on the other, a stalement or deadlock occurs, and these nodes are rendered nonoperational.

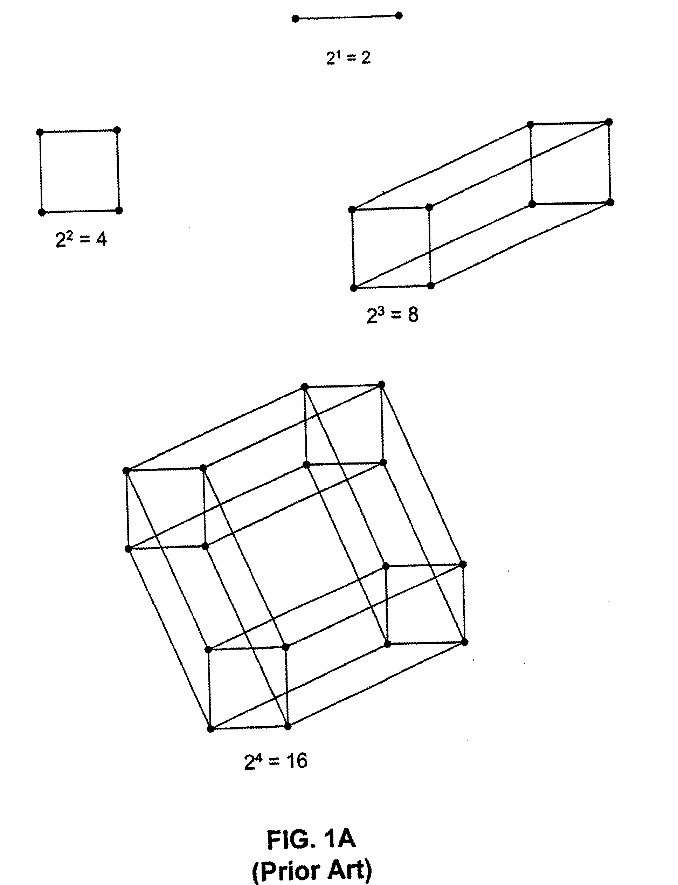

To prevent deadlock from occurring, some networks have been developed that route traffic using predefined calculations. One family of networks that routes traffic in this way includes the hypercube networks depicted in Fig. 1A. The hypercube family of networks are configured according to a predefined pattern. The hypercube networks accommodate only networks with a number of nodes that can be expressed as a power of 2. Accordingly, Fig. 1A depicts the hypercube networks having 2, 4, 8, and 16 nodes. The pattern that the hypercube networks follow is apparent from an examination of the different topologies.

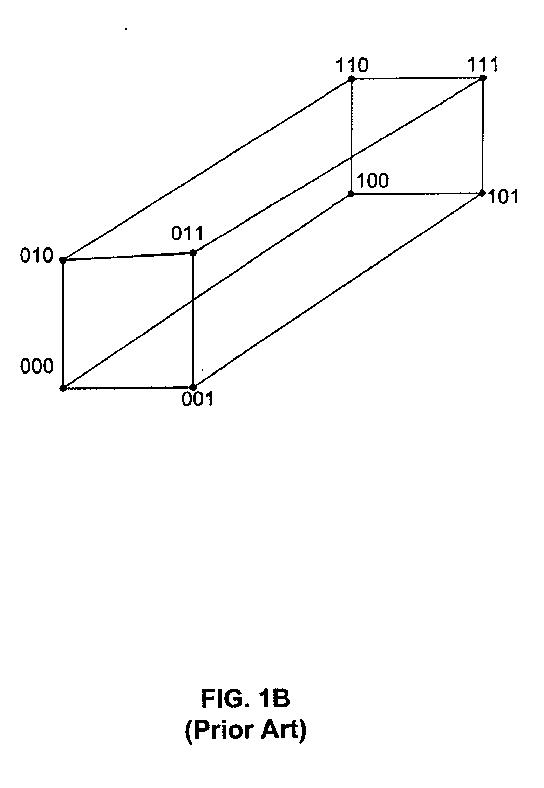

To prevent deadlock in the hybercube networks, routing is performed using predefined calculations. For example, Fig. 1B depicts an example of a hypercube network of 8 nodes that performs this type of routing. Each node of the network is associated with a binary number (e.g., 010). When routing a packet through the network, each node performs a calculation to determine to which node to send the packet. According to this calculation, the number of the current node is compared to the number of the destination node of the packet to find the most significant bit that differs. The packet is then forwarded to a node whose number differs from the number of the current node in exactly that bit position. For example, node 000 will send a packet destined for node 111 to node 100 instead of 010 or 001, because the third bit position (from the right) is the most significant. This calculation is performed at each node until the destination node is reached. Use of this calculation on each node prevents deadlock by preventing a cycle from occurring in the network. That is, there are no sequences of multi-hop packets that form a cycle. However, configuring the networks using a predefined pattern and using the predefined calculations to perform routing leads to inefficient routing, because little attention is given to optimizing either the network topology or the routing to reduce communications overhead. For example, traffic routed from node 000 to node 111 must take 3 hops: starting at 000 and traveling to 100, to 110, and then to 111. It is thus desirable to improve network configuration and routing to reduce communication overhead.

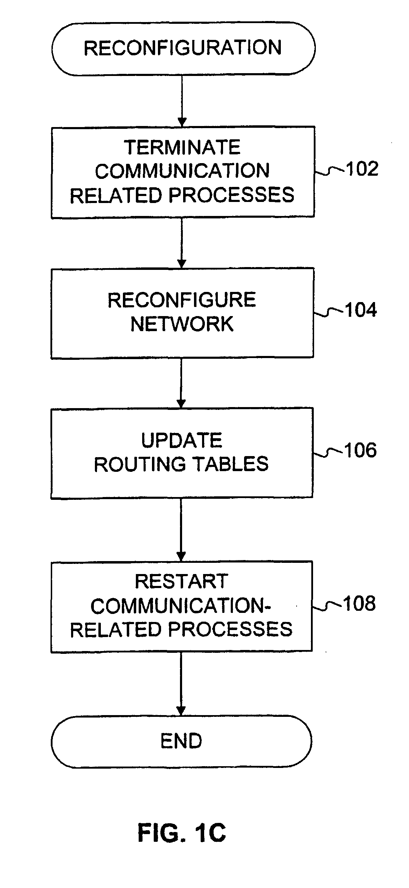

In conventional static-routing networks, reconfiguring a network requires four steps as shown in Fig. 1C. A static-routing network uses statically-defined routing tables to perform routing. The routing is considered to be static because if the network is reconfigured, all of the routing tables need to be manually updated to account for the reconfiguration. For example, if the reconfiguration involves removing a node, the routing tables need to be updated to avoid routing through this node. And if the reconfiguration involves adding a node, the routing tables need to be updated to route to the new node.

Thus for example US-A-5721819 discloses a system and method for performing a distributed programmable routing to route messages between any two nodes in a multi-processor communications network. Specifically US-A-5721819 discloses a device encoded with a routing table data structure for use in routing traffic in a network of nodes, the routing table structure comprising an entry indicating a next node for sending a received packet in such a manner as to avoid deadlock. The software programmable routing tables are distributed throughout the network to make a routing determination for each packet as it enters the node. The router tables in each router are software-programmable. The router tables are first programmed when the system is initially configured and powered up. The tables can easily be reprogrammed to account for changes in the network configuration, additions to the network.

When reconfiguring a static-routing network such as that disclosed in US-A-5721819, the network administrator first terminates all processes communicating via the network (step 102). Next, the system administrator reconfigures the network by adding or removing a node and by performing the appropriate recabling (step 104). Then, the network administrator updates the routing tables in the network to account for the reconfiguration (e.g., avoid the removed node) (step 106) and, finally, restarts the processes that were terminated (step 108). By reconfiguring networks in this manner, the networks are rendered nonoperational for a significant amount of time, such as a few hours. It is thus desirable to improve how networks are reconfigured.

### Summary of the Invention

In accordance with methods and systems consistent with the present invention, an improved deadlock-free routing system is provided to a family of network topologies where both the configuration of the networks and the routings are designed to optimize performance. Network topologies have also been selected based on the ease with which the network can be reconfigured, including adding nodes and removing nodes. As a result, the network topologies in accordance with methods and systems consistent with the present invention do not follow a rigid, predefined pattern; rather, these topologies have been selected to improve network performance and facilitate reconfiguration. By using an improved technique for reconfiguring networks, a network administrator can reconfigure their network while it remains operational. As a result, users can continue to utilize the network during reconfiguration. In this system, each network utilizes static routing tables that perform deadlock-free routing in an optimized manner to reduce the amount of communication overhead when routing traffic. Specifically, the routings in accordance with methods and systems consistent with the present invention require no more than two hops for networks up to a size of 16 nodes. As a result, the deadlock-free routing provided in accordance with methods and systems consistent with the present invention incurs less communications overhead than some conventional systems while still avoiding deadlock.

In accordance with methods consistent with the present invention, a method is provided in a network containing nodes. According to this method, a first of the nodes receives a packet from a second of the nodes, accesses a statically-defined routing table to determine a third of the nodes to send the packet to such that a deadlock is avoided, and sends the packet to the third node.

In accordance with systems consistent with the present invention, a computer-readable memory device encoded with a routing table data structure for use in routing traffic in the network of nodes is provided. The routing table data structure comprises an entry indicating a next node for sending a received packet in such a manner as to avoid deadlock.

In accordance with systems consistent with the present invention, a distributed system with nodes and links interconnecting the nodes is provided. Each node contains a static routing table for use in routing a packet received from a first of the nodes to a second of the nodes to avoid deadlock.

In accordance with methods consistent with the present invention, a method is provided in a distributed system containing a network with nodes, where each of the nodes has ports. This method configures the network to maximize port usage, renders the network operational such that the nodes are capable of communicating via the network using static routing, and reconfigures the network while the network remains operational.

### Brief Description of the Drawings

The accompanying drawings, which are incorporated in and constitute a part of this specification, illustrate an implementation of the invention and, together with the description, serve to explain the advantages and principles of the invention. In the drawings,
Fig. 1A depicts the hypercube family of networks;
Fig. 1B depicts the hypercube network with eight nodes from Fig. 1A where its nodes are numbered as part of its routing algorithm;
Fig. 1C depicts a flowchart of the steps performed by a conventional system during network reconfiguration;
Fig. 2 depicts a data processing system suitable for use with methods and systems consistent with the present invention;
Fig. 3 depicts a more detailed diagram of the chassis of Fig. 2;
Fig. 4 depicts a more detailed diagram of a routing card depicted in Fig. 3;
Fig. 5 depicts a network topology for a network of 7 nodes in accordance with methods and systems consistent with the present invention;
Fig. 6 depicts a network topology for a network of 8 nodes in accordance with methods and systems consistent with the present invention;
Fig. 7 depicts a network topology for a network of 9 nodes in accordance with methods and systems consistent with the present invention;
Fig. 8 depicts a network topology for a network of 10 nodes in accordance with methods and systems consistent with the present invention;
Fig. 9 depicts a network topology for a network of 11 nodes in accordance with methods and systems consistent with the present invention;
Fig. 10 depicts a network topology for a network of 12 nodes in accordance with methods and systems consistent with the present invention;
Fig. 11 depicts a network topology for a network of 13 nodes in accordance with methods and systems consistent with the present invention;
Fig. 12 depicts a network topology for a network of 14 nodes in accordance with methods and systems consistent with the present invention;
Fig. 13 depicts a network topology for a network of 15 nodes in accordance with methods and systems consistent with the present invention; and
Fig. 14 depicts a network topology for a network of 16 nodes in accordance with methods and systems consistent with the present invention.
Fig. 15 depicts a flowchart of the steps performed when reconfiguring one of the networks depicted in Figs. 5-14.

### Detailed Description

In accordance with methods and systems consistent with the present invention, an improved technique for deadlock-free routing is provided. According to this technique, preconfigured routing tables are used to optimize routing in a network while avoiding a deadlock. These routing tables have been empirically selected to reduce communications overhead while still preventing deadlock.

These routing tables are provided in a family of network topologies which have been selected to facilitate network performance. These network topologies are discussed below. In addition to being selected for network performance characteristics, these network topologies have been selected to facilitate reconfiguration, which is also discussed below.

In accordance with methods and systems consistent with the present invention, improved network topologies are provided that seek to improve network performance and facilitate network reconfiguration. These network topologies have been selected based on various network performance characteristics like throughput, thus increasing the performance of the network. Additionally, these network topologies are selected to facilitate the addition (upgrade) or removal (downgrade) of one or more nodes. In most of the topologies, this reconfiguration requires a minimal amount of recabling. Moreover, the reconfiguration occurs in a manner such that the network remains operational during the reconfiguration. Thus, network topologies in accordance with methods and systems consistent with the present invention typically perform better than conventional network configurations and are more easily upgradable and downgradable.

The network topologies in accordance with methods and systems consistent with the present invention are selected based upon a number of network performance characteristics including diameter, symmetry, bisection bandwidth, and path length. The "diameter" of a network refers to the longest path between any two pairs of nodes. For example, the diameter of the hypercube topology for a network of eight devices (shown in Fig. 1A) is three, because each node can be reached from any other node by traversing three links at most. The network topologies in accordance with methods and systems consistent with the present invention have a diameter of two, so that in all of the topologies described below, two links at most need to be traversed when communicating between any two nodes. Such a low diameter significantly reduces communications overhead by reducing the number of links traversed, thus providing increased throughput.

The "symmetry" of a network refers to both node symmetry and edge symmetry. A network is node symmetric when for each pair of nodes there is an automorphism of the network that maps the first node to the second node. An "automorphism" refers to a permutation of the nodes that preserves the link or edge relationships. A network is edge symmetric when for each pair of edges there is an automorphism of the network that maps the first edge to the second edge. A network that is both node and edge symmetric is typically well load-balanced. Wherever feasible, the network topologies in accordance with methods and systems consistent with the present invention are both node and edge symmetric.

"Bisection bandwidth" refers to the minimum bandwidth for all possible partitions into two equal-sized groups of nodes. The bisection bandwidth for a network provides an indication of whether the network contains bottlenecks. For example, consider the following network: 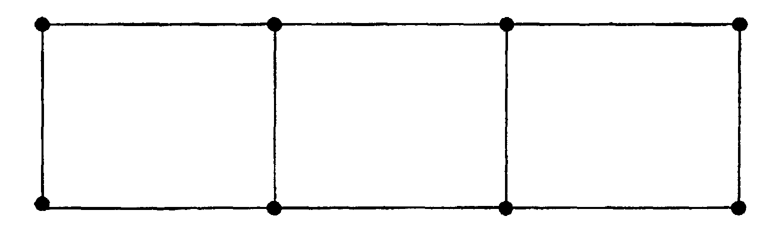 This network can be formed into two groups of equal size by dividing it vertically as shown below: 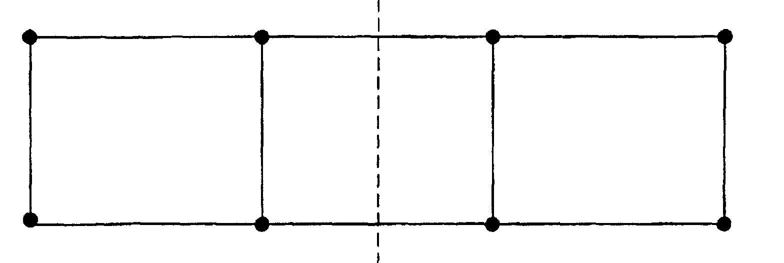 Given this division, the bandwidth is two, indicating the number of links that cross the group boundary. This network can also be formed into two groups of equal size by dividing it horizontally as shown below:

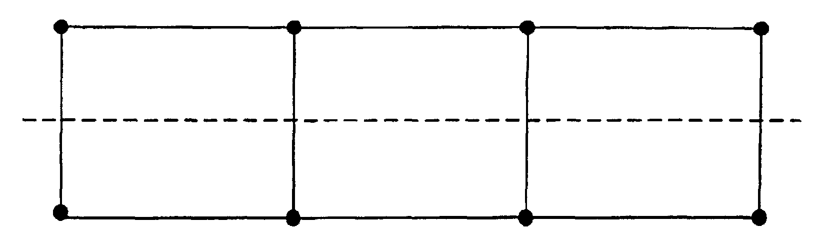

Dividing the network in this way renders a bandwidth of four because four links cross the group boundary. Given these calculations, to determine the bisection bandwidth for this network, the minimum bandwidth for all groupings of equal size is determined. In this example, the bisection bandwidth is two. The network topologies in accordance with methods and systems consistent with the present invention have been selected to maximize their bisection bandwidth.

The "path length" refers to the average number of links that must be traversed between any two nodes. As such, the path length for a network indicates the amount of communication overhead associated with a communication. The network topologies in accordance with methods and systems consistent with the present invention have low path lengths ranging from 1.19 to 1.67, indicating that a low level of communications overhead is incurred.

### Implementation Details

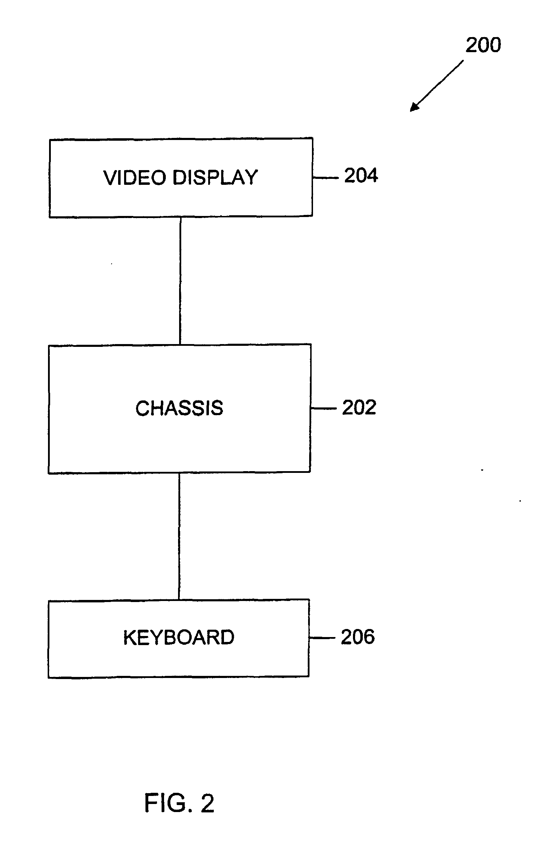

Fig. 2 depicts a data processing system 200 suitable for use with methods and systems consistent with the present invention. Data processing system 200 contains a chassis 202 connected to a video display 204 and a keyboard 206. Data processing system 200 is suitable for use as one or more nodes in the network topologies described below.

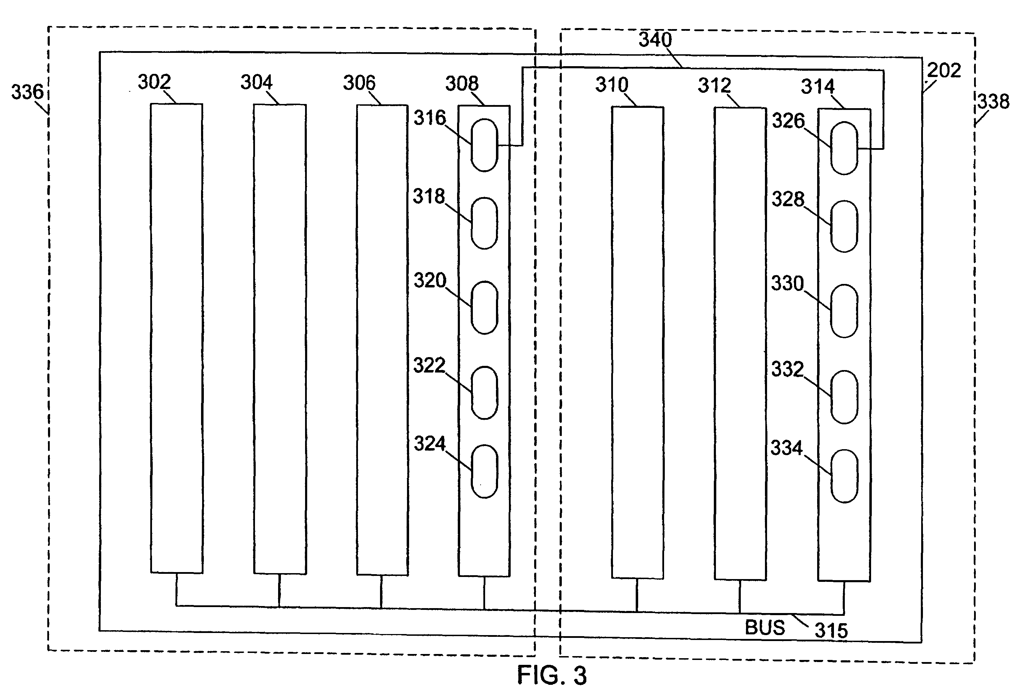

As shown in Fig. 3, chassis 202 contains up to seven cards 302-314 interconnected via bus 315. Of these cards, cards 308 and 314, known as routing cards, perform routing functionality with each having five ports 316-324 and 326-334 that connect to a communication link (e.g., a cable). The cards other than the routing cards (i.e., cards 302-306, 310, and 312) typically contain multiple CPUs, memory, and secondary storage. In accordance with methods and systems consistent with the present invention, cards 302-308 form a single node 336. Likewise, cards 310-314 form a single node 338. Nodes 336 and 338 are referred to as partner nodes because they are both located in the same chassis 202. Since node 336 and node 338 are separate communications nodes, they may be interconnected via a communications link 340, known as a partner link. A partner link is used to transfer control information between two partner nodes: the actual data is transferred via the bus 315 for faster communications. One skilled in the art will appreciate that data processing system 200 and chassis 202 may include additional or different components, including additional nodes.

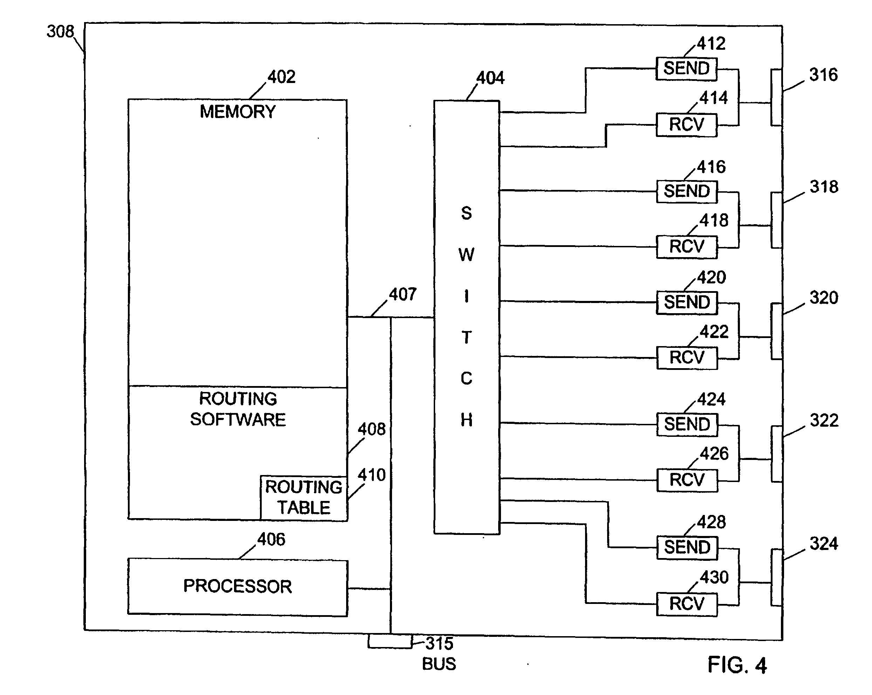

Fig. 4 depicts a more detailed diagram of routing card 308, although routing card 314 is similarly configured. Routing card 308 contains a memory 402, a switch 404, and a processor 406 interconnected by an internal bus 407, which also connects to bus 315. Memory 402 contains routing software 408 that routes traffic through the network using routing table 410. Routing table 410 may contain part or all of the information contained in the routing tables provided below. The switch coordinates the sending and receiving of information across the network via ports 316-324 by using a send and receive buffer 412-430 for each port.

Although aspects of the present invention are described as being stored in memory, one skilled in the art will appreciate that these aspects can also be stored on or read from other types of computer-readable media, such as secondary storage devices, like hard disks, floppy disks, or CD-ROM; a carrier wave from a network, such as the Internet; or other forms of RAM or ROM either currently known or later developed. Sun, Sun Microsystems, the Sun logo, Java™, and Java™-based trademarks are trademarks or registered trademarks of Sun Microsystems, Inc. in the United States and other countries.

### Network Topologies

In accordance with methods and systems consistent with the present invention, a number of network topologies are provided where the topologies have been selected based on both performance characteristics and the ease with which the network can be reconfigured. Network topologies for networks having seven to sixteen nodes are presented below with exemplary deadlock-free routings. The topologies for networks having less than seven nodes are not presented because they are fully connected. That is, since each routing card has five ports, in networks of six or less nodes, each node can be connected to each other node. In such a situation, the network is referred to as being fully connected.

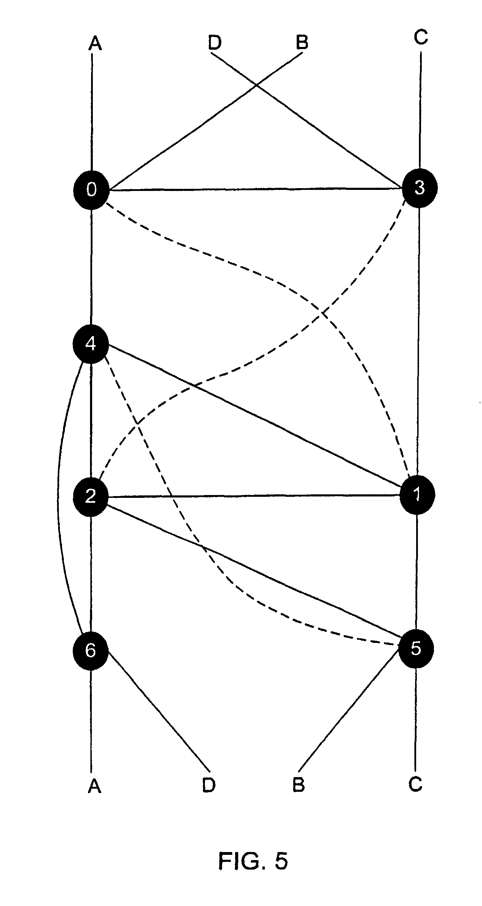

Fig. 5 depicts a network topology for a network of seven nodes in accordance with methods and systems consistent with the present invention. Each node, node 0 through node 6, has up to five links to other nodes. Each link is depicted as either a solid line or a dashed line. A solid line indicates that the link is a nonpartner link; a dashed line indicates that the link is a partner link between partner nodes. Accordingly, the two partner nodes are contained in the same device. In Fig. 5, the letters (e.g., "A") indicate a continuing connection to another like-lettered node. For example, node 0 is connected to node 6.

As shown in Fig. 5, node 0 has a partner link with node 1 and directly connects to nodes 3, 4, 5, and 6. Node 1 has a partner link with node 0 and directly connects to nodes 2, 3, 4, and 5. Node 2 has a partner link with node 3 and directly connects to nodes 1, 4, 5, and 6. Node 3 has a partner link with node 2 and directly connects to nodes 0, 1, 5, and 6. Node 4 has a partner link with node 5 and directly connects to nodes 0, 1, 2, and 6. Node 5 has a partner link with node 4 and directly connects to nodes 0, 1, 2, and 3, and node 6 directly connects to nodes 0, 2, 3, and 4. Below is a deadlock-free routing table for this network. The first row of this table, for example, shows that data from node 0 may be sent directly to nodes 1, 3, 4, 5, and 6 and that data from node 0 may be sent to node 2 via node 3.

| **FROM \ TO** | **0** | **1** | **2** | **3** | **4** | **5** | **6** |
|---|---|---|---|---|---|---|---|
| **0** | | **3** | **-** | **-** | **-** | **-** | **-** |
| **1** | **-** | | **-** | **-** | **-** | **-** | **4** |
| **2** | **1** | **-** | | **-** | **-** | **-** | **-** |
| **3** | **-** | **-** | **-** | | **5** | **-** | **-** |
| **4** | **-** | **-** | **-** | **2** | | **-** | **-** |
| **5** | **-** | **-** | **-** | **-** | **-** | | **3** |
| **6** | **-** | **0** | **-** | **-** | **-** | **4** | |

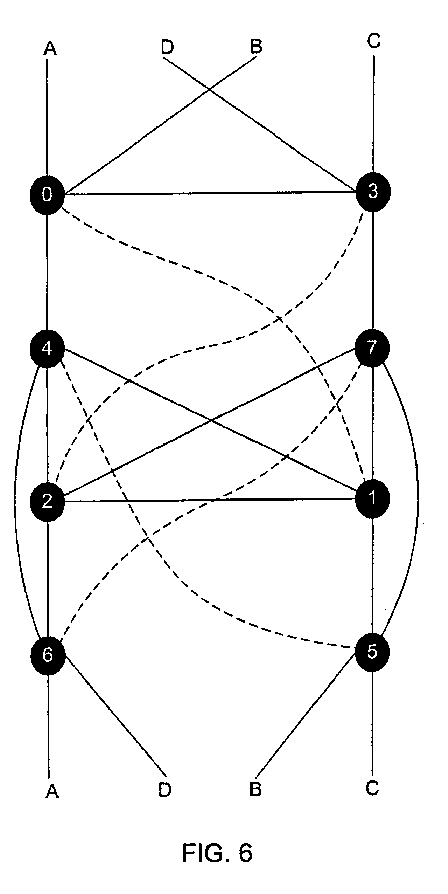

Fig. 6 depicts a network topology for a network of 8 nodes in accordance with methods and systems consistent with the present invention. As shown in Fig. 6, node 0 has a partner link with node 1 and directly connects to nodes 3 through 6. Node 1 has a partner link with node 0 and directly connects to nodes 2, 4, 5, and 7. Node 2 has a partner link with node 3 and directly connects to nodes 1, 4, 6, and 7. Node 3 has a partner link with node 2 and directly connects to node 0 and nodes 5 through 7. Node 4 has a partner link with node 5 and directly connects to nodes 0-2 and 6. Node 5 has a partner link with node 4 and directly connects to nodes 0, 1, 3, and 7. Node 6 has a partner link with node 7 and directly connects to nodes 0 and 2-4, and node 7 has a partner link with node 6 and directly connects to nodes 1-3 and 5. Below is a deadlock-free routing table for this network.

| **FROM \ TO** | **0** | **1** | **2** | **3** | **4** | **5** | **6** | **7** |
|---|---|---|---|---|---|---|---|---|
| **0** | | **-** | **3** | **-** | **-** | **-** | **-** | **6** |
| **1** | **-** | | **-** | **2** | **-** | **-** | **7** | **-** |
| **2** | **1** | **-** | | **-** | **-** | **4** | **-** | **-** |
| **3** | **-** | **0** | **-** | | **5** | **-** | **-** | **-** |
| **4** | **-** | **-** | **-** | **2** | | **-** | **-** | **6** |
| **5** | **-** | **-** | **3** | **-** | **-** | | **7** | **-** |
| **6** | **-** | **0** | **-** | **-** | **-** | **4** | | **-** |
| **7** | **1** | **-** | **-** | **-** | **5** | **-** | **-** | |

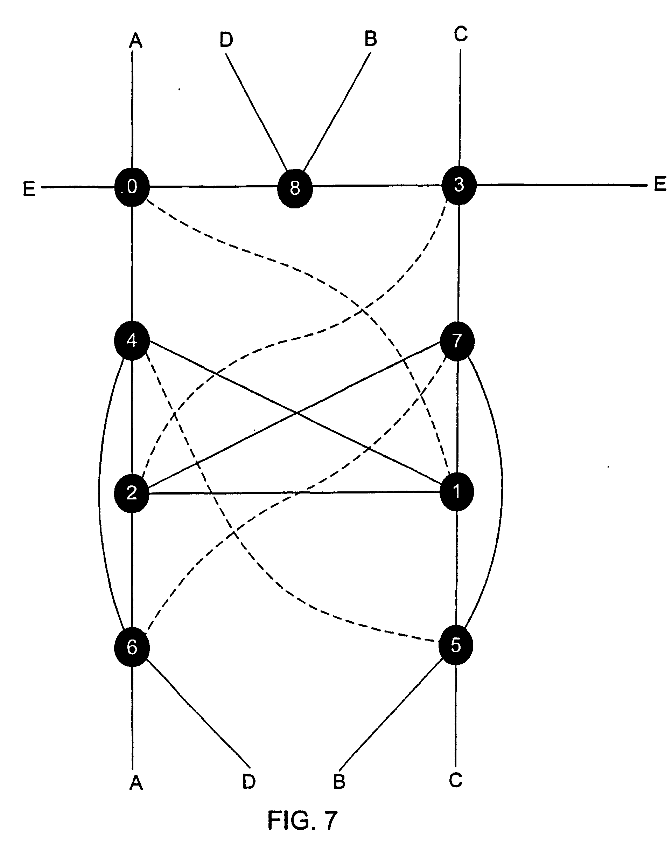

Fig. 7 depicts a network topology for a network of 9 nodes in accordance with methods and systems consistent with the present invention. As shown in Fig. 7, node 0 has a partner link with node 1 and directly connects to nodes 3, 4, 6, and 8. Node 1 has a partner link with node 0 and directly connects to nodes 2, 4, 5, and 7. Node 2 has a partner link with node 3 and directly connects to nodes 1, 4, 6, and 7. Node 3 has a partner link with node 2 and directly connects to nodes 0, 5, 7, and 8. Node 4 has a partner link with node 5 and directly connects to nodes 0-2 and 6. Node 5 has a partner link with node 4 and directly connects to nodes 1, 3, 7, and 8. Node 6 has a partner link with node 7 and directly connects to nodes 0, 2, 4, and 8. Node 7 has a partner link with node 6 and directly connects to nodes 1-3 and 5, and node 8 directly connects to nodes 0, 3, 5, and 6. Below is a deadlock-free routing table for this network.

| **FROM \ TO** | **0** | **1** | **2** | **3** | **4** | **5** | **6** | **7** | **8** |
|---|---|---|---|---|---|---|---|---|---|
| **0** | | **-** | **3** | **-** | **-** | **4** | **-** | **6** | **-** |
| **1** | **-** | | **-** | **2** | **-** | **-** | **7** | **-** | **5** |
| **2** | **1** | **-** | | **-** | **-** | **4** | **-** | **-** | **6** |
| **3** | **-** | **0** | **-** | | **5** | **-** | **7** | **-** | **-** |
| **4** | **-** | **-** | **-** | **2** | | **-** | **-** | **6** | **0** |
| **5** | **1** | **-** | **3** | **-** | **-** | | **7** | **-** | **-** |
| **6** | **-** | **0** | **-** | **2** | **-** | **4** | | **-** | **-** |
| **7** | **1** | **-** | **-** | **-** | **5** | **-** | **-** | | **3** |
| **8** | **-** | **0** | **3** | **-** | **5** | **-** | **-** | **6** | |

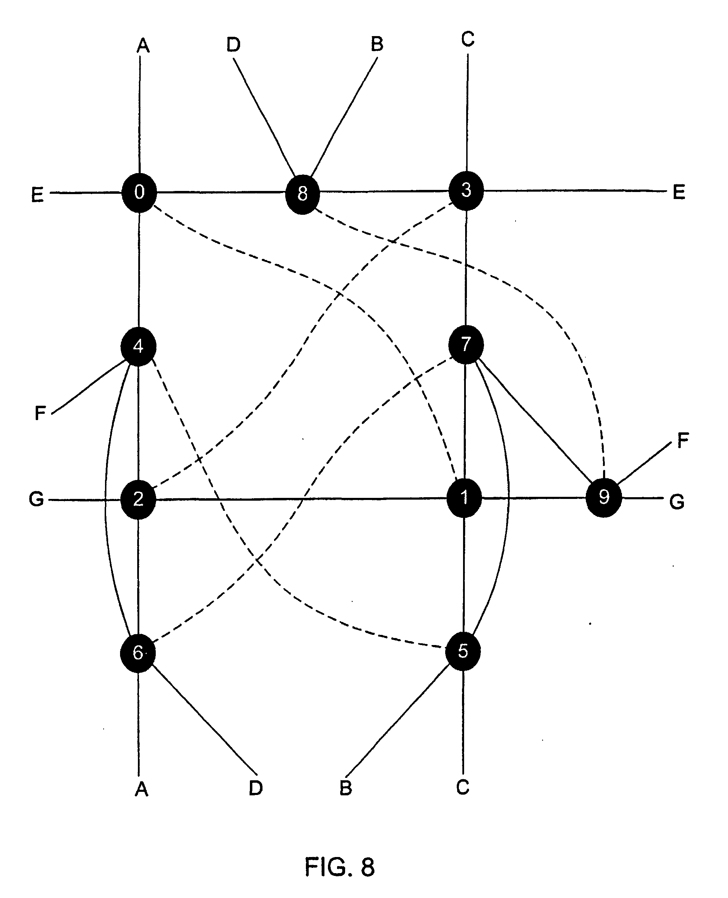

Fig. 8 depicts a network topology for a network of 10 nodes in accordance with methods and systems consistent with the present invention. As shown in Fig. 8, node 0 has a partner link with node I and directly connects to nodes 3, 4, 6, and 8. Node 1 has a partner link with node 0 and directly connects to nodes 2, 5, 7, and 9. Node 2 has a partner link with node 3 and directly connects to nodes 1, 4, 6, and 9. Node 3 has a partner link with node 2 and directly connects to nodes 0, 5, 7, and 8. Node 4 has a partner link with node 5 and directly connects to nodes 0, 2, 6, and 9. Node 5 has a partner link with node 4 and directly connects to nodes 1, 3, 7, and 8. Node 6 has a partner link with node 7 and directly connects to nodes 0, 2, 4, and 8. Node 7 has a partner link with node 6 and directly connects to nodes 1, 3, 5, and 9. Node 8 has a partner link with node 9 and directly connects to nodes 0, 3, 5, and 6, and node 9 has a partner link with node 8 and directly connects to nodes 1, 2, 4, and 7. Below is a deadlock-free routing table for this network.

| **FROM \ TO** | **0** | **1** | **2** | **3** | **4** | **5** | **6** | **7** | **8** | **9** |
|---|---|---|---|---|---|---|---|---|---|---|
| **0** | | **-** | **3** | **-** | **-** | **4** | **-** | **6** | **-** | **8** |
| **1** | **-** | | **-** | **2** | **5** | **-** | **7** | **-** | **9** | **-** |
| **2** | **1** | **-** | | **-** | **-** | **4** | **-** | **6** | **9** | **-** |
| **3** | **-** | **0** | **-** | | **5** | **-** | **7** | **-** | **-** | **8** |
| **4** | **-** | **0** | **-** | **2** | | **-** | **-** | **6** | **9** | **-** |
| **5** | **1** | **-** | **3** | **-** | **-** | | **7** | **-** | **-** | **8** |
| **6** | **-** | **0** | **-** | **2** | **-** | **4** | | **-** | **-** | **8** |
| **7** | **1** | **-** | **3** | **-** | **5** | **-** | **-** | | **9** | **-** |
| **8** | **-** | **0** | **3** | **-** | **5** | **-** | **-** | **6** | | **-** |
| **9** | **1** | **-** | **-** | **2** | **-** | **4** | **7** | **-** | **-** | |

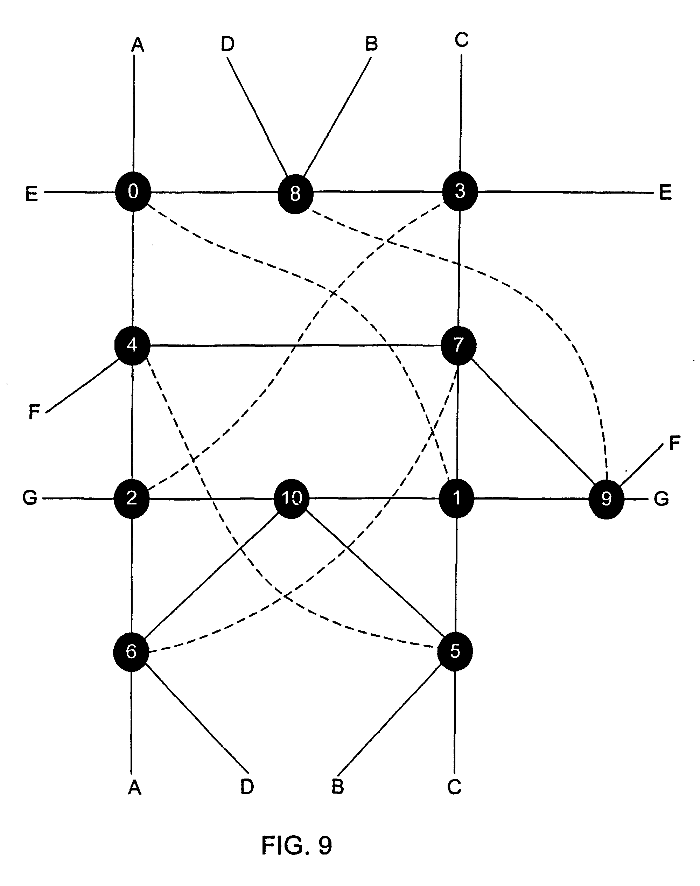

Fig. 9 depicts a network topology for a network of 11 nodes in accordance with methods and systems consistent with the present invention. As shown in Fig. 9, node 0 has a partner link with node I and directly connects to nodes 3, 4, 6, and 8. Node 1 has a partner link with node 0 and directly connects to nodes 5, 7, 9, and 10. Node 2 has a partner link with node 3 and directly connects to nodes 4, 6, 9, and 10. Node 3 has a partner link with node 2 and directly connects to nodes 0, 5, 7, and 8. Node 4 has a partner link with node 5 and directly connects to nodes 0, 2, 7, and 9. Node 5 has a partner link with node 4 and directly connects to nodes 1, 3, 8, and 10. Node 6 has a partner link with node 7 and directly connects to nodes 0, 2, 8, and 10. Node 7 has a partner link with node 6 and directly connects to nodes 1, 3, 4, and 9. Node 8 has a partner link with node 9 and directly connects to nodes 0, 3, 5, and 6. Node 9 has a partner link with node 8 and directly connects to nodes 1, 2, 4, and 7, and node 10 directly connects to nodes 1, 2, 5, and 6. A deadlock-free routing table for this network is provided below.

| **FROM\TO** | **0** | **1** | **2** | **3** | **4** | **5** | **6** | **7** | **8** | **9** | **10** |
|---|---|---|---|---|---|---|---|---|---|---|---|
| **0** | | **-** | **3** | **-** | **-** | **4** | **-** | **6** | **-** | **8** | **6** |
| **1** | **-** | | **9** | **5** | **5** | **-** | **7** | **-** | **9** | **-** | **-** |
| **2** | **6** | **10** | | **-** | **-** | **4** | **-** | **6** | **9** | **-** | **-** |
| **3** | **-** | **0** | **-** | | **5** | **-** | **7** | **-** | **-** | **8** | **5** |
| **4** | **-** | **0** | **-** | **2** | | **-** | **7** | **-** | **9** | **-** | **2** |
| **5** | **1** | **-** | **3** | **-** | **-** | | **8** | **1** | **-** | **8** | **-** |
| **6** | **-** | **0** | **-** | **2** | **2** | **8** | | **-** | **-** | **8** | **-** |
| **7** | **1** | **-** | **3** | **-** | **-** | **4** | **-** | | **9** | **-** | **1** |
| **8** | **-** | **0** | **3** | **-** | **5** | **-** | **-** | **6** | | **-** | **6** |
| **9** | **1** | **-** | **-** | **2** | **-** | **4** | **7** | **-** | **-** | | **1** |
| **10** | **1** | **-** | **-** | **2** | **5** | **-** | **-** | **6** | **6** | **2** | |

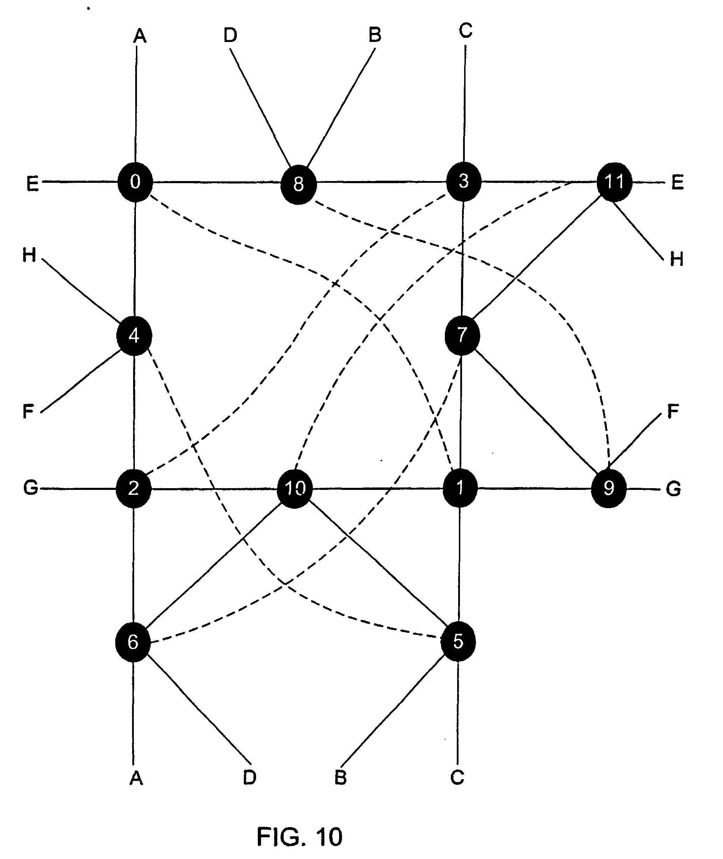

Fig. 10 depicts a network topology for a network of 12 nodes in accordance with methods and systems consistent with the present invention. As shown in Fig. 10, node 0 has a partner link with node 1 and directly connects to nodes 4, 6, 8, and 11. Node 1 has a partner link with node 0 and directly connects to nodes 5, 7, 9, and 10. Node 2 has a partner link with node 3 and directly connects to nodes 4, 6, 9, and 10. Node 3 has a partner link with node 2 and directly connects to nodes 5, 7, 8, and 11. Node 4 has a partner link with node 5 and directly connects to nodes 0, 2, 9, and 11. Node 5 has a partner link with node 4 and directly connects to nodes 1, 3, 8, and 10. Node 6 has a partner link with node 7 and directly connects to nodes 0, 2, 8, and 10. Node 7 has a partner link with node 6 and directly connects to nodes 1, 3, 9, and 11. Node 8 has a partner link with node 9 and directly connects to nodes 0, 3, 5, and 6. Node 9 has a partner link with node 8 and directly connects to nodes 1, 2, 4, and 7. Node 10 has a partner link with node 11 and directly connects to nodes 1, 2, 5, and 6, and node 11 has a partner link with node 10 and directly connects to nodes 0, 3, 4, and 7. A deadlock-free routing table is provided below.

| **FROM \ TO** | **0** | **1** | **2** | **3** | **4** | **5** | **6** | **7** | **8** | **9** | **10** | **11** |
|---|---|---|---|---|---|---|---|---|---|---|---|---|
| **0** | | **-** | **4** | **8** | **-** | **4** | **-** | **6** | **-** | **8** | **11** | **-** |
| **1** | **-** | | **9** | **5** | **5** | **-** | **7** | **-** | **9** | **-** | **-** | **10** |
| **2** | **6** | **10** | | **-** | **-** | **4** | **-** | **6** | **9** | **-** | **-** | **10** |
| **3** | **11** | **7** | **-** | | **5** | **-** | **7** | **-** | **-** | **8** | **11** | **-** |
| **4** | **-** | **0** | **-** | **2** | | **-** | **0** | **9** | **9** | **-** | **11** | **-** |
| **5** | **1** | **-** | **3** | **-** | **-** | | **10** | **1** | **-** | **8** | **-** | **10** |
| **6** | **-** | **0** | **-** | **2** | **2** | **10** | | **-** | **-** | **8** | **-** | **10** |
| **7** | **1** | **-** | **3** | **-** | **9** | **3** | **-** | | **9** | **-** | **11** | **-** |
| **8** | **-** | **0** | **3** | **-** | **5** | **-** | **-** | **6** | | **-** | **5** | **0** |
| **9** | **1** | **-** | **-** | **2** | **-** | **4** | **7** | **-** | **-** | | **1** | **7** |
| **10** | **1** | **-** | **-** | **2** | **5** | **-** | **-** | **6** | **5** | **2** | | **-** |
| **11** | **-** | **0** | **3** | **-** | **-** | **4** | **7** | **-** | **3** | **7** | **-** | |

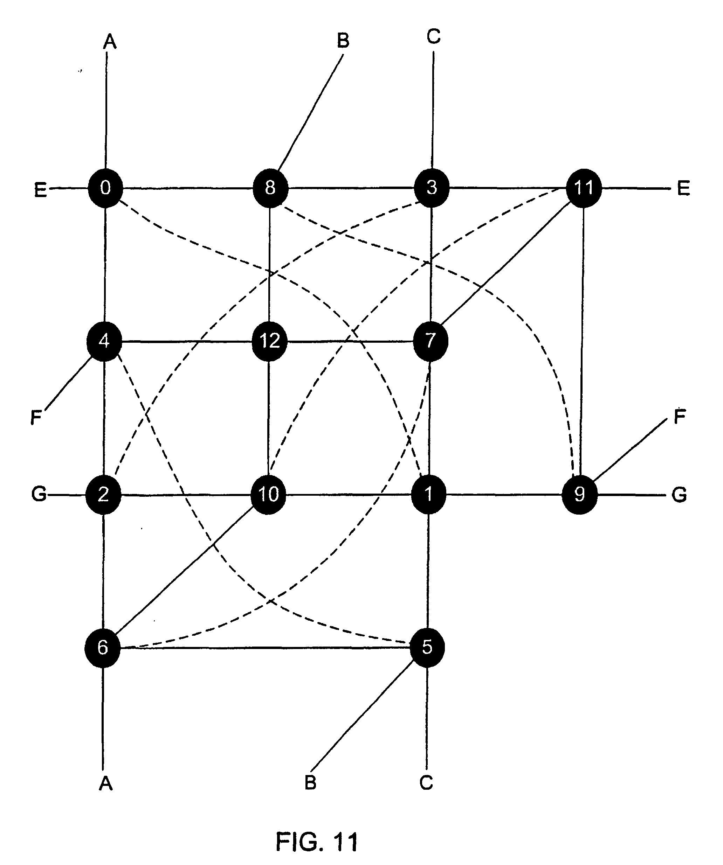

Fig. 11 depicts a network topology for a network of 13 nodes in accordance with methods and systems consistent with the present invention. As shown in Fig. 11, node 0 has a partner link with node 1 and directly connects to nodes 4, 6, 8, and 11. Node 1 has a partner link with node 0 and directly connects to nodes 5, 7, 9, and 10. Node 2 has a partner link with node 3 and directly connects to nodes 4, 6, 9, and 10. Node 3 has a partner link with node 2 and directly connects to nodes 5, 7, 8, and 11. Node 4 has a partner link with node 5 and directly connects to nodes 0, 2, 9, and 12. Node 5 has a partner link with node 4 and directly connects to nodes 1, 3, 6, and 8. Node 6 has a partner link with node 7 and directly connects to nodes 0, 2, 5, and 10. Node 7 has a partner link with node 6 and directly connects to nodes 1, 3, 11, and 12. Node 8 has a partner link with node 9 and directly connects to nodes 0, 3, 5, and 12. Node 9 has a partner link with node 8 and directly connects to nodes 1, 2, 4, and 11. Node 10 has a partner link with node 11 and directly connects to nodes 1, 2, 6, and 12. Node 11 has a partner link with node 10 and directly connects to nodes 0, 3, 7, and 9, and node 12 directly connects to nodes 4, 7, 8, and 10. A deadlock-free routing table for this network is provided below.

| **FROM \TO** | **0** | **1** | **2** | **3** | **4** | **5** | **6** | **7** | **8** | **9** | **10** | **11** | **12** |
|---|---|---|---|---|---|---|---|---|---|---|---|---|---|
| **0** | | **-** | **4** | **8** | **-** | **4** | **-** | **6** | **-** | **8** | **11** | **-** | **4** |
| **1** | **-** | | **9** | **5** | **5** | **-** | **7** | **-** | **9** | **-** | **-** | **10** | **7** |
| **2** | **6** | **10** | | **-** | **-** | **4** | **-** | **6** | **9** | **-** | **-** | **10** | **10** |
| **3** | **11** | **7** | **-** | | **5** | **-** | **7** | **-** | **-** | **8** | **11** | **-** | **7** |
| **4** | **-** | **0** | **-** | **2** | | **-** | **0** | **12** | **9** | **-** | **12** | **0** | **-** |
| **5** | **1** | **-** | **3** | **-** | **-** | | **-** | **6** | **-** | **8** | **1** | **3** | **8** |
| **6** | **-** | **0** | **-** | **2** | **5** | **-** | | **-** | **0** | **2** | **-** | **10** | **10** |
| **7** | **1** | **-** | **3** | **-** | **12** | **3** | **-** | | **3** | **11** | **11** | **-** | **-** |
| **8** | **-** | **0** | **3** | **-** | **5** | **-** | **0** | **12** | | **-** | **12** | **0** | **-** |
| **9** | **1** | **-** | **-** | **2** | **-** | **4** | **2** | **1** | **-** | | **11** | **-** | **4** |
| **10** | **1** | **-** | **-** | **2** | **2** | **6** | **-** | **6** | **12** | **2** | | **-** | **-** |
| **11** | **-** | **0** | **3** | **-** | **0** | **3** | **7** | **-** | **9** | **-** | **-** | | **7** |
| **12** | **8** | **10** | **4** | **8** | **-** | **4** | **7** | **-** | **-** | **8** | **-** | **10** | |

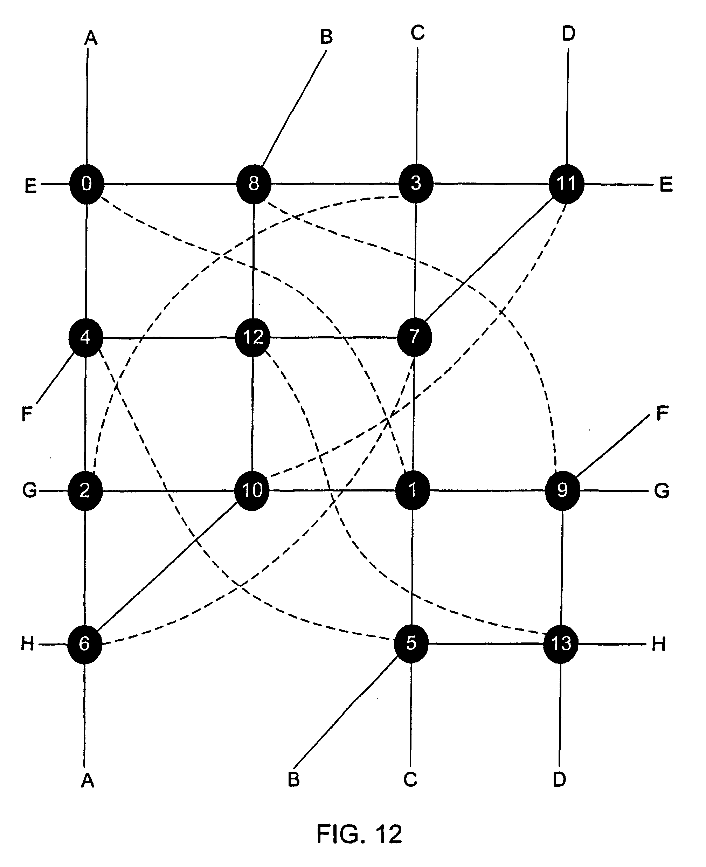

Fig. 12 depicts a network topology for a network of 14 nodes in accordance with methods and systems consistent with the present invention. As shown in Fig. 12, node 0 has a partner link with node 1 and directly connects to nodes 4, 6, 8, and 11. Node 1 has a partner link with node 0 and directly connects to nodes 5, 7, 9, and 10. Node 2 has a partner link with node 3 and directly connects to nodes 4, 6, 9, and 10. Node 3 has a partner link with node 2 and directly connects to nodes 5, 7, 8, and 11. Node 4 has a partner link with node 5 and directly connects to nodes 0, 2, 9, and 12. Node 5 has a partner link with node 4 and directly connects to nodes 1, 3, 8, and 13. Node 6 has a partner link with node 7 and directly connects to nodes 0, 2, 10, and 13. Node 7 has a partner link with node 6 and directly connects to nodes 1, 3, 11, and 12. Node 8 has a partner link with node 9 and directly connects to nodes 0, 3, 5, and 12. Node 9 has a partner link with node 8 and directly connects to nodes 1, 2, 4, and 13. Node 10 has a partner link with node 11 and directly connects to nodes 1, 2, 6, and 12. Node 11 has a partner link with node 10 and directly connects to nodes 0, 3, 7, and 13. Node 12 has a partner link with node 13 and directly connects to nodes 4, 7, 8, and 10, and node 13 has a partner link with node 12 and directly connects to nodes 5, 6, 9, and 11. A deadlock-free routing table for this network is provided below.

| **FROM\ TO** | **0** | **1** | **2** | **3** | **4** | **5** | **6** | **7** | **8** | **9** | **10** | **11** | **12** | **13** |
|---|---|---|---|---|---|---|---|---|---|---|---|---|---|---|
| **0** | | **-** | **4** | **8** | **-** | **4** | **-** | **6** | **-** | **8** | **11** | **-** | **8** | **6** |
| **1** | **-** | | **9** | **5** | **5** | **-** | **7** | **-** | **9** | **-** | **-** | **10** | **7** | **5** |
| **2** | **6** | **10** | | **-** | **-** | **4** | **-** | **6** | **9** | **-** | **-** | **10** | **10** | **6** |
| **3** | **11** | **7** | **-** | | **5** | **-** | **7** | **-** | **-** | **8** | **11** | **-** | **7** | **11** |
| **4** | **-** | **0** | **-** | **2** | | **-** | **0** | **12** | **9** | **-** | **12** | **0** | **-** | **12** |
| **5** | **1** | **-** | **3** | **-** | **-** | | **13** | **1** | **-** | **8** | **1** | **13** | **13** | **-** |
| **6** | **-** | **0** | **-** | **2** | **2** | **13** | | **-** | **0** | **2** | **-** | **10** | **13** | **-** |
| **7** | **1** | **-** | **3** | **-** | **12** | **3** | **-** | | **3** | **1** | **11** | **-** | **-** | **12** |
| **8** | **-** | **0** | **3** | **-** | **5** | **-** | **0** | **12** | | **-** | **12** | **0** | **-** | **12** |
| **9** | **1** | **-** | **-** | **2** | **-** | **4** | **13** | **1** | **-** | | **1** | **13** | **13** | **-** |
| **10** | **1** | **-** | **-** | **2** | **2** | **1** | **-** | **6** | **12** | **2** | | **-** | **-** | **12** |
| **11** | **-** | **0** | **3** | **-** | **0** | **3** | **7** | **-** | **3** | **13** | **-** | | **13** | **-** |
| **12** | **8** | **10** | **4** | **8** | **-** | **4** | **7** | **-** | **-** | **8** | **-** | **10** | | **-** |
| **13** | **11** | **9** | **9** | **5** | **5** | **-** | **-** | **6** | **9** | **-** | **11** | **-** | **-** | |

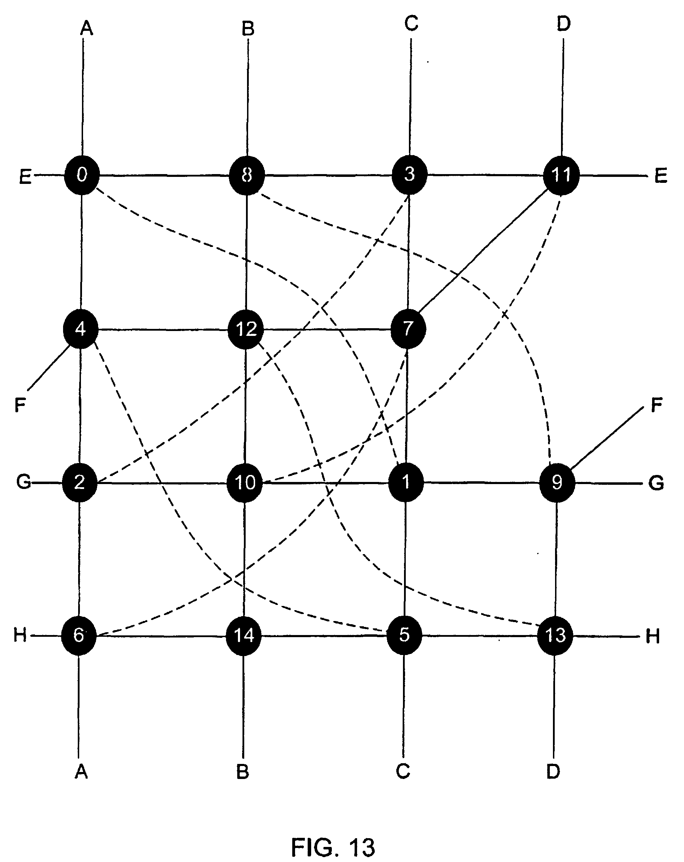

Fig. 13 depicts a network topology for a network of 15 nodes in accordance with methods and systems consistent with the present invention. As shown in Fig. 13, node 0 has a partner link with node 1 and directly connects to nodes 4, 6, 8, and 11. Node 1 has a partner link with node 0 and directly connects to nodes 5, 7, 9, and 10. Node 2 has a partner link with node 3 and directly connects to nodes 4, 6, 9, and 10. Node 3 has a partner link with node 2 and directly connects to nodes 5, 7, 8, and 11. Node 4 has a partner link with node 5 and directly connects to nodes 0, 2, 9, and 12. Node 5 has a partner link with node 4 and directly connects to nodes 1, 3, 13, and 14. Node 6 has a partner link with node 7 and directly connects to nodes 0, 2, 13, and 14. Node 7 has a partner link with node 6 and directly connects to nodes 1, 3, 11, and 12. Node 8 has a partner link with node 9 and directly connects to nodes 0, 3, 12, and 14. Node 9 has a partner link with node 8 and directly connects to nodes 1, 2, 4, and 13. Node 10 has a partner link with node 11 and directly connects to nodes 1, 2, 12, and 14. Node 11 has a partner link with node 10 and directly connects to nodes 0, 3, 7, and 13. Node 12 has a partner link with node 13 and directly connects to nodes 4, 7, 8, and 10. Node 13 has a partner link with node 12 and directly connects to nodes 5, 6, 9, and 11, and node 14 directly connects to nodes 5, 6, 8, and 10. A deadlock-free routing table for this network is provided below.

| **FROM \ TO** | **0** | **1** | **2** | **3** | 4 | 5 | **6** | **7** | **8** | **9** | **10** | **11** | **12** | **13** | **14** |
|---|---|---|---|---|---|---|---|---|---|---|---|---|---|---|---|
| **0** | | **-** | **4** | **8** | **-** | **4** | **-** | **6** | **-** | **8** | **11** | **-** | **4** | **6** | **8** |
| **1** | **-** | | **9** | **5** | **5** | **-** | **7** | **-** | **9** | **-** | **-** | **10** | **7** | **5** | **5** |
| **2** | **6** | **10** | | **-** | **-** | **4** | **-** | **6** | **9** | **-** | **-** | **10** | **10** | **6** | **6** |
| **3** | **11** | **7** | **-** | | **5** | **-** | **7** | **-** | **-** | **8** | **11** | **-** | **7** | **11** | **5** |
| **4** | **-** | **0** | **-** | **2** | | **-** | **0** | **12** | **9** | **-** | **12** | **0** | **-** | **12** | **5** |
| **5** | **1** | **-** | **3** | **-** | **-** | | **13** | **1** | **3** | **1** | **1** | **13** | **13** | **-** | **-** |
| **6** | **-** | **0** | **-** | **2** | **2** | **14** | | **-** | **14** | **2** | **2** | **0** | **13** | **-** | **-** |
| **7** | **1** | **-** | **3** | **-** | **12** | **3** | **-** | | **3** | **1** | **11** | **-** | **-** | **12** | **6** |
| **8** | **-** | **0** | **3** | **-** | **12** | **14** | **0** | **12** | | **-** | **12** | **0** | **-** | **12** | **-** |
| **9** | **1** | **-** | **-** | **2** | **-** | **4** | **13** | **1** | **-** | | **1** | **13** | **13** | **-** | **8** |
| **10** | **1** | **-** | **-** | **2** | **2** | **14** | **2** | **12** | **14** | **2** | | **-** | **-** | **12** | **-** |
| **11** | **-** | **0** | **3** | **-** | **0** | **3** | **7** | **-** | **3** | **13** | **-** | | **13** | **-** | **10** |
| **12** | **8** | **10** | **4** | **8** | **-** | **4** | **7** | **-** | **-** | **8** | **-** | **10** | | **-** | **8** |
| **13** | **11** | **9** | **9** | **5** | **5** | **-** | **-** | **6** | **9** | **-** | **11** | **-** | **-** | | **5** |
| **14** | **6** | **10** | **10** | **8** | **5** | **-** | **-** | **6** | **-** | **8** | **-** | **10** | **10** | **6** | |

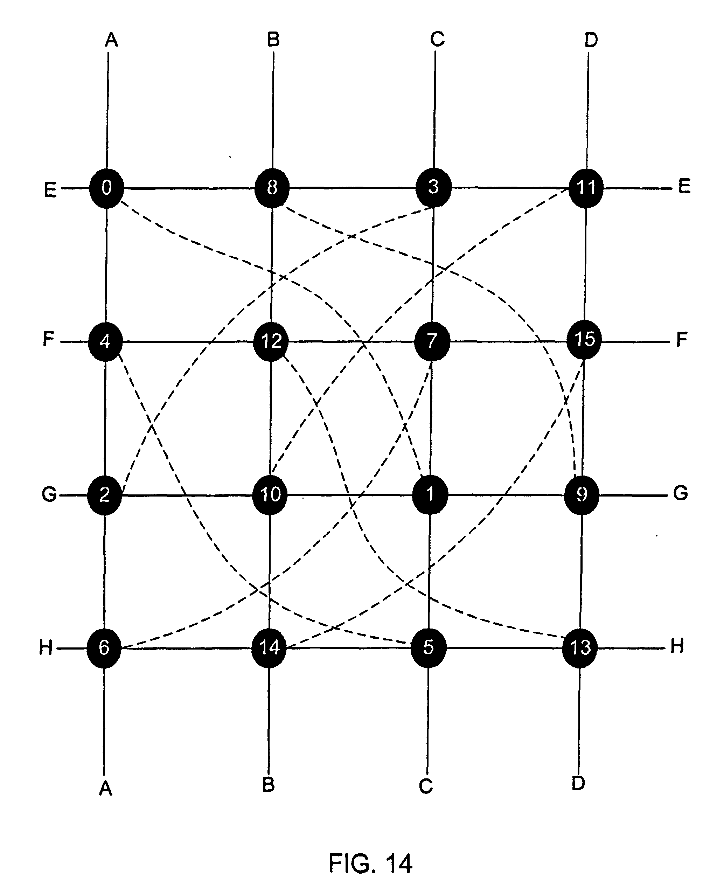

Fig. 14 depicts a network topology for a network of 16 nodes in accordance with methods and systems consistent with the present invention. As shown in this figure, node 0 has a partner link with node 1 and directly connects to nodes 4, 6, 8, and 11. Node 1 has a partner link with node 0 and directly connects to nodes 5, 7, 9, and 10. Node 2 has a partner link with node 3 and directly connects to nodes 4, 6, 9, and 10. Node 3 has a partner link with node 2 and directly connects to nodes 5, 7, 8, and 11. Node 4 has a partner link with node 5 and directly connects to nodes 0, 2, 12, and 15. Node 5 has a partner link with node 4 and directly connects to nodes 1, 3, 13, and 14. Node 6 has a partner link with node 7 and directly connects to nodes 0, 2, 13, and 14. Node 7 has a partner link with node 6 and directly connects to nodes 1, 3, 12, and 15. Node 8 has a partner link with node 9 and directly connects to nodes 0, 3, 12, and 14. Node 9 has a partner link with node 8 and directly connects to nodes 1, 2, 13, and 15. Node 10 has a partner link with node 11 and directly connects to nodes 1, 2, 12, and 14. Node 11 has a partner link with node 10 and directly connects to nodes 0, 3, 13, and 15. Node 12 has a partner link with node 13 and directly connects to nodes 4, 7, 8, and 10. Node 13 has a partner link with node 12 and directly connects to nodes 5, 6, 9, and 11. Node 14 has a partner link with node 15 and directly connects to nodes 5, 6, 8, and 10, and node 15 has a partner link with node 14 and directly connects to nodes 4, 7, 9, and 11. A deadlock-free routing table for this network topology is provided below.

| **FROM \TO** | **0** | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|---|
| **0** | | **-** | **4** | **8** | **-** | **4** | **-** | **6** | **-** | **8** | **11** | **-** | **4** | **6** | **8** | **4** |
| **1** | **-** | | **9** | **5** | **5** | **-** | **7** | **-** | **9** | **-** | **-** | **10** | **7** | **5** | **5** | 9 |
| **2** | **6** | **10** | | **-** | **-** | **4** | **-** | **6** | **9** | **-** | **-** | **10** | **10** | **6** | **6** | **4** |
| **3** | **11** | **7** | **-** | | **5** | **-** | **7** | **-** | **-** | **8** | **11** | **-** | **7** | **11** | **5** | **7** |
| **4** | **-** | **0** | **-** | **2** | | **-** | **0** | **12** | **0** | **2** | **12** | **0** | **-** | **12** | **15** | **-** |
| **5** | **1** | **-** | **3** | **-** | **-** | | **13** | **1** | **3** | **1** | **1** | **13** | **13** | **-** | **-** | **14** |
| **6** | **-** | **0** | **-** | **2** | **2** | **14** | | **-** | **14** | **2** | **2** | **0** | **13** | **-** | **-** | **14** |
| **7** | **1** | **-** | **3** | **-** | **15** | **3** | **-** | | **3** | **15** | **1** | **3** | **-** | **12** | **15** | **-** |
| **8** | **-** | **0** | **3** | **-** | **12** | **14** | **0** | **12** | | **-** | **12** | **0** | **-** | **12** | **-** | **14** |
| **9** | **1** | **-** | **-** | **2** | **15** | **13** | **13** | **1** | **-** | | **1** | **13** | **13** | **-** | **15** | **-** |
| **10** | **1** | **-** | **-** | **2** | **2** | **14** | **14** | **12** | **14** | **2** | | **-** | **-** | **12** | **-** | **14** |
| **11** | **-** | **0** | **3** | **-** | **15** | **3** | **13** | **15** | **3** | **15** | **-** | | **13** | **-** | **15** | **-** |
| **12** | **8** | **10** | **4** | **8** | **-** | **4** | **7** | **-** | **-** | **8** | **-** | **10** | | **-** | **8** | **4** |
| **13** | **11** | **9** | **9** | **5** | **5** | **-** | **-** | **6** | **9** | **-** | **11** | **-** | **-** | | **5** | **9** |
| **14** | **6** | **10** | **10** | **8** | **5** | **-** | **-** | **6** | **-** | **8** | **-** | **10** | **10** | **6** | | **-** |
| **15** | **11** | **7** | **9** | **11** | **-** | **4** | **7** | **-** | **9** | **-** | **11** | **-** | **7** | **11** | **-** | |

### Upgrade/Downgrade of Network Topologies

The above-described network topologies have been selected to simplify the reconfiguration of the network. As described below, for many of the network topologies, reconfiguring the network to either add or remove a node requires the minimal amount of recabling necessary. For example, to add a node to the seven-node network topology, two links are removed and five links (including one partner link) are added to connect the eighth node. This is the minimal amount of recabling that can be done when adding a node in an environment where each node has 5 ports while also attempting to maximize port usage. Additionally, when reconfiguring a network in accordance with methods and systems consistent with the present invention, the reconfiguration occurs without bringing down the network. Instead, the network remains operational during the reconfiguration, with only a minimal interruption.

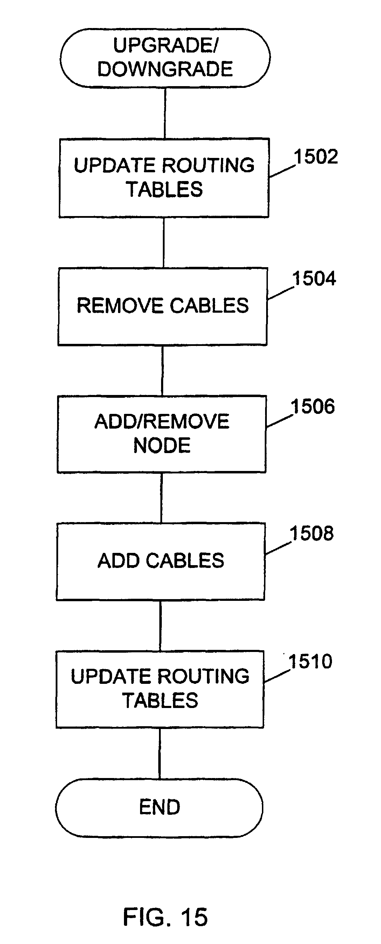

Fig. 15 depicts a flowchart of the steps performed when reconfiguring one of the network topologies in accordance with methods and systems consistent with the present invention. When performing an upgrade or downgrade, the administrator, from an administrator's console (e.g., one of the nodes), sends to the routing software on all of the nodes a signal, including an interim routing table for use in routing traffic around the part of the network affected by the upgrade or downgrade (step 1502). The interim routing tables for each network topology are provided below. While the routing tables are updated, network traffic is stalled for a small amount of time, on the order of milliseconds. During this time, the nodes buffer network traffic, so no data loss occurs.

After updating the routing tables, the network administrator removes the cables from the affected area of the network (step 1504). The particular cables removed for each network topology are described below. Next, the network administrator adds or removes the appropriate node (step 1506), adds the appropriate cables (step 1508), and then sends new routing tables to each of the nodes of the network that either utilize the new node or avoid the removed node (step 1510). While updating the routing tables, network traffic stalls momentarily while the new routing tables replace the interim routing tables, and then network traffic resumes using these tables. By reconfiguring the network in this manner, the network is twice interrupted for very short periods of time and remains effectively operational, thus providing a virtually hot upgrade or downgrade.

Described below are the upgrade sequences for adding a node to a network of between 6-15 nodes. One skilled in the art will appreciate that downgrading occurs by reversing the upgrade sequences.

### Upgrading from 6 Nodes to 7 Nodes

When upgrading from 6 nodes to 7 nodes, the network administrator utilizes the interim routing table provided below, removes links 2-0 and 4-3, and then adds links 6-0, 6-2, 6-3, and 6-4. After adding these links, the network administrator utilizes the routing table (described above) for a network of 7 nodes.

| **FROM \ TO** | **0** | **1** | **2** | **3** | **4** | **5** |
|---|---|---|---|---|---|---|
| **0** | | **-** | **3** | **-** | **-** | **-** |
| **1** | **-** | | **-** | **-** | **-** | **-** |
| **2** | **1** | **-** | | **-** | **-** | **-** |
| **3** | **-** | **-** | **-** | | 5 | - |
| **4** | **-** | **-** | **-** | **2** | | **-** |
| **5** | **-** | **-** | **-** | **-** | **-** | |

### Upgrading from 7 Nodes to 8 Nodes

When upgrading from 7 nodes to 8 nodes, the network administrator utilizes the interim routing table provided below, removes links 3-1 and 5-2, and then adds links 7-1, 7-2, 7-3, 7-5, and 7-6. After adding these links, the network administrator utilizes the routing table (described above) for a network of 8 nodes.

| **FROM \ TO** | **0** | **1** | **2** | **3** | **4** | **5** | **6** |
|---|---|---|---|---|---|---|---|
| **0** | | **-** | **3** | **-** | **-** | **-** | **-** |
| **1** | **-** | | **-** | **2** | **-** | **-** | **4** |
| **2** | 1 | - | | - | - | 4 | - |
| **3** | **-** | **0** | **-** | | **5** | **-** | **-** |
| **4** | **-** | **-** | **-** | **2** | | **-** | **-** |
| **5** | **-** | **-** | **3** | **-** | **-** | | **3** |
| **6** | **-** | **0** | **-** | **-** | **-** | **4** | |

### Upgrading from 8 Nodes to 9 Nodes

To perform this upgrade, the network administrator utilizes the interim routing table provided below, removes links 5-0 and 6-3, adds links 8-0, 8-3, 8-5, and 8-6, and then utilizes the routing table described above for a network of 9 nodes.

| **FROM \ TO** | **0** | **1** | **2** | **3** | **4** | **5** | **6** | **7** |
|---|---|---|---|---|---|---|---|---|
| **0** | | **-** | **3** | **-** | **-** | **4** | **-** | **6** |
| **1** | **-** | | **-** | **2** | **-** | **-** | **7** | **-** |
| **2** | **1-** | | | **-** | **-** | **4** | **-** | **-** |
| **3** | **-** | **0** | **-** | | **5** | **-** | **7** | **-** |
| **4** | **-** | **-** | **-** | **2** | | **-** | **-** | **6** |
| **5** | **1** | **-** | **3** | **-** | **-** | | **7** | **-** |
| **6** | **-** | **0** | **-** | **2** | **-** | **4** | | **-** |
| **7** | **1** | **-** | **-** | **-** | **5** | **-** | **-** | |

### Upgrading from 9 Nodes to 10 Nodes

To perform this upgrade, the network administrator utilizes the interim routing table provided below, removes links 4-1 and 7-2, adds links 9-1, 9-2, 9-4, 9-7, and 9-8, and then utilizes the routing table described above for a network of 10 nodes.

| **FROM \ TO** | **0** | **1** | **2** | **3** | **4** | **5** | **6** | **7** | **8** |
|---|---|---|---|---|---|---|---|---|---|
| **0** | | **-** | **3** | **-** | **-** | **4** | **-** | **6** | **-** |
| **1** | **-** | | **-** | **2** | **5** | **-** | **7** | **-** | **5** |
| **2** | **1** | **-** | | **-** | **-** | **4** | **-** | **6** | **6** |
| **3** | **-** | **0** | **-** | | **5** | **-** | **7** | **-** | **-** |
| **4** | **-** | **0** | **-** | **2** | | **-** | **-** | **6** | **0** |
| **5** | **1** | **-** | **3** | **-** | **-** | | **7** | **-** | **-** |
| **6** | **-** | **0** | **-** | **2** | **-** | **4** | | **-** | **-** |
| **7** | **1** | **-** | **3** | **-** | **5** | **-** | **-** | | **3** |
| **8** | **-** | **0** | **3** | **-** | **5** | **-** | **-** | **6** | |

### Upgrading from 10 Nodes to 11 Nodes

To upgrade from 10 nodes to 11 nodes, the network administrator utilizes the interim routing table provided below, removes links 2-1, 6-4, and 7-5, adds links 10-1, 10-2, 7-4, 10-5, and 10-6, and then utilizes the routing table described above for a network of 11 nodes.

| **FROM \ TO** | **0** | **1** | **2** | **3** | **4** | **5** | **6** | **7** | **8** | **9** |
|---|---|---|---|---|---|---|---|---|---|---|
| **0** | | **-** | **3** | **-** | **-** | **4** | **-** | **6** | **-** | **8** |
| **1** | **-** | | **9** | **5** | **5** | **-** | **7** | **-** | **9** | **-** |
| **2** | **6** | **9** | | **-** | **-** | **4** | **-** | **6** | **9** | **-** |
| **3** | **-** | **0** | **-** | | **5** | **-** | **7** | **-** | **-** | **8** |
| **4** | **-** | **0** | **-** | **2** | | **-** | **0** | **9** | **9** | **-** |
| **5** | **1** | **-** | **3** | **-** | **-** | | **8** | **1** | **-** | **8** |
| **6** | **-** | **0** | **-** | **2** | **2** | **8** | | **-** | **-** | **8** |
| **7** | **1** | **-** | **3** | **-** | **9** | **3** | **-** | | **9** | **-** |
| **8** | **-** | **0** | **3** | **-** | **5** | **-** | **-** | **6** | | **-** |
| **9** | **1** | **-** | **-** | **2** | **-** | **4** | **7** | **-** | **-** | |

### Upgrading from 11 Nodes to 12 Nodes

To upgrade from 11 nodes to 12 nodes, the network administrator utilizes the interim routing table provided below, removes links 3-0 and 7-4, adds links 11-0, 11-3, 11-4, 11-7, and 11-10, and then utilizes the routing table described above for a network of 12 nodes.

| **FROM \ TO** | **0** | **1** | **2** | **3** | **4** | **5** | **6** | **7** | **8** | **9** | **10** |
|---|---|---|---|---|---|---|---|---|---|---|---|
| **0** | | **-** | **4** | **8** | **-** | **4** | **-** | **6** | **-** | **8** | **6** |
| **1** | **-** | | **9** | **5** | **5** | **-** | **7** | **-** | **9** | **-** | **-** |
| **2** | **6** | **10** | | **-** | **-** | **4** | **-** | **6** | **9** | **-** | **-** |
| **3** | **8** | **7** | **-** | | **5** | **-** | **7** | **-** | **-** | **8** | **5** |
| **4** | **-** | **0** | **-** | **2** | | **-** | **0** | **9** | **9** | **-** | **2** |
| **5** | **1** | **-** | **3** | **-** | **-** | | **8** | **1** | **-** | **8** | **-** |
| **6** | **-** | **0** | **-** | **2** | **2** | **8** | | **-** | **-** | **8** | **-** |
| **7** | **1** | **-** | **3** | **-** | **9** | **3** | **-** | | **9** | **-** | **1** |
| **8** | **-** | **0** | **3** | **-** | **5** | **-** | **-** | **6** | | **-** | **6** |
| **9** | **1** | **-** | **-** | **2** | **-** | **4** | **7** | **-** | **-** | | **1** |
| **10** | **1** | **-** | **-** | **2** | **5** | **-** | **-** | **6** | **6** | **2** | |

### Upgrading from 12 Nodes to 13 Nodes

To perform this upgrade, the network administrator utilizes the interim routing table provided below, removes links 11-4, 10-5, 8-6, and 9-7, adds links 12-4, 9-5, 11-6, 12-7, 12-8, and 12-10, and then utilizes the routing table described above for a network of 13 nodes. The entry at the intersection of row 4 and column 7, for example, indicates that data from node 4 is sent to node 7 by way of nodes 0 and 6. That is, a path of length 3 is used. Paths of length 3 are needed only during the upgrade/downgrade procedure.

| **FROM \ TO** | **0** | **1** | **2** | **3** | **4** | **5** | **6** | **7** | **8** | **9** | **10** | **11** |
|---|---|---|---|---|---|---|---|---|---|---|---|---|
| **0** | | **-** | **4** | **8** | **-** | **4** | **-** | **6** | **-** | **8** | **11** | **-** |
| **1** | **-** | | **9** | **5** | **5** | **-** | **7** | **-** | **9** | **-** | **-** | **10** |
| **2** | **4** | **10** | | **-** | **-** | **4** | **-** | **6** | **9** | **-** | **-** | **10** |
| **3** | **8** | **7** | **-** | | **5** | **-** | **7** | **-** | **-** | **8** | **11** | **-** |
| **4** | **-** | **0** | **-** | **2** | | **-** | **0** | **0,6** | **9** | **-** | **2** | **0** |
| **5** | **1** | **-** | **3** | **-** | **-** | | **1,7** | **1** | **-** | **8** | **1** | **3** |
| **6** | **-** | **0** | **-** | **2** | **2** | **2,4** | | **-** | **0** | **2** | **-** | **10** |
| **7** | **1** | **-** | **3** | **-** | **3,5** | **3** | **-** | | **3** | **1** | **11** | **-** |
| **8** | **-** | **0** | **3** | **-** | **5** | **-** | **0** | **3** | | **-** | **0,11** | **0** |
| **9** | **1** | **-** | **-** | **2** | **-** | **4** | **2** | **1** | **-** | | **1** | **1,10** |
| **10** | **1** | **-** | **-** | **2** | **2** | **1** | **-** | **6** | **2,9** | **2** | | **-** |
| **11** | **-** | **0** | **3** | **-** | **0** | **3** | **7** | **-** | **3** | **3,8** | **-** | |

### Upgrading from 13 Nodes to 14 Nodes

To perform this upgrade, the network administrator utilizes the interim routing table provided below, removes links 9-5 and 11-6, adds links 13-5, 13-6, 13-9, 13-11, and 13-12, and then utilizes the routing table described above for a network of 14 nodes.

| **FROM \ TO** | **0** | **1** | **2** | **3** | **4** | **5** | **6** | **7** | **8** | **9** | **10** | **11** | **12** |
|---|---|---|---|---|---|---|---|---|---|---|---|---|---|
| **0** | | **-** | **4** | **8** | **-** | **4** | **-** | **6** | **-** | **8** | **11** | **-** | **4** |
| **1** | **-** | | **9** | **5** | **5** | **-** | **7** | **-** | **9** | **-** | **-** | **10** | **7** |
| **2** | **6** | **10** | | **-** | **-** | **4** | **-** | **6** | **9** | **-** | **-** | **10** | **10** |
| **3** | **8** | **7** | **-** | | **5** | **-** | **7** | **-** | **-** | **8** | **11** | **-** | **7** |
| **4** | **-** | **0** | **-** | **2** | | **-** | **0** | **12** | **9** | **-** | **12** | **0** | **-** |
| **5** | **1** | **-** | **3** | **-** | **-** | | **1,7** | **1** | **-** | **8** | **1** | **3** | **8** |
| **6** | **-** | **0** | **-** | **2** | **2** | **2,4** | | **-** | **0** | **2** | **-** | **10** | **10** |
| **7** | **1** | **-** | **3** | **-** | **12** | **3** | **-** | | **3** | **1** | **11** | **-** | **-** |
| **8** | **-** | **0** | **3** | **-** | **5** | **-** | **0** | **12** | | **-** | **12** | **0** | **-** |
| **9** | **1** | **-** | **-** | **2** | **-** | **4** | **2** | **1** | **-** | | **1** | **1,10** | **4** |
| | | | | | | | | | | | | | |
| **10** | **1** | **-** | **-** | **2** | **2** | **1** | **-** | **6** | **12** | **2** 2 | | **-** | **-** |
| **11** | **-** | **0** | **3** | **-** | **0** | **3** | **7** | **-** | **3** | **3,8** | **-** | | **7** |
| **12** | **8** | **10** | **4** | **8** | **-** | **4** | **7** | **-** | **-** | **8** | **-** | **10** | |

### Upgrading from 14 Nodes to 15 Nodes

To perform this upgrade, the network administrator utilizes the interim routing table provided below, removes links 8-5 and 10-6, adds links 14-5, 14-6, 14-8, and 14-10, and then utilizes the routing table described above for a network of 15 nodes.

| **FROM \ TO** | **0** | **1** | **2** | **3** | **4** | **5** | **6** | **7** | **8** | **9** | **10** | **11** | **12** | **13** |
|---|---|---|---|---|---|---|---|---|---|---|---|---|---|---|
| **0** | | **-** | **4** | **8** | **-** | **4** | **-** | **6** | **-** | **8** | **11** | **-** | **4** | **6** |
| **1** | **-** | | **9** | **5** | **5** | **-** | **7** | **-** | **9** | **-** | **-** | **10** | **7** | **9** |
| **2** | **6** | **10** | | **-** | **-** | **4** | **-** | **6** | **9** | **-** | **-** | **10** | **10** | **6** |
| **3** | **11** | **7** | **-** | | **5** | **-** | **7** | **-** | **-** | **8** | **11** | **-** | **7** | **11** |
| **4** | **-** | **0** | **-** | **2** | | **-** | **0** | **12** | **9** | **-** | **12** | **0** | **-** | **12** |
| **5** | **1** | **-** | **3** | **-** | **-** | | **13** | **1** | **3** | **1** | **1** | **13** | **13** | **-** |
| **6** | **-** | **0** | **-** | **2** | **2** | **13** | | **-** | **0** | **2** | **2** | **0** | **13** | **-** |
| **7** | **1** | **-** | **3** | **-** | **12** | **3** | **-** | | **3** | **1** | **11** | **-** | **-** | **12** |
| **8** | **-** | **0** | **3** | **-** | **12** | **3** | **0** | **12** | | **-** | **12** | **0** | **-** | **12** |
| **9** | **1** | **-** | **-** | **2** | **-** | **4** | **13** | **1** | **-** | | **1** | **13** | **13** | **-** |
| **10** | **1** | **-** | **-** | **2** | **2** | **1** | **2** | **12** | **12** | **2** | | **-** | **-** | **12** |
| **11** | **-** | **0** | **3** | **-** | **0** | **3** | **7** | **-** | **3** | **1** **3** | **-** | | **13** | **-** |
| **12** | **8** | **10** | **4** | **8** | **-** | **4** | **7** | **-** | **-** | **8** | **-** | **10** | | **-** |
| **13** | **11** | **9** | **9** | **5** | **5** | **-** | **-** | **6** | **9** | **-** | **11** | **-** | **-** | |

### Upgrading from 15 Nodes to 16 Nodes

When upgrading from 15 nodes to 16 nodes, the network administrator utilizes the interim routing table provided below, removes links 9-4 and 11-7, adds links 15-4, 15-7, 15-9, 15-11, and 15-14, and then utilizes the routing table described above for a network of 16 nodes.

| **FROM \ TO** | **0** | **1** | **2** | **3** | **4** | **5** | **6** | **7** | **8** | **9** | **10** | **11** | **12** | **13** | **14** |
|---|---|---|---|---|---|---|---|---|---|---|---|---|---|---|---|
| **0** | | **-** | **4** | **8** | **-** | **4** | **-** | **6** | **-** | **8** | **11** | **-** | **4** | **6** | **8** |
| **1** | **-** | | **9** | **5** | **5** | **-** | **7** | **-** | **9** | **-** | **-** | **10** | **7** | **5** | **5** |
| **2** | **6** | **10** | | **-** | **-** | **4** | **-** | **6** | **9** | **-** | **-** | **10** | **10** | **6** | **6** |
| **3** | **11** | **7** | **-** | | **5** | **-** | **7** | **-** | **-** | **8** | **11** | **-** | **7** | **11** | **5** |
| **4** | **-** | **0** | **-** | **2** | | **-** | **0** | **12** | **0** | **2** | **12** | **0** | **-** | **12** | **5** |
| **5** | **1** | **-** | **3** | **-** | **-** | | **13** | **1** | **3** | **1** | **1** | **13** | **13** | **-** | **-** |
| **6** | **-** | **0** | **-** | **2** | **2** | **14** | | **-** | **14** | **2** | **2** | **0** | **13** | **-** | **-** |
| **7** | **1** | **-** | **3** | **-** | **12** | **3** | **-** | | **3** | **1** | **1** | **3** | **-** | **12** | **6** |
| **8** | **-** | **0** | **3** | **-** | **12** | **14** | **0** | **12** | | **-** | **12** | **0** | **-** | **12** | **-** |
| **9** | **1** | **-** | **-** | **2** | **2** | **13** | **13** | **1** | **-** | | **1** | **13** | **13** | **-** | **8** |
| **10** | **1** | **-** | **-** | **2** | **2** | **14** | **2** | **12** | **14** | **2** | | **-** | **-** | **12** | **-** |
| **11** | **-** | **0** | **3** | **-** | **0** | **3** | **13** | **3** | **3** | **13** | **-** | | **13** | **-** | **10** |
| **12** | **8** | **10** | **4** | **8** | **-** | **4** | **7** | **-** | **-** | **8** | **-** | **10** | | **-** | **8** |
| **13** | **11** | **9** | **9** | **5** | **5** | **-** | **-** | **6** | **9** | **-** | **11** | **-** | **-** | | **5** |
| **14** | **6** | **10** | **10** | **8** | **5** | **-** | **-** | **6** | **-** | **8** | **-** | **10** | **10** | **6** | |

### Upgrading 2 Nodes at a Time

Because the data processing system suitable for use with methods and systems consistent with the present invention may contain two nodes, the network topologies described above can be easily upgraded two nodes at a time when the network initially has an even number of nodes. These two additional nodes become partner nodes within the same data processing system. As described in detail below, when adding two nodes, the network administrator removes four links from the network topology and adds nine new links, including an additional link (a partner link) between the two nodes. One skilled in the art will appreciate that the below-described upgrade sequences can be reversed to remove two partner nodes at a time.

### Upgrading from 6 Nodes to 8 Nodes

To upgrade from six nodes to eight nodes, the network administrator utilizes the interim routing table provided below, removes links 2-0, 4-3, 3-1, and 5-2, adds links 6-0, 6-2, 6-3, 6-4, 7-1, 7-2, 7-3, 7-5, and 7-6, and then utilizes the routing table described above for a network of 8 nodes.

| **FROM \ TO** | **0** | **1** | **2** | **3** | **4** | **5** |
|---|---|---|---|---|---|---|
| **0** | | **-** | **3** | **-** | **-** | **-** |
| **1** | **-** | | **-** | **2** | **-** | **-** |
| **2** | **1** | **-** | | **-** | **-** | **4** |
| **3** | **-** | **0** | **-** | | **5** | **-** |
| **4** | **-** | **-** | **-** | **2** | | **-** |
| **5** | **-** | **-** | **3** | **-** | **-** | |

### Upgrading from 8 Nodes to 10 Nodes

To perform this upgrade, the network administrator utilizes the interim routing table provided below, removes links 5-0, 6-3, 4-1, and 7-2, adds links 8-0, 8-3, 8-5, 8-6, 9-1, 9-2, 9-4, 9-7, and 9-8, and then utilizes the routing table described above for a network of 10 nodes.

| **FROM\TO** | **0** | **1** | **2** | **3** | **4** | **5** | **6** | **7** |
|---|---|---|---|---|---|---|---|---|
| **0** | | **-** | **3** | **-** | **-** | **4** | **-** | **6** |
| **1** | **-** | | **-** | **2** | **5** | **-** | **7** | **-** |
| **2** | **1** | **-** | | **-** | **-** | **4** | **-** | **6** |
| **3** | **-** | **0** | **-** | | **5** | **-** | **7** | **-** |
| **4** | **-** | **0** | **-** | **2** | | **-** | **-** | **6** |
| **5** | **1** | **-** | **3** | **-** | **-** | | **7** | **-** |
| **6** | **-** | **0** | **-** | **2** | **-** | **4** | | **-** |
| **7** | **1** | **-** | **3** | **-** | **5** | **-** | **-** | |

### Upgrading from 10 Nodes to 12 Nodes

To perform this upgrade, the network administrator utilizes the interim routing table provided below, removes links 2-1, 6-4, 7-5, and 3-0, adds links 10-1, 10-2, 10-5, 10-6, 11-0, 11-3, 11-4, 11-7, and 11-10, and then utilizes the routing table described above for a network of 12 nodes.

| **FROM \ TO** | **0** | **1** | **2** | **3** | **4** | **5** | **6** | **7** | **8** | **9** |
|---|---|---|---|---|---|---|---|---|---|---|
| **0** | | **-** | **4** | **8** | **-** | **4** | **-** | **6** | **-** | **8** |
| **1** | **-** | | **9** | **5** | **5** | **-** | **7** | **-** | **9** | **-** |
| **2** | **6** | **9** | | **-** | **-** | **4** | **-** | **6** | **9** | **-** |
| **3** | **8** | **7** | **-** | | **5** | **-** | **7** | **-** | **-** | **8** |
| **4** | **-** | **0** | **-** | **2** | | **-** | **0** | **9** | **9** | **-** |
| **5** | **1** | **-** | **3** | **-** | **-** | | **8** | **1** | **-** | **8** |
| **6** | **-** | **0** | **-** | **2** | **2** | **8** | | **-** | **-** | **8** |
| **7** | **1** | **-** | **3** | **-** | **9** | **3** | **-** | | **9** | **-** |
| **8** | **-** | **0** | **3** | **-** | **5** | **-** | **-** | **6** | | **-** |
| **9** | **1** | **-** | **-** | **2** | **-** | **4** | **7** | **-** | **-** | |

### Upgrading from 12 Nodes to 14 Nodes

To perform this upgrade, the network administrator utilizes the interim routing table provided below, removes links 11-4, 10-5, 8-6, and 9-7, adds links 12-4, 12-7, 12-8, 12-10, 13-5, 13-6, 13-9, 13-11, and 13-12, and then utilizes the routing table described above for a network of 14 nodes.

| **FROM \ TO** | **0** | **1** | **2** | **3** | **4** | **5** | **6** | **7** | **8** | **9** | **10** | **11** |
|---|---|---|---|---|---|---|---|---|---|---|---|---|
| **0** | | **-** | **4** | **8** | **-** | **4** | **-** | **6** | **-** | **8** | **11** | **-** |
| **1** | **-** | | **9** | **5** | **5** | **-** | **7** | **-** | **9** | **-** | **-** | **10** |
| **2** | **4** | **10** | | **-** | **-** | **4** | **-** | **6** | **9** | **-** | **-** | **10** |
| **3** | **8** | **7** | **-** | | **5** | **-** | **7** | **-** | **-** | **8** | **11** | **-** |
| **4** | **-** | **0** | **-** | **2** | | **-** | **0** | **0,6** | **9** | **-** | **2** | **0** |
| **5** | **1** | **-** | **3** | **-** | **-** | | **1,7** | **1** | **-** | **8** | **1** | **3** |
| **6** | **-** | **0** | **-** | **2** | **2** | **2,4** | | **-** | **0** | **2** | **-** | **10** |
| **7** | **1** | **-** | **3** | **-** | **3,5** | **3** | **-** | | **3** | **1** | **11** | **-** |
| **8** | **-** | **0** | **3** | **-** | **5** | **-** | **0** | **3** | | **-** | **0,11** | **0** |
| **9** | **1** | **-** | **-** | **2** | **-** | **4** | **2** | **1** | **-** | | **1** | **1,10** |
| **10** | **1** | **-** | **-** | **2** | **2** | **1** | **-** | **6** | **2,9** | **2** | | **-** |
| **11** | **-** | **0** | **3** | **-** | **0** | **3** | **7** | **-** | **3** | **3,8** | **-** | |

### Upgrading from 14 Nodes to 16 Nodes

To perform this upgrade, the network administrator utilizes the interim routing table provided below, removes links 8-5, 10-6, 9-4, and 11-7, adds links 14-5, 14-6, 14-8, 14-10, 15-4, 15-7, 15-9, 15-11, and 15-14, and then utilizes the routing table described above for a network of 16 nodes.

| **FROM \ TO** | **0** | **1** | **2** | **3** | **4** | **5** | **6** | **7** | **8** | **9** | **10** | **11** | **12** | **13** |
|---|---|---|---|---|---|---|---|---|---|---|---|---|---|---|
| **0** | | **-** | **4** | **8** | **-** | **4** | **-** | **6** | **-** | **8** | **11** | **-** | **8** | **6** |
| **1** | **-** | | **9** | **5** | **5** | **-** | **7** | **-** | **9** | **-** | **-** | **10** | **7** | **5** |
| **2** | **6** | **10** | | **-** | **-** | **4** | **-** | **6** | **9** | **-** | **-** | **10** | **10** | **6** |
| **3** | **11** | **7** | **-** | | **5** | **-** | **7** | **-** | **-** | **8** | **11** | **-** | **7** | **11** |
| **4** | **-** | **0** | **-** | **2** | | **-** | **0** | **12** | **0** | **2** | **12** | **0** | **-** | **12** |
| **5** | **1** | **-** | **3** | **-** | **-** | | **13** | **1** | **3** | **1** | **1** | **13** | **13** | **-** |
| **6** | **-** | **0** | **-** | **2** | **2** | **13** | | **-** | **0** | **2** | **2** | **0** | **13** | **-** |
| **7** | **1** | **-** | **3** | **-** | **12** | **3** | **-** | | **3** | **1** | **1** | **3** | **-** | **12** |
| **8** | **-** | **0** | **3** | **-** | **12** | **3** | **0** | **12** | | **-** | **12** | **0** | **-** | **12** |
| **9** | **1** | **-** | **-** | **2** | **2** | **13** | **13** | **1** | **-** | | **1** | **13** | **13** | **-** |
| **10** | **1** | **-** | **-** | **2** | **2** | **1** | **2** | **12** | **12** | **2** | | **-** | **-** | **12** |
| **11** | **-** | **0** | **3** | **-** | **0** | **3** | **13** | **3** | **3** | **13** | **-** | | **13** | **-** |
| **12** | **8** | **10** | **4** | **8** | **-** | **4** | **7** | **-** | **-** | **8** | **-** | **10** | | **-** |
| **13** | **11** | **9** | **9** | **5** | **5** | **-** | **-** | **6** | **9** | **-** | **11** | **-** | **-** | |

## Claims

1. A method in a distributed system, comprising:
providing a network containing seven nodes, including a node 0, a node 1, a node 2, a node 3, a node 4, a node 5, and a node 6; and
routing packets through the network to prevent deadlock based on at least one of the following routing configurations:
(i) routing packets directly from node 0 to one of nodes 1 and 3-6, and indirectly to node 2 through node 3,
(ii) routing packets directly from node 1 to one of nodes 0 and 2-5, and indirectly to node 6 through node 4,
(iii) routing packets directly from node 2 to one of nodes 1 and 3-6, and indirectly to node 0 through node 1,
(iv) routing packets directly from node 3 to one of nodes 0-2, 5, and 6, and indirectly to node 4 through node 5,
(v) routing packets directly from node 4 to one of nodes 0-2, 5, and 6, and indirectly to node 3 through node 2,
(vi) routing packets directly from node 5 to one of nodes 1-4, and indirectly to node 6 through node 3, and
(vii) routing packets directly from node 6 to one of nodes 0 and 2-4, and indirectly to node 1 through node 0 and to node 5 through node 4.

2. A method in a distributed system, comprising:
providing a network containing eight nodes, including a node 0, a node 1, a node 2, a node 3, a node 4, a node 5, a node 6, and a node 7; and
routing packets through the network to prevent deadlock based on at least one of the following routing configurations:
(i) routing packets directly from node 0 to one of nodes 1 and 3-6, and indirectly to node 2 through node 3 and to node 7 through node 6,
(ii) routing packets directly from node 1 to one of nodes 0, 2, 4, 5, and 7, and indirectly to node 3 through node 2 and to node 6 through node 7,
(iii) routing packets directly from node 2 to one of nodes 1, 3, 4, 6, and 7, and indirectly to node 0 through node 1 and to node 5 through node 4,
(iv) routing packets directly from node 3 to one of nodes 0, 2, and 5-7, and indirectly to node 1 through node 0 and to node 4 through node 5,
(v) routing packets directly from node 4 to one of nodes 0-2, 5, and 6, and indirectly to node 3 through node 2 and to node 7 through node 6,
(vi) routing packets directly from node 5 to one of nodes 0, 1, 3, 4, and 7, and indirectly to node 2 through node 3 and to node 6 through node 7,
(vii) routing packets directly from node 6 to one of nodes 0, 2-4, and 7, and indirectly to node 1 through node 0 and to node 5 through node 4, and
(viii) routing packets directly from node 7 to one of nodes 1-3 and 5, 6, and indirectly to node 0 through node 1 and to node 4 through node 5.

3. A method in a distributed system, comprising:
providing a network containing nine nodes, including a node 0, a node 1, a node 2, a node 3, a node 4, a node 5, a node 6, a node 7, and a node 8; and
routing packets through the network to prevent deadlock based on at least one of the following routing configurations:
(i) routing packets directly from node 0 to one of nodes 1, 3, 4, 6, and 8, and indirectly to node 2 through node 3, to node 5 through node 4, and to node 7 through node 6,
(ii) routing packets directly from node 1 to one of nodes 0, 2, 4, 5, and 7, and indirectly to node 3 through node 2, to node 6 through node 7, and to node 8 through node 5,
(iii) routing packets directly from node 2 to one of nodes 1, 3, 4, 6, and 7, and indirectly to node 0 through node 1, to node 5 through node 4 and to node 8 through node 6,
(iv) routing packets directly from node 3 to one of nodes 0, 2, 5, 7, and 8, and indirectly to node 1 through node 0, to node 4 through node 5, and to node 6 through node 7,
(v) routing packets directly from node 4 to one of nodes 0-2, 5, and 6, and indirectly to node 3 through node 2, to node 7 through node 6, and to node 8 through node 0,
(vi) routing packets directly from node 5 to one of nodes 1, 3, 4, 7, and 8, and indirectly to node 0 through node 1, to node 2 through node 3, and to node 6 through node 7,
(vii) routing packets directly from node 6 to one of nodes 0, 2, 4, 7, and 8, and indirectly to node 1 through node 0, to node 3 through node 2, and to node 5 through node 4,
(viii) routing packets directly from node 7 to one of nodes 1-3 and 5, 6, and indirectly to node 0 through node 1, to node 4 through node 5, and to node 8 through node 3, and
(ix) routing packets directly from node 8 to one of nodes 0, 3, 5, and 6, and indirectly to node 1 through node 0, to node 2 through node 3, to node 4 through node 5, and to node 7 through node 6.

4. A method in a distributed system, comprising:
providing a network containing ten nodes, including a node 0, a node 1, a node 2, a node 3, a node 4, a node 5, a node 6, a node 7, a node 8, and a node 9; and
routing packets through the network to prevent deadlock based on at least one of the following routing configurations:
(i) routing packets directly from node 0 to one of nodes 1, 3, 4, 6, and 8, and indirectly to node 2 through node 3, to node 5 through node 4, to node 7 through node 6, and to node 9 through node 8,
(ii) routing packets directly from node 1 to one of nodes 0, 2, 5, 7, and 9, and indirectly to node 3 through node 2, to node 4 through node 5, to node 6 through node 7, and to node 8 through node 9,
(iii) routing packets directly from node 2 to one of nodes 1, 3, 4, 6, and 9, and indirectly to node 0 through node 1, to node 5 through node 4, to node 7 through node 6, and to node 8 through node 9,
(iv) routing packets directly from node 3 to one of nodes 0, 2, 5, 7, and 8, and indirectly to node 1 through node 0, to node 4 through node 5, to node 6 through node 7, and to node 9 through node 8,
(v) routing packets directly from node 4 to one of nodes 0, 2, 5, 6, and 9, and indirectly to node 1 through node 0, to node 3 through node 2, to node 7 through node 6, and to node 8 through node 9,
(vi) routing packets directly from node 5 to one of nodes 1, 3, 4, 7, and 8, and indirectly to node 0 through node 1, to node 2 through node 3, to node 6 through node 7, and to node 9 through node 8,
(vii) routing packets directly from node 6 to one of nodes 0, 2, 4, 7, and 8, and indirectly to node 1 through node 0, to node 3 through node 2, to node 5 through node 4, and to node 9 through node 8,
(viii) routing packets directly from node 7 to one of nodes 1, 3, 5, 6, and 9, and indirectly to node 0 through node 1, to node 2 through node 3, to node 4 through node 5, and to node 8 through node 9,
(ix) routing packets directly from node 8 to one of nodes 0, 3, 5, 6, and 9, and indirectly to node 1 through node 0, to node 2 through node 3, to node 4 through node 5, and to node 7 through node 6, and
(x) routing packets directly from node 9 to one of nodes 1, 2, 4, 7, and 8, and indirectly to node 0 through node 1, to node 3 through node 2, to node 5 through node 4, and to node 6 through node 7.

5. A method in a distributed system, comprising:
providing a network containing eleven nodes, including a node 0, a node 1, a node 2, a node 3, a node 4, a node 5, a node 6, a node 7, a node 8, a node 9, and a node 10; and
routing packets through the network to prevent deadlock based on at least one of the following routing configurations:
(i) routing packets directly from node 0 to one of nodes 1, 3, 4, 6, and 8, and indirectly to node 2 through node 3, to node 5 through node 4, to node 7 through node 6, to node 9 through node 8, and to node 10 through node 6,
(ii) routing packets directly from node 1 to one of nodes 0, 5, 7, 9, and 10, and indirectly to node 2 through node 9, to node 3 through node 5, to node 4 through node 5, to node 6 through node 7, and to node 8 through node 9,
(iii) routing packets directly from node 2 to one of nodes 3, 4, 6, 9, and 10, and indirectly to node 0 through node 6, to node 1 through node 10, to node 5 through node 4, to node 7 through node 6, and to node 8 through node 9,
(iv) routing packets directly from node 3 to one of nodes 0, 2, 5, 7, and 8, and indirectly to node 1 through node 0, to node 4 through node 5, to node 6 through node 7, to node 9 through node 8, and to node 10 through node 5,
(v) routing packets directly from node 4 to one of nodes 0, 2, 5, 7, and 9, and indirectly to node 1 through node 0, to node 3 through node 2, to node 6 through node 7, to node 8 through node 9, and to node 10 through node 2,
(vi) routing packets directly from node 5 to one of nodes 1, 3, 4, 7, 8, and 10, and indirectly to node 0 through node 1, to node 2 through node 3, to node 6 through node 8, to node 7 through node 1, and to node 9 through node 8,
(vii) routing packets directly from node 6 to one of nodes 0, 2, 7, 8, and 10, and indirectly to node 1 through node 0, to node 3 through node 2, to node 4 through node 2, to node 5 through node 8, and to node 9 through node 8,
(viii) routing packets directly from node 7 to one of nodes 1, 3, 4, 6, and 9, and indirectly to node 0 through node 1, to node 2 through node 3, to node 5 through node 4, to node 8 through node 9, and to node 10 through node 1,
(ix) routing packets directly from node 8 to one of nodes 0, 3, 5, 6, and 9, and indirectly to node 1 through node 0, to node 2 through node 3, to node 4 through node 5, to node 7 through node 6, and to node 10 through node 6,
(x) routing packets directly from node 9 to one of nodes 1, 2, 4, 7, and 8, and indirectly to node 0 through node 1, to node 3 through node 2, to node 5 through node 4, to node 6 through node 7, and to node 10 through node 1, and
(xi) routing packets directly from node 10 to one of nodes 1, 2, 5, and 6, and indirectly to node 0 through node 1, to node 3 through node 2, to node 4 through node 5, to node 7 through node 6, to node 8 through node 6, and to node 9 through node 2.

6. A method in a distributed system, comprising:
providing a network containing twelve nodes, including a node 0, a node 1, a node 2, a node 3, a node 4, a node 5, a node 6, a node 7, a node 8, a node 9, a node 10, and a node 11; and
routing packets through the network to prevent deadlock based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, and to node 10 through node 11,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, and to node 11 through node 10,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, and to node 11 through node 10,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, and to node 10 through node 11,
(v) routing packets directly from node 4 to one of nodes 0, 2, 5, 9, and 11, and indirectly to node 1 through node 0, to node 3 through node 2, to node 6 through node 0, to node 7 through node 9, to node 8 through node 9, and to node 10 through node 11,
(vi) routing packets directly from node 5 to one of nodes 1, 3, 4, 8, and 10, and indirectly to node 0 through node 1, to node 2 through node 3, to node 6 through node 10, to node 7 through node 1, to node 9 through node 8, and to node 11 through node 10,
(vii) routing packets directly from node 6 to one of nodes 0, 2, 7, 8, and 10, and indirectly to node 1 through node 0, to node 3 through node 2, to node 4 through node 2, to node 5 through node 10, to node 9 through node 8, and to node 11 through node 10,
(viii) routing packets directly from node 7 to one of nodes 1, 3, 6, 9, and 11, and indirectly to node 0 through node 1, to node 2 through node 3, to node 4 through node 9, to node 5 through node 3, to node 8 through node 9, and to node 10 through node 11,
(ix) routing packets directly from node 8 to one of nodes 0, 3, 5, 6, and 9, and indirectly to node 1 through node 0, to node 2 through node 3, to node 4 through node 5, to node 7 through node 6, to node 10 through node 5, and to node 11 through node 0,
(x) routing packets directly from node 9 to one of nodes 1, 2, 4, 7, and 8, and indirectly to node 0 through node 1, to node 3 through node 2, to node 5 through node 4, to node 6 through node 7, to node 10 through node 1, and to node 11 through node 7,
(xi) routing packets directly from node 10 to one of nodes 1, 2, 5, 6, and 11, and indirectly to node 0 through node 1, to node 3 through node 2, to node 4 through node 5, to node 7 through node 6, to node 8 through node 5, and to node 9 through node 2, and
(xii) routing packets directly from node 11 to one of nodes 0, 3, 4, 7, and 10, and indirectly to node 1 through node 0, to node 2 through node 3, to node 5 through node 4, to node 6 through node 7, to node 8 through node 3, and to node 9 through node 7.

7. A method in a distributed system, comprising:
providing a network containing thirteen nodes, including a node 0, a node 1, a node 2, a node 3, a node 4, a node 5, a node 6, a node 7, a node 8, a node 9, a node 10, a node 11, and a node 12; and
routing packets through the network to prevent deadlock based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, and to node 12 through node 4,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, to node 11 through node 10, and to node 12 through node 7,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, and to node 12 though node 10,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, to node 10 through node 11, and to node 12 through node 7,
(v) routing packets directly from node 4 to one of nodes 0, 2, 5, 9, and 12, and indirectly to node 1 through node 0, to node 3 through node 2, to node 6 through node 0, to node 7 through node 12, to node 8 through node 9, to node 10 through node 12, to node 11 through node 0,
(vi) routing packets directly from node 5 to one of nodes 1, 3, 4, 6, and 8, and indirectly to node 0 through node 1, to node 2 through node 3, to node 7 through node 6, to node 9 through node 8, to node 10 through node 1, to node 11 through node 3, and to node 12 through node 8,
(vii) routing packets directly from node 6 to one of nodes 0, 2, 5, 7, and 10, and indirectly to node 1 through node 0, to node 3 through node 2, to node 4 through node 5, to node 8 through node 0, to node 9 through node 2, to node 11 through node 10, and to node 12 through node 10,
(viii) routing packets directly from node 7 to one of nodes 1, 3, 6, 11, and 12, and indirectly to node 0 through node 1, to node 2 through node 3, to node 4 through node 12, to node 5 through node 3, to node 8 through node 3, to node 9 through node 11, and to node 10 through node 11,
(ix) routing packets directly from node 8 to one of nodes 0, 3, 5, 9, and 12, and indirectly to node 1 through node 0, to node 2 through node 3, to node 4 through node 5, to node 6 through node 0, to node 7 through node 12, to node 10 through node 12, and to node 11 through node 0,
(x) routing packets directly from node 9 to one of nodes 1, 2, 4, 8, and 11, and indirectly to node 0 through node 1, to node 3 through node 2, to node 5 through node 4, to node 6 through node 2, to node 7 through node 1, to node 10 through node 11, and to node 12 through node 4,
(xi) routing packets directly from node 10 to one of nodes 1, 2, 6, 11, and 12, and indirectly to node 0 through node 1, to node 3 through node 2, to node 4 through node 2, to node 5 through node 6, to node 7 through node 6, to node 8 through node 12, and to node 9 through node 2,
(xii) routing packets directly from node 11 to one of nodes 0, 3, 7, 9, and 10, and indirectly to node 1 through node 0, to node 2 through node 3, to node 4 through node. 0, to node 5 through node 3, to node 6 through node 7, to node 8 through node 9, and to node 12 through node 7, and
(xiii) routing packets directly from node 12 to one of nodes 4, 7, 8, and 10, and indirectly to node 0 through node 8, to node 1 through node 10, to node 2 through node 4, to node 3 through node 8, to node 5 through node 7, to node 6 through node 7, to node 9 through node 8, and to node 11 through node 10.

8. A method in a distributed system, comprising:
providing a network containing fourteen nodes, including a node 0, a node 1, a node 2, a node 3, a node 4, a node 5, a node 6, a node 7, a node 8, a node 9, a node 10, a node 11, a node 12, and a node 13; and
routing packets through the network to prevent deadlock based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, to node 12 through node 8, and to node 13 through node 6,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, to node 11 through node 10, to node 12 through node 7, and to node 13 through node 5,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, to node 12 though node 10, and to node 13 through node 6,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, to node 10 through node 11, to node 12 through node 7, and to node 13 through node 11,
(v) routing packets directly from node 4 to one of nodes 0, 2, 5, 9, and 12, and indirectly to node 1 through node 0, to node 3 through node 2, to node 6 through node 0, to node 7 through node 12, to node 8 through node 9, to node 10 through node 12, to node 11 through node 0, and to node 13 through node 12,
(vi) routing packets directly from node 5 to one of nodes 1, 3, 4, 8, and 13, and indirectly to node 0 through node 1, to node 2 through node 3, to node 6 through node 13, to node 7 through node 1, to node 9 through node 8, to node 10 through node 1, to node 11 through node 13, and to node 12 through node 13,
(vii) routing packets directly from node 6 to one of nodes 0, 2, 7, 10, and 13, and indirectly to node 1 through node 0, to node 3 through node 2, to node 4 through node 2, to node 5 through node 13, to node 8 through node 0, to node 9 through node 2, to node 11 through node 10, and to node 12 through node 13,
(viii) routing packets directly from node 7 to one of nodes 1, 3, 6, 11, and 12, and indirectly to node 0 through node 1, to node 2 through node 3, to node 4 through node 12, to node 5 through node 3, to node 8 through node 3, to node 9 through node 1, to node 10 through node 11, and to node 13 through node 12,
(ix) routing packets directly from node 8 to one of nodes 0, 3, 5, 9, and 12, and indirectly to node 1 through node 0, to node 2 through node 3, to node 4 through node 5, to node 6 through node 0, to node 7 through node 12, to node 10 through node 12, to node 11 through node 0, and to node 13 through node 12,
(x) routing packets directly from node 9 to one of nodes 1, 2, 4, 8, and 13, and indirectly to node 0 through node 1, to node 3 through node 2, to node 5 through node 4, to node 6 through node 13, to node 7 through node 1, to node 10 through node 1, to node 11 through node 13, and to node 12 through node 13,
(xi) routing packets directly from node 10 to one of nodes 1, 2, 6, 11, and 12, and indirectly to node 0 through node 1, to node 3 through node 2, to node 4 through node 2, to node 5 through node 1, to node 7 through node 6, to node 8 through node 12, to node 9 through node 2, and to node 13 through node 12,
(xii) routing packets directly from node 11 to one of nodes 0, 3, 7, 10, and 13, and indirectly to node 1 through node 0, to node 2 through node 3, to node 4 through node 0, to node 5 through node 3, to node 6 through node 7, to node 8 through node 3, to node 9 through node 13, and to node 12 through node 13,
(xiii) routing packets directly from node 12 to one of nodes 4, 7, 8, 10, and 13, and indirectly to node 0 through node 8, to node 1 through node 10, to node 2 through node 4, to node 3 through node 8, to node 5 through node 4, to node 6 through node 7, to node 9 through node 8, and to node 11 through node 10, and
(xiv) routing packets directly from node 13 to one of nodes 5, 6, 9, 11, and 12, and indirectly to node 0 through node 11, to node 1 through node 9, to node 2 through node 9, to node 3 through node 5, to node 4 through node 5, to node 7 through node 6, to node 8 through node 9, and to node 10 through node 11.

9. A method in a distributed system, comprising:
providing a network containing fifteen nodes, including a node 0, a node 1, a node 2, a node 3, a node 4, a node 5, a node 6, a node 7, a node 8, a node 9, a node 10, a node 11, a node 12, a node 13, and a node 14; and
routing packets through the network to prevent deadlock based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, to node 12 through node 4, to node 13 through node 6, and to node 14 through node 8,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, to node 11 through node 10, to node 12 through node 7, to node 13 through node 5, and to node 14 through node 5,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, to node 12 though node 10, to node 13 through node 6, and to node 14 through node 6,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, to node 10 through node 11, to node 12 through node 7, to node 13 through node 11, and to node 14 through node 5,
(v) routing packets directly from node 4 to one of nodes 0, 2, 5, 9, and 12, and indirectly to node 1 through node 0, to node 3 through node 2, to node 6 through node 0, to node 7 through node 12, to node 8 through node 9, to node 10 through node 12, to node 11 through node 0, to node 13 through node 12, and to node 14 through node 5,
(vi) routing packets directly from node 5 to one of nodes 1, 3, 4, 13, and 14, and indirectly to node 0 through node 1, to node 2 through node 3, to node 6 through node 13, to node 7 through node 1, to node 8 through node 3, to node 9 through node 1, to node 10 through node 1, to node 11 through node 13, and to node 12 through node 13,
(vii) routing packets directly from node 6 to one of nodes 0, 2, 7, 13, and 14, and indirectly to node 1 through node 0, to node 3 through node 2, to node 4 through node 2, to node 5 through node 14, to node 8 through node 14, to node 9 through node 2, to node 10 through node 2, to node 11 through node 0, and to node 12 through node 13,
(viii) routing packets directly from node 7 to one of nodes 1, 3, 6, 11, and 12, and-indirectly to node 0 through node 1, to node 2 through node 3, to node 4 through node 12, to node 5 through node 3, to node 8 through node 3, to node 9 through node 1, to node 10 through node 11, to node 13 through node 12, and to node 14 through node 6,
(ix) routing packets directly from node 8 to one of nodes 0, 3, 9,12, and 14, and indirectly to node 1 through node 0, to node 2 through node 3, to node 4 through node 12, to node 5 through node 14, to node 6 through node 0, to node 7 through node 12, to node 10 through node 12, to node 11 through node 0, and to node 13 through node 12,
(x) routing packets directly from node 9 to one of nodes 1, 2, 4, 8, and 13, and indirectly to node 0 through node 1, to node 3 through node 2, to node 5 through node 4, to node 6 through node 13, to node 7 through node 1, to node 10 through node 1, to node 11 through node 13, to node 12 through node 13, and to node 14 through node 8,
(xi) routing packets directly from node 10 to one of nodes 1, 2, 11, 12, and 14, and indirectly to node 0 through node 1, to node 3 through node 2, to node 4 through node 2, to node 5 through node 14, to node 6 through node 2, to node 7 through 12, to node 8 through node 14, to node 9 through node 2, and to node 13 through node 12,
(xii) routing packets directly from node 11 to one of nodes 0, 3, 7, 10, and 13, and indirectly to node 1 through node 0, to node 2 through node 3, to node 4 through node 0, to node 5 through node 3, to node 6 through node 7, to node 8 through node 3, to node 9 through node 13, to node 12 through node 13, and to node 14 through node 10,
(xiii) routing packets directly from node 12 to one of nodes 4, 7, 8, 10, and 13, and indirectly to node 0 through node 8, to node 1 through node 10, to node 2 through node 4, to node 3 through node 8, to node 5 through node 4, to node 6 through node 7, to node 9 through node 8, to node 11 through node 10, and to node 14 through node 8,
(xiv) routing packets directly from node 13 to one of nodes 5, 6, 9, 11, and 12, and indirectly to node 0 through node 11, to node 1 through node 9, to node 2 through node 9, to node 3 through node 5, to node 4 through node 5, to node 7 through node 6, to node 8 through node 9, to node 10 through node 11, and to node 14 through node 5, and
(xv) routing packets directly from node 14 to one of nodes 5, 6, 8, and 10, and indirectly to node 0 through node 6, to node 1 through node 10, to node 2 through node 10, to node 3 through node 8, to node 4 through node 5, to node 7 through node 6, to node 9 through node 8, to node 11 through node 10, to node 12 through node 10, and to node 13 through node 6.

10. A method in a distributed system, comprising:
providing a network containing sixteen nodes, including a node 0, a node 1, a node 2, a node 3, a node 4, a node 5, a node 6, a node 7, a node 8, a node 9, a node 10, a node 11, a node 12, a node 13, a node 14, and a node 15; and
routing packets through the network to prevent deadlock based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, to node 12 through node 4, to node 13 through node 6, to node 14 through node 8, and to node 15 through node 4,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, to node 11 through node 10, to node 12 through node 7, to node 13 through node 5, to node 14 through node 5, and to node 15 through node 9,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, to node 12 though node 10, to node 13 through node 6, to node 14 through node 6, and to node 15 through node 4,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, to node 10 through node 11, to node 12 through node 7, to node 13 through node 11, to node 14 through node 5, and to node 15 through node 7,
(v) routing packets directly from node 4 to one of nodes 0, 2, 5, 12, and 15, and indirectly to node 1 through node 0, to node 3 through node 2, to node 6 through node 0, to node 7 through node 12, to node 8 through node 0, to node 9 through node 2, to node 10 through node 12, to node 11 through node 0, to node 13 through node 12, and to node 14 through node 15,
(vi) routing packets directly from node 5 to one of nodes 1, 3, 4, 13, and 14, and indirectly to node 0 through node 1, to node 2 through node 3, to node 6 through node 13, to node 7 through node 1, to node 8 through node 3, to node 9 through node 1, to node 10 through node 1, to node 11 through node 13, to node 12 through node 13, and to node 15 through node 14,
(vii) routing packets directly from node 6 to one of nodes 0, 2, 7, 13, and 14, and indirectly to node 1 through node 0, to node 3 through node 2, to node 4 through node 2, to node 5 through node 14, to node 8 through node 14, to node 9 through node 2, to node 10 through node 2, to node 11 through node 0, to node 12 through node 13, and to node 15 through node 14,
(viii) routing packets directly from node 7 to one of nodes 1, 3, 6, 12, and 15, and indirectly to node 0 through node 1, to node 2 through node 3, to node 4 through node 15, to node 5 through node 3, to node 8 through node 3, to node 9 through node 15, to node 10 through node 1, to node 11 through node 3, to node 13 through node 12, and to node 14 through node 15,
(ix) routing packets directly from node 8 to one of nodes 0, 3, 9, 12, and 14, and indirectly to node 1 through node 0, to node 2 through node 3, to node 4 through node 12, to node 5 through node 14, to node 6 through node 0, to node 7 through node 12, to node 10 through node 12, to node 11 through node 0, to node 13 through node 12, and to node 15 through node 14,
(x) routing packets directly from node 9 to one of nodes 1, 2, 8, 13, and 15, and indirectly to node 0 through node 1, to node 3 through node 2, to node 4 through node 15, to node 5 through node 13, to node 6 through node 13, to node 7 through node 1, to node 10 through node 1, to node 11 through node 13, to node 12 through node 13, and to node 14 through node 15,
(xi) routing packets directly from node 10 to one of nodes 1, 2, 11, 12, and 14, and indirectly to node 0 through node 1, to node 3 through node 2, to node 4 through node 2, to node 5 through node 14, to node 6 through node 14, to node 7 through 12, to node 8 through node 14, to node 9 through node 2, to node 13 through node 12, and to node 15 through node 14,
(xii) routing packets directly from node 11 to one of nodes 0, 3, 10, 13, and 15, and indirectly to node 1 through node 0, to node 2 through node 3, to node 4 through node 15, to node 5 through node 3, to node 6 through node 13, to node 7 through node 15, to node 8 through node 3, to node 9 through node 15, to node 12 through node 13, and to node 14 through node 15,
(xiii) routing packets directly from node 12 to one of nodes 4, 7, 8, 10, and 13, and indirectly to node 0 through node 8, to node 1 through node 10, to node 2 through node 4, to node 3 through node 8, to node 5 through node 4, to node 6 through node 7, to node 9 through node 8, to node 11 through node 10, to node 14 through node 8, and to node 15 through node 4,
(xiv) routing packets directly from node 13 to one of nodes 5, 6, 9, 11, and 12, and indirectly to node 0 through node 11, to node 1 through node 9, to node 2 through node 9, to node 3 through node 5, to node 4 through node 5, to node 7 through node 6, to node 8 through node 9, to node 10 through node 11, to node 14 through node 5, and to node 15 through node 9,
(xv) routing packets directly from node 14 to one of nodes 5, 6, 8, 10, and 15, and indirectly to node 0 through node 6, to node 1 through node 10, to node 2 through node 10, to node 3 through node 8, to node 4 through node 5, to node 7 through node 6, to node 9 through node 8, to node 11 through node 10, to node 12 through node 10, to node 13 through node 6, and
(xvi) routing packets directly from node 15 to one of nodes 4, 7, 9, 11, and 13, and indirectly to node 0 through node 11, to node 1 through node 7, to node 2 through node 9, to node 3 through node 11, to node 5 through node 4, to node 6 through node 7, to node 8 through node 9, to node 10 through node 11, to node 12 through node 7, to node 13 through node 11.

11. A distributed system comprising seven nodes in a network that is not fully connected, the nodes including a node 0, a node 1, a node 2, a node 3, a node 4, a node 5, and a node 6, the nodes being communicatively linked as follows:
node 0 is communicatively linked to node 1, node 3, node 4, node 5, and node 6;
node 1 is communicatively linked to node 0, node 2, node 3, node 4, and node 5;
node 2 is communicatively linked to node 1, node 3, node 4, node 5, and node 6;
node 3 is communicatively linked to node 0, node 1, node 2, node 5, and node 6;
node 4 is communicatively linked to node 0, node 1, node 2, node 5, and node 6;
node 5 is communicatively linked to node 0, node 1, node 2, node 3, and node 4; and
node 6 is communicatively linked to node 0, node 2, node 3, and node 4.

12. A distributed system comprising eight nodes in a network that is not fully connected, the nodes including a node 0, a node 1, a node 2, a node 3, a node 4, a node 5, a node 6, and a node 7, the nodes being communicatively linked as follows:
node 0 is communicatively linked to node 1, node 3, node 4, node 5, and node 6;
node 1 is communicatively linked to node 0, node 2, node 4, node 5, and node 7;
node 2 is communicatively linked to node 1, node 3, node 4, node 6, and node 7;
node 3 is communicatively linked to node 0, node 2, node 5, node 6, and node 7;
node 4 is communicatively linked to node 0, node 1, node 2, node 5, and node 6;
node 5 is communicatively linked to node 0, node 1, node 3, node 4, and node 7;
node 6 is communicatively linked to node 0, node 2, node 3, node 4, and node 7; and
node 7 is communicatively linked to node 1, node 2, node 3, node 5, and node 6.

13. A distributed system comprising nine nodes in a network that is not fully connected, the nodes including a node 0, a node 1, a node 2, a node 3, a node 4, a node 5, a node 6, a node 7, and a node 8, the nodes being communicatively linked as follows:
node 0 is communicatively linked to node 1, node 3, node 4, node 6, and node 8;
node 1 is communicatively linked to node 0, node 2, node 4, node 5, and node 7;
node 2 is communicatively linked to node 1, node 3, node 4, node 6, and node 7;
node 3 is communicatively linked to node 0, node 2, node 5, node 7, and node 8;
node 4 is communicatively linked to node 0, node 1, node 2, node 5, and node 6;
node 5 is communicatively linked to node 1, node 3, node 4, node 7, and node 8;
node 6 is communicatively linked to node 0, node 2, node 4, node 7, and node 8;
node 7 is communicatively linked to node 1, node 2, node 3, node 5, and node 6; and
node 8 is communicatively linked to node 0, node 3, node 5, and node 6.

14. A distributed system comprising ten nodes in a network that is not fully connected, the nodes including a node 0, a node 1, a node 2, a node 3, a node 4, a node 5, a node 6, a node 7, a node 8, and a node 9, the nodes being communicatively linked as follows:
node 0 is communicatively linked to node 1, node 3, node 4, node 6, and node 8;
node 1 is communicatively linked to node 0, node 2, node 5, node 7, and node 9;
node 2 is communicatively linked to node 1, node 3, node 4, node 6, and node 9;
node 3 is communicatively linked to node 0, node 2, node 5, node 7, and node 8;
node 4 is communicatively linked to node 0, node 2, node 5, node 6, and node 9;
node 5 is communicatively linked to node 1, node 3, node 4, node 7, and node 8;
node 6 is communicatively linked to node 0, node 2, node 4, node 7, and node 8;
node 7 is communicatively linked to node 1, node 3, node 5, node 6, and node 9;
node 8 is communicatively linked to node 0, node 3, node 5, node 6, and node 9; and
node 9 is communicatively linked to node 1, node 2, node 4, node 7, and node 8.

15. A distributed system comprising eleven nodes in a network that is not fully connected, the nodes including a node 0, a node 1, a node 2, a node 3, a node 4, a node 5, a node 6, a node 7, a node 8, a node 9, and a node 10, the nodes being communicatively linked as follows: node 0 is communicatively linked to node 1, node 3, node 4, node 6, and node 8;
node 1 is communicatively linked to node 0, node 5, node 7, node 9, and node 10;
node 2 is communicatively linked to node 3, node 4, node 6, node 9, and node 10;
node 3 is communicatively linked to node 0, node 2, node 5, node 7, and node 8;
node 4 is communicatively linked to node 0, node 2, node 5, node 7, and node 9;
node 5 is communicatively linked to node 1, node 3, node 4, node 8, and node 10;
node 6 is communicatively linked to node 0, node 2, node 7, node 8, and node 10;
node 7 is communicatively linked to node 1, node 3, node 4, node 6, and node 9;
node 8 is communicatively linked to node 0, node 3, node 5, node 6, and node 9;
node 9 is communicatively linked to node 1, node 2, node 4, node 7, and node 8; and
node 10 is communicatively linked to node 1, node 2, node 5, and node 6.

16. A distributed system comprising twelve nodes in a network that is not fully connected, the nodes including a node 0, a node 1, a node 2, a node 3, a node 4, a node 5, a node 6, a node 7, a node 8, a node 9, a node 10, and a node 11, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 11;
node 5 is communicatively linked to node 1, node 3, node 4, node 8, and node 10;
node 6 is communicatively linked to node 0, node 2, node 7, node 8, and node 10;
node 7 is communicatively linked to node 1, node 3, node 6, node 9, and node 11;
node 8 is communicatively linked to node 0, node 3, node 5, node 6, and node 9;
node 9 is communicatively linked to node 1, node 2, node 4, node 7, and node 8;
node 10 is communicatively linked to node 1, node 2, node 5, node 6, and node 11; and
node 11 is communicatively linked to node 0, node 3, node 4, node 7, and node 10.

17. A distributed system comprising thirteen nodes in a network that is not fully connected, the nodes including a node 0, a node 1, a node 2, a node 3, a node 4, a node 5, a node 6, a node 7, a node 8, a node 9, a node 10, a node 11, and a node 12, the: nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 12;
node 5 is communicatively linked to node 1, node 3, node 4, node 6, and node 8;
node 6 is communicatively linked to node 0, node 2, node 5, node 7, and node 10;
node 7 is communicatively linked to node 1, node 3, node 6, node 11, and node 12;
node 8 is communicatively linked to node 0, node 3, node 5, node 9, and node 12;
node 9 is communicatively linked to node 1, node 2, node 4, node 8, and node 11;
node 10 is communicatively linked to node 1, node 2, node 6, node 11, and node 12;
node 11 is communicatively linked to node 0, node 3, node 7, node 9, and node 10; and
node 12 is communicatively linked to node 4, node 7, node 8, and node 10.

18. A distributed system comprising fourteen nodes in a network that is not fully connected, the nodes including a node 0, a node 1, a node 2, a node 3, a node 4, a node 5, a node 6, a node 7, a node 8, a node 9, a node 10, a node 11, a node 12, and a node 13, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 12;
node 5 is communicatively linked to node 1, node 3, node 4, node 8, and node 13;
node 6 is communicatively linked to node 0, node 2, node 7, node 10, and node 13;
node 7 is communicatively linked to node 1, node 3, node 6, node 11, and node 12;
node 8 is communicatively linked to node 0, node 3, node 5, node 9, and node 12;
node 9 is communicatively linked to node 1, node 2, node 4, node 8, and node 13;
node 10 is communicatively linked to node 1, node 2, node 6, node 11, and node 12;
node 11 is communicatively linked to node 0, node 3, node 7, node 10, and node 13;
node 12 is communicatively linked to node 4, node 7, node 8, node 10, and node 13; and
node 13 is communicatively linked to node 5, node 6, node 9, node 11, and node 12.

19. A distributed system comprising fifteen nodes in a network that is not fully connected, the nodes including a node 0, anode 1, a node 2, a node 3, a node 4, a node 5, a node 6, a node 7, a node 8, a node 9, a node 10, a node 11, a node 12, a node 13, and a node 14, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 12;
node 5 is communicatively linked to node 1, node 3, node 4, node 13, and node 14;
node 6 is communicatively linked to node 0, node 2, node 7, node 13, and node 14;
node 7 is communicatively linked to node 1, node 3, node 6, node 11, and node 12;
node 8 is communicatively linked to node 0, node 3, node 9, node 12, and node 14;
node 9 is communicatively linked to node 1, node 2, node 4, node 8, and node 13;
node 10 is communicatively linked to node 1, node 2, node 11, node 12, and node 14;
node 11 is communicatively linked to node 0, node 3, node 7, node 10, and node 13;
node 12 is communicatively linked to node 4, node 7, node 8, node 10, and node 13;
node 13 is communicatively linked to node 5, node 6, node 9, node 11, and node 12; and
node 14 is communicatively linked to node 5, node 6, node 8, and node 10.

20. The distributed system of any of claims 18-26 wherein each of the nodes has five ports.

21. The distributed system of claim 18, 19, 22, 23 or 24 wherein node 0 and node 1 communicate via a bus.

22. The distributed system of claim 18, 19, 22, 23 or 24 wherein node 2 and node 3 communicate via a bus.

23. The distributed system of claim 18, 19, 22, 23 or 24 wherein node 4 and node 5 communicate via a bus.

24. The distributed system of claim 19, 22, 23 or 24 wherein node 6 and node 7 communicate via a bus.

25. The distributed system of claim 22, 23 or 24 wherein node 8 and node 9 communicate via a bus.

26. The distributed system of claim 23 or 24 wherein node 10 and node 11 communicate via a bus.

27. The distributed system of claim 20, 21, 25 or 26 wherein node 0 and node 1 are nodes that are located in a same chassis.

28. The distributed system of claim 20, 21, 25 or 26 wherein node 2 and node 3 are nodes that are located in a same chassis.

29. The distributed system of claim 20, 21, 25 or 26 wherein node 4 and node 5 are nodes that are located in a same chassis.

30. The distributed system of claim 20, 21, 25 or 26 wherein node 6 and node 7 are nodes that are located in a same chassis.

31. The distributed system of claim 21, 25 or 26 wherein node 8 and node 9 are nodes that are located in a same chassis.

32. The distributed system of claim 25 or 26 wherein node 10 and node 11 are nodes that are located in a same chassis.

33. The distributed system of claim 25 or 26 wherein node 12 and node 13 are nodes that are located in a same chassis.

34. A method for configuration of a distributed system as defined in one of the claims 18 to 26, comprising the steps of:
creating a set of network topologies, each associated with one group of nodes, each group having a different number of nodes, each network topology configured based on performance characteristics, wherein each of the set of network topologies does not fully connect the associated group of nodes;
selecting one of the set of network topologies for a network with network nodes based on a number of the network nodes in the network; and
configuring the network using the selected network topology.

35. The method of claim 41 wherein each of the set of network topologies is configured based on a diameter of the network topology.

36. The method of claim 42 wherein each of the set of network topologies is configured based on a bisection bandwidth of the network topology.

37. The method of claim 41 wherein each of the set of network topologies is configured based on whether the network topology is symmetric.

38. The method of claim 44 wherein each of the set of network topologies is configured based on whether the network topology is node symmetric.

39. The method of claim 44 wherein each of the set of network topologies is configured based on whether the network topology is edge symmetric.

40. The method of claim 41 wherein each of the set of network topologies is configured based on an average path length of the network topology.

41. The method of claim 41 wherein each network topology is configured to facilitate upgrading the network.

42. The method of claim 41 wherein each network topology is configured to facilitate downgrading the network.

43. The method of claim 41 wherein the number of nodes in each group form a sequence.

44. The method of claim 51 wherein the sequence begins at seven nodes and ends at sixteen nodes.

45. A network comprising:
a plurality of partner nodes contained in a same chassis; and
a non-partner node connected to at least one of the plurality of partner nodes for sending network traffic to the at least one partner node.

46. A method in a distributed system, comprising the steps of:
providing a network having seven nodes that are not fully connected, the nodes including a node 0, a node 1, a node 2, a node 3, a node 4, a node 5, and a node 6, the nodes being communicatively linked as follows:
node 0 is communicatively linked to node 1, node 3, node 4, node 5, and node 6;
node 1 is communicatively linked to node 0, node 2, node 3, node 4, and node 5;
node 2 is communicatively linked to node 1, node 3, node 4, node 5, and node 6;
node 3 is communicatively linked to node 0, node 1, node 2, node 5, and node 6;
node 4 is communicatively linked to node 0, node 1, node 2, node 5, and node 6;
node 5 is communicatively linked to node 0, node 1, node 2, node 3, and node 4; and
node 6 is communicatively linked to node 0, node 2, node 3, and node 4; and
reconfiguring the network by performing at least one of:
adding a node 7 to the network, and
removing node 6 from the network.

47. The method of claim 54 wherein the adding step includes:
removing the communication link between node 3 and node 1;
removing the communication link between node 5 and node 2;
communicatively linking node 7 and node 1;
communicatively linking node 7 and node 2;
communicatively linking node 7 and node 3;
communicatively linking node 7 and node 5; and
communicatively linking node 7 and node 6.

48. The method of claim 54 wherein the removing step includes:
removing the communication link between node 6 and node 0;
removing the communication link between node 6 and node 2;
removing the communication link between node 6 and node 3;
removing the communication link between node 6 and node 4;
communicatively linking node 2 and node 0; and
communicatively linking node 4 and node 3.

49. A method in a distributed system, comprising the steps of:
providing a network comprising eight nodes that are not fully connected, the nodes including a node 0, a node 1, a node 2, a node 3, a node 4, a node 5, a node 6, and a node 7, the nodes being communicatively linked as follows:
node 0 is communicatively linked to node 1, node 3, node 4, node 5, and node 6;
node 1 is communicatively linked to node 0, node 2, node 4, node 5, and node 7;
node 2 is communicatively linked to node 1, node 3, node 4, node 6, and node 7;
node 3 is communicatively linked to node 0, node 2, node 5, node 6, and node 7;
node 4 is communicatively linked to node 0, node 1, node 2, node 5, and node 6;
node 5 is communicatively linked to node 0, node 1, node 3, node 4, and node 7;
node 6 is communicatively linked to node 0, node 2, node 3, node 4, and node 7; and
node 7 is communicatively linked to node 1, node 2, node 3, node 5, and node 6; and
reconfiguring the network by performing at least one of:
adding a node 8 to the network, and
removing node 7 from the network.

50. The method of claim 57 wherein the adding step includes:
removing the communication link between node 5 and node 0;
removing the communication link between node 6 and node 3;
communicatively linking node 8 and node 0;
communicatively linking node 8 and node 3;
communicatively linking node 8 and node 5; and
communicatively linking node 8 and node 6.

51. The method of claim 57 wherein the removing step includes:
removing the communication link between node 7 and node 1;
removing the communication link between node 7 and node 2;
removing the communication link between node 7 and node 3;
removing the communication link between node 7 and node 5;
removing the communication link between node 7 and node 6;
communicatively linking node 3 and node 1; and
communicatively linking node 5 and node 2.

52. The method of claim 57 wherein the step of reconfiguring includes:
adding a node 8 and a node 9 to the network.

53. The method of claim 59 wherein the step of reconfiguring includes the steps of:
removing the communication link between node 5 and node 0;
removing the communication link between node 6 and node 3;
removing the communication link between node 4 and node 1;
removing the communication link between node 7 and node 2;
communicatively linking node 8 and node 0;
communicatively linking node 8 and node 3;
communicatively linking node 8 and node 5;
communicatively linking node 8 and node 6;
communicatively linking node 9 and node 1;
communicatively linking node 9 and node 2;
communicatively linking node 9 and node 4;
communicatively linking node 9 and node 7; and
communicatively linking node 9 and node 8.

54. The method of claim 57 wherein the step of reconfiguring includes:
removing node 6 and node 7 from the network.

55. The method of claim 62 wherein the step of reconfiguring includes the steps of:
removing the communication link between node 6 and node 0;
removing the communication link between node 6 and node 2;
removing the communication link between node 6 and node 3;
removing the communication link between node 6 and node 4;
removing the communication link between node 7 and node 1;
removing the communication link between node 7 and node 2;
removing the communication link between node 7 and node 3;
removing the communication link between node 7 and node 5;
removing the communication link between node 7 and node 6;
communicatively linking node 2 and node 0;
communicatively linking node 4 and node 3;
communicatively linking node 3 and node 1; and
communicatively linking node 5 and node 2.

56. A method in a distributed system, comprising the steps of:
providing a network comprising nine nodes that are not fully connected, the nodes including a node 0, a node 1, a node 2, a node 3, a node 4, a node 5, a node 6, a node 7, and a node 8, the nodes being communicatively linked as follows:
node 0 is communicatively linked to node 1, node 3, node 4, node 6, and node 8;
node 1 is communicatively linked to node 0, node 2, node 4, node 5, and node 7;
node 2 is communicatively linked to node 1, node 3, node 4, node 6, and node 7;
node 3 is communicatively linked to node 0, node 2, node 5, node 7, and node 8;
node 4 is communicatively linked to node 0, node 1, node 2, node 5, and node 6;
node 5 is communicatively linked to node 1, node 3, node 4, node 7, and node 8;
node 6 is communicatively linked to node 0, node 2, node 4, node 7, and node 8;
node 7 is communicatively linked to node 1, node 2, node 3, node 5, and node 6; and
node 8 is communicatively linked to node 0, node 3, node 5, and node 6; and
reconfiguring the network by performing at least one of:
adding a node 9 to the network, and
removing node 8 from the network.

57. The method of claim 64 wherein the adding step includes:
removing the communication link between node 4 and node 1;
removing the communication link between node 7 and node 2;
communicatively linking node 9 and node 1;
communicatively linking node 9 and node 2;
communicatively linking node 9 and node 4;
communicatively linking node 9 and node 7; and
communicatively linking node 9 and node 8.

58. The method of claim 63 wherein the removing step includes:
removing the communication link between node 8 and node 0;
removing the communication link between node 8 and node 3;
removing the communication link between node 8 and node 5;
removing the communication link between node 8 and node 6;
communicatively linking node 5 and node 0; and
communicatively linking node 6 and node 3.

59. A method in a distributed system, comprising the steps of:
providing a network comprising ten nodes that are not fully connected, the nodes including a node 0, a node 1, a node 2, a node 3, a node 4, a node 5, a node 6, a node 7, a node 8, and a node 9, the nodes being communicatively linked as follows:
node 0 is communicatively linked to node 1, node 3, node 4, node 6, and node 8;
node 1 is communicatively linked to node 0, node 2, node 5, node 7, and node 9;
node 2 is communicatively linked to node 1, node 3, node 4, node 6, and node 9;
node 3 is communicatively linked to node 0, node 2, node 5, node 7, and node 8;
node 4 is communicatively linked to node 0, node 2, node 5, node 6, and node 9;
node 5 is communicatively linked to node 1, node 3, node 4, node 7, and node 8;
node 6 is communicatively linked to node 0, node 2, node 4, node 7, and node 8;
node 7 is communicatively linked to node 1, node 3, node 5, node 6, and node 9;
node 8 is communicatively linked to node 0, node 3, node 5, node 6, and node 9; and
node 9 is communicatively linked to node 1, node 2, node 4, node 7, and node 8; and
reconfiguring the network by performing at least one of:
adding a node 10 to the network, and
removing node 9 from the network.

60. The method of claim 67 wherein the adding step includes:
removing the communication link between node 2 and node 1;
removing the communication link between node 6 and node 4;
removing the communication link between node 7 and node 5;
communicatively linking node 10 and node 1;
communicatively linking node 10 and node 2;
communicatively linking node 7 and node 4;
communicatively linking node 10 and node 5; and
communicatively linking node 10 and node 6.

61. The method of claim 67, wherein the removing step includes:
removing the communication link between node 9 and node 1;
removing the communication link between node 9 and node 2;
removing the communication link between node 9 and node 4;
removing the communication link between node 9 and node 7;
removing the communication link between node 9 and node 8;
communicatively linking node 4 and node 1; and
communicatively linking node 7 and node 2.

62. The method of claim 67 wherein the step of reconfiguring includes:
adding a node 10 and a node 11 to the network.

63. The method of claim 70 wherein step of reconfiguring includes the steps of:
removing the communication link between node 2 and node 1;
removing the communication link between node 6 and node 4;
removing the communication link between node 7 and node 5;
removing the communication link between node 3 and node 0;
communicatively linking node 10 and node 1;
communicatively linking node 10 and node 2;
communicatively linking node 10 and node 5;
communicatively linking node 10 and node 6;
communicatively linking node 11 and node 0;
communicatively linking node 11 and node 3;
communicatively linking node 11 and node 4;
communicatively linking node 11 and node 7; and
communicatively linking node 11 and node 10.

64. The method of claim 67 wherein the step of reconfiguring includes:
removing node 8 and node 9 from the network.

65. The method of claim 72 wherein the removing step includes the steps of:
removing the communication link between node 8 and node 0;
removing the communication link between node 8 and node 3;
removing the communication link between node 8 and node 5;
removing the communication link between node 8 and node 6;
removing the communication link between node 9 and node 1;
removing the communication link between node 9 and node 2;
removing the communication link between node 9 and node 4;
removing the communication link between node 9 and node 7;
removing the communication link between node 9 and node 8;
communicatively linking node 5 and node 0;
communicatively linking node 6 and node 3;
communicatively linking node 4 and node 1; and
communicatively linking node 7 and node 2.

66. A method in a distributed system, comprising the steps of:
providing a network comprising eleven nodes that are not fully connected, the nodes including a node 0, a node 1, a node 2, a node 3, a node 4, a node 5, a node 6, a node 7, a node 8, a node 9, and a node 10, the nodes being communicatively linked as follows:
node 0 is communicatively linked to node 1, node 3, node 4, node 6, and node 8;
node 1 is communicatively linked to node 0, node 5, node 7, node 9, and node 10;
node 2 is communicatively linked to node 3, node 4, node 6, node 9, and node 10;
node 3 is communicatively linked to node 0, node 2, node 5, node 7, and node 8;
node 4 is communicatively linked to node 0, node 2, node 5, node 7, and node 9;
node 5 is communicatively linked to node 1, node 3, node 4, node 8, and node 10;
node 6 is communicatively linked to node 0, node 2, node 7, node 8, and node 10;
node 7 is communicatively linked to node 1, node 3, node 4, node 6, and node 9;
node 8 is communicatively linked to node 0, node 3, node 5, node 6, and node 9;
node 9 is communicatively linked to node 1, node 2, node 4, node 7, and node 8; and
node 10 is communicatively linked to node 1, node 2, node 5, and node 6; and
reconfiguring the network by performing at least one of:
adding a node 11 to the network, and
removing node 10 from the network.

67. The method of claim 74, wherein the adding step includes:
removing the communication link between node 3 and node 0;
removing the communication link between node 7 and node 4;
communicatively linking node 11 and node 0;
communicatively linking node 11 and node 3;
communicatively linking node 11 and node 4;
communicatively linking node 11 and node 7; and
communicatively linking node 11 and node 10.

68. The method of claim 74, wherein the removing step includes:
removing the communication link between node 10 and node 1;
removing the communication link between node 10 and node 2;
removing the communication link between node 7 and node 4;
removing the communication link between node 10 and node 5;
removing the communication link between node 10 and node 6;
communicatively linking node 2 and node 1;
communicatively linking node 6 and node 4; and
communicatively linking node 7 and node 5.

69. A method in a distributed system, comprising the steps of:
providing a network comprising twelve nodes that are not fully connected, the nodes including a node 0, a node 1, a node 2, a node 3, a node 4, a node 5, a node 6, a node 7, a node 8, a node 9, a node 10, and a node 11, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 11;
node 5 is communicatively linked to node 1, node 3, node 4, node 8, and node 10;
node 6 is communicatively linked to node 0, node 2, node 7, node 8, and node 10;
node 7 is communicatively linked to node 1, node 3, node 6, node 9, and node 11;
node 8 is communicatively linked to node 0, node 3, node 5, node 6, and node 9;
node 9 is communicatively linked to node 1, node 2, node 4, node 7, and node 8;
node 10 is communicatively linked to node 1, node 2, node 5, node 6, and node 11; and
node 11 is communicatively linked to node 0, node 3, node 4, node 7, and node 10; and
reconfiguring the network by performing at least one of:
adding a node 12 to the network, and
removing node 11 from the network.

70. The method of claim 77, wherein the adding step includes:
removing the communication link between node 11 and node 4;
removing the communication link between node 10 and node 5;
removing the communication link between node 8 and node 6;
removing the communication link between node 9 and node 7;
communicatively linking node 12 and node 4;
communicatively linking node 9 and node 5;
communicatively linking node 11 and node 6;
communicatively linking node 12 and node 7;
communicatively linking node 12 and node 8; and
communicatively linking node 12 and node 10.

71. The method of claim 77, wherein the removing step includes:
removing the communication link between node 11 and node 0;
removing the communication link between node 11 and node 3;
removing the communication link between node 11 and node 4;
removing the communication link between node 11 and node 7;
removing the communication link between node 11 and node 10;
communicatively linking node 3 and node 0; and
communicatively linking node 7 and node 4.

72. The method of claim 77 wherein the step of reconfiguring includes:
adding a node 12 and a node 13 to the network.

73. The method of claim 80 wherein the step of reconfiguring includes the steps of:
removing the communication link between node 11 and node 4;
removing the communication link between node 10 and node 5;
removing the communication link between node 8 and node 6;
removing the communication link between node 9 and node 7;
communicatively linking node 12 and node 4;
communicatively linking node 12 and node 7;
communicatively linking node 12 and node 8;
communicatively linking node 12 and node 10;
communicatively linking node 13 and node 5;
communicatively linking node 13 and node 6;
communicatively linking node 13 and node 9;
communicatively linking node 13 and node 11; and
communicatively linking node 13 and node 12.

74. The method of claim 77 wherein the step of reconfiguring includes:
removing node 10 and node 11 from the network.

75. The method of claim 82 wherein the step of reconfiguring includes the steps of:
removing the communication link between node 10 and node 1;
removing the communication link between node 10 and node 2;
removing the communication link between node 10 and node 5;
removing the communication link between node 10 and node 6;
removing the communication link between node 11 and node 0;
removing the communication link between node 11 and node 3;
removing the communication link between node 11 and node 4;
removing the communication link between node 11 and node 7;
removing the communication link between node 11 and node 10;
communicatively linking node 2 and node 1;
communicatively linking node 6 and node 4;
communicatively linking node 7 and node 5; and
communicatively linking node 3 and node 0.

76. A method in a distributed system, comprising the steps of:
providing a network comprising thirteen nodes that are not fully connected, the nodes including a node 0, a node 1, a node 2, a node 3, a node 4, a node 5, a node 6, a node 7, a node 8, a node 9, a node 10, a node 11, and a node 12, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 12;
node 5 is communicatively linked to node 1, node 3, node 4, node 6, and node 8;
node 6 is communicatively linked to node 0, node 2, node 5, node 7, and node 10;
node 7 is communicatively linked to node 1, node 3, node 6, node 11, and node 12;
node 8 is communicatively linked to node 0, node 3, node 5, node 9, and node 12;
node 9 is communicatively linked to node 1, node 2, node 4, node 8, and node 11;
node 10 is communicatively linked to node 1, node 2, node 6, node 11, and node 12;
node 11 is communicatively linked to node 0, node 3, node 7, node 9, and node 10; and
node 12 is communicatively linked to node 4, node 7, node 8, and node 10; and
reconfiguring the network by performing at least one of:
adding a node-13 to the network, and
removing node 12 from the network.

77. The method of claim 84 wherein the adding step includes:
removing the communication link between node 9 and node 5;
removing the communication link between node 11 and node 6;
communicatively linking node 13 and node 5;
communicatively linking node 13 and node 6;
communicatively linking node 13 and node 9;
communicatively linking node 13 and node 11; and
communicatively linking node 13 and node 12.

78. The method of claim 84 wherein the removing step includes:
removing the communication link between node 12 and node 4;
removing the communication link between node 9 and node 5;
removing the communication link between node 11 and node 6;
removing the communication link between node 12 and node 7;
removing the communication link between node 12 and node 8;
removing the communication link between node 12 and node 10;
communicatively linking node 11 and node 4;
communicatively linking node 10 and node 5;
communicatively linking node 8 and node 6; and
communicatively linking node 9 and node 7.

79. A method in a distributed system, comprising the steps of:
providing a network comprising fourteen nodes that are not fully connected, the nodes including a node 0, a node 1, a node 2, a node 3, a node 4, a node 5, a node 6, a node 7, a node 8, a node 9, a node 10, a node 11, a node 12, and a node 13, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 12;
node 5 is communicatively linked to node 1, node 3, node 4, node 8, and node 13;
node 6 is communicatively linked to node 0, node 2, node 7, node 10, and node 13;
node 7 is communicatively linked to node 1, node 3, node 6, node 11, and node 12;
node 8 is communicatively linked to node 0, node 3, node 5, node 9, and node 12;
node 9 is communicatively linked to node 1, node 2, node 4, node 8, and node 13;
node 10 is communicatively linked to node 1, node 2, node 6, node 11, and node 12;
node 11 is communicatively linked to node 0, node 3, node 7, node 10, and node 13;
node 12 is communicatively linked to node 4, node 7, node 8, node 10, and node 13; and node 13 is communicatively linked to node 5, node 6, node 9, node 11, and node 12; and
reconfiguring the network by performing at least one of:
adding a node 14 to the network, and
removing node 13 from the network.

80. The method of claim 87 wherein the adding step includes:
removing the communication link between node 8 and node 5;
removing the communication link between node 10 and node 6;
communicatively linking node 14 and node 5;
communicatively linking node 14 and node 6;
communicatively linking node 14 and node 8; and
communicatively linking node 14 and node 10.

81. The method of claim 87 wherein the removing step includes:
removing the communication link between node 13 and node 5;
removing the communication link between node 13 and node 6;
removing the communication link between node 13 and node 9;
removing the communication link between node 13 and node 11;
removing the communication link between node 13 and node 12;
communicatively linking node 9 and node 5; and
communicatively linking node 11 and node 6.

82. The method of claim 87 wherein the step of reconfiguring includes:
adding a node 14 and a node 15 to the network.

83. The method of claim 90 wherein the step of reconfiguring includes the steps of:
removing the communication link between node 8 and node 5;
removing the communication link between node 10 and node 6;
removing the communication link between node 9 and node 4;
removing the communication link between node 11 and node 7;
communicatively linking node 14 and node 5;
communicatively linking node 14 and node 6;
communicatively linking node 14 and node 8;
communicatively linking node 14 and node 10;
communicatively linking node 15 and node 4;
communicatively linking node 15 and node 7;
communicatively linking node 15 and node 9;
communicatively linking node 15 and node 11; and
communicatively linking node 15 and node 14.

84. The method of claim 87 wherein the step of reconfiguring includes:
removing node 12 and node 13 from the network.

85. The method of claim 92 wherein the step of reconfiguring includes the steps of:
removing the communication link between node 12 and node 4;
removing the communication link between node 12 and node 7;
removing the communication link between node 12 and node 8;
removing the communication link between node 12 and node 10;
removing the communication link between node 13 and node 5;
removing the communication link between node 13 and node 6;
removing the communication link between node 13 and node 9;
removing the communication link between node 13 and node 11;
removing the communication link between node 13 and node 12;
communicatively linking node 11 and node 4;
communicatively linking node 10 and node 5;
communicatively linking node 8 and node 6; and
communicatively linking node 9 and node 7.

86. A method in a distributed system, comprising the steps of:
providing a network comprising fifteen nodes that are not fully connected, the nodes including a node 0, a node 1, a node 2, a node 3, a node 4, a node 5, a node 6, a node 7, a node 8, a node 9, a node 10, a node 11, a node 12, a node 13, and a node 14, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 9, and node 12;
node 5 is communicatively linked to node 1, node 3, node 4, node 13, and node 14;
node 6 is communicatively linked to node 0, node 2, node 7, node 13, and node 14;
node 7 is communicatively linked to node 1, node 3, node 6, node 11, and node 12;
node 8 is communicatively linked to node 0, node 3, node 9, node 12, and node 14;
node 9 is communicatively linked to node 1, node 2, node 4, node 8, and node 13;
node 10 is communicatively linked to node 1, node 2, node 11, node 12, and node 14;
node 11 is communicatively linked to node 0, node 3, node 7, node 10, and node 13;
node 12 is communicatively linked to node 4, node 7, node 8, node 10, and node 13;
node 13 is communicatively linked to node 5, node 6, node 9, node 11, and node 12; and
node 14 is communicatively linked to node 5, node 6, node 8, and node 10; and
reconfiguring the network by performing at least one of:
adding a node 15 to the network, and
removing node 14 from the network.

87. The method of claim 94 wherein the adding step includes:
removing the communication link between node 9 and node 4;
removing the communication link between node 11 and node 7;
communicatively linking node 15 and node 4;
communicatively linking node 15 and node 7;
communicatively linking node 15 and node 9;
communicatively linking node 15 and node 11; and
communicatively linking node 15 and node 14.

88. The method of claim 94 wherein the removing step includes:
removing the communication link between node 14 and node 5;
removing the communication link between node 14 and node 6;
removing the communication link between node 14 and node 8;
removing the communication link between node 14 and node 10;
communicatively linking node 8 and node 5; and
communicatively linking node 10 and node 6.

89. A method in a distributed system, comprising the steps of:
providing a network comprising at least six nodes, the nodes including a node 0, a node 1, a node 2, a node 3, a node 4, and a node 5, wherein each of the nodes is communicatively linked to each other; and
adding a node 6 to the network by performing the following steps:
removing the communication link between node 2 and node 0;
removing the communication link between node 4 and node 3;
communicatively linking node 6 to node 0;
communicatively linking node 6 to node 2;
communicatively linking node 6 to node 3; and
communicatively linking node 6 to node 4.

90. A method in a distributed system, comprising the steps of:
providing a network comprising six nodes, the nodes including a node 0, a node 1, a node 2, a node 3, a node 4, and a node 5, wherein each of the six nodes is communicatively linked to each other; and
adding a node 6 and a node 7 to the network by performing the following steps:
removing the communication link between node 2 and node 0;
removing the communication link between node 4 and node 3;
removing the communication link between node 3 and node 1;
removing the communication link between node 5 and node 2;
communicatively linking node 6 to node 0;
communicatively linking node 6 to node 2;
communicatively linking node 6 to node 3;
communicatively linking node 6 to node 4;
communicatively linking node 7 to node 1;
communicatively linking node 7 to node 2;
communicatively linking node 7 to node 3;
communicatively linking node 7 to node 5; and
communicatively linking node 7 to node 6.

91. A method in a distributed system as defined in one of the claims 18 to 26 and containing a network with nodes, each of the nodes having ports and a routing table for routing traffic through the network, comprising the steps of:
configuring the network to maximize usage of the ports;
rendering the network operational such that the nodes are capable of communicating via the network using static routing; and
reconfiguring the network while the network remains operational by providing routings to each of the nodes that route traffic around a part of the network affected by the reconfiguration.

92. The method of claim 99 wherein the static routing is performed deadlock free.

93. The method of claim 99 wherein the reconfiguring step includes adding a new node to the network.

94. The method of claim 99 wherein the reconfiguring step includes adding two new nodes to the network.

95. The method of claim 99 wherein the reconfiguring step includes removing one of the nodes from the network.

96. The method of claim 99 wherein the reconfiguring step includes removing two of the nodes from the network.

97. The method of claim 99 wherein the reconfiguring step includes:
replacing the routing tables with interim routing tables that include the routings that route the traffic around a part of the network affected by the reconfiguration;
performing the reconfiguration; and
substituting new routing tables for the interim routing tables.

98. The method of claim 105, wherein the interim routing tables are deadlock free.

99. The method of claim 99, wherein the network has a node 0, a node 1, a node 2, a node 3, a node 4, a node 5, and wherein the reconfiguring step includes:
routing packets through the network during the reconfiguration based on at least one of the following routing configurations:
(i) routing packets directly from node 0 to one of nodes 1 and 3-5, and indirectly to node 2 through node 3,
(ii) routing packets directly from node 1 to one of nodes 0 and 2-5,
(iii) routing packets directly from node 2 to one of nodes 1 and 3-5, and indirectly to node 0 through node 1,
(iv) routing packets directly from node 3 to one of nodes 0-2, and 5, and indirectly to node 4 through node 5,
(v) routing packets directly from node 4 to one of nodes 0-2, and 5, and indirectly to node 3 through node 2,
(vi) routing packets directly from node 5 to one of nodes 1-4.

100. The method of claim 99, wherein the network has a node 0, a node 1, a node 2, a node 3, a node 4, a node 5, and a node 6, and wherein the reconfiguring step includes:
routing packets through the network during the reconfiguration based on at least one of the following routing configurations:
(i) routing packets directly from node 0 to one of nodes 1 and 3-6, and indirectly to node 2 through node 3,
(ii) routing packets directly from node 1 to one of nodes 0, 2, 4, and 5, and indirectly to node 3 through node 2 and to node 6 through node 4,
(iii) routing packets directly from node 2 to one of nodes 1 and 3, 4, and 6, and indirectly to node 0 through node 1 and to node 5 through node 4,
(iv) routing packets directly from node 3 to one of nodes 0, 2, 5, and 6, and indirectly to node 1 through node 0 and to node 4 through node 5,
(v) routing packets directly from node 4 to one of nodes 0-2, 5, and 6, and indirectly to node 3 through node 2,
(vi) routing packets directly from node 5 to one of nodes 0, 1, 3, and 4, and indirectly to node 2 through node 3 and to node 6 through node 3, and
(vii) routing packets directly from node 6 to one of nodes 0 and 2-4, and indirectly to node 1 through node 0 and to node 5 through node 4.

101. The method of claim 99, wherein the network has a node 0, a node 1, a node 2, a node 3, a node 4, a node 5, a node 6, and a node 7, and wherein the reconfiguring step includes:
routing packets through the network during the reconfiguration based on at least one of the following routing configurations:
(i) routing packets directly from node 0 to one of nodes 1 and 3, 4, and 6, and indirectly to node 2 through node 3, to node 5 through node 4, and to node 7 through node 6,
(ii) routing packets directly from node 1 to one of nodes 0, 2, 4, 5, and 7, and indirectly to node 3 through node 2 and to node 6 through node 7,
(iii) routing packets directly from node 2 to one of nodes 1, 3, 4, 6, and 7, and indirectly to node 0 through node 1 and to node 5 through node 4,
(iv) routing packets directly from node 3 to one of nodes 0, 2, 5, and 7, and indirectly to node 1 through node 0, to node 4 through node 5, and to node 6 through node 7,
(v) routing packets directly from node 4 to one of nodes 0-2, 5, and 6, and indirectly to node 3 through node 2 and to node 7 through node 6,
(vi) routing packets directly from node 5 to one of nodes 0, 1, 3, 4, and 7, and indirectly to node 0 through node 1, to node 2 through node 3, and to node 6 through node 7,
(vii) routing packets directly from node 6 to one of nodes 0, 2, 4, and 7, and indirectly to node 1 through node 0, to node 3 through node 2, and to node 5 through node 4, and
(viii) routing packets directly from node 7 to one of nodes 1-3 and 5, 6, and indirectly to node 0 through node 1 and to node 4 through node 5.

102. The method of claim 99, wherein the network has a node 0, a node 1, a node 2, a node 3, a node 4, a node 5, a node 6, a node 7, and a node 8, and wherein the reconfiguring step includes:
routing packets through the network during the reconfiguration based on at least one of the following routing configurations:
(i) routing packets directly from node 0 to one of nodes 1, 3, 4, 6, and 8, and indirectly to node 2 through node 3, to node 5 through node 4, and to node 7 through node 6,
(ii) routing packets directly from node 1 to one of nodes 0, 2, 5, and 7, and indirectly to node 3 through node 2, to node 4 through node 5, to node 6 through node 7, and to node 8 through node 5,
(iii) routing packets directly from node 2 to one of nodes 1, 3, 4, and 6, and indirectly to node 0 through node 1, to node 5 through node 4, to node 7 through node 6, and to node 8 through node 6,
(iv) routing packets directly from node 3 to one of nodes 0, 2, 5, 7, and 8, and indirectly to node 1 through node 0, to node 4 through node 5, and to node 6 through node 7,
(v) routing packets directly from node 4 to one of nodes 0, 2, 5, and 6, and indirectly to node 1 through node 0, to node 3 through node 2, to node 7 through node 6, and to node 8 through node 0,
(vi) routing packets directly from node 5 to one of nodes 1, 3, 4, 7, and 8, and indirectly to node 0 through node 1, to node 2 through node 3, and to node 6 through node 7,
(vii) routing packets directly from node 6 to one of nodes 0, 2, 4, 7, and 8, and indirectly to node 1 through node 0, to node 3 through node 2, and to node 5 through node 4,
(viii) routing packets directly from node 7 to one of nodes 1, 3, 5, and 6, and indirectly to node 0 through node 1, to node 2 through node 3, to node 4 through node 5, and to node 8 through node 3, and
(ix) routing packets directly from node 8 to one of nodes 0, 3, 5, and 6, and indirectly to node 1 through node 0, to node 2 through node 3, to node 4 through node 5, and to node 7 through node 6.

103. The method of claim 99, wherein the network has a node 0, a node 1, a node 2, a node 3, a node 4, a node 5, a node 6, a node 7, a node 8, and a node 9, and wherein the reconfiguring step includes:
routing packets through the network during the reconfiguration based on at least one of the following routing configurations:
(i) routing packets directly from node 0 to one of nodes 1, 3, 4, 6, and 8, and indirectly to node 2 through node 3, to node 5 through node 4, to node 7 through node 6, and to node 9 through node 8,
(ii) routing packets directly from node 1 to one of nodes 0, 5, 7, and 9, and indirectly to node 2 through node 9, to node 3 through node 5, to node 4 through node 5, to node 6 through node 7, and to node 8 through node 9,
(iii) routing packets directly from node 2 to one of nodes 3, 4, 6, and 9, and indirectly to node 0 through node 6, to node 1 through node 9, to node 5 through node 4, to node 7 through node 6, and to node 8 through node 9,
(iv) routing packets directly from node 3 to one of nodes 0, 2, 5, 7, and 8, and indirectly to node 1 through node 0, to node 4 through node 5, to node 6 through node 7, and to node 9 through node 8,
(v) routing packets directly from node 4 to one of nodes 0, 2, 5, and 9, and indirectly to node 1 through node 0, to node 3 through node 2, to node 6 through node 0, to node 7 through node 9, and to node 8 through node 9,
(vi) routing packets directly from node 5 to one of nodes 1, 3, 4, 7, and 8, and indirectly to node 0 through node 1, to node 2 through node 3, to node 6 through node 8, to node 7 through node 1, and to node 9 through node 8,
(vii) routing packets directly from node 6 to one of nodes 0, 2, 7, and 8, and indirectly to node 1 through node 0, to node 3 through node 2, to node 4 through node 2, to node 5 through node 8, and to node 9 through node 8,
(viii) routing packets directly from node 7 to one of nodes 1, 3, 6, and 9, and indirectly to node 0 through node 1, to node 2 through node 3, to node 4 through node 5, to node 5 through node 3, and to node 8 through node 9,
(ix) routing packets directly from node 8 to one of nodes 0, 3, 5, 6, and 9, and indirectly to node 1 through node 0, to node 2 through node 3, to node 4 through node 5, and to node 7 through node 6, and
(x) routing packets directly from node 9 to one of nodes 1, 2, 4, 7, and 8, and indirectly to node 0 through node 1, to node 3 through node 2, to node 5 through node 4, and to node 6 through node 7.

104. The method of claim 99, wherein the network has a node 0, a node 1, a node 2, a node 3, a node 4, a node 5, a node 6, a node 7, a node 8, a node 9, and a node 10, and wherein the reconfiguring step includes:
routing packets through the network during the reconfiguration based on at least one of the following routing configurations:
(i) routing packets directly from node 0 to one of nodes 1, 4, 6, and 8, and indirectly to node 2 through node 4, to node 3 through node 8, to node 5 through node 4, to node 7 through node 6, to node 9 through node 8, and to node 10 through node 6,
(ii) routing packets directly from node 1 to one of nodes 0, 5, 7, 9, and 10, and indirectly to node 2 through node 9, to node 3 through node 5, to node 4 through node 5, to node 6 through node 7, and to node 8 through node 9,
(iii) routing packets directly from node 2 to one of nodes 3, 4, 6, 9, and 10, and indirectly to node 0 through node 6, to node 1 through node 10, to node 5 through node 4, to node 7 through node 6, and to node 8 through node 9,
(iv) routing packets directly from node 3 to one of nodes 2, 5, 7, and 8, and indirectly to node 0 through node 8, to node 1 through node 7, to node 4 through node 5, to node 6 through node 7, to node 9 through node 8, and to node 10 through node 5,
(v) routing packets directly from node 4 to one of nodes 0, 2, 5, 7, and 9, and indirectly to node 1 through node 0, to node 3 through node 2, to node 6 through node 7, to nod e7 through node 9, to node 8 through node 9, and to node 10 through node 2,
(vi) routing packets directly from node 5 to one of nodes 1, 3, 4, 8, and 10, and indirectly to node 0 through node 1, to node 2 through node 3, to node 6 through node 8, to node 7 through node 1, and to node 9 through node 8,
(vii) routing packets directly from node 6 to one of nodes 0, 2, 7, 8, and 10, and indirectly to node 1 through node 0, to node 3 through node 2, to node 4 through node 2, to node 5 through node 8, and to node 9 through node 8,
(viii) routing packets directly from node 7 to one of nodes 1, 3, 6, and 9, and indirectly to node 0 through node 1, to node 2 through node 3, to node 4 through node 9, to node 5 through node 3, to node 8 through node 9, and to node 10 through node 1,
(ix) routing packets directly from node 8 to one of nodes 0, 3, 5, 6, and 9, and indirectly to node 1 through node 0, to node 2 through node 3, to node 4 through node 5, to node 7 through node 6, and to node 10 through node 6,
(x) routing packets directly from node 9 to one of nodes 1, 2, 4, 7, and 8, and indirectly to node 0 through node 1, to node 3 through node 2, to node 5 through node 4, to node 6 through node 7, and to node 10 through node 1, and
(xi) routing packets directly from node 10 to one of nodes 1, 2, 5, and 6, and indirectly to node 0 through node 1, to node 3 through node 2, to node 4 through node 5, to node 7 through node 6, to node 8 through node 6, and to node 9 through node 2.

105. The method of claim 99, wherein the network has a node 0, a node 1, a node 2, a node 3, a node 4, a node 5, a node 6, a node 7, a node 8, a node 9, a node 10, and a node 11, and wherein the reconfiguring step includes:
routing packets through the network during the reconfiguration based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, and to node 10 through node 11,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, and to node 11 through node 10,
(iii) routing packets directly from node 2 to one of nodes 3, 4, 6, 9, and 10, and indirectly to node 0 through node 4, to node 1 through node 10, to node 5 through node 4, to node 7 through node 6, to node 8 through node 9, and to node 11 through node 10,
(iv) routing packets directly from node 3 to one of nodes 2, 5, 7, 8, and 11, and indirectly to node 0 through node 8, to node 1 through node 7, to node 4 through node 5, to node 6 through node 7, to node 9 through node 8, and to node 10 through node 11,
(v) routing packets directly from node 4 to one of nodes 0, 2, 5, 9, and 11, and indirectly to node 1 through node 0, to node 3 through node 2, to node 6 through node 0, to node 7 through nodes 0 and 6, to node 8 through node 9, and to node 10 through node 11,
(vi) routing packets directly from node 5 to one of nodes 1, 3, 4, and 8, and indirectly to node 0 through node 1, to node 2 through node 3, to node 6 through nodes 1 and 7, to node 7 through node 1, to node 9 through node 8, to node 10 through node 1, and to node 11 through node 3,
(vii) routing packets directly from node 6 to one of nodes 0, 2, 7, and 10, and indirectly to node 1 through node 0, to node 3 through node 2, to node 4 through node 2, to node 5 through nodes 2 and 4, to node 8 through node 0, to node 9 through node 2, and to node 11 through node 10,
(viii) routing packets directly from node 7 to one of nodes 1, 3, 6, and 11, and indirectly to node 0 through node 1, to node 2 through node 3, to node 4 through nodes 3 and 5, to node 5 through node 3, to node 8 through node 3, to node 9 through node 1, and to node 10 through node 11,
(ix) routing packets directly from node 8 to one of nodes 0, 3, 5, and 9, and indirectly to node 1 through node 0, to node 2 through node 3, to node 4 through node 5, to node 6 through node 0, to node 7 through node 3, to node 10 through nodes 0 and 11, and to node 11 through node 0,
(x) routing packets directly from node 9 to one of nodes 1, 2, 4, and 8, and indirectly to node 0 through node 1, to node 3 through node 2, to node 5 through node 4, to node 6 through node 2, to node 7 through node 1, to node 10 through node 1, and to node 11 through nodes 1 and 10,
(xi) routing packets directly from node 10 to one of nodes 1, 2, 6, and 11, and indirectly to node 0 through node 1, to node 3 through node 2, to node 4 through node 2, to node 5 through node 1, to node 7 through node 6, to node 8 through nodes 2 and 9, and to node 9 through node 2, and
(xii) routing packets directly from node 11 to one of nodes 0, 3, 7, and 10, and indirectly to node 1 through node 0, to node 2 through node 3, to node 4 through node 0, to node 5 through node 3, to node 6 through node 7, to node 8 through node 3, and to node 9 through nodes 3 and 8.

106. The method of claim 99, wherein the network has a node 0, a node 1, a node 2, a node 3, a node 4, a node 5, a node 6, a node 7, a node 8, a node 9, a node 10, a node 11, and node 12, and wherein the reconfiguring step includes:
routing packets through the network during the reconfiguration based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, and to node 12 through node 4,
(ii) routing packets directly from node 1 to one of nodes 0, 5, 7, and 9, and indirectly to node 2 through node 9, to node 3 through node 5, to node 4 through node 5, to node 6 through node 7, to node 8 through node 9, to node 11 through node 10, and to node 12 through node 7,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, and to node 12 though node 10,
(iv) routing packets directly from node 3 to one of nodes 2, 5, 7, 8, and 11, and indirectly to node 0 through node 8, to node 1 through node 7, to node 4 through node 5, to node 6 through node 7, to node 9 through node 8, to node 10 through node 11, and to node 12 through node 7,
(v) routing packets directly from node 4 to one of nodes 0, 2, 5, 9, and 12, and indirectly to node 1 through node 0, to node 3 through node 2, to node 6 through node 0, to node 7 through node 12, to node 8 through node 9, to node 10 through node 12, to node 11 through node 0,
(vi) routing packets directly from node 5 to one of nodes 1, 3, 4, and 8, and indirectly to node 0 through node 1, to node 2 through node 3, to node 6 through nodes 1 an d7, to node 7 through node 1, to node 9 through node 8, to node 10 through node 1, to node 11 through node 3, and to node 12 through node 8,
(vii) routing packets directly from node 6 to one of nodes 0, 2, 7, and 10, and indirectly to node 1 through node 0, to node 3 through node 2, to node 4 through node 2, to node 5 through nodes 2 and 4, to node 8 through node 0, to node 9 through node 2, to node 11 through node 10, and to node 12 through node 10,
(viii) routing packets directly from node 7 to one of nodes 1, 3, 6, 11, and 12, and indirectly to node 0 through node 1, to node 2 through node 3, to node 4 through node 12, to node 5 through node 3, to node 8 through node 3, to node 9 through node 1, and to node 10 through node 11,
(ix) routing packets directly from node 8 to one of nodes 0, 3, 5, 9, and 12, and indirectly to node 1 through node 0, to node 2 through node 3, to node 4 through node 5, to node 6 through node 0, to node 7 through node 12, to node 10 through node 12, and to node 11 through node 0,
(x) routing packets directly from node 9 to one of nodes 1, 2, 4, 8, and 11, and indirectly to node 0 through node 1, to node 3 through node 2, to node 5 through node 4, to node 6 through node 2, to node 7 through node 1, to node 10 through node 1, to node 11 through nodes 1 and 10, and to node 12 through node 4,
(xi) routing packets directly from node 10 to one of nodes 1, 2, 6, 11, and 12, and indirectly to node 0 through node 1, to node 3 through node 2, to node 4 through node 2, to node 5 through node 1, to node 7 through node 6, to node 8 through node 12, and to node 9 through node 2,
(xii) routing packets directly from node 11 to one of nodes 0, 3, 7, and 10, and indirectly to node 1 through node 0, to node 2 through node 3, to node 4 through node 0, to node 5 through node 3, to node 6 through node 7, to node 8 through node 3, to node 9 through nodes 3 and 8, and to node 12 through node 7, and
(xiii) routing packets directly from node 12 to one of nodes 4, 7, 8, and 10, and indirectly to node 0 through node 8, to node 1 through node 10, to node 2 through node 4, to node 3 through node 8, to node 5 through node 4, to node 6 through node 7, to node 9 through node 8, and to node 11 through node 10.

107. The method of claim 99, wherein the network has a node 0, a node 1, a node 2, a node 3, a node 4, a node 5, a node 6, a node 7, a node 8, a node 9, a node 10, a node 11, a node 12, and an node 13, and wherein the reconfiguring step includes:
routing packets through the network during the reconfiguration based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, to node 12 through node 4, and to node 13 through node 6,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, to node 11 through node 10, to node 12 through node 7, and to node 13 through node 9,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, to node 12 though node 10, and to node 13 through node 6,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, to node 10 through node 11, to node 12 through node 7, and to node 13 through node 11,
(v) routing packets directly from node 4 to one of nodes 0, 2, 5, 9, and 12, and indirectly to node 1 through node 0, to node 3 through node 2, to node 6 through node 0, to node 7 through node 12, to node 8 through node 9, to node 10 through node 12, to node 11 through node 0, and to node 13 through node 12,
(vi) routing packets directly from node 5 to one of nodes 1, 3, 4, and 13, and indirectly to node 0 through node 1, to node 2 through node 3, to node 6 through node 13, to node 7 through node 1, to node 8 through node 3, to node 9 through node 1, to node 10 through node 1, to node 11 through node 13, and to node 12 through node 13,
(vii) routing packets directly from node 6 to one of nodes 0, 2, 7, and 13, and indirectly to node 1 through node 0, to node 3 through node 2, to node 4 through node 2, to node 5 through node 13, to node 8 through node 0, to node 9 through node 2, to node 10 through node 2, to node 11 through node 0, and to node 12 through node 13,
(viii) routing packets directly from node 7 to one of nodes 1, 3, 6, 11, and 12, and indirectly to node 0 through node 1, to node 2 through node 3, to node 4 through node 12, to node 5 through node 3, to node 8 through node 3, to node 9 through node 1, to node 10 through node 11, and to node 13 through node 12,
(ix) routing packets directly from node 8 to one of nodes 0, 3, 9, and 12, and indirectly to node 1 through node 0, to node 2 through node 3, to node 4 through node 12, to node 5 through node 3, to node 6 through node 0, to node 7 through node 12, to node 10 through node 12, to node 11 through node 0, and to node 13 through node 12,
(x) routing packets directly from node 9 to one of nodes 1, 2, 4, 8, and 13, and indirectly to node 0 through node 1, to node 3 through node 2, to node 5 through node 4, to node 6 through node 13, to node 7 through node 1, to node 10 through node 1, to node 11 through node 13, and to node 12 through node 13,
(xi) routing packets directly from node 10 to one of nodes 1, 2, 11, and 12, and indirectly to node 0 through node 1, to node 3 through node 2, to node 4 through node 2, to node 5 through node 1, to node 6 through node 2, to node 7 through node 12, to node 8 through node 12, to node 9 through node 2, and to node 13 through node 12,
(xii) routing packets directly from node 11 to one of nodes 0, 3, 7, 10, and 13, and indirectly to node 1 through node 0, to node 2 through node 3, to node 4 through node 0, to node 5 through node 3, to node 6 through node 7, to node 8 through node 3, to node 9 through node 13, and to node 12 through node 13,
(xiii) routing packets directly from node 12 to one of nodes 4, 7, 8, 10, and 13, and indirectly to node 0 through node 8, to node 1 through node 10, to node 2 through node 4, to node 3 through node 8, to node 5 through node 4, to node 6 through node 7, to node 9 through node 8, and to node 11 through node 10, and
(xiv) routing packets directly from node 13 to one of nodes 5, 6, 9, 11, and 12, and indirectly to node 0 through node 11, to node 1 through node 9, to node 2 through node 9, to node 3 through node 5, to node 4 through node 5, to node 7 through node 6, to node 8 through node 9, and to node 10 through node 11.

108. The method of claim 99, wherein the network has a node 0, a node 1, a node 2, a node 3, a node 4, a node 5, a node 6, a node 7, a node 8, a node 9, a node 10, a node 11, a node 12, a node 13, and a node 14, and wherein the reconfiguring step includes:
routing packets through the network during the reconfiguration based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, to node 12 through node 4, to node 13 through node 6, and to node 14 through node 8,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, to node 11 through node 10, to node 12 through node 7, to node 13 through node 5, and to node 14 through node 5,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, to node 12 though node 10, to node 13 through node 6, and to node 14 through node 6,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, to node 10 through node 11, to node 12 through node 7, to node 13 through node 11, and to node 14 through node 5,
(v) routing packets directly from node 4 to one of nodes 0, 2, 5, and 12, and indirectly to node 1 through node 0, to node 3 through node 2, to node 6 through node 0, to node 7 through node 12, to node 8 through node 0, to node 9 through node 2, to node 10 through node 12, to node 11 through node 0, to node 13 through node 12, and to node 14 through node 5,
(vi) routing packets directly from node 5 to one of nodes 1, 3, 4, 13, and 14, and indirectly to node 0 through node 1, to node 2 through node 3, to node 6 through node 13, to node 7 through node 1, to node 8 through node 3, to node 9 through node 1, to node 10 through node 1, to node 11 through node 13, and to node 12 through node 13,
(vii) routing packets directly from node 6 to one of nodes 0, 2, 7, 13, and 14, and indirectly to node 1 through node 0, to node 3 through node 2, to node 4 through node 2, to node 5 through node 14, to node 8 through node 14, to node 9 through node 2, to node 10 through node 2, to node 11 through node 0, and to node 12 through node 13,
(viii) routing packets directly from node 7 to one of nodes 1, 3, 6, and 12, and indirectly to node 0 through node 1, to node 2 through node 3, to node 4 through node 12, to node 5 through node 3, to node 8 through node 3, to node 9 through node 1, to node 10 through node 1, to node 11 through node 3, to node 13 through node 12, and to node 14 through node 6,
(ix) routing packets directly from node 8 to one of nodes 0, 3, 9,12, and 14, and indirectly to node 1 through node 0, to node 2 through node 3, to node 4 through node 12, to node 5 through node 14, to node 6 through node 0, to node 7 through node 12, to node 10 through node 12, to node 11 through node 0, and to node 13 through node 12,
(x) routing packets directly from node 9 to one of nodes 1, 2, 8, and 13, and indirectly to node 0 through node 1, to node 3 through node 2, to node 4 through node 2, to node 5 through node 13, to node 6 through node 13, to node 7 through node 1, to node 10 through node 1, to node 11 through node 13, to node 12 through node 13, and to node 14 through node 8,
(xi) routing packets directly from node 10 to one of nodes 1, 2, 11, 12, and 14, and indirectly to node 0 through node 1, to node 3 through node 2, to node 4 through node 2, to node 5 through node 14, to node 6 through node 2, to node 7 through 12, to node 8 through node 14, to node 9 through node 2, and to node 13 through node 12,
(xii) routing packets directly from node 11 to one of nodes 0, 3, 10, and 13, and indirectly to node 1 through node 0, to node 2 through node 3, to node 4 through node 0, to node 5 through node 3, to node 6 through node 13, to node 7 through node 3, to node 8 through node 3, to node 9 through node 13, to node 12 through node 13, and to node 14 through node 10,
(xiii) routing packets directly from node 12 to one of nodes 4, 7, 8, 10, and 13, and indirectly to node 0 through node 8, to node 1 through node 10, to node 2 through node 4, to node 3 through node 8, to node 5 through node 4, to node 6 through node 7, to node 9 through node 8, to node 11 through node 10, and to node 14 through node 8,
(xiv) routing packets directly from node 13 to one of nodes 5, 6, 9, 11, and 12, and indirectly to node 0 through node 11, to node 1 through node 9, to node 2 through node 9, to node 3 through node 5, to node 4 through node 5, to node 7 through node 6, to node 8 through node 9, to node 10 through node 11, and to node 14 through node 5, and
(xv) routing packets directly from node 14 to one of nodes 5, 6, 8, and 10, and indirectly to node 0 through node 6, to node 1 through node 10, to node 2 through node 10, to node 3 through node 8, to node 4 through node 5, to node 7 through node 6, to node 9 through node 8, to node 11 through node 10, to node 12 through node 10, and to node 13 through node 6.

109. The method of claim 99, wherein the network has a node 0, a node 1, a node 2, a node 3, a node 4, and a node 5, and wherein the reconfiguring step includes:
routing packets through the network during the reconfiguration based on at least one of the following routing configurations:
(i) routing packets directly from node 0 to one of nodes 1 and 3-5, and indirectly to node 2 through node 3,
(ii) routing packets directly from node 1 to one of nodes 0 and 2, 4 and 5, and indirectly to node 3 through node 2,
(iii) routing packets directly from node 2 to one of nodes 1, 3, and 4, and indirectly to node 0 through node 1 and to node 5 through node 4,
(iv) routing packets directly from node 3 to one of nodes 1, 2, and 5, and indirectly to node 1 through node 0 and to node 4 through node 5,
(v) routing packets directly from node 4 to one of nodes 0-2, and 5, and indirectly to node 3 through node 2,
(vi) routing packets directly from node 5 to one of nodes 0, 1, 3, and 4, and indirectly to node 2 through node 3.

110. The method of claim 99, wherein the network has a node 0, a node 1, a node 2, a node 3, a node 4, a node 5, a node 6, and a node 7, and wherein the reconfiguring step includes:
routing packets through the network during the reconfiguration based on at least one of the following routing configurations:
(i) routing packets directly from node 0 to one of nodes 1 and 3, 4, and 6, and indirectly to node 2 through node 3, to node 5 through node 4, and to node 7 through node 6,
(ii) routing packets directly from node 1 to one of nodes 0, 2, 5, and 7, and indirectly to node 3 through node 2, to node 4 through node 5, and to node 6 through node 7,
(iii) routing packets directly from node 2 to one of nodes 1, 3, 4, and 6, and indirectly to node 0 through node 1, to node 5 through node 4, and to node 7 through node 6,
(iv) routing packets directly from node 3 to one of nodes 0, 2, 5, and 7, and indirectly to node 1 through node 0, to node 4 through node 5, and to node 6 through node 7,
(v) routing packets directly from node 4 to one of nodes 0, 2, 5, and 6, and indirectly to node 1 through node 0, to node 3 through node 2 and to node 7 through node 6,
(vi) routing packets directly from node 5 to one of nodes 0, 1, 3, 4, and 7, and indirectly to node 0 through node 1, to node 2 through node 3, and to node 6 through node 7,
(vii) routing packets directly from node 6 to one of nodes 0, 2, 4, and 7, and indirectly to node 1 through node 0, to node 3 through node 2, and to node 5 through node 4, and
(viii) routing packets directly from node 7 to one of nodes 1, 3, 5, and 6, and indirectly to node 0 through node 1, to node 2 through node 3, and to node 4 through node 5.

111. The method of claim 99, wherein the network has a node 0, a node 1, a node 2, a node 3, a node 4, a node 5, a node 6, a node 7, a node 8, and a node 9, and wherein the reconfiguring step includes:
routing packets through the network during the reconfiguration based on at least one of the following routing configurations:
(i) routing packets directly from node 0 to one of nodes 1, 4, 6, and 8, and indirectly to node 2 through node 4, to node 3 through node 8, to node 5 through node 4, to node 7 through node 6, and to node 9 through node 8,
(ii) routing packets directly from node 1 to one of nodes 0, 5, 7, and 9, and indirectly to node 2 through node 9, to node 3 through node 5, to node 4 through node 5, to node 6 through node 7, and to node 8 through node 9,
(iii) routing packets directly from node 2 to one of nodes 3, 4, 6, and 9, and indirectly to node 0 through node 6, to node 1 through node 9, to node 5 through node 4, to node 7 through node 6, and to node 8 through node 9,
(iv) routing packets directly from node 3 to one of nodes 2, 5, 7, and 8, and indirectly to node 0 through node 8, to node 1 through node 7, to node 4 through node 5, to node 6 through node 7, and to node 9 through node 8,
(v) routing packets directly from node 4 to one of nodes 0, 2, 5, and 9, and indirectly to node 1 through node 0, to node 3 through node 2, to node 6 through node 0, to node 7 through node 9, and to node 8 through node 9,
(vi) routing packets directly from node 5 to one of nodes 1, 3, 4, and 8, and indirectly to node 0 through node 1, to node 2 through node 3, to node 6 through node 8, to node 7 through node 1, and to node 9 through node 8,
(vii) routing packets directly from node 6 to one of nodes 0, 2, 7, and 8, and indirectly to node 1 through node 0, to node 3 through node 2, to node 4 through node 2, to node 5 through node 8, and to node 9 through node 8,
(viii) routing packets directly from node 7 to one of nodes 1, 3, 6, and 9, and indirectly to node 0 through node 1, to node 2 through node 3, to node 4 through node 9, to node 5 through node 3, and to node 8 through node 9,
(ix) routing packets directly from node 8 to one of nodes 0, 3, 5, 6, and 9, and indirectly to node 1 through node 0, to node 2 through node 3, to node 4 through node 5, and to node 7 through node 6, and
(x) routing packets directly from node 9 to one of nodes 1, 2, 4, 7, and 8, and indirectly to node 0 through node 1, to node 3 through node 2, to node 5 through node 4, and to node 6 through node 7.

112. The method of claim 99, wherein the network has a node 0, a node 1, a node 2, a node 3, a node 4, a node 5, a node 6, a node 7, a node 8, a node 9, a node 10, and a node 11, and wherein the reconfiguring step includes:
routing packets through the network during the reconfiguration based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, and to node 10 through node 11,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, and to node 11 through node 10,
(iii) routing packets directly from node 2 to one of nodes 3, 4, 6, 9, and 10, and indirectly to node 0 through node 4, to node 1 through node 10, to node 5 through node 4, to node 7 through node 6, to node 8 through node 9, and to node 11 through node 10,
(iv) routing packets directly from node 3 to one of nodes 2, 5, 7, 8, and 11, and indirectly to node 0 through node 8, to node 1 through node 7, to node 4 through node 5, to node 6 through node 7, to node 9 through node 8, and to node 10 through node 11,
(v) routing packets directly from node 4 to one of nodes 0, 2, 5, and 9, and indirectly to node 1 through node 0, to node 3 through node 2, to node 6 through node 0, to node 7 through nodes 0 and 6, to node 8 through node 9, and to node 10 through node 2,
(vi) routing packets directly from node 5 to one of nodes 1, 3, 4, and 8, and indirectly to node 0 through node 1, to node 2 through node 3, to node 6 through nodes 1 and 7, to node 7 through node 1, to node 9 through node 8, to node 10 through node 1, and to node 11 through node 3,
(vii) routing packets directly from node 6 to one of nodes 0, 2, 7, and 10, and indirectly to node 1 through node 0, to node 3 through node 2, to node 4 through node 2, to node 5 through nodes 2 and 4, to node 8 through node 0, to node 9 through node 2, and to node 11 through node 10,
(viii) routing packets directly from node 7 to one of nodes 1, 3, 6, and 11, and indirectly to node 0 through node 1, to node 2 through node 3, to node 4 through nodes 3 and 5, to node 5 through node 3, to node 8 through node 3, to node 9 through node 1, and to node 10 through node 11,
(ix) routing packets directly from node 8 to one of nodes 0, 3, 5, and 9, and indirectly to node 1 through node 0, to node 2 through node 3, to node 4 through node 5, to node 6 through node 0, to node 7 through node 3, to node 10 through nodes 0 and 11, and to node 11 through node 0,
(x) routing packets directly from node 9 to one of nodes 1, 2, 4, and 8, and indirectly to node 0 through node 1, to node 3 through node 2, to node 5 through node 4, to node 6 through node 2, to node 7 through node 1, to node 10 through node 1, and to node 11 through nodes 1 and 10,
(xi) routing packets directly from node 10 to one of nodes 1, 2, 6, and 11, and indirectly to node 0 through node 1, to node 3 through node 2, to node 4 through node 2, to node 5 through node 1, to node 7 through node 6, to node 8 through nodes 2 and 9, and to node 9 through node 2, and
(xii) routing packets directly from node 11 to one of nodes 0, 3, 7, and 10, and indirectly to node 1 through node 0, to node 2 through node 3, to node 4 through node 0, to node 5 through node 3, to node 6 through node 7, to node 8 through node 3, and to node 9 through nodes 3 and 8.

113. The method of claim 99, wherein the network has a node 0, a node 1, a node 2, a node 3, a node 4, a node 5, a node 6, a node 7, a node 8, a node 9, a node 10, a node 11, a node 12, and an node 13, and wherein the reconfiguring step includes:
routing packets through the network during the reconfiguration based on at least one of the following routing configurations:
(i) routing packets directly from node 0 to one of nodes 1, 4, 6, 8, and 11, and indirectly to node 2 through node 4, to node 3 through node 8, to node 5 through node 4, to node 7 through node 6, to node 9 through node 8, to node 10 through node 11, to node 12 through node 8, and to node 13 through node 6,
(ii) routing packets directly from node 1 to one of nodes 0, 5, 7, 9, and 10, and indirectly to node 2 through node 9, to node 3 through node 5, to node 4 through node 5, to node 6 through node 7, to node 8 through node 9, to node 11 through node 10, to node 12 through node 7, and to node 13 through node 9,
(iii) routing packets directly from node 2 to one of nodes 3, 4, 6, 9, and 10, and indirectly to node 0 through node 6, to node 1 through node 10, to node 5 through node 4, to node 7 through node 6, to node 8 through node 9, to node 11 through node 10, to node 12 though node 10, and to node 13 through node 6,
(iv) routing packets directly from node 3 to one of nodes 2, 5, 7, 8, and 11, and indirectly to node 0 through node 11, to node 1 through node 7, to node 4 through node 5, to node 6 through node 7, to node 9 through node 8, to node 10 through node 11, to node 12 through node 7, and to node 13 through node 11,
(v) routing packets directly from node 4 to one of nodes 0, 2, 5, and 12, and indirectly to node 1 through node 0, to node 3 through node 2, to node 6 through node 0, to node 7 through node 12, to node 8 through node 0, to node 9 through node 2, to node 10 through node 12, to node 11 through node 0, and to node 13 through node 12,
(vi) routing packets directly from node 5 to one of nodes 1, 3, 4, and 13, and indirectly to node 0 through node 1, to node 2 through node 3, to node 6 through node 13, to node 7 through node 1, to node 8 through node 3, to node 9 through node 1, to node 10 through node 1, to node 11 through node 13, and to node 12 through node 13,
(vii) routing packets directly from node 6 to one of nodes 0, 2, 7, and 13, and indirectly to node 1 through node 0, to node 3 through node 2, to node 4 through node 2, to node 5 through node 13, to node 8 through node 0, to node 9 through node 2, to node 10 through node 2, to node 11 through node 0, and to node 12 through node 13,
(viii) routing packets directly from node 7 to one of nodes 1, 3, 6, and 12, and indirectly to node 0 through node 1, to node 2 through node 3, to node 4 through node 12, to node 5 through node 3, to node 8 through node 3, to node 9 through node 1, to node 10 through node 1, to node 11 through node 3, and to node 13 through node 12,
(ix) routing packets directly from node 8 to one of nodes 0, 3, 9, and 12, and indirectly to node 1 through node 0, to node 2 through node 3, to node 4 through node 12, to node 5 through node 3, to node 6 through node 0, to node 7 through node 12, to node 10 through node 12, to node 11 through node 0, and to node 13 through node 12,
(x) routing packets directly from node 9 to one of nodes 1, 2, 8, and 13, and indirectly to node 0 through node 1, to node 3 through node 2, to node 4 through node 2, to node 5 through node 13, to node 6 through node 13, to node 7 through node 1, to node 10 through node 1, to node 11 through node 13, and to node 12 through node 13,
(xi) routing packets directly from node 10 to one of nodes 1, 2, 11, and 12, and indirectly to node 0 through node 1, to node 3 through node 2, to node 4 through node 2, to node 5 through node 1, to node 6 through node 2, to node 7 through node 12, to node 8 through node 12, to node 9 through node 2, and to node 13 through node 12,
(xii) routing packets directly from node 11 to one of nodes 0, 3, 10, and 13, and indirectly to node 1 through node 0, to node 2 through node 3, to node 4 through node 0, to node 5 through node 3, to node 6 through node 13, to node 7 through node 3, to node 8 through node 3, to node 9 through node 13, and to node 12 through node 13,
(xiii) routing packets directly from node 12 to one of nodes 4, 7, 8, 10, and 13, and indirectly to node 0 through node 8, to node 1 through node 10, to node 2 through node 4, to node 3 through node 8, to node 5 through node 4, to node 6 through node 7, to node 9 through node 8, and to node 11 through node 10, and
(xiv) routing packets directly from node 13 to one of nodes 5, 6, 9, 11, and 12, and indirectly to node 0 through node 11, to node 1 through node 9, to node 2 through node 9, to node 3 through node 5, to node 4 through node 5, to node 7 through node 6, to node 8 through node 9, and to node 10 through node 11.

114. A method in a distributed system, comprising the steps of:
providing a network comprising sixteen nodes that are not fully connected, the nodes including a node 0, a node 1, a node 2, a node 3, a node 4, a node 5, a node 6, a node 7, a node 8, a node 9, a node 10, a node 11, a node 12, a node 13, a node 14, and a node 15, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 12, and node 15;
node 5 is communicatively linked to node 1, node 3, node 4, node 13, and node 14;
node 6 is communicatively linked to node 0, node 2, node 7, node 13, and node 14;
node 7 is communicatively linked to node 1, node 3, node 6, node 12, and node 15;
node 8 is communicatively linked to node 0, node 3, node 9, node 12, and node 14;
node 9 is communicatively linked to node 1, node 2, node 8, node 13, and node 15;
node 10 is communicatively linked to node 1, node 2, node 11, node 12, and node 14;
node 11 is communicatively linked to node 0, node 3, node 10, node 13, and node 15;
node 12 is communicatively linked to node 4, node 7, node 8, node 10, and node 13;
node 13 is communicatively linked to node 5, node 6, node 9, node 11, and node 12;
node 14 is communicatively linked to node 5, node 6, node 8, node 10, and node 15; and
node 15 is communicatively linked to node 4, node 7, node 9, node 11, and node 14;
and reconfiguring the network by performing the following steps:
removing the link between node 15 and node 4;
removing the link between node 15 and node 7;
removing the link between node 15 and node 9;
removing the link between node 15 and node 11;
removing the link between node 15 and node 14;
adding a link between node 9 and node 4; and
adding a link between node 11 and node 7.

115. A method in a distributed system, comprising the steps of:
providing a network comprising at least sixteen nodes that are not fully connected, the nodes including a node 0, a node 1, a node 2, a node 3, a node 4, a node 5, a node 6, a node 7, a node 8, a node 9, a node 10, a node 11, a node 12, a node 13, a node 14, and a node 15, the nodes being communicatively linked as follows:
node 0 is communicatively linked to node 1, node 4, node 6, node 8, and node 11;
node 1 is communicatively linked to node 0, node 5, node 7, node 9, and node 10;
node 2 is communicatively linked to node 3, node 4, node 6, node 9, and node 10;
node 3 is communicatively linked to node 2, node 5, node 7, node 8, and node 11;
node 4 is communicatively linked to node 0, node 2, node 5, node 12, and node 15;
node 5 is communicatively linked to node 1, node 3, node 4, node 13, and node 14;
node 6 is communicatively linked to node 0, node 2, node 7, node 13, and node 14;
node 7 is communicatively linked to node 1, node 3, node 6, node 12, and node 15;
node 8 is communicatively linked to node 0, node 3, node 9, node 12, and node 14;
node 9 is communicatively linked to node 1, node 2, node 8, node 13, and node 15;
node 10 is communicatively linked to node 1, node 2, node 11, node 12, and node 14;
node 11 is communicatively linked to node 0, node 3, node 10, node 13, and node 15;
node 12 is communicatively linked to node 4, node 7, node 8, node 10, and node 13;
node 13 is communicatively linked to node 5, node 6, node 9, node 11, and node 12;
node 14 is communicatively linked to node 5, node 6, node 8, node 10, and node 15; and
node 15 is communicatively linked to node 4, node 7, node 9, node 11, and node 14;
and reconfiguring the network by performing the following steps:
removing the link between node 14 and node 5;
removing the link between node 14 and node 6;
removing the link between node 14 and node 8;
removing the link between node 14 and node 10;
removing the link between node 15 and node 4;
removing the link between node 15 and node 7;
removing the link between node 15 and node 9;
removing the link between node 15 and node 11;
removing the link between node 15 and node 14;
adding a link between node 8 and node 5;
adding a link between node 10 and node 6;
adding a link between node 9 and node 4; and
adding a link between node 11 and node 7.

## Patentansprüche

1. Verfahren in einem verteilten System, wobei
ein Netzwerk mit sieben Knoten, nämlich einem Knoten 0, einem Knoten 1, einem Knoten 2, einem Knoten 3, einem Knoten 4, einem Knoten 5 und einem Knoten 6, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1 und 3 bis 6 sowie indirekt zum Knoten 2 über den Knoten 3,
(ii) Leiten von Paketen vom Knoten 1 direkt zu einem der Knoten 0 und 2 bis 5 sowie indirekt zum Knoten 6 über den Knoten 4,
(iii) Leiten von Paketen vom Knoten 2 direkt zu einem der Knoten 1 und 3 bis 6 sowie indirekt zum Knoten 0 über den Knoten 1,
(iv) Leiten von Paketen vom Knoten 3 direkt zu einem der Knoten 0 bis 2, 5 und 6 sowie indirekt zum Knoten 4 über den Knoten 5,
(v) Leiten von Paketen vom Knoten 4 direkt zu einem der Knoten 0 bis 2, 5 und 6 sowie indirekt zum Knoten 3 über den Knoten 2,
(vi) Leiten von Paketen vom Knoten 5 direkt zu einem der Knoten 1 bis 4 sowie indirekt zum Knoten 6 über den Knoten 3, und
(vii) Leiten von Paketen vom Knoten 6 direkt zu einem der Knoten 0 und 2 bis 4 sowie indirekt zum Knoten 1 über den Knoten 0 und zum Knoten 5 über den Knoten 4.

2. Verfahren in einem verteilten System, wobei
ein Netzwerk mit acht Knoten, nämlich einem Knoten 0, einem Knoten 1, einem Knoten 2, einem Knoten 3, einem Knoten 4, einem Knoten 5, einem Knoten 6 und einem Knoten 7, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1 und 3 bis 6 sowie indirekt zum Knoten 2 über den Knoten 3 und zum Knoten 7 über den Knoten 6,
(ii) Leiten von Paketen vom Knoten 1 direkt zu einem der Knoten 0, 2, 4, 5 und 7 sowie indirekt zum Knoten 3 über den Knoten 2 und zum Knoten 6 über den Knoten 7,
(iii) Leiten von Paketen vom Knoten 2 direkt zu einem der Knoten 1, 3, 4, 6 und 7 sowie indirekt zum Knoten 0 über den Knoten 1 und zum Knoten 5 über den Knoten 4,
(iv) Leiten von Paketen vom Knoten 3 direkt zu einem der Knoten 0, 2 und 5 bis 7 sowie indirekt zum Knoten 1 über den Knoten 0 und zum Knoten 4 über den Knoten 5,
(v) Leiten von Paketen vom Knoten 4 direkt zu einem der Knoten 0 bis 2, 5 und 6 sowie indirekt zum Knoten 3 über den Knoten 2 und zum Knoten 7 über den Knoten 6,
(vi) Leiten von Paketen vom Knoten 5 direkt zu einem der Knoten 0, 1, 3, 4 und 7 sowie indirekt zum Knoten 2 über den Knoten 3 und zum Knoten 6 über den Knoten 7,
(vii) Leiten von Paketen vom Knoten 6 direkt zu einem der Knoten 0, 2 bis 4 und 7 sowie indirekt zum Knoten 1 über den Knoten 0 und zum Knoten 5 über den Knoten 4, und
(viii) Leiten von Paketen vom Knoten 7 direkt zu einem der Knoten 1 bis 3, 5 und 6 sowie indirekt zum Knoten 0 über den Knoten 1 und zum Knoten 4 über den Knoten 5.

3. Verfahren in einem verteilten System, wobei
ein Netzwerk mit neun Knoten, nämlich einem Knoten 0, einem Knoten 1, einem Knoten 2, einem Knoten 3, einem Knoten 4, einem Knoten 5, einem Knoten 6, einem Knoten 7 und einem Knoten 8, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 3, 4, 6 und 8 sowie indirekt zum Knoten 2 über den Knoten 3, zum Knoten 5 über den Knoten 4 und zum Knoten 7 über den Knoten 6,
(ii) Leiten von Paketen vom Knoten 1 direkt zu einem der Knoten 0, 2, 4, 5 und 7 sowie indirekt zum Knoten 3 über den Knoten 2, zum Knoten 6 über den Knoten 7 und zum Knoten 8 über den Knoten 5,
(iii) Leiten von Paketen vom Knoten 2 direkt zu einem der Knoten 1, 3, 4, 6 und 7 sowie indirekt zum Knoten 0 über den Knoten 1, zum Knoten 5 über den Knoten 4 und zum Knoten 8 über den Knoten 6,
(iv) Leiten von Paketen vom Knoten 3 direkt zu einem der Knoten 0, 2, 5, 7 und 8 sowie indirekt zum Knoten 1 über den Knoten 0, zum Knoten 4 über den Knoten 5 und zum Knoten 6 über den Knoten 7,
(v) Leiten von Paketen vom Knoten 4 direkt zu einem der Knoten 0 bis 2, 5 und 6 sowie indirekt zum Knoten 3 über den Knoten 2, zum Knoten 7 über den Knoten 6 und zum Knoten 8 über den Knoten 0,
(vi) Leiten von Paketen vom Knoten 5 direkt zu einem der Knoten 1, 3, 4, 7 und 8 sowie indirekt zum Knoten 0 über den Knoten 1, zum Knoten 2 über den Knoten 3 und zum Knoten 6 über den Knoten 7,
(vii) Leiten von Paketen vom Knoten 6 direkt zu einem der Knoten 0, 2, 4, 7 und 8 sowie indirekt zum Knoten 1 über den Knoten 0, zum Knoten 3 über den Knoten 2 und zum Knoten 5 über den Knoten 4, und
(viii) Leiten von Paketen vom Knoten 7 direkt zu einem der Knoten 1 bis 3, 5 und 6 sowie indirekt zum Knoten 0 über den Knoten 1, zum Knoten 4 über den Knoten 5 und zum Knoten 8 über den Knoten 3, und
(ix) Leiten von Paketen vom Knoten 8 direkt zu einem der Knoten 0, 3, 5 und 6 sowie indirekt zum Knoten 1 über den Knoten 0, zum Knoten 2 über den Knoten 3, zum Knoten 4 über den Knoten 5 und zum Knoten 7 über den Knoten 6.

4. Verfahren in einem verteilten System, wobei
ein Netzwerk mit zehn Knoten, nämlich einem Knoten 0, einem Knoten 1, einem Knoten 2, einem Knoten 3, einem Knoten 4, einem Knoten 5, einem Knoten 6, einem Knoten 7, einem Knoten 8 und einem Knoten 9, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 3, 4, 6 und 8 sowie indirekt zum Knoten 2 über den Knoten 3, zum Knoten 5 über den Knoten 4, zum Knoten 7 über den Knoten 6 und zum Knoten 9 über den Knoten 8,
(ii) Leiten von Paketen vom Knoten 1 direkt zu einem der Knoten 0, 2, 5, 7 und 9 sowie indirekt zum Knoten 3 über den Knoten 2, zum Knoten 4 über den Knoten 5, zum Knoten 6 über den Knoten 7 und zum Knoten 8 über den Knoten 9,
(iii) Leiten von Paketen vom Knoten 2 direkt zu einem der Knoten 1, 3, 4, 6 und 9 sowie indirekt zum Knoten 0 über den Knoten 1, zum Knoten 5 über den Knoten 4, zum Knoten 7 über den Knoten 6 und zum Knoten 8 über den Knoten 9,
(iv) Leiten von Paketen vom Knoten 3 direkt zu einem der Knoten 0, 2, 5, 7 und 8 sowie indirekt zum Knoten 1 über den Knoten 0, zum Knoten 4 über den Knoten 5, zum Knoten 6 über den Knoten 7 und zum Knoten 9 über den Knoten 8,
(v) Leiten von Paketen vom Knoten 4 direkt zu einem der Knoten 0, 2, 5, 6 und 9 sowie indirekt zum Knoten 1 über den Knoten 0, zum Knoten 3 über den Knoten 2, zum Knoten 7 über den Knoten 6 und zum Knoten 8 über den Knoten 9,
(vi) Leiten von Paketen vom Knoten 5 direkt zu einem der Knoten 1, 3, 4, 7 und 8 sowie indirekt zum Knoten 0 über den Knoten 1, zum Knoten 2 über den Knoten 3, zum Knoten 6 über den Knoten 7 und zum Knoten 9 über den Knoten 8,
(vii) Leiten von Paketen vom Knoten 6 direkt zu einem der Knoten 0, 2, 4, 7 und 8 sowie indirekt zum Knoten 1 über den Knoten 0, zum Knoten 3 über den Knoten 2, zum Knoten 5 über den Knoten 4 und zum Knoten 9 über den Knoten 8,
(viii) Leiten von Paketen vom Knoten 7 direkt zu einem der Knoten 1, 3, 5, 6 und 9 sowie indirekt zum Knoten 0 über den Knoten 1, zum Knoten 2 über den Knoten 3, zum Knoten 4 über den Knoten 5 und zum Knoten 8 über den Knoten 9,
(ix) Leiten von Paketen vom Knoten 8 direkt zu einem der Knoten 0, 3, 5, 6 und 9 sowie indirekt zum Knoten 1 über den Knoten 0, zum Knoten 2 über den Knoten 3, zum Knoten 4 über den Knoten 5 und zum Knoten 7 über den Knoten 6, und
(x) Leiten von Paketen vom Knoten 9 direkt zu einem der Knoten 1, 2, 4, 7 und 8 sowie indirekt zum Knoten 0 über den Knoten 1, zum Knoten 3 über den Knoten 2, zum Knoten 5 über den Knoten 4 und zum Knoten 6 über den Knoten 7.

5. Verfahren in einem verteilten System, wobei
ein Netzwerk mit elf Knoten, nämlich einem Knoten 0, einem Knoten 1, einem Knoten 2, einem Knoten 3, einem Knoten 4, einem Knoten 5, einem Knoten 6, einem Knoten 7, einem Knoten 8, einem Knoten 9 und einem Knoten 10, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 3, 4, 6 und 8 sowie indirekt zum Knoten 2 über den Knoten 3, zum Knoten 5 über den Knoten 4, zum Knoten 7 über den Knoten 6, zum Knoten 9 über den Knoten 8 und zum Knoten 10 über den Knoten 6,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7 und zum Knoten 8 über den Knoten 9,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6 und zum Knoten 8 über den Knoten 9,
(iv) Leiten von Paketen vom Knoten 3 direkt zu einem der Knoten 0, 2, 5, 7 und 8 sowie indirekt zum Knoten 1 über den Knoten 0, zum Knoten 4 über den Knoten 5, zum Knoten 6 über den Knoten 7, zum Knoten 9 über den Knoten 8 und zum Knoten 10 über den Knoten 5,
(v) Leiten von Paketen vom Knoten 4 direkt zu. einem der Knoten 0, 2, 5, 7 und 9 sowie indirekt zum Knoten 1 über den Knoten 0, zum Knoten 3 über den Knoten 2, zum Knoten 6 über den Knoten 7, zum Knoten 8 über den Knoten 9 und zum Knoten 10 über den Knoten 2,
(vi) Leiten von Paketen vom Knoten 5 direkt zu einem der Knoten 1, 3, 4, 7, 8 und 10 sowie indirekt zum Knoten 0 über den Knoten 1, zum Knoten 2 über den Knoten 3, zum Knoten 6 über den Knoten 8, zum Knoten 7 über den Knoten 1 und zum Knoten 9 über den Knoten 8,
(vii) Leiten von Paketen vom Knoten 6 direkt zu einem der Knoten 0, 2, 7, 8 und 10 sowie indirekt zum Knoten 1 über den Knoten 0, zum Knoten 3 über den Knoten 2, zum Knoten 4 über den Knoten 2, zum Knoten 5 über den Knoten 8, zum Knoten 9 über den Knoten 8,
(viii) Leiten von Paketen vom Knoten 7 direkt zu einem der Knoten 1, 3, 4, 6 und 9 sowie indirekt zum Knoten 0 über den Knoten 1, zum Knoten 2 über den Knoten 3, zum Knoten 5 über den Knoten 4, zum Knoten 8 über den Knoten 9 und zum Knoten 10 über den Knoten 1,
(ix) Leiten von Paketen vom Knoten 8 direkt zu einem der Knoten 0, 3, 5, 6 und 9 sowie indirekt zum Knoten 1 über den Knoten 0, zum Knoten 2 über den Knoten 3, zum Knoten 4 über den Knoten 5, zum Knoten 7 über den Knoten 6 und zum Knoten 10 über den Knoten 6,
(x) Leiten von Paketen vom Knoten 9 direkt zu einem der Knoten 1, 2, 4, 7 und 8 sowie indirekt zum Knoten 0 über den Knoten 1, zum Knoten 3 über den Knoten 2, zum Knoten 5 über den Knoten 4, zum Knoten 6 über den Knoten 7 und zum Knoten 10 über den Knoten 1, und
(xi) Leiten von Paketen vom Knoten 10 direkt zu einem der Knoten 1, 2, 5 und 6 sowie indirekt zum Knoten 0 über den Knoten 1, zum Knoten 3 über den Knoten 2, zum Knoten 4 über den Knoten 5, zum Knoten 7 über den Knoten 6, zum Knoten 8 über den Knoten 6 und zum Knoten 9 über den Knoten 2.

6. Verfahren in einem verteilten System, wobei
ein Netzwerk mit zwölf Knoten, nämlich einem Knoten 0, einem Knoten 1, einem Knoten 2, einem Knoten 3, einem Knoten 4, einem Knoten 5, einem Knoten 6, einem Knoten 7, einem Knoten 8, einem Knoten 9, einem Knoten 10 und einem Knoten 11, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8 und zum Knoten 10 über den Knoten 11,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9 und zum Knoten 11 über den Knoten 10,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9 und zum Knoten 11 über den Knoten 10,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8 und zum Knoten 10 über den Knoten 11,
(v) Leiten von Paketen vom Knoten 4 direkt zu einem der Knoten 0, 2, 5, 9 und 11 sowie indirekt zum Knoten 1 über den Knoten 0, zum Knoten 3 über den Knoten 2, zum Knoten 6 über den Knoten 0, zum Knoten 7 über den Knoten 9, zum Knoten 8 über den Knoten 9 und zum Knoten 10 über den Knoten 11,
(vi) Leiten von Paketen vom Knoten 5 direkt zu einem der Knoten 1, 3, 4, 8 und 10 sowie indirekt zum Knoten 0 über den Knoten 1, zum Knoten 2 über den Knoten 3, zum Knoten 6 über den Knoten 10, zum Knoten 7 über den Knoten 1, zum Knoten 9 über den Knoten 8 und zum Knoten 11 über den Knoten 10,
(vii) Leiten von Paketen vom Knoten 6 direkt zu einem der Knoten 0, 2, 7, 8 und 10 sowie indirekt zum Knoten 1 über den Knoten 0, zum Knoten 3 über den Knoten 2, zum Knoten 4 über den Knoten 2, zum Knoten 5 über den Knoten 10, zum Knoten 9 über den Knoten 8 und zum Knoten 11 über den Knoten 10,
(viii) Leiten von Paketen vom Knoten 7 direkt zu einem der Knoten 1, 3, 6, 9 und 11 sowie indirekt zum Knoten 0 über den Knoten 1, zum Knoten 2 über den Knoten 3, zum Knoten 4 über den Knoten 9, zum Knoten 5 über den Knoten 3, zum Knoten 8 über den Knoten 9 und zum Knoten 10 über den Knoten 11,
(ix) Leiten von Paketen vom Knoten 8 direkt zu einem der Knoten 0, 3, 5, 6 und 9 sowie indirekt zum Knoten 1 über den Knoten 0, zum Knoten 2 über den Knoten 3, zum Knoten 4 über den Knoten 5, zum Knoten 7 über den Knoten 6, zum Knoten 10 über den Knoten 5 und zum Knoten 11 über den Knoten 0,
(x) Leiten von Paketen vom Knoten 9 direkt zu einem der Knoten 1, 2, 4, 7 und 8 sowie indirekt zum Knoten 0 über den Knoten 1, zum Knoten 3 über den Knoten 2; zum Knoten 5 über den Knoten 4, zum Knoten 6 über den Knoten 7, zum Knoten 10 über den Knoten 1, zum Knoten 11 über den Knoten 7,
(xi) Leiten von Paketen vom Knoten 10 direkt zu einem der Knoten 1, 2, 5, 6 und 11 sowie indirekt zum Knoten 0 über den Knoten 1, zum Knoten 3 über den Knoten 2, zum Knoten 4 über den Knoten 5, zum Knoten 7 über den Knoten 6, zum Knoten 8 über den Knoten 5 und zum Knoten 9 über den Knoten 2, und
(xii) Leiten von Paketen vom Knoten 11 direkt zu einem der Knoten 0, 3, 4, 7 und 10 sowie indirekt zum Knoten 1 über den Knoten 0, zum Knoten 2 über den Knoten 3, zum Knoten 5 über den Knoten 4, zum Knoten 6 über den Knoten 7, zum Knoten 8 über den Knoten 3 und zum Knoten 9 über den Knoten 7.

7. Verfahren in einem verteilten System, wobei
ein Netzwerk mit dreizehn Knoten, nämlich einem Knoten 0, einem Knoten 1, einem Knoten 2, einem Knoten 3, einem Knoten 4, einem Knoten 5, einem Knoten 6, einem Knoten 7, einem Knoten 8, einem Knoten 9, einem Knoten 10, einem Knoten 11 und einem Knoten 12, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8, zum Knoten 10 über den Knoten 11 und zum Knoten 12 über den Knoten 4,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10 und zum Knoten 12 über den Knoten 7,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10 und zum Knoten 12 über den Knoten 10,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11 und zum Knoten 12 über den Knoten 7,
(v) Leiten von Paketen vom Knoten 4 direkt zu einem der Knoten 0, 2, 5, 9 und 12 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 9, zum Knoten 10 über den Knoten 12 und zum Knoten 11 über den Knoten 0,
(vi) Leiten von Paketen vom Knoten 5 direkt zu einem der Knoten 1, 3, 4, 6 und 8 sowie indirekt zum Knoten 0 über den Knoten 1, zum Knoten 2 über den Knoten 3, zum Knoten 7 über den Knoten 6, zum Knoten 9 über den Knoten 8, zum Knoten 10 über den Knoten 1, zum Knoten 11 über den Knoten 3 und zum Knoten 12 über den Knoten 8,
(vii) Leiten von Paketen vom Knoten 6 direkt zu einem der Knoten 0, 2, 5, 7 und 10 sowie indirekt zum Knoten 1 über den Knoten 0, zum Knoten 3 über den Knoten 2, zum Knoten 4 über den Knoten 5, zum Knoten 8 über den Knoten 0, zum Knoten 9 über den Knoten 2, zum Knoten 11 über den Knoten 10 und zum Knoten 12 über den Knoten 10,
(viii) Leiten von Paketen vom Knoten 7 direkt zu einem der Knoten 1, 3, 6, 11 und. 12 sowie indirekt zum Knoten 0 über den Knoten 1, zum Knoten 2 über den Knoten 3, zum Knoten 4 über den Knoten 12, zum Knoten 5 über den Knoten 3, zum Knoten 8 über den Knoten 3, zum Knoten 9 über den Knoten 11 und zum Knoten 10 über den Knoten 11,
(ix) Leiten von Paketen vom Knoten 8 direkt zu einem der Knoten 0, 3, 5, 9 und 12 sowie indirekt zum Knoten 1 über den Knoten 0, zum Knoten 2 über den Knoten 3, zum Knoten 4 über den Knoten 5, zum Knoten 6 über den Knoten 0, zum Knoten 7 über den Knoten 12, zum Knoten 10 über den Knoten 12 und zum Knoten 11 über den Knoten 0,
(x) Leiten von Paketen vom Knoten 9 direkt zu einem der Knoten 1, 2, 4, 8 und 11 sowie indirekt zum Knoten 0 über den Knoten 1, zum Knoten 3 über den Knoten 2, zum Knoten 5 über den Knoten 4, zum Knoten 6 über den Knoten 2, zum Knoten 7 über den Knoten 1, zum Knoten 10 über den Knoten 11 und zum Knoten 12 über den Knoten 4,
(xi) Leiten von Paketen vom Knoten 10 direkt zu einem der Knoten 1, 2, 6, 11 und 12 sowie indirekt zum Knoten 0 über den Knoten 1, zum Knoten 3 über den Knoten 2, zum Knoten 4 über den Knoten 2, zum Knoten 5 über den Knoten 6, zum Knoten 7 über den Knoten 6, zum Knoten 8 über den Knoten 12 und zum Knoten 9 über den Knoten 2,
(xii) Leiten von Paketen vom Knoten 11 direkt zu einem der Knoten 0, 3, 7, 9 und 10 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 7, zum Knoten 8 über den Knoten 9 und zum Knoten 12 über den Knoten 7, und
(xiii) Leiten von Paketen vom Knoten 12 direkt zu einem der Knoten 4, 7, 8 und 10 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 7, zum Knoten 6 über den Knoten 7, zum Knoten 9 über den Knoten 8 und zum Knoten 11 über den Knoten 10.

8. Verfahren in einem verteilten System, wobei
ein Netzwerk mit vierzehn Knoten, nämlich einem Knoten 0, einem Knoten 1, einem Knoten 2, einem Knoten 3, einem Knoten 4, einem Knoten 5, einem Knoten 6, einem Knoten 7, einem Knoten 8, einem Knoten 9, einem Knoten 10, einem Knoten 11, einem Knoten 12 und einem Knoten 13, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8, zum Knoten 10 über den Knoten 11, zum Knoten 12 über den Knoten 8 und zum Knoten 13 über den Knoten 6,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10, zum Knoten 12 über den Knoten 7 und zum Knoten 13 über den Knoten 5,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10, zum Knoten 12 über den Knoten 10 und zum Knoten 13 über den Knoten 6,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11, zum Knoten 12 über den Knoten 7 und zum Knoten 13 über den Knoten 11,
(v) Leiten von Paketen vom Knoten 4 direkt zu einem der Knoten 0, 2, 5, 9 und 12 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 9, zum Knoten 10 über den Knoten 12, zum Knoten 11 über den Knoten 0 und zum Knoten 13 über den Knoten 12,
(vi) Leiten von Paketen vom Knoten 5 direkt zu einem der Knoten 1, 3, 4, 8 und 13 sowie indirekt zum Knoten 0 über den Knoten 1, zum Knoten 2 über den Knoten 3, zum Knoten 6 über den Knoten 13, zum Knoten 7 über den Knoten 1, zum Knoten 9 über den Knoten 8, zum Knoten 10 über den Knoten 1, zum Knoten 11 über den Knoten 13 und zum Knoten 12 über den Knoten 13,
(vii) Leiten von Paketen vom Knoten 6 direkt zu einem der Knoten 0, 2, 7, 10 und 13 sowie indirekt zum Knoten 1 über den Knoten 0, zum Knoten 3 über den Knoten 2, zum Knoten 4 über den Knoten 2, zum Knoten 5 über den Knoten 13, zum Knoten 8 über den Knoten 0, zum Knoten 9 über den Knoten 2, zum Knoten 11 über den Knoten 10 und zum Knoten 12 über den Knoten 13,
(viii) Leiten von Paketen vom Knoten 7 direkt zu einem der Knoten 1, 3, 6, 11 und 12 sowie indirekt zum Knoten 0 über den Knoten 1, zum Knoten 2 über den Knoten 3, zum Knoten 4 über den Knoten 12, zum Knoten 5 über den Knoten 3, zum Knoten 8 über den Knoten 3, zum Knoten 9 über den Knoten 1, zum Knoten 10 über den Knoten 11 und zum Knoten 13 über den Knoten 12,
(ix) Leiten von Paketen vom Knoten 8 direkt zu einem der Knoten 0, 3, 5, 9 und 12 sowie indirekt zum Knoten 1 über den Knoten 0, zum Knoten 2 über den Knoten 3, zum Knoten 4 über den Knoten 5, zum Knoten 6 über den Knoten 0, zum Knoten 7 über den Knoten 12, zum Knoten 10 über den Knoten 12, zum Knoten 11 über den Knoten 0 und zum Knoten 13 über den Knoten 12,
(x) Leiten von Paketen vom Knoten 9 direkt zu einem der Knoten 1, 2, 4, 8 und 13 sowie indirekt zum Knoten 0 über den Knoten 1, zum Knoten 3 über den Knoten 2, zum Knoten 5 über den Knoten 4, zum Knoten 6 über den Knoten 13, zum Knoten 7 über den Knoten 1, zum Knoten 10 über den Knoten 1, zum Knoten 11 über den Knoten 13 und zum Knoten 12 über den Knoten 13,
(xi) Leiten von Paketen vom Knoten 10 direkt zu einem der Knoten 1, 2, 6, 11 und 12 sowie indirekt zum Knoten 0 über den Knoten 1, zum Knoten 3 über den Knoten 2, zum Knoten 4 über den Knoten 2, zum Knoten 5 über den Knoten 1, zum Knoten 7 über den Knoten 6, zum Knoten 8 über den Knoten 12, zum Knoten 9 über den Knoten 2 und zum Knoten 13 über den Knoten 12,
(xii) Leiten von Paketen vom Knoten 11 direkt zu einem der Knoten 0, 3, 7, 10 und 13 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 7, zum Knoten 8 über den Knoten 3, zum Knoten 9 über den Knoten 13 und zum Knoten 12 über den Knoten 13,
(xiii) Leiten von Paketen vom Knoten 12 direkt zu einem der Knoten 4, 7, 8, 10 und 13 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 4, zum Knoten 6 über den Knoten 7, zum Knoten 9 über den Knoten 8 und zum Knoten 11 über den Knoten 10, und
(xiv) Leiten von Paketen vom Knoten 13 direkt zu einem der Knoten 5, 6, 9, 11 und 12 sowie indirekt zum Knoten 0 über den Knoten 11, zum Knoten 1 über den Knoten 9, zum Knoten 2 über den Knoten 9, zum Knoten 3 über den Knoten 5, zum Knoten 4 über den Knoten 5, zum Knoten 7 über den Knoten 6, zum Knoten 8 über den Knoten 9 und zum Knoten 10 über den Knoten 11.

9. Verfahren in einem verteilten System, wobei
ein Netzwerk mit fünfzehn Knoten, nämlich einem Knoten 0, einem Knoten 1, einem Knoten 2, einem Knoten 3, einem Knoten 4, einem Knoten 5, einem Knoten 6, einem Knoten 7, einem Knoten 8, einem Knoten 9, einem Knoten 10, einem Knoten 11, einem Knoten 12, einem Knoten 13 und einem Knoten 14, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8, zum Knoten 10 über den Knoten 11, zum Knoten 12 über den Knoten 4, zum Knoten 13 über den Knoten 6 und zum Knoten 14 über den Knoten 8,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10, zum Knoten 12 über den Knoten 7, zum Knoten 13 über den Knoten 5 und zum Knoten 14 über den Knoten 5,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10, zum Knoten 12 über den Knoten 10, zum Knoten 13 über den Knoten 6 und zum Knoten 14 über den Knoten 6,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11, zum Knoten 12 über den Knoten 7, zum Knoten 13 über den Knoten 11 und zum Knoten 14 über den Knoten 5,
(v) Leiten von Paketen vom Knoten 4 direkt zu einem der Knoten 0, 2, 5, 9 und 12 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 9, zum Knoten 10 über den Knoten 12, zum Knoten 11 über den Knoten 0, zum Knoten 13 über den Knoten 12 und zum Knoten 14 über den Knoten 5,
(vi) Leiten von Paketen vom Knoten 5 direkt zu einem der Knoten 1, 3, 4, 13 und 14 sowie indirekt zum Knoten 0 über den Knoten 1, zum Knoten 2 über den Knoten 3, zum Knoten 6 über den Knoten 13, zum Knoten 7 über den Knoten 1, zum Knoten 8 über den Knoten 3, zum Knoten 9 über den Knoten 1, zum Knoten 10 über den Knoten 1, zum Knoten 11 über den Knoten 13 und zum Knoten 12 über den Knoten 13,
(vii) Leiten von Paketen vom Knoten 6 direkt zu einem der Knoten 0, 2, 7, 13 und 14 sowie indirekt zum Knoten 1 über den Knoten 0, zum Knoten 3 über den Knoten 2, zum Knoten 4 über den Knoten 2, zum Knoten 5 über den Knoten 14, zum Knoten 8 über den Knoten 14, zum Knoten 9 über den Knoten 2, zum Knoten 10 über den Knoten 2, zum Knoten 11 über den Knoten 0 und zum Knoten 12 über den Knoten 13,
(viii) Leiten von Paketen vom Knoten 7 direkt zu einem der Knoten 1, 3, 6, 11 und 12 sowie indirekt zum Knoten 0 über den Knoten 1, zum Knoten 2 über den Knoten 3, zum Knoten 4 über den Knoten 12, zum Knoten 5 über den Knoten 3, zum Knoten 8 über den Knoten 3, zum Knoten 9 über den Knoten 1, zum Knoten 10 über den Knoten 11, zum Knoten 13 über den Knoten 12 und zum Knoten 14 über den Knoten 6,
(ix) Leiten von Paketen vom Knoten 8 direkt zu einem der Knoten 0, 3, 9, 12 und 14 sowie indirekt zum Knoten 1 über den Knoten 0, zum Knoten 2 über den Knoten 3, zum Knoten 4 über den Knoten 12, zum Knoten 5 über den Knoten 14, zum Knoten 6 über den Knoten 0, zum Knoten 7 über den Knoten 12, zum Knoten 10 über den Knoten 12, zum Knoten 11 über den Knoten 0 und zum Knoten 13 über den Knoten 12,
(x) Leiten von Paketen vom Knoten 9 direkt zu einem der Knoten 1, 2, 4, 8 und 13 sowie indirekt zum Knoten 0 über den Knoten 1, zum Knoten 3 über den Knoten 2, zum Knoten 5 über den Knoten 4, zum Knoten 6 über den Knoten 13, zum Knoten 7 über den Knoten 1, zum Knoten 10 über den Knoten 1, zum Knoten 11 über den Knoten 13, zum Knoten 12 über den Knoten 13 und zum Knoten 14 über den Knoten 8,
(xi) Leiten von Paketen vom Knoten 10 direkt zu einem der Knoten 1, 2, 11, 12 und 14 sowie indirekt zum Knoten 0 über den Knoten 1, zum Knoten 3 über den Knoten 2, zum Knoten 4 über den Knoten 2, zum Knoten 5 über den Knoten 14, zum Knoten 6 über den Knoten 2, zum Knoten 7 über den Knoten 12, zum Knoten 8 über den Knoten 14, zum Knoten 9 über den Knoten 2 und zum Knoten 13 über den Knoten 12,
(xii) Leiten von Paketen vom Knoten 11 direkt zu einem der Knoten 0, 3, 7, 10 und 13 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 7, zum Knoten 8 über den Knoten 3, zum Knoten 9 über den Knoten 13, zum Knoten 12 über den Knoten 13 und zum Knoten 14 über den Knoten 10,
(xiii) Leiten von Paketen vom Knoten 12 direkt zu einem der Knoten 4, 7, 8, 10 und 13 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 4, zum Knoten 6 über den Knoten 7, zum Knoten 9 über den Knoten 8, zum Knoten 11 über den Knoten 10 und zum Knoten 14 über den Knoten 8,
(xiv) Leiten von Paketen vom Knoten 13 direkt zu einem der Knoten 5, 6, 9, 11 und 12 sowie indirekt zum Knoten 0 über den Knoten 11, zum Knoten 1 über den Knoten 9, zum Knoten 2 über den Knoten 9, zum Knoten 3 über den Knoten 5, zum Knoten 4 über den Knoten 5, zum Knoten 7 über den Knoten 6, zum Knoten 8 über den Knoten 9, zum Knoten 10 über den Knoten 11 und zum Knoten 14 über den Knoten 5, und
(xv) Leiten von Paketen vom Knoten 14 direkt zu einem der Knoten 5, 6, 8 und 10 sowie indirekt zum Knoten 0 über den Knoten 6, zum Knoten 1 über den Knoten 10, zum Knoten 2 über den Knoten 10, zum Knoten 3 über den Knoten 8, zum Knoten 4 über den Knoten 5, zum Knoten 7 über den Knoten 6, zum Knoten 9 über den Knoten 8, zum Knoten 11 über den Knoten 10, zum Knoten 12 über den Knoten 10 und zum Knoten 14 über den Knoten 6.

10. Verfahren in einem verteilten System, wobei
ein Netzwerk mit sechzehn Knoten, nämlich einem Knoten 0, einem Knoten 1, einem Knoten 2, einem Knoten 3, einem Knoten 4, einem Knoten 5, einem Knoten 6, einem Knoten 7, einem Knoten 8, einem Knoten 9, einem Knoten 10, einem Knoten 11, einem Knoten 12, einem Knoten 13, einem Knoten 14 und einem Knoten 15, vorgesehen wird und
Pakete durch das Netzwerk geleitet werden, um eine Blockierung aufgrund mindestens einer der folgenden Leitwegkonfigurationen zu verhindern:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8, zum Knoten 10 über den Knoten 11, zum Knoten 12 über den Knoten 4, zum Knoten 13 über den Knoten 6, zum Knoten 14 über den Knoten 8 und zum Knoten 15 über den Knoten 4,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10, zum Knoten 12 über den Knoten 7, zum Knoten 13 über den Knoten 5, zum Knoten 14 über den Knoten 5 und zum Knoten 15 über den Knoten 9,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10, zum Knoten 12 über den Knoten 10, zum Knoten 13 über den Knoten 6, zum Knoten 14 über den Knoten 6 und zum Knoten 15 über den Knoten 4,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11, zum Knoten 12 über den Knoten 7, zum Knoten 13 über den Knoten 11, zum Knoten 14 über den Knoten 5 und zum Knoten 15 über den Knoten 7,
(v) Leiten von Paketen vom Knoten 4 direkt zu einem der Knoten 0, 2, 5, 12 und 15 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 0, zum Knoten 9 über den Knoten 2, zum Knoten 10 über den Knoten 12, zum Knoten 11 über den Knoten 0, zum Knoten 13 über den Knoten 12 und zum Knoten 14 über den Knoten 15,
(vi) Leiten von Paketen vom Knoten 5 direkt zu einem der Knoten 1, 3, 4, 13 und 14 sowie indirekt zum Knoten 0 über den Knoten 1, zum Knoten 2 über den Knoten 3, zum Knoten 6 über den Knoten 13, zum Knoten 7 über den Knoten 1, zum Knoten 8 über den Knoten 3, zum Knoten 9 über den Knoten 1, zum Knoten 10 über den Knoten 1, zum Knoten 11 über den Knoten 13, zum Knoten 12 über den Knoten 13 und zum Knoten 15 über den Knoten 14,
(vii) Leiten von Paketen vom Knoten 6 direkt zu einem der Knoten 0, 2, 7, 13 und 14 sowie indirekt zum Knoten 1 über den Knoten 0, zum Knoten 3 über den Knoten 2, zum Knoten 4 über den Knoten 2, zum Knoten 5 über den Knoten 14, zum Knoten 8 über den Knoten 14, zum Knoten 9 über den Knoten 2, zum Knoten 10 über den Knoten 2, zum Knoten 11 über den Knoten 0, zum Knoten 12 über den Knoten 13 und zum Knoten 15 über den Knoten 14,
(viii) Leiten von Paketen vom Knoten 7 direkt zu einem der Knoten 1, 3, 6, 12 und 15 sowie indirekt zum Knoten 0 über den Knoten 1, zum Knoten 2 über den Knoten 3, zum Knoten 4 über den Knoten 15, zum Knoten 5 über den Knoten 3, zum Knoten 8 über den Knoten 3, zum Knoten 9 über den Knoten 15, zum Knoten 10 über den Knoten 1, zum Knoten 11 über den Knoten 3, zum Knoten 13 über den Knoten 12 und zum Knoten 14 über den Knoten 15,
(ix) Leiten von Paketen vom Knoten 8 direkt zu einem der Knoten 0, 3, 9, 12 und 14 sowie indirekt zum Knoten 1 über den Knoten 0, zum Knoten 2 über den Knoten 3, zum Knoten 4 über den Knoten 12, zum Knoten 5 über den Knoten 14, zum Knoten 6 über den Knoten 0, zum Knoten 7 über den Knoten 12, zum Knoten 10 über den Knoten 12, zum Knoten 11 über den Knoten 0, zum Knoten 13 über den Knoten 12 und zum Knoten 15 über den Knoten 14,
(x) Leiten von Paketen vom Knoten 9 direkt zu einem der Knoten' 1, 2, 8, 13 und 15 sowie indirekt zum Knoten 0 über den Knoten 1, zum Knoten 3 über den Knoten 2, zum Knoten 4 über den Knoten 15, zum Knoten 5 über den Knoten 13, zum Knoten 6 über den Knoten 13, zum Knoten 7 über den Knoten 1, zum Knoten 10 über den Knoten 1, zum Knoten 11 über den Knoten 13, zum Knoten 12 über den Knoten 13 und zum Knoten 14 über den Knoten 15,
(xi) Leiten von Paketen vom Knoten 10 direkt zu einem der Knoten 1, 2, 11, 12 und 14 sowie indirekt zum Knoten 0 über den Knoten 1, zum Knoten 3 über den Knoten 2, zum Knoten 4 über den Knoten 2, zum Knoten 5 über den Knoten 14, zum Knoten 6 über den Knoten 14, zum Knoten 7 über den Knoten 12, zum Knoten 8 über den Knoten 14, zum Knoten 9 über den Knoten 2, zum Knoten 13 über den Knoten 12 und zum Knoten 15 über den Knoten 14,
(xii) Leiten von Paketen vom Knoten 11 direkt zu einem der Knoten 0, 3, 10, 13 und 15 sowie indirekt zum Knoten 1 über den Knoten 0, zum Knoten 2 über den Knoten 3, zum Knoten 4 über den Knoten 15, zum Knoten 5 über den Knoten 3, zum Knoten 6 über den Knoten 13, zum Knoten 7 über den Knoten 15, zum Knoten 8 über den Knoten 3, zum Knoten 9 über den Knoten 15, zum Knoten 12 über den Knoten 13 und zum Knoten 14 über den Knoten 15,
(xiii) Leiten von Paketen vom Knoten 12 direkt zu einem der Knoten 4, 7, 8, 10 und 13 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 4, zum Knoten 6 über den Knoten 7, zum Knoten 9 über den Knoten 8, zum Knoten 11 über den Knoten 10, zum Knoten 14 über den Knoten 8 und zum Knoten 15 über den Knoten 4,
(xiv) Leiten von Paketen vom Knoten 13 direkt zu einem der Knoten 5, 6, 9, 11 und 12 sowie indirekt zum Knoten 0 über den Knoten 11, zum Knoten 1 über den Knoten 9, zum Knoten 2 über den Knoten 9, zum Knoten 3 über den Knoten 5, zum Knoten 4 über den Knoten 5, zum Knoten 7 über den Knoten 6, zum Knoten 8 über den Knoten 9, zum Knoten 10 über den Knoten 11, zum Knoten 14 über den Knoten 5 und zum Knoten 15 über den Knoten 9,
(xv) Leiten von Paketen vom Knoten 14 direkt zu einem der Knoten 5, 6, 8, 10 und 15 sowie indirekt zum Knoten 0 über den Knoten 6, zum Knoten 1 über den Knoten 10, zum Knoten 2 über den Knoten 10, zum Knoten 3 über den Knoten 8, zum Knoten 4 über den Knoten 5, zum Knoten 7 über den Knoten 6, zum Knoten 9 über den Knoten 8, zum Knoten 11 über den Knoten 10, zum Knoten 12 über den Knoten 10 und zum Knoten 13 über den Knoten 6, und
(xvi) Leiten von Paketen vom Knoten 15 direkt zu einem der Knoten 4, 7, 9, 11 und 13 sowie indirekt zum Knoten 0 über den Knoten 11, zum Knoten 1 über den Knoten 7, zum Knoten 2 über den Knoten 9, zum Knoten 3 über den Knoten 11, zum Knoten 5 über den Knoten 4, zum Knoten 6 über den Knoten 7, zum Knoten 8 über den Knoten 9, zum Knoten 10 über den Knoten 11, zum Knoten 12 über den Knoten 7 und zum Knoten 13 über den Knoten 11.

11. Verteiltes System mit sieben Knoten in einem nicht vollständig verbundenen Netzwerk, wobei zu den Knoten ein Knoten 0, ein Knoten 1, ein Knoten 2, ein Knoten 3, ein Knoten 4, ein Knoten 5 und ein Knoten 6 gehören, die folgendermaßen kommunikativ verbunden sind:
Knoten 0 mit den Knoten 1, 3, 4, 5 und 6,
Knoten 1 mit den Knoten 0, 2, 3, 4 und 5,
Knoten 2 mit den Knoten 1, 3, 4, 5 und 6,
Knoten 3 mit den Knoten 0, 1, 2, 5 und 6,
Knoten 4 mit den Knoten 0, 1, 2, 5 und 6,
Knoten 5 mit den Knoten 0, 1, 2, 3 und 4, und
Knoten 6 mit den Knoten 0, 2, 3 und 4.

12. Verteiltes System mit acht Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6 und ein Knoten 7 gehören, die folgendermaßen kommunikativ verbunden sind:
Knoten 0 mit den Knoten 1, 3, 4, 5 und 6,
Knoten 1 mit den Knoten 0, 2, 4, 5 und 7,
Knoten 2 mit den Knoten 1, 3, 4, 6 und 7,
Knoten 3 mit den Knoten 0, 2, 5, 6 und 7,
Knoten 4 mit den Knoten 0, 1, 2, 5 und 6,
Knoten 5 mit den Knoten 0, 1, 3, 4 und 7,
Knoten 6 mit den Knoten 0, 2, 3, 4 und 7, und
Knoten 7 mit den Knoten 1, 2, 3, 5 und 6.

13. Verteiltes System mit neun Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6, ein Knoten 7 und ein Knoten 8 gehören, die folgendermaßen kommunikativ verbunden sind:
Knoten 0 mit den Knoten 1, 3, 4, 6 und 8,
Knoten 1 mit den Knoten 0, 2, 4, 5 und 7,
Knoten 2 mit den Knoten 1, 3, 4, 6 und 7,
Knoten 3 mit den Knoten 0, 2, 5, 7 und 8,
Knoten 4 mit den Knoten 0, 1, 2, 5 und 6,
Knoten 5 mit den Knoten 1, 3, 4, 7 und 8,
Knoten 6 mit den Knoten 0, 2, 4, 7 und 8,
Knoten 7 mit den Knoten 1, 2, 3, 5 und 6, und
Knoten 8 mit den Knoten 0, 3, 5 und 6.

14. Verteiltes System mit zehn Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8 und ein Knoten 9 gehören, die folgendermaßen kommunikativ verbunden sind:
Knoten 0 mit den Knoten 1, 3, 4, 6 und 8,
Knoten 1 mit den Knoten 0, 2, 5, 7 und 9,
Knoten 2 mit den Knoten 1, 3, 4, 6 und 9,
Knoten 3 mit den Knoten 0, 2, 5, 7 und 8,
Knoten 4 mit den Knoten 0, 2, 5, 6 und 9,
Knoten 5 mit den Knoten 1, 3, 4, 7 und 8,
Knoten 6 mit den Knoten 0, 2, 4, 7 und 8,
Knoten 7 mit den Knoten 1, 3, 5, 6 und 9,
Knoten 8 mit den Knoten 0, 3, 5, 6 und 9, und
Knoten 9 mit den Knoten 1, 2, 4, 7 und 8.

15. Verteiltes System mit elf Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9 und ein Knoten 10 gehören, die folgendermaßen kommunikativ verbunden sind:
Knoten 0 mit den Knoten 1, 3, 4, 6 und 8,
Knoten 1 mit den Knoten 0, 5, 7, 9 und 10,
Knoten 2 mit den Knoten 3, 4, 6, 9 und 10,
Knoten 3 mit den Knoten 0, 2, 5, 7 und 8,
Knoten 4 mit den Knoten 0, 2, 5, 7 und 9,
Knoten 5 mit den Knoten 1, 3, 4, 8 und 10,
Knoten 6 mit den Knoten 0, 2, 7, 8 und 10,
Knoten 7 mit den Knoten 1, 3, 4, 6 und 9,
Knoten 8 mit den Knoten 0, 3, 5, 6 und 9,
Knoten 9 mit den Knoten 1, 2, 4, 7 und 8, und
Knoten 10 mit den Knoten 1, 2, 5 und 6.

16. Verteiltes System mit zwölf Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10 und ein Knoten 11 gehören, die folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 11,
Knoten 5 mit den Knoten 1, 3, 4, 8 und 10,
Knoten 6 mit den Knoten 0, 2, 7, 8 und 10,
Knoten 7 mit den Knoten 1, 3, 6, 9 und 11,
Knoten 8 mit den Knoten 0, 3, 5, 6 und 9,
Knoten 9 mit den Knoten 1, 2, 4, 7 und 8,
Knoten 10 mit den Knoten 1, 2, 5, 6 und 11, und
Knoten 11 mit den Knoten 0, 3, 4, 7 und 10.

17. Verteiltes System mit dreizehn Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10, ein Knoten 11 und ein Knoten 12 gehören, die folgendennaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 12,
Knoten 5 mit den Knoten 1, 3, 4, 6 und 8,
Knoten 6 mit den Knoten 0, 2, 5, 7 und 10,
Knoten 7 mit den Knoten 1, 3, 6, 11 und 12,
Knoten 8 mit den Knoten 0, 3, 5, 9 und 12,
Knoten 9 mit den Knoten 1, 2, 4, 8 und 11,
Knoten 10 mit den Knoten 1, 2, 6, 11 und 12,
Knoten 11 mit den Knoten 0, 3, 7, 9 und 10, und
Knoten 12 mit den Knoten 4, 7, 8 und 10.

18. Verteiltes System mit vierzehn Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10, ein Knoten 11, ein Knoten 12 und ein Knoten 13 gehören, die folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 12,
Knoten 5 mit den Knoten 1, 3, 4, 8 und 13,
Knoten 6 mit den Knoten 0, 2, 7, 10 und 13,
Knoten 7 mit den Knoten 1, 3, 6, 11 und 12,
Knoten 8 mit den Knoten 0, 3, 5, 9 und 12,
Knoten 9 mit den Knoten 1, 2, 4, 8 und 13,
Knoten 10 mit den Knoten 1, 2, 6, 11 und 12,
Knoten 11 mit den Knoten 0, 3, 7, 10 und 13,
Knoten 12 mit den Knoten 4, 7, 8, 10 und 13, und
Knoten 13 mit den Knoten 5, 6, 9, 11 und 12.

19. Verteiltes System mit fünfzehn Knoten in einem nicht vollständig verbundenen Netzwerk, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10, ein Knoten 11, ein Knoten 12, ein Knoten 13 und ein Knoten 14 gehören, die folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 12,
Knoten 5 mit den Knoten 1, 3, 4, 13 und 14,
Knoten 6 mit den Knoten 0, 2, 7, 13 und 14,
Knoten 7 mit den Knoten 1, 3, 6, 11 und 12,
Knoten 8 mit den Knoten 0, 3, 9, 12 und 14,
Knoten 9 mit den Knoten 1, 2, 4, 8 und 13,
Knoten 10 mit den Knoten 1, 2, 11, 12 und 14,
Knoten 11 mit den Knoten 0, 3, 7, 10 und 13,
Knoten 12 mit den Knoten 4, 7, 8, 10 und 13,
Knoten 13 mit den Knoten 5, 6, 9, 11 und 12, und.
Knoten 14 mit den Knoten 5, 6, 8 und 10.

20. Verteiltes System nach einem der Ansprüche 11 bis 19, wobei jeder der Knoten fünf Ports hat.

21. Verteiltes System nach einem der Ansprüche 11, 12 und 15 bis 17, wobei die Knoten 0 und 1 über einen Bus in Verbindung stehen.

22. Verteiltes System nach einem der Ansprüche 11, 12 und 15 bis 17, wobei die Knoten 2 und 3 über einen Bus in Verbindung stehen.

23. Verteiltes System nach einem der Ansprüche 11, 12 und 15 bis 17, wobei die Knoten 4 und 5 über einen Bus in Verbindung stehen.

24. Verteiltes System nach einem der Ansprüche 12 und 15 bis 17, wobei die Knoten 6 und 7 über einen Bus in Verbindung stehen.

25. Verteiltes System nach einem der Ansprüche 15 bis 17, wobei die Knoten 8 und 9 über einen Bus in Verbindung stehen.

26. Verteiltes System nach Anspruch 16 oder 17, wobei die Knoten 10 und 11 über einen Bus in Verbindung stehen.

27. Verteiltes System nach einem der Ansprüche 13, 14, 18 und 19, wobei die Knoten 0 und 1 in einem gemeinsamen Chassis angeordnete Knoten sind.

28. Verteiltes System nach einem der Ansprüche 13, 14, 18 und 19, wobei die Knoten 2 und 3 in einem gemeinsamen Chassis angeordnete Knoten sind.

29. Verteiltes System nach einem der Ansprüche 13, 14, 18 und 19, wobei die Knoten 4 und 5 in einem gemeinsamen Chassis angeordnete Knoten sind.

30. Verteiltes System nach einem der Ansprüche 13, 14, 18 und 19, wobei die Knoten 6 und 7 in einem gemeinsamen Chassis angeordnete Knoten sind.

31. Verteiltes System nach einem der Ansprüche 14, 18 und 19, wobei die Knoten 8 und 9 in einem gemeinsamen Chassis angeordnete Knoten sind.

32. Verteiltes System nach Anspruch 18 oder 19, wobei die Knoten 10 und 11 in einem gemeinsamen Chassis angeordnete Knoten sind.

33. Verteiltes System nach Anspruch 18 oder 19, wobei die Knoten 12 und 13 in einem gemeinsamen Chassis angeordnete Knoten sind.

34. Verfahren zum Konfigurieren eines verteilten Systems nach einem der Ansprüche 11 bis 19, wobei
eine Menge von jeweils einer Gruppe von Knoten zugeordneten Netzwerktopologien erzeugt wird, wobei jede Gruppe eine andere Anzahl von Knoten aufweist, jede Netzwerktopologie aufgrund von Leistungsmerkmalen konfiguriert ist und jede Menge von Netzwerktopologien die zugeordneten Knotengruppen nicht vollständig verbindet,
aus der Menge von Netzwerktopologien eine für ein Netzwerk mit Netzwerkknoten aufgrund einer Anzahl der Netzwerkknoten in dem Netzwerk ausgewählt wird, und
das Netzwerk unter Verwendung der ausgewählten Netzwerktopologie konfiguriert wird.

35. Verfahren nach Anspruch 34, wobei jede aus der Menge von Netzwerktopologien aufgrund eines Durchmessers der Netzwerktopologie konfiguriert wird.

36. Verfahren nach Anspruch 35, wobei jede aus der Menge von Netzwerktopologien aufgrund einer Halbierungsbandbreite der Netzwerktopologie konfiguriert wird.

37. Verfahren nach Anspruch 34, wobei jede aus der Menge von Netzwerktopologien in Abhängigkeit davon konfiguriert wird, ob die Netzwerktopologie symmetrisch ist.

38. Verfahren nach Anspruch 37, wobei jede aus der Menge von Netzwerktopologien in Abhängigkeit davon konfiguriert wird, ob die Netzwerktopologie knotensymmetrisch ist.

39. Verfahren nach Anspruch 37, wobei jede aus der Menge von Netzwerktopologien in Abhängigkeit davon konfiguriert wird, ob die Netzwerktopologie kantensymmetrisch ist.

40. Verfahren nach Anspruch 34, wobei jede aus der Menge von Netzwerktopologien aufgrund einer mittleren Weglänge der Netzwerktopologie davon konfiguriert wird.

41. Verfahren nach Anspruch 34, wobei jede Netzwerktopologie so konfiguriert wird, daß sie die Erweiterung des Netzwerks erleichtern.

42. Verfahren nach Anspruch 34, wobei jede Netzwerktopologie so konfiguriert wird, daß sie die Verkleinerung des Netzwerks erleichtern.

43. Verfahren nach Anspruch 34, wobei die Knotenzahl in jeder Gruppe eine Sequenz bildet.

44. Verfahren nach Anspruch 43, wobei die Sequenz bei sieben Knoten beginnt und bei sechzehn Knoten endet.

45. Netzwerk mit
mehreren im selben Chassis enthaltenen Partnerknoten und
einem Nicht-Partnerknoten, der mit mindestens einem der mehreren Partnerknoten verbunden ist, um an diesen Netzwerkverkehr zu senden.

46. Verfahren in einem verteilten System, wobei
ein Netzwerk mit sieben nicht vollständig verbundenen Knoten vorgesehen wird, wobei zu den Knoten ein Knoten 0, ein Knoten 1, ein Knoten 2, ein Knoten 3, ein Knoten 4, ein Knoten 5 und ein Knoten 6 gehören und die Knoten folgendermaßen kommunikativ verbunden sind:
Knoten 0 mit den Knoten 1, 3, 4, 5 und 6,
Knoten 1 mit den Knoten 0, 2, 3, 4 und 5,
Knoten 2 mit den Knoten 1, 3, 4, 5 und 6,
Knoten 3 mit den Knoten 0, 1, 2, 5 und 6,
Knoten 4 mit den Knoten 0, 1, 2, 5 und 6,
Knoten 5 mit den Knoten 0, 1, 2, 3 und 4, und
Knoten 6 mit den Knoten 0, 2, 3 und 4, und
das Netzwerk dadurch rekonfiguriert wird, daß dem Netzwerk ein Knoten 7 hinzugefügt und/oder der Knoten 6 aus dem Netzwerk entfernt wird.

47. Verfahren nach Anspruch 46, wobei zum Hinzufügen
die Kommunikationsverbindungen zwischen den Knoten 3 und 1 und zwischen den Knoten 5 und 2 entfernt und
die Knoten 7 und 1, die Knoten 7 und 2, die Knoten 7 und 3, die Knoten 7 und 5 und die Knoten 7 und 6 jeweils kommunikativ verbunden werden.

48. Verfahren nach Anspruch 46, wobei zum Entfernen
die Kommunikationsverbindungen zwischen den Knoten 6 und 0, zwischen den Knoten 6 und 2, zwischen den Knoten 6 und 3 und zwischen den Knoten 6 und 4 entfernt und
die Knoten 2 und 0 und die Knoten 4 und 3 jeweils kommunikativ verbunden werden.

49. Verfahren in einem verteilten System, wobei
ein Netzwerk mit acht nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6 und ein Knoten 7 gehören und die Knoten folgendermaßen kommunikativ verbunden sind:
Knoten 0 mit den Knoten 1, 3, 4, 5 und 6,
Knoten 1 mit den Knoten 0, 2, 4, 5 und 7,
Knoten 2 mit den Knoten 1, 3, 4, 6 und 7,
Knoten 3 mit den Knoten 0, 2, 5, 6 und 7,
Knoten 4 mit den Knoten 0, 1, 2, 5 und 6,
Knoten 5 mit den Knoten 0, 1, 3, 4 und 7,
Knoten 6 mit den Knoten 0, 2, 3, 4 und 7, und
Knoten 7 mit den Knoten 1, 2, 3, 5 und 6, und
das Netzwerk dadurch rekonfiguriert wird, daß dem Netzwerk ein Knoten 8 hinzugefügt uad/oder der Knoten 7 aus dem Netzwerk entfernt wird.

50. Verfahren nach Anspruch 49, wobei zum Hinzufügen
die Kommunikationsverbindungen zwischen den Knoten 5 und 0 und zwischen den Knoten 6 und 3 entfernt und
die Knoten 8 und 0, die Knoten 8 und 3, die Knoten 8 und 5 und die Knoten 8 und 6 jeweils kommunikativ verbunden werden.

51. Verfahren nach Anspruch 49, wobei zum Entfernen
die Kommunikationsverbindungen zwischen den Knoten 7 und 1, zwischen den Knoten 7 und 2, zwischen den Knoten 7 und 3, zwischen den Knoten 7 und 5 und zwischen den Knoten 7 und 6 entfernt und
die Knoten 3 und 1 und die Knoten 5 und 2 jeweils kommunikativ verbunden werden.

52. Verfahren nach Anspruch 49, wobei zum Rekonfigurieren ein Knoten 8 und ein Knoten 9 dem Netzwerk hinzugefügt werden.

53. Verfahren nach Anspruch 52, wobei zum Rekonfigurieren
die Kommunikationsverbindungen zwischen den Knoten 5 und 0, zwischen den Knoten 6 und 3, zwischen den Knoten 4 und 1 und zwischen den Knoten 7 und 2 entfernt und
die Knoten 8 und 0, die Knoten 8 und 3, die Knoten 8 und 5, die Knoten 8 und 6, die Knoten 9 und 1, die Knoten 9 und 2, die Knoten 9 und 4, die Knoten 9 und 7 und die Knoten 9 und 8 jeweils kommunikativ verbunden werden.

54. Verfahren nach Anspruch 49, wobei zum Rekonfigurieren die Knoten 6 und 7 aus dem Netzwerk entfernt werden.

55. Verfahren nach Anspruch 54, wobei zum Rekonfigurieren
die Kommunikationsverbindungen zwischen den Knoten 6 und 0, zwischen den Knoten 6 und 2, zwischen den Knoten 6 und 3, zwischen den Knoten 6 und 4, zwischen den Knoten 7 und 1, zwischen den Knoten 7 und 2, zwischen den Knoten 7 und 3, zwischen den Knoten 7 und 5 und zwischen den Knoten 7 und 6 entfernt und
die Knoten 2 und 0, die Knoten 4 und 3, die Knoten 3 und 1 und die Knoten 5 und 2 jeweils kommunikativ verbunden werden.

56. Verfahren in einem verteilten System, wobei
ein Netzwerk mit neun nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7 und ein Knoten 8 gehören und die Knoten folgendermaßen kommunikativ verbunden sind:
Knoten 0 mit den Knoten 1, 3, 4, 6 und 8,
Knoten 1 mit den Knoten 0, 2, 4, 5 und 7,
Knoten 2 mit den Knoten 1, 3, 4, 6 und 7,
Knoten 3 mit den Knoten 0, 2, 5, 7 und 8,
Knoten 4 mit den Knoten 0, 1, 2, 5 und 6,
Knoten 5 mit den Knoten 1, 3, 4, 7 und 8,
Knoten 6 mit den Knoten 0, 2, 4, 7 und 8,
Knoten 7 mit den Knoten 1, 2, 3, 5 und 6, und
Knoten 8 mit den Knoten 0, 3, 5 und 6, und
das Netzwerk dadurch rekonfiguriert wird, daß dem Netzwerk ein Knoten 9 hinzugefiigt und/oder der Knoten 8 aus dem Netzwerk entfernt wird.

57. Verfahren nach Anspruch 56, wobei zum Hinzufügen
die Kommunikationsverbindungen zwischen den Knoten 4 und 1 und zwischen den Knoten 7 und 2 entfernt und
die Knoten 9 und 1, die Knoten 9 und 2, die Knoten 9 und 4, die Knoten 9 und 7 und die Knoten 9 und 8 jeweils kommunikativ verbunden werden.

58. Verfahren nach Anspruch 55, wobei zum Entfernen
die Kommunikationsverbindungen zwischen den Knoten 8 und 0, zwischen den Knoten 8 und 3, zwischen den Knoten 8 und 5 und zwischen den Knoten 8 und 6 entfernt und
die Knoten 5 und 0 und die Knoten 6 und 3 jeweils kommunikativ verbunden werden.

59. Verfahren in einem verteilten System, wobei
ein Netzwerk mit zehn nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8 und ein Knoten 9 gehören und die Knoten folgendermaßen kommunikativ verbunden sind:
Knoten 0 mit den Knoten 1, 3, 4, 6 und 8,
Knoten 1 mit den Knoten 0, 2, 5, 7 und 9,
Knoten 2 mit den Knoten 1, 3, 4, 6 und 9,
Knoten 3 mit den Knoten 0, 2, 5, 7 und 8,
Knoten 4 mit den Knoten 0, 2, 5, 6 und 9,
Knoten 5 mit den Knoten 1, 3, 4, 7 und 8,
Knoten 6 mit den Knoten 0, 2, 4, 7 und 8,
Knoten 7 mit den Knoten 1, 3, 5, 6 und 9,
Knoten 8 mit den Knoten 0, 3, 5, 6 und 9, und
Knoten 9 mit den Knoten 1, 2, 4, 7 und 8, und
das Netzwerk dadurch rekonfiguriert wird, daß dem Netzwerk ein Knoten 10 hinzugefügt und/oder der Knoten 9 aus dem Netzwerk entfernt wird.

60. Verfahren nach Anspruch 59, wobei zum Hinzufügen
die Kommunikationsverbindungen zwischen den Knoten 2 und 1, zwischen den Knoten 6 und 4 und zwischen den Knoten 7 und 5 entfernt und
die Knoten 10 und 1, die Knoten 10 und 2, die Knoten 7 und 4, die Knoten 10 und 5 und die Knoten 10 und 6 jeweils kommunikativ verbunden werden.

61. Verfahren nach Anspruch 59, wobei zum Entfernen
die Kommunikationsverbindungen zwischen den Knoten 9 und 1, zwischen den Knoten 9 und 2, zwischen den Knoten 9 und 4, zwischen den Knoten 9 und 7 und zwischen den Knoten 9 und 8 entfernt und
die Knoten 4 und 1 und die Knoten 7 und 2 jeweils kommunikativ verbunden werden.

62. Verfahren nach Anspruch 59, wobei zum Rekonfigurieren ein Knoten 10 und ein Knoten 11 dem Netzwerk hinzugefügt werden.

63. Verfahren nach Anspruch 62, wobei zum Rekonfigurieren
die Kommunikationsverbindungen zwischen den Knoten 2 und 1, zwischen den Knoten 6 und 4, zwischen den Knoten 7 und 5 und zwischen den Knoten 3 und 0 entfernt und
die Knoten 10 und 1, die Knoten 10 und 2, die Knoten 10 und 5, die Knoten 10 und 6, die Knoten 11 und 0, die Knoten 11 und 3, die Knoten 11 und 4, die Knoten 11 und 7 und die Knoten 11 und 10 jeweils kommunikativ verbunden werden.

64. Verfahren nach Anspruch 59, wobei zum Rekonfigurieren die Knoten 8 und 9 aus dem Netzwerk entfernt werden.

65. Verfahren nach Anspruch 64, wobei zum Rekonfigurieren
die Kommunikationsverbindungen zwischen den Knoten 8 und 0, zwischen den Knoten 8 und 3, zwischen den Knoten 8 und 5, zwischen den Knoten 8 und 6, zwischen den Knoten 9 und 1, zwischen den Knoten 9 und 2, zwischen den Knoten 9 und 4, zwischen den Knoten 9 und 7 und zwischen den Knoten 9 und 8 entfernt und
die Knoten 5 und 0, die Knoten 6 und 3, die Knoten 4 und 1 und die Knoten 7 und 2 jeweils kommunikativ verbunden werden.

66. Verfahren in einem verteilten System, wobei
ein Netzwerk mit elf nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9 und ein Knoten 10 gehören und die Knoten folgendermaßen kommunikativ verbunden sind:
Knoten 0 mit den Knoten 1, 3, 4, 6 und 8,
Knoten 1 mit den Knoten 0, 5, 7, 9 und 10,
Knoten 2 mit den Knoten 3, 4, 6, 9 und 10,
Knoten 3 mit den Knoten 0, 2, 5, 7 und 8,
Knoten 4 mit den Knoten 0, 2, 5, 7 und 9,
Knoten 5 mit den Knoten 1, 3, 4, 8 und 10,
Knoten 6 mit den Knoten 0, 2, 7, 8 und 10,
Knoten 7 mit den Knoten 1, 3, 4, 6 und 9,
Knoten 8 mit den Knoten 0, 3, 5, 6 und 9,
Knoten 9 mit den Knoten 1, 2, 4, 7 und 8, und
Knoten 10 mit den Knoten 1, 2, 5 und 6, und
das Netzwerk dadurch rekonfiguriert wird, daß dem Netzwerk ein Knoten 11 hinzugefügt und/oder der Knoten 10 aus dem Netzwerk entfernt wird.

67. Verfahren nach Anspruch 66, wobei zum Hinzufügen
die Kommunikationsverbindungen zwischen den Knoten 3 und 0 und zwischen den Knoten 7 und 4 entfernt und
die Knoten 11 und 0, die Knoten 11 und 3, die Knoten 11 und 4, die Knoten 11 und 7 und die Knoten 11 und 10 jeweils kommunikativ verbunden werden.

68. Verfahren nach Anspruch 66, wobei zum Entfernen
die Kommunikationsverbindungen zwischen den Knoten 10 und 1, zwischen den Knoten 10 und 2, zwischen den Knoten 7 und 4, zwischen den Knoten 10 und 5 und zwischen den Knoten 10 und 6 entfernt und
die Knoten 2 und 1, die Knoten 6 und 4 und die Knoten 7 und 5 jeweils kommunikativ verbunden werden.

69. Verfahren in einem verteilten System, wobei
ein Netzwerk mit zwölf nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10 und ein Knoten 11 gehören und die Knoten folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 11,
Knoten 5 mit den Knoten 1, 3, 4, 8 und 10,
Knoten 6 mit den Knoten 0, 2, 7, 8 und 10,
Knoten 7 mit den Knoten 1, 3, 6, 9 und 11,
Knoten 8 mit den Knoten 0, 3, 5, 6 und 9,
Knoten 9 mit den Knoten 1, 2, 4, 7 und 8,
Knoten 10 mit den Knoten 1, 2, 5, 6 und 11, und
Knoten 11 mit den Knoten 0, 3, 4, 7 und 10, und
das Netzwerk dadurch rekonfiguriert wird, daß dem Netzwerk ein Knoten 12 hinzugefügt und/oder der Knoten 11 aus dem Netzwerk entfernt wird.

70. Verfahren nach Anspruch 69, wobei zum Hinzufügen
die Kommunikationsverbindungen zwischen den Knoten 11 und 4, zwischen den Knoten 10 und 5, zwischen den Knoten 8 und 6 und zwischen den Knoten 9 und 7 entfernt und
die Knoten 12 und 4, die Knoten 9 und 5, die Knoten 11 und 6, die Knoten 12 und 7, die Knoten 12 und 8 und die Knoten 12 und 10 jeweils kommunikativ verbunden werden.

71. Verfahren nach Anspruch 69, wobei zum Entfernen
die Kommunikationsverbindungen zwischen den Knoten 11 und 0, zwischen den Knoten 11 und 3, zwischen den Knoten 11 und 4, zwischen den Knoten 11 und 7 und zwischen den Knoten 11 und 10 entfernt und
die Knoten 3 und 0 und die Knoten 7 und 4 jeweils kommunikativ verbunden werden.

72. Verfahren nach Anspruch 69, wobei zum Rekonfigurieren ein Knoten 12 und ein Knoten 13 dem Netzwerk hinzugefügt werden.

73. Verfahren nach Anspruch 72, wobei zum Rekonfigurieren
die Kommunikationsverbindungen zwischen den Knoten 11 und 4, zwischen den Knoten 10 und 5, zwischen den Knoten 8 und 6 und zwischen den Knoten 9 und 7 entfernt und
die Knoten 12 und 4, die Knoten 12 und 7, die Knoten 12 und 8, die Knoten 12 und 10, die Knoten 13 und 5, die Knoten 13 und 6, die Knoten 13 und 9, die Knoten 13 und 11 und die Knoten 13 und 12 jeweils kommunikativ verbunden werden.

74. Verfahren nach Anspruch 69, wobei zum Rekonfigurieren die Knoten 10 und 11 aus dem Netzwerk entfernt werden.

75. Verfahren nach Anspruch 74, wobei zum Rekonfigurieren
die Kommunikationsverbindungen zwischen den Knoten 10 und 1, zwischen den Knoten 10 und 2, zwischen den Knoten 10 und 5, zwischen den Knoten 10 und 6, zwischen den Knoten 11 und 0, zwischen den Knoten 11 und 3, zwischen den Knoten 11 und 4, zwischen den Knoten 11 und 7 und zwischen den Knoten 11 und 10 entfernt und
die Knoten 2 und 1, die Knoten 6 und 4, die Knoten 7 und 5 und die Knoten 3 und 0 jeweils kommunikativ verbunden werden.

76. Verfahren in einem verteilten System, wobei
ein Netzwerk mit dreizehn nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9 ein Knoten 10, ein Knoten 11 und ein Knoten 12 gehören und die Knoten folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 12,
Knoten 5 mit den Knoten 1, 3, 4, 6 und 8,
Knoten 6 mit den Knoten 0, 2, 5, 7 und 10,
Knoten 7 mit den Knoten 1, 3, 6, 11 und 12,
Knoten 8 mit den Knoten 0, 3, 5, 9 und 12,
Knoten 9 mit den Knoten 1, 2, 4, 8 und 11,
Knoten 10 mit den Knoten 1, 2, 6, 11 und 12,
Knoten 11 mit den Knoten 0, 3, 7, 9 und 10, und
Knoten 12 mit den Knoten 4, 7, 8 und 10, und
das Netzwerk dadurch rekonfiguriert wird, daß dem Netzwerk ein Knoten 13 hinzugefügt und/oder der Knoten 12 aus dem Netzwerk entfernt wird.

77. Verfahren nach Anspruch 76, wobei zum Hinzufügen
die Kommunikationsverbindungen zwischen den Knoten 9 und 5 und zwischen den Knoten 11 und 6 entfernt und
die Knoten 13 und 5, die Knoten 13 und 6, die Knoten 13 und 9, die Knoten 13 und 11 und die Knoten 13 und 12 jeweils kommunikativ verbunden werden.

78. Verfahren nach Anspruch 76, wobei zum Entfernen
die Kommunikationsverbindungen zwischen den Knoten 12 und 4, zwischen den Knoten 9 und 5, zwischen den Knoten 11 und 6, zwischen den Knoten 12 und 7, zwischen den Knoten 12 und 8 und zwischen den Knoten 12 und 10 entfernt und
die Knoten 11 und 4, die Knoten 10 und 5, die Knoten 8 und 6 und die Knoten 9 und 7 jeweils kommunikativ verbunden werden.

79. Verfahren in einem verteilten System, wobei
ein Netzwerk mit vierzehn nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10, ein Knoten 11, ein Knoten 12 und ein Knoten 13 gehören und die Knoten folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 12,
Knoten 5 mit den Knoten 1, 3, 4, 8 und 13,
Knoten 6 mit den Knoten 0, 2, 7, 10 und 13,
Knoten 7 mit den Knoten 1, 3, 6, 11 und 12,
Knoten 8 mit den Knoten 0, 3, 5, 9 und 12,
Knoten 9 mit den Knoten 1, 2, 4, 8 und 13,
Knoten 10 mit den Knoten 1, 2, 6, 11 und 12,
Knoten 11 mit den Knoten 0, 3, 7, 10 und 13,
Knoten 12 mit den Knoten 4, 7, 8, 10 und 13, und
Knoten 13 mit den Knoten 5, 6, 9, 11 und 12, und
das Netzwerk dadurch rekonfiguriert wird, daß dem Netzwerk ein Knoten 14 hinzugefügt und/oder der Knoten 13 aus dem Netzwerk entfernt wird.

80. Verfahren nach Anspruch 79, wobei zum Hinzufügen
die Kommunikationsverbindungen zwischen den Knoten 8 und 5 und zwischen den Knoten 10 und 6 entfernt und
die Knoten 14 und 5, die Knoten 14 und 6, die Knoten 14 und 8 und die Knoten 14 und 10 jeweils kommunikativ verbunden werden.

81. Verfahren nach Anspruch 79, wobei zum Entfernen
die Kommunikationsverbindungen zwischen den Knoten 13 und 5, zwischen den Knoten 13 und 6, zwischen den Knoten 13 und 9, zwischen den Knoten 13 und 11 und zwischen den Knoten 13 und 12 entfernt und
die Knoten 9 und 5 und die Knoten 11 und 6 jeweils kommunikativ verbunden werden.

82. Verfahren nach Anspruch 79, wobei zum Rekonfigurieren ein Knoten 14 und ein Knoten 15 dem Netzwerk hinzugefugt werden.

83. Verfahren nach Anspruch 82, wobei zum Rekonfigurieren
die Kommunikationsverbindungen zwischen den Knoten 8 und 5, zwischen den Knoten 10 und 6, zwischen den Knoten 9 und 4 und zwischen den Knoten 11 und 7 entfernt und
die Knoten 14 und 5, die Knoten 14 und 6, die Knoten 14 und 8, die Knoten 14 und 10, die Knoten 15 und 4, die Knoten 15 und 7, die Knoten 15 und 9, die Knoten 15 und 11 und die Knoten 15 und 14 jeweils kommunikativ verbunden werden.

84. Verfahren nach Anspruch 79, wobei zum Rekonfigurieren die Knoten 12 und 13 aus dem Netzwerk entfernt werden.

85. Verfahren nach Anspruch 84, wobei zum Rekonfigurieren
die Kommunikationsverbindungen zwischen den Knoten 12 und 4, zwischen den Knoten 12 und 7, zwischen den Knoten 12 und 8, zwischen den Knoten 12 und 10, zwischen den Knoten 13 und 5, zwischen den Knoten 13 und 6, zwischen den Knoten 13 und 9, zwischen den Knoten 13 und 11 und zwischen den Knoten 13 und 12 entfernt und
die Knoten 11 und 4, die Knoten 10 und 5, die Knoten 8 und 6 und die Knoten 9 und 7 jeweils kommunikativ verbunden werden.

86. Verfahren in einem verteilten System, wobei
ein Netzwerk mit fünfzehn nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9 ein Knoten 10, ein Knoten 11, ein Knoten 12 ein Knoten 13 und ein Knoten 14 gehören und die Knoten folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 9 und 12,
Knoten 5 mit den Knoten 1, 3, 4, 13 und 14,
Knoten 6 mit den Knoten 0, 2, 7, 13 und 14,
Knoten 7 mit den Knoten 1, 3, 6, 11 und 12,
Knoten 8 mit den Knoten 0, 3, 9, 12 und 14,
Knoten 9 mit den Knoten 1, 2, 4, 8 und 13,
Knoten 10 mit den Knoten 1, 2, 11, 12 und 14,
Knoten 11 mit den Knoten 0, 3, 7, 10 und 13,
Knoten 12 mit den Knoten 4, 7, 8, 10 und 13,
Knoten 13 mit den Knoten 5, 6, 9, 11 und 12, und
Knoten 14 mit den Knoten 5, 6, 8 und 10, und
das Netzwerk dadurch rekonfiguriert wird, daß dem Netzwerk ein Knoten 15 hinzugefügt und/oder der Knoten 14 aus dem Netzwerk entfernt wird.

87. Verfahren nach Anspruch 86, wobei zum Hinzufügen
die Kommunikationsverbindungen zwischen den Knoten 9 und 4 und zwischen den Knoten 11 und 7 entfernt und
die Knoten 15 und 4, die Knoten 15 und 7, die Knoten 15 und 9, die Knoten 15 und 11 und die Knoten 15 und 14 jeweils kommunikativ verbunden werden.

88. Verfahren nach Anspruch 86, wobei zum Entfernen
die Kommunikationsverbindungen zwischen den Knoten 14 und 5, zwischen den Knoten 14 und 6, zwischen den Knoten 14 und 8 und zwischen den Knoten 14 und 10 entfernt und
die Knoten 8 und 5 und die Knoten 10 und 6 jeweils kommunikativ verbunden werden.

89. Verfahren in einem verteilten System, wobei
ein Netzwerk mit mindestens sechs Knoten vorgesehen wird, wobei zu den Knoten ein Knoten 0, ein Knoten 1, ein Knoten 2, ein Knoten 3, ein Knoten 4 und ein Knoten 5 gehören und jeder der Knoten mit jedem anderen kommunikativ verbunden ist, und
zum Hinzufügen eines Knotens 6 zu dem Netzwerk:
die Kommunikationsverbindungen zwischen den Knoten 2 und 0 und zwischen den Knoten 4 und 3 entfernt und
die Knoten 6 und 0, die Knoten 6 und 2, die Knoten 6 und 3 und die Knoten 6 und 4 jeweils kommunikativ verbunden werden.

90. Verfahren in einem verteilten System, wobei
ein Netzwerk mit sechs Knoten vorgesehen wird, wobei zu den Knoten ein Knoten 0, ein Knoten 1, ein Knoten 2, ein Knoten 3, ein Knoten 4 und ein Knoten 5 gehören und jeder der sechs Knoten mit jedem anderen kommunikativ verbunden ist, und
zum Hinzufügen eines Knotens 6 und eines Knotens 7 zu dem Netzwerk:
die Kommunikationsverbindungen zwischen den Knoten 2 und 0, zwischen den Knoten 4 und 3, zwischen den Knoten 3 und 1 und zwischen den Knoten 5 und 2 entfernt und
die Knoten 6 und 0, die Knoten 6 und 2, die Knoten 6 und 3, die Knoten 6 und 4, die Knoten 7 und 1, die Knoten 7 und 2, die Knoten 7 und 3, die Knoten 7 und 5 und die Knoten 7 und 6 jeweils kommunikativ verbunden werden.

91. Verfahren in einem verteilten System nach einem der Ansprüche 11 bis 19 mit einem Netzwerk und, deren jeder Ports und eine Leittabelle zum Leiten von Verkehr durch das Netzwerk aufweist, wobei
das Netzwerk zur maximalen Ausnutzung der Ports konfiguriert wird,
das Netzwerk so betriebsfähig gemacht wird, daß die Knoten unter Verwendung statischer Leitwege über das Netzwerk kommunizieren können, und
das Netzwerk rekonfiguriert wird, während es betriebsfähig bleibt, indem zu jedem der Knoten Leitwege vorgesehen werden, die Verkehr über einen von der Rekonfiguration betroffenen Teil des Netzwerks leiten.

92. Verfahren nach Anspruch 91, wobei das statische Leiten ohne Blockierung erfolgt.

93. Verfahren nach Anspruch 91, wobei zum Rekonfigurieren ein neuer Knoten dem Netzwerk hinzugefügt wird.

94. Verfahren nach Anspruch 91, wobei zum Rekonfigurieren zwei neue Knoten dem Netzwerk hinzugefügt werden.

95. Verfahren nach Anspruch 91, wobei zum Rekonfigurieren einer der Knoten aus dem Netzwerk entfernt wird.

96. Verfahren nach Anspruch 91, wobei zum Rekonfigurieren zwei der Knoten aus dem Netzwerk entfernt werden.

97. Verfahren nach Anspruch 91, wobei zum Rekonfigurieren:
die Leitwegtabelle durch zwischenzeitliche Leitwegtabellen ersetzt wird, die diejenigen Leitwege enthält, die den Verkehr über einen von der Rekonfiguration betroffenen Teil des Netzwerks leiten,
die Rekonfiguration durchgeführt wird, und
die zwischenzeitlichen Leitwegtabellen durch neue Leitwegtabellen ersetzt werden.

98. Verfahren nach Anspruch 97, wobei die zwischenzeitlichen Leitwegtabellen frei von Blockierungen sind.

99. Verfahren nach Anspruch 91, wobei das Netzwerk einen Knoten 0, einen Knoten 1, einen Knoten 2, einen Knoten 3, einen Knoten 4 und einen Knoten 5 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1 und 3 bis 5 sowie indirekt zum Knoten 2 über den Knoten 3,
(ii) Leiten von Paketen vom Knoten 1 direkt zu einem der Knoten 0 und 2 bis 5,
(iii) Leiten von Paketen vom Knoten 2 direkt zu einem der Knoten 1 und 3 bis 5 sowie indirekt zum Knoten 0 über den Knoten 1,
(iv) Leiten von Paketen vom Knoten 3 direkt zu einem der Knoten 0 bis 2 und 5 sowie indirekt zum Knoten 4 über den Knoten 5,
(v) Leiten von Paketen vom Knoten 4 direkt zu einem der Knoten 0 bis 2 und 5 sowie indirekt zum Knoten 3 über den Knoten 2, und
(vi) Leiten von Paketen vom Knoten 5 direkt zu einem der Knoten 1 bis 4.

100. Verfahren nach Anspruch 91, wobei das Netzwerk einen Knoten 0, einen Knoten 1, einen Knoten 2, einen Knoten 3, einen Knoten 4, einen Knoten 5 und einen Knoten 6 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1 und 3 bis 6 sowie indirekt zum Knoten 2 über den Knoten 3,
(ii) Leiten von Paketen vom Knoten 1 direkt zu einem der Knoten 0, 2, 4 und 5 sowie indirekt zum Knoten 3 über den Knoten 2 und zum Knoten 6 über den Knoten 4,
(iii) Leiten von Paketen vom Knoten 2 direkt zu einem der Knoten 1, 3, 4 und 6 sowie indirekt zum Knoten 0 über den Knoten 1 und zum Knoten 5 über den Knoten 4,
(iv) Leiten von Paketen vom Knoten 3 direkt zu einem der Knoten 0, 2, 5 und 6 sowie indirekt zum Knoten 1 über den Knoten 0 und zum Knoten 4 über den Knoten 5,
(v) Leiten von Paketen vom Knoten 4 direkt zu einem der Knoten 0 bis 2, 5 und 6 sowie indirekt zum Knoten 3 über den Knoten 2,
(vi) Leiten von Paketen vom Knoten 5 direkt zu einem der Knoten 0, 1, 3 und 4 sowie indirekt zum Knoten 2 über den Knoten 3 und zum Knoten 6 über den Knoten 3, und
(vii) Leiten von Paketen vom Knoten 6 direkt zu einem der Knoten 0 und 2 bis 4 sowie indirekt zum Knoten 1 über den Knoten 0 und zum Knoten 5 über den Knoten 4.

101. Verfahren nach Anspruch 91, wobei das Netzwerk einen Knoten 0, einen Knoten 1, einen Knoten 2, einen Knoten 3, einen Knoten 4, einen Knoten 5, einen Knoten 6 und einen Knoten 7 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 3, 4 und 6 sowie indirekt zum Knoten 2 über den Knoten 3, zum Knoten 5 über den Knoten 4 und zum Knoten 7 über den Knoten 6,
(ii) Leiten von Paketen vom Knoten 1 direkt zu einem der Knoten 0, 2, 4, 5 und 7 sowie indirekt zum Knoten 3 über den Knoten 2 und zum Knoten 6 über den Knoten 7,
(iii) Leiten von Paketen vom Knoten 2 direkt zu einem der Knoten 1, 3, 4, 6 und 7 sowie indirekt zum Knoten 0 über den Knoten 1 und zum Knoten 5 über den Knoten 4,
(iv) Leiten von Paketen vom Knoten 3 direkt zu einem der Knoten 0, 2, 5 und 7 sowie indirekt zum Knoten 1 über den Knoten 0, zum Knoten 4 über den Knoten 5 und zum Knoten 6 über den Knoten 7,
(v) Leiten von Paketen vom Knoten 4 direkt zu einem der Knoten 0 bis 2, 5 und 6 sowie indirekt zum Knoten 3 über den Knoten 2 und zum Knoten 7 über den Knoten 6,
(vi) Leiten von Paketen vom Knoten 5 direkt zu einem der Knoten 0, 1, 3, 4 und 7 sowie indirekt zum Knoten 0 über den Knoten 1, zum Knoten 2 über den Knoten 3 und zum Knoten 6 über den Knoten 7,
(vii) Leiten von Paketen vom Knoten 6 direkt zu einem der Knoten 0, 2, 4 und 7 sowie indirekt zum Knoten 1 über den Knoten 0, zum Knoten 3 über den Knoten 2 und zum Knoten 5 über den Knoten 4, und
(viii) Leiten von Paketen vom Knoten 7 direkt zu einem der Knoten 1 bis 3, 5 und 6 sowie indirekt zum Knoten 0 über den Knoten 1 und zum Knoten 4 über den Knoten 5.

102. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7 und einen Knoten 8 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 3, 4, 6 und 8 sowie indirekt zum Knoten 2 über den Knoten 3, zum Knoten 5 über den Knoten 4 und zum Knoten 7 über den Knoten 6,
(ii) Leiten von Paketen vom Knoten 1 direkt zu einem der Knoten 0, 2, 5 und 7 sowie indirekt zum Knoten 3 über den Knoten 2, zum Knoten 4 über den Knoten 5, zum Knoten 6 über den Knoten 7 und zum Knoten 8 über den Knoten 5,
(iii) Leiten von Paketen vom Knoten 2 direkt zu einem der Knoten 1, 3, 4 und 6 sowie indirekt zum Knoten 0 über den Knoten 1, zum Knoten 5 über den Knoten 4, zum Knoten 7 über den Knoten 6 und zum Knoten 8 über den Knoten 6,
(iv) Leiten von Paketen vom Knoten 3 direkt zu einem der Knoten 0, 2, 5, 7 und 8 sowie indirekt zum Knoten 1 über den Knoten 0, zum Knoten 4 über den Knoten 5 und zum Knoten 6 über den Knoten 7,
(v) Leiten von Paketen vom Knoten 4 direkt zu einem der Knoten 0, 2, 5 und 6 sowie indirekt zum Knoten 1 über den Knoten 0, zum Knoten 3 über den Knoten 2, zum Knoten 7 über den Knoten 6 und zum Knoten 8 über den Knoten 0,
(vi) Leiten von Paketen vom Knoten 5 direkt zu einem der Knoten 1, 3, 4, 7 und 8 sowie indirekt zum Knoten 0 über den Knoten 1, zum Knoten 2 über den Knoten 3 und zum Knoten 6 über den Knoten 7,
(vii) Leiten von Paketen vom Knoten 6 direkt zu einem der Knoten 0, 2, 4, 7 und 8 sowie indirekt zum Knoten 1 über den Knoten 0, zum Knoten 3 über den Knoten 2 und zum Knoten 5 über den Knoten 4,
(viii) Leiten von Paketen vom Knoten 7 direkt zu einem der Knoten 1, 3, 5 und 6 sowie indirekt zum Knoten 0 über den Knoten 1, zum Knoten 2 über den Knoten 3, zum Knoten 4 über den Knoten 5 und zum Knoten 8 über den Knoten 3, und
(ix) Leiten von Paketen vom Knoten 8 direkt zu einem der Knoten 0, 3, 5 und 6 sowie indirekt zum Knoten 1 über den Knoten 0, zum Knoten 2 über den Knoten 3, zum Knoten 4 über den Knoten 5 und zum Knoten 7 über den Knoten 6.

103. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8 und einen Knoten 9 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 3, 4, 6 und 8 sowie indirekt zum Knoten 2 über den Knoten 3, zum Knoten 5 über den Knoten 4, zum Knoten 7 über den Knoten 6 und zum Knoten 9 über den Knoten 8,
(ii) Leiten von Paketen vom Knoten 1 direkt zu einem der Knoten 0, 5, 7 und 9 sowie indirekt zum Knoten 2 über den Knoten 9, zum Knoten 3 über den Knoten 5, zum Knoten 4 über den Knoten 5, zum Knoten 6 über den Knoten 7 und zum Knoten 8 über den Knoten 9,
(iii) Leiten von Paketen vom Knoten 2 direkt zu einem der Knoten 3, 4, 6 und 9 sowie indirekt zum Knoten 0 über den Knoten 6, zum Knoten 1 über den Knoten 9, zum Knoten 5 über den Knoten 4, zum Knoten 7 über den Knoten 6 und zum Knoten 8 über den Knoten 9,
(iv) Leiten von Paketen vom Knoten 3 direkt zu einem der Knoten 0, 2, 5, 7 und 8 sowie indirekt zum Knoten 1 über den Knoten 0, zum Knoten 4 über den Knoten 5, zum Knoten 6 über den Knoten 7 und zum Knoten 9 über den Knoten 8,
(v) Leiten von Paketen vom Knoten 4 direkt zu einem der Knoten 0, 2, 5 und 9 sowie indirekt zum Knoten 1 über den Knoten 0, zum Knoten 3 über den Knoten 2, zum Knoten 6 über den Knoten 0, zum Knoten 7 über den Knoten 9 und zum Knoten 8 über den Knoten 9,
(vi) Leiten von Paketen vom Knoten 5 direkt zu einem der Knoten 1, 3, 4, 7 und 8 sowie indirekt zum Knoten 0 über den Knoten 1, zum Knoten 2 über den Knoten 3, zum Knoten 6 über den Knoten 8, zum Knoten 7 über den Knoten 1 und zum Knoten 9 über den Knoten 8,
(vii) Leiten von Paketen vom Knoten 6 direkt zu einem der Knoten 0, 2, 7 und 8 sowie indirekt zum Knoten 1 über den Knoten 0, zum Knoten 3 über den Knoten 2, zum Knoten 4 über den Knoten 2, zum Knoten 5 über den Knoten 8 und zum Knoten 9 über den Knoten 8,
(viii) Leiten von Paketen vom Knoten 7 direkt zu einem der Knoten 1, 3, 6 und 9 sowie indirekt zum Knoten 0 über den Knoten 1, zum Knoten 2 über den Knoten 3, zum Knoten 4 über den Knoten 5, zum Knoten 5 über den Knoten 3 und zum Knoten 8 über den Knoten 9,
(ix) Leiten von Paketen vom Knoten 8 direkt zu einem der Knoten 0, 3, 5, 6 und 9 sowie indirekt zum Knoten 1 über den Knoten 0, zum Knoten 2 über den Knoten 3, zum Knoten 4 über den Knoten 5 und zum Knoten 7 über den Knoten 6, und
(x) Leiten von Paketen vom Knoten 9 direkt zu einem der Knoten 1, 2, 4, 7 und 8 sowie indirekt zum Knoten 0 über den Knoten 1, zum Knoten 3 über den Knoten 2, zum Knoten 5 über den Knoten 4 und zum Knoten 6 über den Knoten 7.

104. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8, einen Knoten 9 und einen Knoten 10 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6 und 8 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8 und zum Knoten 10 über den Knoten 6,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7 und zum Knoten 8 über den Knoten 9,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6 und zum Knoten 8 über den Knoten 9,
(iv) Leiten von Paketen vom Knoten 3 direkt zu einem der Knoten 2, 5, 7 und 8 sowie indirekt zum Knoten 0 über den Knoten 8, zum Knoten 1 über den Knoten 7, zum Knoten 4 über den Knoten 5, zum Knoten 6 über den Knoten 7, zum Knoten 9 über den Knoten 8 und zum Knoten 10 über den Knoten 5,
(v) Leiten von Paketen vom Knoten 4 direkt zu einem der Knoten 0, 2, 5, 7 und 9 sowie indirekt zum Knoten 1 über den Knoten 0, zum Knoten 3 über den Knoten 2, zum Knoten 6 über den Knoten 7, zum Knoten 7 über den Knoten 9, zum Knoten 8 über den Knoten 9 und zum Knoten 10 über den Knoten 2,
(vi) Leiten von Paketen vom Knoten 5 direkt zu einem der Knoten 1, 3, 4, 8 und 10 sowie indirekt zum Knoten 0 über den Knoten 1, zum Knoten 2 über den Knoten 3, zum Knoten 6 über den Knoten 8, zum Knoten 7 über den Knoten 1 und zum Knoten 9 über den Knoten 8,
(vii) Leiten von Paketen vom Knoten 6 direkt zu einem der Knoten 0, 2, 7, 8 und 10 sowie indirekt zum Knoten 1 über den Knoten 0, zum Knoten 3 über den Knoten 2, zum Knoten 4 über den Knoten 2, zum Knoten 5 über den Knoten 8 und zum Knoten 9 über den Knoten 8,
(viii) Leiten von Paketen vom Knoten 7 direkt zu einem der Knoten 1, 3, 6 und 9 sowie indirekt zum Knoten 0 über den Knoten 1, zum Knoten 2 über den Knoten 3, zum Knoten 4 über den Knoten 9, zum Knoten 5 über den Knoten 3, zum Knoten 8 über den Knoten 9 und zum Knoten 10 über den Knoten 1,
(ix) Leiten von Paketen vom Knoten 8 direkt zu einem der Knoten 0, 3, 5, 6 und 9 sowie indirekt zum Knoten 1 über den Knoten 0, zum Knoten 2 über den Knoten 3, zum Knoten 4 über den Knoten 5, zum Knoten 7 über den Knoten 6 und zum Knoten 10 über den Knoten 6,
(x) Leiten von Paketen vom Knoten 9 direkt zu einem der Knoten 1, 2, 4, 7 und 8 sowie indirekt zum Knoten 0 über den Knoten 1, zum Knoten 3 über den Knoten 2, zum Knoten 5 über den Knoten 4, zum Knoten 6 über den Knoten 7 und zum Knoten 10 über den Knoten 1, und
(xi) Leiten von Paketen vom Knoten 10 direkt zu einem der Knoten 1, 2, 5 und 6 sowie indirekt zum Knoten 0 über den Knoten 1, zum Knoten 3 über den Knoten 2, zum Knoten 4 über den Knoten 5, zum Knoten 7 über den Knoten 6, zum Knoten 8 über den Knoten 6 und zum Knoten 9 über den Knoten 2.

105. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8, einen Knoten 9, einen Knoten 10 und einen Knoten 11 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8 und zum Knoten 10 über den Knoten 11,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9 und zum Knoten 11 über den Knoten 10,
(iii) Leiten von Paketen vom Knoten 2 direkt zu einem der Knoten 3, 4, 6, 9 und 10 sowie indirekt zum Knoten 0 über den Knoten 4, zum Knoten 1 über den Knoten 10, zum Knoten 5 über den Knoten 4, zum Knoten 7 über den Knoten 6, zum Knoten 8 über den Knoten 9 und zum Knoten 11 über den Knoten 10,
(iv) Leiten von Paketen vom Knoten 3 direkt zu einem der Knoten 2, 5, 7, 8 und 11 sowie indirekt zum Knoten 0 über den Knoten 8, zum Knoten 1 über den Knoten 7, zum Knoten 4 über den Knoten 5, zum Knoten 6 über den Knoten 7, zum Knoten 9 über den Knoten 8 und zum Knoten 10 über den Knoten 11,
(v) Leiten von Paketen vom Knoten 4 direkt zu einem der Knoten 0, 2, 5, 9 und 11 sowie indirekt zum Knoten 1 über den Knoten 0, zum Knoten 3 über den Knoten 2, zum Knoten 6 über den Knoten 0, zum Knoten 7 über die Knoten 0 und 6, zum Knoten 8 über den Knoten 9 und zum Knoten 10 über den Knoten 11,
(vi) Leiten von Paketen vom Knoten 5 direkt zu einem der Knoten 1, 3, 4 und 8 sowie indirekt zum Knoten 0 über den Knoten 1, zum Knoten 2 über den Knoten 3, zum Knoten 6 über die Knoten 1 und 7, zum Knoten 7 über den Knoten 1 und zum Knoten 9 über den Knoten 8, zum Knoten 10 über den Knoten 1 und zum Knoten 11 über den Knoten 3,
(vii) Leiten von Paketen vom Knoten 6 direkt zu einem der Knoten 0, 2, 7 und 10 sowie indirekt zum Knoten 1 über den Knoten 0, zum Knoten 3 über den Knoten 2, zum Knoten 4 über den Knoten 2, zum Knoten 5 über die Knoten 2 und 4, zum Knoten 8 über den Knoten 0, zum Knoten 9 über den Knoten 2 und zum Knoten 11 über den Knoten 10,
(viii) Leiten von Paketen vom Knoten 7 direkt zu einem der Knoten 1, 3, 6 und 11 sowie indirekt zum Knoten 0 über den Knoten 1, zum Knoten 2 über den Knoten 3, zum Knoten 4 über die Knoten 3 und 5, zum Knoten 5 über den Knoten 3, zum Knoten 8 über den Knoten 3, zum Knoten 9 über den Knoten 1 und zum Knoten 10 über den Knoten 11,
(ix) Leiten von Paketen vom Knoten 8 direkt zu einem der Knoten 0, 3, 5 und 9 sowie indirekt zum Knoten 1 über den Knoten 0, zum Knoten 2 über den Knoten 3, zum Knoten 4 über den Knoten 5, zum Knoten 6 über den Knoten 0, zum Knoten 7 über den Knoten 3, zum Knoten 10 über die Knoten 0 und 11 und zum Knoten 11 über den Knoten 0,
(x) Leiten von Paketen vom Knoten 9 direkt zu einem der Knoten 1, 2, 4 und 8 sowie indirekt zum Knoten 0 über den Knoten 1, zum Knoten 3 über den Knoten 2, zum Knoten 5 über den Knoten 4, zum Knoten 6 über den Knoten 2, zum Knoten 7 über den Knoten 1, zum Knoten 10 über den Knoten 1 und zum Knoten 11 über die Knoten 1 und 10,
(xi) Leiten von Paketen vom Knoten 10 direkt zu einem der Knoten 1, 2, 6 und 11 sowie indirekt zum Knoten 0 über den Knoten 1, zum Knoten 3 über den Knoten 2, zum Knoten 4 über den Knoten 2, zum Knoten 5 über den Knoten 1, zum Knoten 7 über den Knoten 6, zum Knoten 8 über die Knoten 2 und 9 und zum Knoten 9 über den Knoten 2, und
(xii) Leiten von Paketen vom Knoten 11 direkt zu einem der Knoten 0, 3, 7 und 10 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 7, zum Knoten 8 über den Knoten 3 und zum Knoten 9 über die Knoten 3 und 8.

106. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8, einen Knoten 9, einen Knoten 10, einen Knoten 11 und einen Knoten 12 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6, 8 und 11 sowie indirekt zum Knoten 2 über den Knoten 4, zum Knoten 3 über den'Knoten 8, zum Knoten 5 über den Knoten 4, zum Knoten 7 über den Knoten 6, zum Knoten 9 über den Knoten 8, zum Knoten 10 über den Knoten 11 und zum Knoten 12 über den Knoten 4,
(ii) Leiten von Paketen vom Knoten 1 direkt zu einem der Knoten 0, 5, 7 und 9 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10 und zum Knoten 12 über den Knoten 7,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10 und zum Knoten 12 über den Knoten 10,
(iv) Leiten von Paketen vom Knoten 3 direkt zu einem der Knoten 2, 5, 7, 8 und 11 sowie indirekt zum Knoten 0 über den Knoten 8, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11 und zum Knoten 12 über den Knoten 7,
(v) Leiten von Paketen vom Knoten 4 direkt zu einem der Knoten 0, 2, 5, 9 und 12 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 9, zum Knoten 10 über den Knoten 12 und zum Knoten 11 über den Knoten 0,
(vi) Leiten von Paketen vom Knoten 5 direkt zu einem der Knoten 1, 3, 4 und 8 sowie indirekt zum Knoten 0 über den Knoten 1, zum Knoten 2 über den Knoten 3, zum Knoten 6 über die Knoten 1 und 7, zum Knoten 7 über den Knoten 1, zum Knoten 9 über den Knoten 8, zum Knoten 10 über den Knoten 1, zum Knoten 11 über den Knoten 3 und zum Knoten 12 über den Knoten 8,
(vii) Leiten von Paketen vom Knoten 6 direkt zu einem der Knoten 0, 2, 7 und 10 sowie indirekt zum Knoten 1 über den Knoten 0, zum Knoten 3 über den Knoten 2, zum Knoten 4 über den Knoten 2, zum Knoten 5 über die Knoten 2 und 4, zum Knoten 8 über den Knoten 0, zum Knoten 9 über den Knoten 2, zum Knoten 11 über den Knoten 10 und zum Knoten 12 über den Knoten 10,
(viii) Leiten von Paketen vom Knoten 7 direkt zu einem der Knoten 1, 3, 6, 11 und 12 sowie indirekt zum Knoten 0 über den Knoten 1, zum Knoten 2 über den Knoten 3, zum Knoten 4 über die Knoten 12, zum Knoten 5 über den Knoten 3, zum Knoten 8 über den Knoten 3, zum Knoten 9 über den Knoten 1 und zum Knoten 10 über den Knoten 11,
(ix) Leiten von Paketen vom Knoten 8 direkt zu einem der Knoten 0, 3, 5, 9 und 12 sowie indirekt zum Knoten 1 über den Knoten 0, zum Knoten 2 über den Knoten 3, zum Knoten 4 über den Knoten 5, zum Knoten 6 über den Knoten 0, zum Knoten 7 über den Knoten 12, zum Knoten 10 über den Knoten 12 und zum Knoten 11 über den Knoten 0,
(x) Leiten von Paketen vom Knoten 9 direkt zu einem der Knoten 1, 2, 4, 8 und 11 sowie indirekt zum Knoten 0 über den Knoten 1, zum Knoten 3 über den Knoten 2, zum Knoten 5 über den Knoten 4, zum Knoten 6 über den Knoten 2, zum Knoten 7 über den Knoten 1, zum Knoten 10 über den Knoten 1, zum Knoten 11 über die Knoten 1 und 10 und zum Knoten 12 über den Knoten 4,
(xi) Leiten von Paketen vom Knoten 10 direkt zu einem der Knoten 1, 2, 6, 11 und 12 sowie indirekt zum Knoten 0 über den Knoten 1, zum Knoten 3 über den Knoten 2, zum Knoten 4 über den Knoten 2, zum Knoten 5 über den Knoten 1, zum Knoten 7 über den Knoten 6, zum Knoten 8 über den Knoten 12 und zum Knoten 9 über den Knoten 2,
(xii) Leiten von Paketen vom Knoten 11 direkt zu einem der Knoten 0, 3, 7 und 10 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 7, zum Knoten 8 über den Knoten 3, zum Knoten 9 über die Knoten 3 und 8 und zum Knoten 12 über den Knoten 7, und
(xiii) Leiten von Paketen vom Knoten 12 direkt zu einem der Knoten 4, 7, 8 und 10 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 4, zum Knoten 6 über den Knoten 7, zum Knoten 9 über den Knoten 8 und zum Knoten 11 über den Knoten 10.

107. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8, einen Knoten 9, einen Knoten 10, einen Knoten 11, einen Knoten 12 und einen Knoten 13 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8, zum Knoten 10 über den Knoten 11, zum Knoten 12 über den Knoten 4 und zum Knoten 13 über den Knoten 6,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10, zum Knoten 12 über den Knoten 7 und zum Knoten 13 über den Knoten 9,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10, zum Knoten 12 über den Knoten 10 und zum Knoten 13 über den Knoten 6,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11, zum Knoten 12 über den Knoten 7 und zum Knoten 13 über den Knoten 11,
(v) Leiten von Paketen vom Knoten 4 direkt zu einem der Knoten 0, 2, 5, 9 und 12 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 9, zum Knoten 10 über den Knoten 12, zum Knoten 11 über den Knoten 0 und zum Knoten 13 über den Knoten 12,
(vi) Leiten von Paketen vom Knoten 5 direkt zu einem der Knoten 1, 3, 4 und 13 sowie indirekt zum Knoten 0 über den Knoten 1, zum Knoten 2 über den Knoten 3, zum Knoten 6 über den Knoten 13, zum Knoten 7 über den Knoten 1, zum Knoten 8 über den Knoten 3, zum Knoten 9 über den Knoten 1, zum Knoten 10 über den Knoten 1, zum Knoten 11 über den Knoten 13 und zum Knoten 12 über den Knoten 13,
(vii) Leiten von Paketen vom Knoten 6 direkt zu einem der Knoten 0, 2, 7 und 13 sowie indirekt zum Knoten 1 über den Knoten 0, zum Knoten 3 über den Knoten 2, zum Knoten 4 über den Knoten 2, zum Knoten 5 über den Knoten 13, zum Knoten 8 über den Knoten 0, zum Knoten 9 über den Knoten 2, zum Knoten 10 über den Knoten 2, zum Knoten 11 über den Knoten 0 und zum Knoten 12 über den Knoten 13,
(viii) Leiten von Paketen vom Knoten 7 direkt zu einem der Knoten 1, 3, 6, 11 und 12 sowie indirekt zum Knoten 0 über den Knoten 1, zum Knoten 2 über den Knoten 3, zum Knoten 4 über die Knoten 12, zum Knoten 5 über den Knoten 3, zum Knoten 8 über den Knoten 3, zum Knoten 9 über den Knoten 1, zum Knoten 10 über den Knoten 11 und zum Knoten 13 über den Knoten 12,
(ix) Leiten von Paketen vom Knoten 8 direkt zu einem der Knoten 0, 3, 9 und 12 sowie indirekt zum Knoten 1 über den Knoten 0, zum Knoten 2 über den Knoten 3, zum Knoten 4 über den Knoten 12, zum Knoten 5 über den Knoten 3, zum Knoten 6 über den Knoten 0, zum Knoten 7 über den Knoten 12, zum Knoten 10 über den Knoten 12, zum Knoten 11 über den Knoten 0 und zum Knoten 13 über den Knoten 12,
(x) Leiten von Paketen vom Knoten 9 direkt zu einem der Knoten 1, 2, 4, 8 und 13 sowie indirekt zum Knoten 0 über den Knoten 1, zum Knoten 3 über den Knoten 2, zum Knoten 5 über den Knoten 4, zum Knoten 6 über den Knoten 13, zum Knoten 7 über den Knoten 1, zum Knoten 10 über den Knoten 1, zum Knoten 11 über den Knoten 13 und zum Knoten 12 über den Knoten 13,
(xi) Leiten von Paketen vom Knoten 10 direkt zu einem der Knoten 1, 2, 11 und 12 sowie indirekt zum Knoten 0 über den Knoten 1, zum Knoten 3 über den Knoten 2, zum Knoten 4 über den Knoten 2, zum Knoten 5 über den Knoten 1, zum Knoten 6 über den Knoten 2, zum Knoten 7 über den Knoten 12, zum Knoten 8 über den Knoten 12, zum Knoten 9 über den Knoten 2 und zum Knoten 13 über den Knoten 12,
(xii) Leiten von Paketen vom Knoten 11 direkt zu einem der Knoten 0, 3, 7, 10 und 13 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 7, zum Knoten 8 über den Knoten 3, zum Knoten 9 über den Knoten 13 und zum Knoten 12 über den Knoten 13,
(xiii) Leiten von Paketen vom Knoten 12 direkt zu einem der Knoten 4, 7, 8, 10 und 13 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 4, zum Knoten 6 über den Knoten 7, zum Knoten 9 über den Knoten 8 und zum Knoten 11 über den Knoten 10, und
(xiv) Leiten von Paketen vom Knoten 13 direkt zu einem der Knoten 5, 6, 9, 11 und 12 sowie indirekt zum Knoten 0 über den Knoten 11, zum Knoten 1 über den Knoten 9, zum Knoten 2 über den Knoten 9, zum Knoten 3 über den Knoten 5, zum Knoten 4 über den Knoten 5, zum Knoten 7 über den Knoten 6, zum Knoten 8 über den Knoten 9 und zum Knoten 10 über den Knoten 11.

108. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8, einen Knoten 9, einen Knoten 10, einen Knoten 11, einen Knoten 12, einen Knoten 13 und einen Knoten 14 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8, zum Knoten 10 über den Knoten 11, zum Knoten 12 über den Knoten 4, zum Knoten 13 über den Knoten 6 und zum Knoten 14 über den Knoten 8,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10, zum Knoten 12 über den Knoten 7, zum Knoten 13 über den Knoten 5 und zum Knoten 14 über den Knoten 5,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10, zum Knoten 12 über den Knoten 10, zum Knoten 13 über den Knoten 6 und zum Knoten 14 über den Knoten 6,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11, zum Knoten 12 über den Knoten 7, zum Knoten 13 über den Knoten 11 und zum Knoten 14 über den Knoten 5,
(v) Leiten von Paketen vom Knoten 4 direkt zu einem der Knoten 0, 2, 5 und 12 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 0, zum Knoten 9 über den Knoten 2, zum Knoten 10 über den Knoten 12, zum Knoten 11 über den Knoten 0, zum Knoten 13 über den Knoten 12 und zum Knoten 14 über den Knoten 5,
(vi) Leiten von Paketen vom Knoten 5 direkt zu einem der Knoten 1, 3, 4, 13 und 14 sowie indirekt zum Knoten 0 über den Knoten 1, zum Knoten 2 über den Knoten 3, zum Knoten 6 über den Knoten 13, zum Knoten 7 über den Knoten 1, zum Knoten 8 über den Knoten 3, zum Knoten 9 über den Knoten 1, zum Knoten 10 über den Knoten 1, zum Knoten 11 über den Knoten 13 und zum Knoten 12 über den Knoten 13,
(vii) Leiten von Paketen vom Knoten 6 direkt zu einem der Knoten 0, 2, 7, 13 und 14 sowie indirekt zum Knoten 1 über den Knoten 0, zum Knoten 3 über den Knoten 2, zum Knoten 4 über den Knoten 2, zum Knoten 5 über den Knoten 14, zum Knoten 8 über den Knoten 14, zum Knoten 9 über den Knoten 2, zum Knoten 10 über den Knoten 2, zum Knoten 11 über den Knoten 0 und zum Knoten 12 über den Knoten 13,
(viii) Leiten von Paketen vom Knoten 7 direkt zu einem der Knoten 1, 3, 6 und 12 sowie indirekt zum Knoten 0 über den Knoten 1, zum Knoten 2 über den Knoten 3, zum Knoten 4 über die Knoten 12, zum Knoten 5 über den Knoten 3, zum Knoten 8 über den Knoten 3, zum Knoten 9 über den Knoten 1, zum Knoten 10 über den Knoten 1, zum Knoten 11 über den Knoten 3, zum Knoten 13 über den Knoten 12 und zum Knoten 14 über den Knoten 6,
(ix) Leiten von Paketen vom Knoten 8 direkt zu einem der Knoten 0, 3, 9, 12 und 14 sowie indirekt zum Knoten 1 über den Knoten 0, zum Knoten 2 über den Knoten 3, zum Knoten 4 über den Knoten 12, zum Knoten 5 über den Knoten 14, zum Knoten 6 über den Knoten 0, zum Knoten 7 über den Knoten 12, zum Knoten 10 über den Knoten 12, zum Knoten 11 über den Knoten 0 und zum Knoten 13 über den Knoten 12,
(x) Leiten von Paketen vom Knoten 9 direkt zu einem der Knoten 1, 2, 8 und 13 sowie indirekt zum Knoten 0 über den Knoten 1, zum Knoten 3 über den Knoten 2, zum Knoten 4 über den Knoten 2, zum Knoten 5 über den Knoten 13, zum Knoten 6 über den Knoten 13, zum Knoten 7 über den Knoten 1, zum Knoten 10 über den Knoten 1, zum Knoten 11 über den Knoten 13, zum Knoten 12 über den Knoten 13 und zum Knoten 14 über den Knoten 8,
(xi) Leiten von Paketen vom Knoten 10 direkt zu einem der Knoten 1, 2, 11, 12 und 14 sowie indirekt zum Knoten 0 über den Knoten 1, zum Knoten 3 über den Knoten 2, zum Knoten 4 über den Knoten 2, zum Knoten 5 über den Knoten 14, zum Knoten 6 über den Knoten 2, zum Knoten 7 über den Knoten 12, zum Knoten 8 über den Knoten 14, zum Knoten 9 über den Knoten 2 und zum Knoten 13 über den Knoten 12,
(xii) Leiten von Paketen vom Knoten 11 direkt zu einem der Knoten 0, 3, 10 und 13 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 13, zum Knoten 7 über den Knoten 3, zum Knoten 8 über den Knoten 3, zum Knoten 9 über den Knoten 13, zum Knoten 12 über den Knoten 13 und zum Knoten 14 über den Knoten 10,
(xiii) Leiten von Paketen vom Knoten 12 direkt zu einem der Knoten 4, 7, 8, 10 und 13 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 4, zum Knoten 6 über den Knoten 7, zum Knoten 9 über den Knoten 8, zum Knoten 11 über den Knoten 10 und zum Knoten 14 über den Knoten 8,
(xiv) Leiten von Paketen vom Knoten 13 direkt zu einem der Knoten 5, 6, 9, 11 und 12 sowie indirekt zum Knoten 0 über den Knoten 11, zum Knoten 1 über den Knoten 9, zum Knoten 2 über den Knoten 9, zum Knoten 3 über den Knoten 5, zum Knoten 4 über den Knoten 5, zum Knoten 7 über den Knoten 6, zum Knoten 8 über den Knoten 9, zum Knoten 10 über den Knoten 11 und zum Knoten 14 über den Knoten 5, und
(xv) Leiten von Paketen vom Knoten 14 direkt zu einem der Knoten 5, 6, 8 und 10 sowie indirekt zum Knoten 0 über den Knoten 6, zum Knoten 1 über den Knoten 10, zum Knoten 2 über den Knoten 10, zum Knoten 3 über den Knoten 8, zum Knoten 4 über den Knoten 5, zum Knoten 7 über den Knoten 6, zum Knoten 9 über den Knoten 8, zum Knoten 11 über den Knoten 10, zum Knoten 12 über den Knoten 10 und zum Knoten 13 über den Knoten 6.

109. Verfahren nach Anspruch 91, wobei das Netzwerk einen Knoten 0, einen Knoten 1, einen Knoten 2, einen Knoten 3, einen Knoten 4 und einen Knoten 5 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1 und 3 bis 5 sowie indirekt zum Knoten 2 über den Knoten 3,
(ii) Leiten von Paketen vom Knoten 1 direkt zu einem der Knoten 0, 2, 4 und 5 sowie indirekt zum Knoten 3 über den Knoten 2,
(iii) Leiten von Paketen vom Knoten 2 direkt zu einem der Knoten 1, 3 und 4 sowie indirekt zum Knoten 0 über den Knoten 1 und zum Knoten 5 über den Knoten 4,
(iv) Leiten von Paketen vom Knoten 3 direkt zu einem der Knoten 1, 2 und 5 sowie indirekt zum Knoten 1 über den Knoten 0 und zum Knoten 4 über den Knoten 5,
(v) Leiten von Paketen vom Knoten 4 direkt zu einem der Knoten 0 bis 2 und 5 sowie indirekt zum Knoten 3 über den Knoten 2, und
(vi) Leiten von Paketen vom Knoten 5 direkt zu einem der Knoten 0, 1, 3 und 4 sowie indirekt zum Knoten 2 über den Knoten 3.

110. Verfahren nach Anspruch 91, wobei das Netzwerk einen Knoten 0, einen Knoten 1, einen Knoten 2, einen Knoten 3, einen Knoten 4, einen Knoten 5, einen Knoten 6 und einen Knoten 7 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 3, 4 und 6 sowie indirekt zum Knoten 2 über den Knoten 3, zum Knoten 5 über den Knoten 4 und zum Knoten 7 über den Knoten 6,
(ii) Leiten von Paketen vom Knoten 1 direkt zu einem der Knoten 0, 2, 5 und 7 sowie indirekt zum Knoten 3 über den Knoten 2, zum Knoten 4 über den Knoten 5 und zum Knoten 6 über den Knoten 7,
(iii) Leiten von Paketen vom Knoten 2 direkt zu einem der Knoten 1, 3, 4 und 6 sowie indirekt zum Knoten 0 über den Knoten 1, zum Knoten 5 über den Knoten 4 und zum Knoten 7 über den Knoten 6,
(iv) Leiten von Paketen vom Knoten 3 direkt zu einem der Knoten 0, 2, 5 und 7 sowie indirekt zum Knoten 1 über den Knoten 0, zum Knoten 4 über den Knoten 5 und zum Knoten 6 über den Knoten 7,
(v) Leiten von Paketen vom Knoten 4 direkt zu einem der Knoten 0, 2, 5 und 6 sowie indirekt zum Knoten 1 über den Knoten 0, zum Knoten 3 über den Knoten 2 und zum Knoten 7 über den Knoten 6,
(vi) Leiten von Paketen vom Knoten 5 direkt zu einem der Knoten 0, 1, 3, 4 und 7 sowie indirekt zum Knoten 0 über den Knoten 1, zum Knoten 2 über den Knoten 3 und zum Knoten 6 über den Knoten 7,
(vii) Leiten von Paketen vom Knoten 6 direkt zu einem der Knoten 0, 2, 4 und 7 sowie indirekt zum Knoten 1 über den Knoten 0, zum Knoten 3 über den Knoten 2 und zum Knoten 5 über den Knoten 4, und
(viii) Leiten von Paketen vom Knoten 7 direkt zu einem der Knoten 1, 3, 5 und 6 sowie indirekt zum Knoten 0 über den Knoten 1, zum Knoten 2 über den Knoten 3 und zum Knoten 4 über den Knoten 5.

111. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8 und einen Knoten 9 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6 und 8 sowie indirekt zum Knoten 2 über den Knoten 4, zum Knoten 3 über den Knoten 8, zum Knoten 5 über den Knoten 4, zum Knoten 7 über den Knoten 6 und zum Knoten 9 über den Knoten 8,
(ii) Leiten von Paketen vom Knoten 1 direkt zu einem der Knoten 0, 5, 7 und 9 sowie indirekt zum Knoten 2 über den Knoten 9, zum Knoten 3 über den Knoten 5, zum Knoten 4 über den Knoten 5, zum Knoten 6 über den Knoten 7 und zum Knoten 8 über den Knoten 9,
(iii) Leiten von Paketen vom Knoten 2 direkt zu einem der Knoten 3, 4, 6 und 9 sowie indirekt zum Knoten 0 über den Knoten 6, zum Knoten 1 über den Knoten 9, zum Knoten 5 über den Knoten 4, zum Knoten 7 über den Knoten 6 und zum Knoten 8 über den Knoten 9,
(iv) Leiten von Paketen vom Knoten 3 direkt zu einem der Knoten 2, 5, 7 und 8 sowie indirekt zum Knoten 0 über den Knoten 8, zum Knoten 1 über den Knoten 7, zum Knoten 4 über den Knoten 5, zum Knoten 6 über den Knoten 7 und zum Knoten 9 über den Knoten 8,
(v) Leiten von Paketen vom Knoten 4 direkt zu einem der Knoten 0, 2, 5 und 9 sowie indirekt zum Knoten 1 über den Knoten 0, zum Knoten 3 über den Knoten 2, zum Knoten 6 über den Knoten 0, zum Knoten 7 über den Knoten 9 und zum Knoten 8 über den Knoten 9,
(vi) Leiten von Paketen vom Knoten 5 direkt zu einem der Knoten 1, 3, 4 und 8 sowie indirekt zum Knoten 0 über den Knoten 1, zum Knoten 2 über den Knoten 3, zum Knoten 6 über den Knoten 8, zum Knoten 7 über den Knoten 1 und zum Knoten 9 über den Knoten 8,
(vii) Leiten von Paketen vom Knoten 6 direkt zu einem der Knoten 0, 2, 7 und 8 sowie indirekt zum Knoten 1 über den Knoten 0, zum Knoten 3 über den Knoten 2, zum Knoten 4 über den Knoten 2, zum Knoten 5 über den Knoten 8 und zum Knoten 9 über den Knoten 8,
(viii) Leiten von Paketen vom Knoten 7 direkt zu einem der Knoten 1, 3, 6 und 9 sowie indirekt zum Knoten 0 über den Knoten 1, zum Knoten 2 über den Knoten 3, zum Knoten 4 über den Knoten 9, zum Knoten 5 über den Knoten 3 und zum Knoten 8 über den Knoten 9,
(ix) Leiten von Paketen vom Knoten 8 direkt zu einem der Knoten 0, 3, 5, 6 und 9 sowie indirekt zum Knoten 1 über den Knoten 0, zum Knoten 2 über den Knoten 3, zum Knoten 4 über den Knoten 5 und zum Knoten 7 über den Knoten 6, und
(x) Leiten von Paketen vom Knoten 9 direkt zu einem der Knoten 1, 2, 4, 7 und 8 sowie indirekt zum Knoten 0 über den Knoten 1, zum Knoten 3 über den Knoten 2, zum Knoten 5 über den Knoten 4 und zum Knoten 6 über den Knoten 7.

112. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8, einen Knoten 9, einen Knoten 10 und einen Knoten 11 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8 und zum Knoten 10 über den Knoten 11,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9 und zum Knoten 11 über den Knoten 10,
(iii) Leiten von Paketen vom Knoten 2 direkt zu einem der Knoten 3, 4, 6, 9 und 10 sowie indirekt zum Knoten 0 über den Knoten 4, zum Knoten 1 über den Knoten 10, zum Knoten 5 über den Knoten 4, zum Knoten 7 über den Knoten 6, zum Knoten 8 über den Knoten 9 und zum Knoten 11 über den Knoten 10,
(iv) Leiten von Paketen vom Knoten 3 direkt zu einem der Knoten 2, 5, 7, 8 und 11 sowie indirekt zum Knoten 0 über den Knoten 8, zum Knoten 1 über den Knoten 7, zum Knoten 4 über den Knoten 5, zum Knoten 6 über den Knoten 7, zum Knoten 9 über den Knoten 8 und zum Knoten 10 über den Knoten 11,
(v) Leiten von Paketen vom Knoten 4 direkt zu einem der Knoten 0, 2, 5 und 9 sowie indirekt zum Knoten 1 über den Knoten 0, zum Knoten 3 über den Knoten 2, zum Knoten 6 über den Knoten 0, zum Knoten 7 über die Knoten 0 und 6, zum Knoten 8 über den Knoten 9 und zum Knoten 10 über den Knoten 2,
(vi) Leiten von Paketen vom Knoten 5 direkt zu einem der Knoten 1, 3, 4 und 8 sowie indirekt zum Knoten 0 über den Knoten 1, zum Knoten 2 über den Knoten 3, zum Knoten 6 über die Knoten 1 und 7, zum Knoten 7 über den Knoten 1, zum Knoten 9 über den Knoten 8, zum Knoten 10 über den Knoten 1 und zum Knoten 11 über den Knoten 3,
(vii) Leiten von Paketen vom Knoten 6 direkt zu einem der Knoten 0, 2, 7 und 10 sowie indirekt zum Knoten 1 über den Knoten 0, zum Knoten 3 über den Knoten 2, zum Knoten 4 über den Knoten 2, zum Knoten 5 über die Knoten 2 und 4, zum Knoten 8 über den Knoten 0, zum Knoten 9 über den Knoten 2 und zum Knoten 11 über den Knoten 10,
(viii) Leiten von Paketen vom Knoten 7 direkt zu einem der Knoten 1, 3, 6 und 11 sowie indirekt zum Knoten 0 über den Knoten 1, zum Knoten 2 über den Knoten 3, zum Knoten 4 über die Knoten 3 und 5, zum Knoten 5 über den Knoten 3, zum Knoten 8 über den Knoten 3, zum Knoten 9 über den Knoten 1 und zum Knoten 10 über den Knoten 11,
(ix) Leiten von Paketen vom Knoten 8 direkt zu einem der Knoten 0, 3, 5 und 9 sowie indirekt zum Knoten 1 über den Knoten 0, zum Knoten 2 über den Knoten 3, zum Knoten 4 über den Knoten 5, zum Knoten 6 über den Knoten 0, zum Knoten 7 über den Knoten 3, zum Knoten 10 über die Knoten 0 und 11 und zum Knoten 11 über den Knoten 0,
(x) Leiten von Paketen vom Knoten 9 direkt zu einem der Knoten 1, 2, 4 und 8 sowie indirekt zum Knoten 0 über den Knoten 1, zum Knoten 3 über den Knoten 2, zum Knoten 5 über den Knoten 4, zum Knoten 6 über den Knoten 2, zum Knoten 7 über den Knoten 1, zum Knoten 10 über den Knoten 1 und zum Knoten 11 über die Knoten 1 und 10,
(xi) Leiten von Paketen vom Knoten 10 direkt zu einem der Knoten 1, 2, 6 und 11 sowie indirekt zum Knoten 0 über den Knoten 1, zum Knoten 3 über den Knoten 2, zum Knoten 4 über den Knoten 2, zum Knoten 5 über den Knoten 1, zum Knoten 7 über den Knoten 6, zum Knoten 8 über die Knoten 2 und 9 und zum Knoten 9 über den Knoten 2, und
(xii) Leiten von Paketen vom Knoten 11 direkt zu einem der Knoten 0, 3, 7 und 10 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 7, zum Knoten 8 über den Knoten 3 und zum Knoten 9 über die Knoten 3 und 8.

113. Verfahren nach Anspruch 91, wobei das Netzwerk einen Knoten 0, einen Knoten 1, einen Knoten 2, einen Knoten 3, einen Knoten 4, einen Knoten 5, einen Knoten 6, einen Knoten 7, einen Knoten 8, einen Knoten 9, einen Knoten 10, einen Knoten 11, einen Knoten 12 und einen Knoten 13 enthält und wobei zum Rekonfigurieren:
während der Rekonfiguration Pakete aufgrund mindestens einer der folgenden Leitwegkonfigurationen durch das Netzwerk geleitet werden:
(i) Leiten von Paketen vom Knoten 0 direkt zu einem der Knoten 1, 4, 6, 8 und 11 sowie indirekt zum Knoten 2 über den Knoten 4, zum Knoten 3 über den Knoten 8, zum Knoten 5 über den Knoten 4, zum Knoten 7 über den Knoten 6, zum Knoten 9 über den Knoten 8, zum Knoten 10 über den Knoten 11, zum Knoten 12 über den Knoten 8 und zum Knoten 13 über den Knoten 6,
(ii) Leiten von Paketen vom Knoten 1 direkt zu einem der Knoten 0, 5, 7, 9 und 10 sowie indirekt zum Knoten 2 über den Knoten 9, zum Knoten 3 über den Knoten 5, zum Knoten 4 über den Knoten 5, zum Knoten 6 über den Knoten 7, zum Knoten 8 über den Knoten 9, zum Knoten 11 über den Knoten 10, zum Knoten 12 über den Knoten 7 und zum Knoten 13 über den Knoten 9,
(iii) Leiten von Paketen vom Knoten 2 direkt zu einem der Knoten 3, 4, 6, 9 und 10 sowie indirekt zum Knoten 0 über den Knoten 6, zum Knoten 1 über den Knoten 10, zum Knoten 5 über den Knoten 4, zum Knoten 7 über den Knoten 6, zum Knoten 8 über den Knoten 9, zum Knoten 11 über den Knoten 10, zum Knoten 12 über den Knoten 10 und zum Knoten 13 über den Knoten 6,
(iv) Leiten von Paketen vom Knoten 3 direkt zu einem der Knoten 2, 5, 7, 8 und 11 sowie indirekt zum Knoten 0 über den Knoten 11, zum Knoten 1 über den Knoten 7, zum Knoten 4 über den Knoten 5, zum Knoten 6 über den Knoten 7, zum Knoten 9 über den Knoten 8, zum Knoten 10 über den Knoten 11, zum Knoten 12 über den Knoten 7 und zum Knoten 13 über den Knoten 11,
(v) Leiten von Paketen vom Knoten 4 direkt zu einem der Knoten 0, 2, 5 und 12 sowie indirekt zum Knoten 1 über den Knoten 0, zum Knoten 3 über den Knoten 2, zum Knoten 6 über den Knoten 0, zum Knoten 7 über den Knoten 12, zum Knoten 8 über den Knoten 0, zum Knoten 9 über den Knoten 2, zum Knoten 10 über den Knoten 12, zum Knoten 11 über den Knoten 0 und zum Knoten 13 über den Knoten 12,
(vi) Leiten von Paketen vom Knoten 5 direkt zu einem der Knoten 1, 3, 4 und 13 sowie indirekt zum Knoten 0 über den Knoten 1, zum Knoten 2 über den Knoten 3, zum Knoten 6 über den Knoten 13, zum Knoten 7 über den Knoten 1, zum Knoten 8 über den Knoten 3, zum Knoten 9 über den Knoten 1, zum Knoten 10 über den Knoten 1, zum Knoten 11 über den Knoten 13 und zum Knoten 12 über den Knoten 13,
(vii) Leiten von Paketen vom Knoten 6 direkt zu einem der Knoten 0, 2, 7 und 13 sowie indirekt zum Knoten 1 über den Knoten 0, zum Knoten 3 über den Knoten 2, zum Knoten 4 über den Knoten 2, zum Knoten 5 über den Knoten 13, zum Knoten 8 über den Knoten 0, zum Knoten 9 über den Knoten 2, zum Knoten 10 über den Knoten 2, zum Knoten 11 über den Knoten 0 und zum Knoten 12 über den Knoten 13,
(viii) Leiten von Paketen vom Knoten 7 direkt zu einem der Knoten 1, 3, 6 und 12 sowie indirekt zum Knoten 0 über den Knoten 1, zum Knoten 2 über den Knoten 3, zum Knoten 4 über die Knoten 12, zum Knoten 5 über den Knoten 3, zum Knoten 8 über den Knoten 3, zum Knoten 9 über den Knoten 1, zum Knoten 10 über den Knoten 1, zum Knoten 11 über den Knoten 3 und zum Knoten 13 über den Knoten 12,
(ix) Leiten von Paketen vom Knoten 8 direkt zu einem der Knoten 0, 3, 9 und 12 sowie indirekt zum Knoten 1 über den Knoten 0, zum Knoten 2 über den Knoten 3, zum Knoten 4 über den Knoten 12, zum Knoten 5 über den Knoten 3, zum Knoten 6 über den Knoten 0, zum Knoten 7 über den Knoten 12, zum Knoten 10 über den Knoten 12, zum Knoten 11 über den Knoten 0 und zum Knoten 13 über den Knoten 12,
(x) Leiten von Paketen vom Knoten 9 direkt zu einem der Knoten 1, 2, 8 und 13 sowie indirekt zum Knoten 0 über den Knoten 1, zum Knoten 3 über den Knoten 2, zum Knoten 4 über den Knoten 2, zum Knoten 5 über den Knoten 13, zum Knoten 6 über den Knoten 13, zum Knoten 7 über den Knoten 1, zum Knoten 10 über den Knoten 1, zum Knoten 11 über den Knoten 13 und zum Knoten 12 über den Knoten 13,
(xi) Leiten von Paketen vom Knoten 10 direkt zu einem der Knoten 1, 2, 11 und 12 sowie indirekt zum Knoten 0 über den Knoten 1, zum Knoten 3 über den Knoten 2, zum Knoten 4 über den Knoten 2, zum Knoten 5 über den Knoten 1, zum Knoten 6 über den Knoten 2, zum Knoten 7 über den Knoten 12, zum Knoten 8 über den Knoten 12, zum Knoten 9 über den Knoten 2 und zum Knoten 13 über den Knoten 12,
(xii) Leiten von Paketen vom Knoten 11 direkt zu einem der Knoten 0, 3, 10 und 13 sowie indirekt zum Knoten 1 über den Knoten 0, zum Knoten 2 über den Knoten 3, zum Knoten 4 über den Knoten 0, zum Knoten 5 über den Knoten 3, zum Knoten 6 über den Knoten 13, zum Knoten 7 über den Knoten 3, zum Knoten 8 über den Knoten 3, zum Knoten 9 über den Knoten 13 und zum Knoten 12 über den Knoten 13,
(xiii) Leiten von Paketen vom Knoten 12 direkt zu einem der Knoten 4, 7, 8, 10 und 13 sowie indirekt zum Knoten 0 über den Knoten 8, zum Knoten 1 über den Knoten 10, zum Knoten 2 über den Knoten 4, zum Knoten 3 über den Knoten 8, zum Knoten 5 über den Knoten 4, zum Knoten 6 über den Knoten 7, zum Knoten 9 über den Knoten 8 und zum Knoten 11 über den Knoten 10, und
(xiv) Leiten von Paketen vom Knoten 13 direkt zu einem der Knoten 5, 6, 9, 11 und 12 sowie indirekt zum Knoten 0 über den Knoten 11, zum Knoten 1 über den Knoten 9, zum Knoten 2 über den Knoten 9, zum Knoten 3 über den Knoten 5, zum Knoten 4 über den Knoten 5, zum Knoten 7 über den Knoten 6, zum Knoten 8 über den Knoten 9 und zum Knoten 10 über den Knoten 11.

114. Verfahren in einem verteilten System, wobei
ein Netzwerk mit sechzehn nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10, ein Knoten 11, ein Knoten 12, ein Knoten 13, ein Knoten 14 und ein Knoten 15 gehören und die Knoten folgendermaßen kommunikativ verbunden sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 12 und 15,
Knoten 5 mit den Knoten 1, 3, 4, 13 und 14,
Knoten 6 mit den Knoten 0, 2, 7, 13 und 14,
Knoten 7 mit den Knoten 1, 3, 6, 12 und 15,
Knoten 8 mit den Knoten 0, 3, 9, 12 und 14,
Knoten 9 mit den Knoten 1, 2, 8, 13 und 15,
Knoten 10 mit den Knoten 1, 2, 11, 12 und 14,
Knoten 11 mit den Knoten 0, 3, 10, 13 und 15,
Knoten 12 mit den Knoten 4, 7, 8, 10 und 13,
Knoten 13 mit den Knoten 5, 6, 9, 11 und 12,
Knoten 14 mit den Knoten 5, 6, 8, 10 und 15, und
Knoten 15 mit den Knoten 4, 7, 9, 11 und 14, und
zum Rekonfigurieren des Netzwerkes:
die Kommunikationsverbindungen zwischen den Knoten 15 und 4, zwischen den Knoten 15 und 7, zwischen den Knoten 15 und 9, zwischen den Knoten 15 und 11 und zwischen den Knoten 15 und 14 entfernt und
zwischen die Knoten 9 und 4 und zwischen die Knoten 11 und 7 jeweils eine Verbindung eingefügt wird.

115. Verfahren in einem verteilten System, wobei
ein Netzwerk mit mindestens sechzehn nicht vollständig verbundenen Knoten vorgesehen wird, wobei zu den Knoten ein Knoten 0, ein Knoten 1, ein Knoten 2, ein Knoten 3, ein Knoten 4, ein Knoten 5, ein Knoten 6, ein Knoten 7, ein Knoten 8, ein Knoten 9, ein Knoten 10, ein Knoten 11, ein Knoten 12, ein Knoten 13, ein Knoten 14 und ein Knoten 15 gehören und die Knoten folgendermaßen kommunikativ sind:
Knoten 0 mit den Knoten 1, 4, 6, 8 und 11,
Knoten 1 mit den Knoten 0, 5, 7, 9 und 10,
Knoten 2 mit den Knoten 3, 4, 6, 9 und 10,
Knoten 3 mit den Knoten 2, 5, 7, 8 und 11,
Knoten 4 mit den Knoten 0, 2, 5, 12 und 15,
Knoten 5 mit den Knoten 1, 3, 4, 13 und 14,
Knoten 6 mit den Knoten 0, 2, 7, 13 und 14,
Knoten 7 mit den Knoten 1, 3, 6, 12 und 15,
Knoten 8 mit den Knoten 0, 3, 9, 12 und 14,
Knoten 9 mit den Knoten 1, 2, 8, 13 und 15,
Knoten 10 mit den Knoten 1, 2, 11, 12 und 14,
Knoten 11 mit den Knoten 0, 3, 10, 13 und 15,
Knoten 12 mit den Knoten 4, 7, 8, 10 und 13,
Knoten 13 mit den Knoten 5, 6, 9, 11 und 12,
Knoten 14 mit den Knoten 5, 6, 8, 10 und 15,
Knoten 15 mit den Knoten 4, 7, 9, 11 und 14, und
zum Rekonfigurieren des Netzwerkes:
die Kommunikationsverbindungen zwischen den Knoten 14 und 5, zwischen den Knoten 14 und 6, zwischen den Knoten 14 und 8, zwischen den Knoten 14 und 10, zwischen den Knoten 15 und 4, zwischen den Knoten 15 und 7, zwischen den Knoten 15 und 9, zwischen den Knoten 15 und 11 und zwischen den Knoten 15 und 14 entfernt und
zwischen die Knoten 8 und 5, zwischen die Knoten 10 und 6, zwischen die Knoten 9 und 4 und zwischen die Knoten 11 und 7 jeweils eine Verbindung eingefügt wird.

## Revendications

1. Procédé dans un système réparti, comprenant les étapes suivantes :
on établit un réseau contenant sept noeuds, incluant un noeud 0, un noeud 1, un noeud 2, un noeud 3, un noeud 4, un noeud 5 et un noeud 6; et
on route des paquets à travers le réseau de façon à empêcher un blocage, sur la base de l'une au moins des configurations de routage suivantes :
(i) on route des paquets directement du noeud 0 vers l'un des noeuds 1 et 3-6, et indirectement vers le noeud 2 à travers le noeud 3,
(ii) on route des paquets directement du noeud 1 vers l'un des noeuds 0 et 2-5, et indirectement vers le noeud 6 à travers le noeud 4,
(iii) on route des paquets directement du noeud 2 vers l'un des noeuds 1 et 3-6, et indirectement vers le noeud 0 à travers le noeud 1,
(iv) on route des paquets directement du noeud 3 vers l'un des noeuds 0-2, 5 et 6 et indirectement vers le noeud 4 à travers le noeud 5,
(v) on route des paquets directement du noeud 4 vers l'un des noeuds 0-2, 5 et 6, et indirectement vers le noeud 3 à travers le noeud 2,
(vi) on route des paquets directement du noeud 5 vers l'un des noeuds 1-4, et indirectement vers le noeud 6 à travers le noeud 3, et
(vii) on route des paquets directement du noeud 6 vers l'un des noeuds 0 et 2-4, et indirectement vers le noeud 1 à travers le noeud 0 et vers le noeud 5 à travers le noeud 4.

2. Procédé dans un système réparti, comprenant les étapes suivantes :
on établit un réseau contenant huit noeuds, incluant un noeud 0, un noeud 1, un noeud 2, un noeud 3, un noeud 4, un noeud 5, un noeud 6 et un noeud 7; et
on route des paquets à travers le réseau de façon à empêcher un blocage, sur la base de l'une au moins des configurations de routage suivantes :
(i) on route des paquets directement du noeud 0 vers l'un des noeuds 1 et 3-6, et indirectement vers le noeud 2 à travers le noeud 3 et vers le noeud 7 à travers le noeud 6,
(ii) on route des paquets directement du noeud 1 vers l'un des noeuds 0, 2, 4, 5 et 7, et indirectement vers le noeud 3 à travers le noeud 2 et vers le noeud 6 à travers le noeud 7,
(iii) on route des paquets directement du noeud 2 vers l'un des noeuds 1, 3, 4, 6 et 7, et indirectement vers le noeud 0 à travers le noeud 1 et vers le noeud 5 à travers le noeud 4,
(iv) on route des paquets directement du noeud 3 vers l'un des noeuds 0, 2 et 5-7, et indirectement vers le noeud 1 à travers le noeud 0 et vers le noeud 4 à travers le noeud 5,
(v) on route des paquets directement du noeud 4 vers l'un des noeuds 0-2, 5 et 6, et indirectement vers le noeud 3 à travers le noeud 2 et vers le noeud 7 à travers le noeud 6,
(vi) on route des paquets directement du noeud 5 vers l'un des noeuds 0, 1, 3, 4 et 7, et indirectement vers le noeud 2 à travers le noeud 3 et vers le noeud 6 à travers le noeud 7,
(vii) on route des paquets directement du noeud 6 vers l'un des noeuds 0, 2-4 et 7, et indirectement vers le noeud 1 à travers le noeud 0 et vers le noeud 5 à travers le noeud 4, et
(viii) on route des paquets directement du noeud 7 vers l'un des noeuds 1-3 et 5, 6, et indirectement vers le noeud 0 à travers le noeud 1 et vers le noeud 4 à travers le noeud 5.

3. Procédé dans un système réparti, comprenant les étapes suivantes :
on établit un réseau contenant neuf noeuds, incluant un noeud 0, un noeud 1, un noeud 2, un noeud 3, un noeud 4, un noeud 5, un noeud 6, un noeud 7 et un noeud 8; et
on route des paquets à travers le réseau de façon à empêcher un blocage, sur la base de l'une au moins des configurations de routage suivantes :
(i) on route des paquets directement du noeud 0 vers l'un des noeuds 1, 3, 4, 6 et 8, et indirectement vers le noeud 2 à travers le noeud 3, vers le noeud 5 à travers le noeud 4, et vers le noeud 7 à travers le noeud 6,
(ii) on route des paquets directement du noeud 1 vers l'un des noeuds 0, 2, 4, 5 et 7, et indirectement vers le noeud 3 à travers le noeud 2, vers le noeud 6 à travers le noeud 7, et vers le noeud 8 à travers le noeud 5,
(iii) on route des paquets directement du noeud 2 vers l'un des noeuds 1, 3, 4, 6 et 7, et indirectement vers le noeud 0 à travers le noeud 1, vers le noeud 5 à travers le noeud 4, et vers le noeud 8 à travers le noeud 6,
(iv) on route des paquets directement du noeud 3 vers l'un des noeuds 0, 2, 5, 7 et 8, et indirectement vers le noeud 1 à travers le noeud 0, vers le noeud 4 à travers le noeud 5, et vers le noeud 6 à travers le noeud 7,
(v) on route des paquets directement du noeud 4 vers l'un des noeuds 0-2, 5 et 6, et indirectement vers le noeud 3 à travers le noeud 2, vers le noeud 7 à travers le noeud 6, et vers le noeud 8 à travers le noeud 0,
(vi) on route des paquets directement du noeud 5 vers l'un des noeuds 1, 3, 4, 7 et 8, et indirectement vers le noeud 0 à travers le noeud 1, vers le noeud 2 à travers le noeud 3, et vers le noeud 6 à travers le noeud 7,
(vii) on route des paquets directement du noeud 6 vers l'un des noeuds 0, 2, 4, 7 et 8, et indirectement vers le noeud 1 à travers le noeud 0, vers le noeud 3 à travers le noeud 2, et vers le noeud 5 à travers le noeud 4,
(viii) on route des paquets directement du noeud 7 vers l'un des noeuds 1-3 et 5, 6, et indirectement vers le noeud 0 à travers le noeud 1, vers le noeud 4 à travers le noeud 5, et vers le noeud 8 à travers le noeud 3, et
(ix) on route des paquets directement du noeud 8 vers l'un des noeuds 0, 3, 5 et 6, et indirectement vers le noeud 1 à travers le noeud 0, vers le noeud 2 à travers le noeud 3, vers le noeud 4 à travers le noeud 5 et vers le noeud 7 à travers le noeud 6.

4. Procédé dans un système réparti, comprenant les étapes suivantes :
on établit un réseau contenant dix noeuds, incluant un noeud 0, un noeud 1, un noeud 2, un noeud 3, un noeud 4, un noeud 5, un noeud 6, un noeud 7, un noeud 8 et un noeud 9; et
on route des paquets à travers le réseau de façon à empêcher un blocage, sur la base de l'une au moins des configurations de routage suivantes :
(i) on route des paquets directement du noeud 0 vers l'un des noeuds 1, 3, 4, 6 et 8, et indirectement vers le noeud 2 à travers le noeud 3, vers le noeud 5 à travers le noeud 4, vers le noeud 7 à travers le noeud 6 et vers le noeud 9 à travers le noeud 8,
(ii) on route des paquets directement du noeud 1 vers l'un des noeuds 0, 2, 5, 7 et 9, et indirectement vers le noeud 3 à travers le noeud 2, vers le noeud 4 à travers le noeud 5, vers le noeud 6 à travers le noeud 7 et vers le noeud 8 à travers le noeud 9,
(iii) on route des paquets directement du noeud 2 vers l'un des noeuds 1, 3, 4, 6 et 9, et indirectement vers le noeud 0 à travers le noeud 1, vers le noeud 5 à travers le noeud 4, vers le noeud 7 à travers le noeud 6 et vers le noeud 8 à travers le noeud 9,
(iv) on route des paquets directement du noeud 3 vers l'un des noeuds 0, 2, 5, 7 et 8, et indirectement vers le noeud 1 à travers le noeud 0, vers le noeud 4 à travers le noeud 5, vers le noeud 6 à travers le noeud 7 et vers le noeud 9 à travers le noeud 8,
(v) on route des paquets directement du noeud 4 vers l'un des noeuds 0, 2, 5, 6 et 9, et indirectement vers le noeud 1 à travers le noeud 0, vers le noeud 3 à travers le noeud 2, vers le noeud 7 à travers le noeud 6 et vers le noeud 8 à travers le noeud 9,
(vi) on route des paquets directement du noeud 5 vers l'un des noeuds 1, 3, 4, 7 et 8, et indirectement vers le noeud 0 à travers le noeud 1, vers le noeud 2 à travers le noeud 3, vers le noeud 6 à travers le noeud 7 et vers le noeud 9 à travers le noeud 8,
(vii) on route des paquets directement du noeud 6 vers l'un des noeuds 0, 2, 4, 7 et 8, et indirectement vers le noeud 1 à travers le noeud 0, vers le noeud 3 à travers le noeud 2, vers le noeud 5 à travers le noeud 4 et vers le noeud 9 à travers le noeud 8,
(viii) on route des paquets directement du noeud 7 vers l'un des noeuds 1, 3, 5, 6 et 9, et indirectement vers le noeud 0 à travers le noeud 1, vers le noeud 2 à travers le noeud 3, vers le noeud 4 à travers le noeud 5 et vers le noeud 8 à travers le noeud 9,
(ix) on route des paquets directement du noeud 8 vers l'un des noeuds 0, 3, 5, 6 et 9, et indirectement vers le noeud 1 à travers le noeud 0, vers le noeud 2 à travers le noeud 3, vers le noeud 4 à travers le noeud 5 et vers le noeud 7 à travers le noeud 6, et
(x) on route des paquets directement du noeud 9 vers l'un des noeuds 1, 2, 4, 7 et 8, et indirectement vers le noeud 0 à travers le noeud 1, vers le noeud 3 à travers le noeud 2, vers le noeud 5 à travers le noeud 4 et vers le noeud 6 à travers le noeud 7.

5. Procédé dans un système réparti, comprenant les étapes suivantes :
on établit un réseau contenant onze noeuds, incluant un noeud 0, un noeud 1, un noeud 2, un noeud 3, un noeud 4, un noeud 5, un noeud 6, un noeud 7, un noeud 8, un noeud 9 et un noeud 10; et
on route des paquets à travers le réseau de façon à empêcher un blocage, sur la base de l'une au moins des configurations de routage suivantes :
(i) on route des paquets directement du noeud 0 vers l'un des noeuds 1, 3, 4, 6 et 8, et indirectement vers le noeud 2 à travers le noeud 3, vers le noeud 5 à travers le noeud 4, vers le noeud 7 à travers le noeud 6, vers le noeud 9 à travers le noeud 8 et vers le noeud 10 à travers le noeud 6,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7 et vers le noeud 8 à travers le noeud 9,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6 et vers le noeud 8 à travers le noeud 9,
(iv) on route des paquets directement du noeud 3 vers l'un des noeuds 0, 2, 5, 7 et 8, et indirectement vers le noeud 1 à travers le noeud 0, vers le noeud 4 à travers le noeud 5, vers le noeud 6 à travers le noeud 7, vers le noeud 9 à travers le noeud 8 et vers le noeud 10 à travers le noeud 5;
(v) on route des paquets directement du noeud 4 vers l'un des noeuds 0, 2, 5, 7 et 9, et indirectement vers le noeud 1 à travers le noeud 0, vers le noeud 3 à travers le noeud 2, vers le noeud 6 à travers le noeud 7, vers le noeud 8 à travers le noeud 9 et vers le noeud 10 à travers le noeud 2;
(vi) on route des paquets directement du noeud 5 vers l'un des noeuds 1, 3, 4, 7, 8 et 10, et indirectement vers le noeud 0 à travers le noeud 1, vers le noeud 2 à travers le noeud 3, vers le noeud 6 à travers le noeud 8, vers le noeud 7 à travers le noeud 1 et vers le noeud 9 à travers le noeud 8,
(vii) on route des paquets directement du noeud 6 vers l'un des noeuds 0, 2, 7, 8 et 10, et indirectement vers le noeud 1 à travers le noeud 0, vers le noeud 3 à travers le noeud 2, vers le noeud 4 à travers le noeud 2, vers le noeud 5 à travers le noeud 8 et vers le noeud 9 à travers le noeud 8,
(viii) on route des paquets directement du noeud 7 vers l'un des noeuds 1, 3, 4, 6 et 9, et indirectement vers le noeud 0 à travers le noeud 1, vers le noeud 2 à travers le noeud 3, vers le noeud 5 à travers le noeud 4, vers le noeud 8 à travers le noeud 9 et vers le noeud 10 à travers le noeud 1,
(ix) on route des paquets directement du noeud 8 vers l'un des noeuds 0, 3, 5 , 6 et 9, et indirectement vers le noeud 1 à travers le noeud 0, vers le noeud 2 à travers le noeud 3, vers le noeud 4 à travers le noeud 5, vers le noeud 7 à travers le noeud 6 et vers le noeud 10 à travers le noeud 6,
(x) on route des paquets directement du noeud 9 vers l'un des noeuds 1, 2, 4, 7 et 8, et indirectement vers le noeud 0 à travers le noeud 1, vers le noeud 3 à travers le noeud 2, vers le noeud 5 à travers le noeud 4, vers le noeud 6 à travers le noeud 7 et vers le noeud 10 à travers le noeud 1, et
(xi) on route des paquets directement du noeud 10 vers l'un des noeuds 1, 2, 5 et 6, et indirectement vers le noeud 0 à travers le noeud 1, vers le noeud 3 à travers le noeud 2, vers le noeud 4 à travers le noeud 5, vers le noeud 7 à travers le noeud 6, vers le noeud 8 à travers le noeud 6 et vers le noeud 9 à travers le noeud 2.

6. Procédé dans un système réparti, comprenant les étapes suivantes :
on établit un réseau contenant douze noeuds, incluant un noeud 0, un noeud 1, un noeud 2, un noeud 3, un noeud 4, un noeud 5, un noeud 6, un noeud 7, un noeud 8, un noeud 9, un noeud 10 et un noeud 11; et
on route des paquets à travers le réseau de façon à empêcher un blocage, sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8 et vers le noeud 10 à travers le noeud 11,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9 et vers le noeud 11 à travers le noeud 10,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9 et vers le noeud 11 à travers le noeud 10,
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8 et vers le noeud 10 à travers le noeud 11,
(v) on route des paquets directement du noeud 4 vers l'un des noeuds 0, 2, 5, 9 et 11, et indirectement vers le noeud 1 à travers le noeud 0, vers le noeud 3 à travers le noeud 2, vers le noeud 6 à travers le noeud 0, vers le noeud 7 à travers le noeud 9, vers le noeud 8 à travers le noeud 9 et vers le noeud 10 à travers le noeud 11,
(vi) on route des paquets directement du noeud 5 vers l'un des noeuds 1, 3, 4, 8 et 10, et indirectement vers le noeud 0 à travers le noeud 1, vers le noeud 2 à travers le noeud 3, vers le noeud 6 à travers le noeud 10, vers le noeud 7 à travers le noeud 1, vers le noeud 9 à travers le noeud 8 et vers le noeud 11 à travers le noeud 10,
(vii) on route des paquets directement du noeud 6 vers l'un des noeuds 0, 2, 7, 8 et 10, et indirectement vers le noeud 1 à travers le noeud 0, vers le noeud 3 à travers le noeud 2, vers le noeud 4 à travers le noeud 2, vers le noeud 5 à travers le noeud 10, vers le noeud 9 à travers le noeud 8 et vers le noeud 11 à travers le noeud 10,
(viii) on route des paquets directement du noeud 7 vers l'un des noeuds 1, 3, 6, 9 et 11, et indirectement vers le noeud 0 à travers le noeud 1, vers le noeud 2 à travers le noeud 3, vers le noeud 4 à travers le noeud 9, vers le noeud 5 à travers le noeud 3, vers le noeud 8 à travers le noeud 9 et vers le noeud 10 à travers le noeud 11,
(ix) on route des paquets directement du noeud 8 vers l'un des noeuds 0, 3, 5, 6 et 9, et indirectement vers le noeud 1 à travers le noeud 0, vers le noeud 2 à travers le noeud 3, vers le noeud 4 à travers le noeud 5, vers le noeud 7 à travers le noeud 6, vers le noeud 10 à travers le noeud 5 et vers le noeud 11 à travers le noeud 0,
(x) on route des paquets directement du noeud 9 vers l'un des noeuds 1, 2, 4, 7 et 8, et indirectement vers le noeud 0 à travers le noeud 1, vers le noeud 3 à travers le noeud 2, vers le noeud 5 à travers le noeud 4, vers le noeud 6 à travers le noeud 7, vers le noeud 10 à travers le noeud 1 et vers le noeud 11 à travers le noeud 7,
(xi) on route des paquets directement du noeud 10 vers l'un des noeuds 1, 2, 5, 6 et 11, et indirectement vers le noeud 0 à travers le noeud 1, vers le noeud 3 à travers le noeud 2, vers le noeud 4 à travers le noeud 5, vers le noeud 7 à travers le noeud 6, vers le noeud 8 à travers le noeud 5 et vers le noeud 9 à travers le noeud 2, et
(xii) on route des paquets directement du noeud 11 vers l'un des noeuds 0, 3, 4, 7 et 10, et indirectement vers le noeud 1 à travers le noeud 0, vers le noeud 2 à travers le noeud 3, vers le noeud 5 à travers le noeud 4, vers le noeud 6 à travers le noeud 7, vers le noeud 8 à travers le noeud 3, et vers le noeud 9 à travers le noeud 7.

7. Procédé dans un système réparti, comprenant les étapes suivantes :
on établit un réseau contenant treize noeuds, incluant un noeud 0, un noeud 1, un noeud 2, un noeud 3, un noeud 4, un noeud 5, un noeud 6, un noeud 7, un noeud 8, un noeud 9, un noeud 10, un noeud 11 et un noeud 12; et
on route des paquets à travers le réseau de façon à empêcher un blocage, sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11 et vers le noeud 12 à travers le noeud 4,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10 et vers le noeud 12 à travers le noeud 7,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10 et vers le noeud 12 à travers le noeud 10
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11 et vers le noeud 12 à travers le noeud 7,
(v) on route des paquets directement du noeud 4 vers l'un des noeuds 0, 2, 5, 9 et 12, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 9, vers le noeud 10 à travers le noeud 12 et vers le noeud 11 à travers le noeud 0,
(vi) on route des paquets directement du noeud 5 vers l'un des noeuds 1, 3 , 4, 6 et 8, et indirectement vers le noeud 0 à travers le noeud 1, vers le noeud 2 à travers le noeud 3, vers le noeud 7 à travers le noeud 6, vers le noeud 9 à travers le noeud 8, vers le noeud 10 à travers le noeud 1, vers le noeud 11 à travers le noeud 3 et vers le noeud 12 à travers le noeud 8,
(vii) on route des paquets directement du noeud 6 vers l'un des noeuds 0, 2, 5, 7 et 10, et indirectement vers le noeud 1 à travers le noeud 0, vers le noeud 3 à travers le noeud 2, vers le noeud 4 à travers le noeud 5, vers le noeud 8 à travers le noeud 0, vers le noeud 9 à travers le noeud 2, vers le noeud 11 à travers le noeud 10 et vers le noeud 12 à travers le noeud 10,
(viii) on route des paquets directement du noeud 7 vers l'un des noeuds 1, 3, 6 , 11 et 12, et indirectement vers le noeud 0 à travers le noeud 1, vers le noeud 2 à travers le noeud 3, vers le noeud 4 à travers le noeud 12, vers le noeud 5 à travers le noeud 3, vers le noeud 8 à travers le noeud 3, vers le noeud 9 à travers le noeud 11 et vers le noeud 10 à travers le noeud 11,
(ix) on route des paquets directement du noeud 8 vers l'un des noeuds 0, 3, 5, 9 et 12, et indirectement vers le noeud 1 à travers le noeud 0, vers le noeud 2 à travers le noeud 3, vers le noeud 4 à travers le noeud 5, vers le noeud 6 à travers le noeud 0, vers le noeud 7 à travers le noeud 12, vers le noeud 10 à travers le noeud 12 et vers le noeud 11 à travers le noeud 0,
(x) on route des paquets directement du noeud 9 vers l'un des noeuds 1, 2, 4, 8 et 11, et indirectement vers le noeud 0 à travers le noeud 1, vers le noeud 3 à travers le noeud 2, vers le noeud 5 à travers le noeud 4, vers le noeud 6 à travers le noeud 2, vers le noeud 7 à travers le noeud 1, vers le noeud 10 à travers le noeud 11 et vers le noeud 12 à travers le noeud 4,
(xi) on route des paquets directement du noeud 10 vers l'un des noeuds 1, 2, 6, 11 et 12, et indirectement vers le noeud 0 à travers le noeud 1, vers le noeud 3 à travers le noeud 2, vers le noeud 4 à travers le noeud 2, vers le noeud 5 à travers le noeud 6, vers le noeud 7 à travers le noeud 6, vers le noeud 8 à travers le noeud 12 et vers le noeud 9 à travers le noeud 2,
(xii) on route des paquets directement du noeud 11 vers l'un des noeuds 0, 3, 7, 9 et 10, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 7, vers le noeud 8 à travers le noeud 9 et vers le noeud 12 à travers le noeud 7, et
(xiii) on route des paquets directement du noeud 12 vers l'un des noeuds 4, 7, 8 et 10, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 7, vers le noeud 6 à travers le noeud 7, vers le noeud 9 à travers le noeud 8 et vers le noeud 11 à travers le noeud 10.

8. Procédé dans un système réparti, comprenant les étapes suivantes :
on établit un réseau contenant quatorze noeuds, incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12 et un noeud 13; et
on route des paquets à travers le réseau de façon à empêcher un blocage, sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11, vers le noeud 12 à travers le noeud 8 et vers le noeud 13 à travers le noeud 6,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10, vers le noeud 12 à travers le noeud 7 et vers le noeud 13 à travers le noeud 5,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10, vers le noeud 12 à travers le noeud 10 et vers le noeud 13 à travers le noeud 6,
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11, vers le noeud 12 à travers le noeud 7 et vers le noeud 13 à travers le noeud 11,
(v) on route des paquets directement du noeud 4 vers l'un des noeuds 0, 2, 5, 9 et 12, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 9, vers le noeud 10 à travers le noeud 12, vers le noeud 11 à travers le noeud 0 et vers le noeud 13 à travers le noeud 12,
(vi) on route des paquets directement du noeud 5 vers l'un des noeuds 1, 3, 4, 8 et 13, et indirectement vers le noeud 0 à travers le noeud 1, vers le noeud 2 à travers le noeud 3, vers le noeud 6 à travers le noeud 13, vers le noeud 7 à travers le noeud 1, vers le noeud 9 à travers le noeud 8, vers le noeud 10 à travers le noeud 1, vers le noeud 11 à travers le noeud 13 et vers le noeud 12 à travers le noeud 13,
(vii) on route des paquets directement du noeud 6 vers l'un des noeuds 0, 2, 7, 10 et 13, et indirectement vers le noeud 1 à travers le noeud 0, vers le noeud 3 à travers le noeud 2, vers le noeud 4 à travers le noeud 2, vers le noeud 5 à travers le noeud 13, vers le noeud 8 à travers le noeud 0, vers le noeud 9 à travers le noeud 2, vers le noeud 11 à travers le noeud 10 et vers le noeud 12 à travers le noeud 13,
(viii) on route des paquets directement du noeud 7 vers l'un des noeuds 1, 3, 6, 11 et 12, et indirectement vers le noeud 0 à travers le noeud 1, vers le noeud 2 à travers le noeud 3, vers le noeud 4 à travers le noeud 12, vers le noeud 5 à travers le noeud 3, vers le noeud 8 à travers le noeud 3, vers le noeud 9 à travers le noeud 1, vers le noeud 10 à travers le noeud 11 et vers le noeud 13 à travers le noeud 12,
(ix) on route des paquets directement du noeud 8 vers l'un des noeuds 0, 3, 5, 9 et 12, et indirectement vers le noeud 1 à travers le noeud 0, vers le noeud 2 à travers le noeud 3, vers le noeud 4 à travers le noeud 5, vers le noeud 6 à travers le noeud 0, vers le noeud 7 à travers le noeud 12, vers le noeud 10 à travers le noeud 12, vers le noeud 11 à travers le noeud 0 et vers le noeud 13 à travers le noeud 12,
(x) on route des paquets directement du noeud 9 vers l'un des noeuds 1, 2, 4, 8 et 13, et indirectement vers le noeud 0 à travers le noeud 1, vers le noeud 3 à travers le noeud 2, vers le noeud 5 à travers le noeud 4, vers le noeud 6 à travers le noeud 13, vers le noeud 7 à travers le noeud 1, vers le noeud 10 à travers le noeud 1, vers le noeud 11 à travers le noeud 13 et vers le noeud 12 à travers le noeud 13,
(xi) on route des paquets directement du noeud 10 vers l'un des noeuds 1, 2, 6, 11 et 12, et indirectement vers le noeud 0 à travers le noeud 1, vers le noeud 3 à travers le noeud 2, vers le noeud 4 à travers le noeud 2, vers le noeud 5 à travers le noeud 1, vers le noeud 7 à travers le noeud 6, vers le noeud 8 à travers le noeud 12, vers le noeud 9 à travers le noeud 2 et vers le noeud 13 à travers le noeud 12,
(xii) on route des paquets directement du noeud 11 vers l'un des noeuds 0, 3, 7, 10 et 13, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 7, vers le noeud 8 à travers le noeud 3, vers le noeud 9 à travers le noeud 13'et vers le noeud 12 à travers le noeud 13,
(xiii) on route des paquets directement du noeud 12 vers l'un des noeuds 4, 7, 8, 10 et 13, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 4, vers le noeud 6 à travers le noeud 7, vers le noeud 9 à travers le noeud 8 et vers le noeud 11 à travers le noeud 10, et
(xiv) on route des paquets directement du noeud 13 vers l'un des noeuds 5, 6, 9, 11 et 12, et indirectement vers le noeud 0 à travers le noeud 11, vers le noeud 1 à travers le noeud 9, vers le noeud 2 à travers le noeud 9, vers le noeud 3 à travers le noeud 5, vers le noeud 4 à travers le noeud 5, vers le noeud 7 à travers le noeud 6, vers le noeud 8 à travers le noeud 9 et vers le noeud 10 à travers le noeud 11.

9. Procédé dans un système réparti, comprenant les étapes suivantes :
on établit un réseau contenant quinze noeuds, incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, un noeud 13 et un noeud 14; et
on route des paquets à travers le réseau de façon à empêcher un blocage, sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11, vers le noeud 12 à travers le noeud 4, vers le noeud 13 à travers le noeud 6 et vers le noeud 14 à travers le noeud 8,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10, vers le noeud 12 à travers le noeud 7, vers le noeud 13 à travers le noeud 5 et vers le noeud 14 à travers le noeud 5,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10, vers le noeud 12 à travers le noeud 10, vers le noeud 13 à travers le noeud 6 et vers le noeud 14 à travers le noeud 6,
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11, vers le noeud 12 à travers le noeud 7, vers le noeud 13 à travers le noeud 11 et vers le noeud 14 à travers le noeud 5,
(v) on route des paquets directement du noeud 4 vers l'un des noeuds 0, 2, 5, 9 et 12, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 9, vers le noeud 10 à travers le noeud 12, vers le noeud 11 à travers le noeud 0, vers le noeud 13 à travers le noeud 12 et vers le noeud 14 à travers le noeud 5,
(vi) on route des paquets directement du noeud 5 vers l'un des noeuds 1, 3, 4, 13 et 14, et indirectement vers le noeud 0 à travers le noeud 1, vers le noeud 2 à travers le noeud 3, vers le noeud 6 à travers le noeud 13, vers le noeud 7 à travers le noeud 1, vers le noeud 8 à travers le noeud 3, vers le noeud 9 à travers le noeud 1, vers le noeud 10 à travers le noeud 1, vers le noeud 11 à travers le noeud 13 et vers le noeud 12 à travers le noeud 13,
(vii) on route des paquets directement du noeud 6 vers l'un des noeuds 0, 2, 7, 13 et 14, et indirectement vers le noeud 1 à travers le noeud 0, vers le noeud 3 à travers le noeud 2, vers le noeud 4 à travers le noeud 2, vers le noeud 5 à travers le noeud 14, vers le noeud 8 à travers le noeud 14, vers le noeud 9 à travers le noeud 2, vers le noeud 10 à travers le noeud 2, vers le noeud 11 à travers le noeud 0 et vers le noeud 12 à travers le noeud 13,
(viii) on route des paquets directement du noeud 7 vers l'un des noeuds 1, 3, 6, 11 et 12, et indirectement vers le noeud 0 à travers le noeud 1, vers le noeud 2 à travers le noeud 3, vers le noeud 4 à travers le noeud 12, vers le noeud 5 à travers le noeud 3, vers le noeud 8 à travers le noeud 3, vers le noeud 9 à travers le noeud 1, vers le noeud 10 à travers le noeud 11, vers le noeud 13 à travers le noeud 12 et vers le noeud 14 à travers le noeud 6,
(ix) on route des paquets directement du noeud 8 vers l'un des noeuds 0, 3, 9, 12 et 14, et indirectement vers le noeud 1 à travers le noeud 0, vers le noeud 2 à travers le noeud 3, vers le noeud 4 à travers le noeud 12, vers le noeud 5 à travers le noeud 14, vers le noeud 6 à travers le noeud 0, vers le noeud 7 à travers le noeud 12, vers le noeud 10 à travers le noeud 12, vers le noeud 11 à travers le noeud 0 et vers le noeud 13 à travers le noeud 12,
(x) on route des paquets directement du noeud 9 vers l'un des noeuds 1, 2, 4, 8 et 13, et indirectement vers le noeud 0 à travers le noeud 1, vers le noeud 3 à travers le noeud 2, vers le noeud 5 à travers le noeud 4, vers le noeud 6 à travers le noeud 13, vers le noeud 7 à travers le noeud 1, vers le noeud 10 à travers le noeud 1, vers le noeud 11 à travers le noeud 13, vers le noeud 12 à travers le noeud 13 et vers le noeud 14 à travers le noeud 8,
(xi) on route des paquets directement du noeud 10 vers l'un des noeuds 1, 2, 11, 12 et 14, et indirectement vers le noeud 0 à travers le noeud 1, vers le noeud 3 à travers le noeud 2, vers le noeud 4 à travers le noeud 2, vers le noeud 5 à travers le noeud 14, vers le noeud 6 à travers le noeud 2, vers le noeud 7 à travers le noeud 12, vers le noeud 8 à travers le noeud 14, vers le noeud 9 à travers le noeud 2 et vers le noeud 13 à travers le noeud 12,
(xii) on route des paquets directement du noeud 11 vers l'un des noeuds 0, 3, 7, 10 et 13, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 7, vers le noeud 8 à travers le noeud 3, vers le noeud 9 à travers le noeud 13, vers le noeud 12 à travers le noeud 13 et vers le noeud 14 à travers le noeud 10,
(xiii) on route des paquets directement du noeud 12 vers l'un des noeuds 4, 7, 8, 10 et 13, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 4, vers le noeud 6 à travers le noeud 7, vers le noeud 9 à travers le noeud 8, vers le noeud 11 à travers le noeud 10 et vers le noeud 14 à travers le noeud 8,
(xiv) on route des paquets directement du noeud 13 vers l'un des noeuds 5, 6, 9, 11 et 12, et indirectement vers le noeud 0 à travers le noeud 11, vers le noeud 1 à travers le noeud 9, vers le noeud 2 à travers le noeud 9, vers le noeud 3 à travers le noeud 5, vers le noeud 4 à travers le noeud 5, vers le noeud 7 à travers le noeud 6, vers le noeud 8 à travers le noeud 9, vers le noeud 10 à travers le noeud 11 et vers le noeud 14 à travers le noeud 5, et
(xv) on route des paquets directement du noeud 14 vers l'un des noeuds 5, 6, 8 et 10, et indirectement vers le noeud 0 à travers le noeud 6, vers le noeud 1 à travers le noeud 10, vers le noeud 2 à travers le noeud 10, vers le noeud 3 à travers le noeud 8, vers le noeud 4 à travers le noeud 5, vers le noeud 7 à travers le noeud 6, vers le noeud 9 à travers le noeud 8, vers le noeud 11 à travers le noeud 10, vers le noeud 12 à travers le noeud 10, et vers le noeud 13 à travers le noeud 6.

10. Procédé dans un système réparti, comprenant les étapes suivantes :
on établit un réseau contenant seize noeuds, incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, un noeud 13, un noeud 14 et un noeud 15; et
on route des paquets à travers le réseau de façon à empêcher un blocage, sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11, vers le noeud 12 à travers le noeud 4, vers le noeud 13 à travers le noeud 6, vers le noeud 14 à travers le noeud 8 et vers le noeud 15 à travers le noeud 4,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10, vers le noeud 12 à travers le noeud 7, vers le noeud 13 à travers le noeud 5, vers le noeud 14 à travers le noeud 5 et vers le noeud 15 à travers le noeud 9,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10, vers le noeud 12 à travers le noeud 10, vers le noeud 13 à travers le noeud 6, vers le noeud 14 à travers le noeud 6 et vers le noeud 15 à travers le noeud 4,
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11, vers le noeud 12 à travers le noeud 7, vers le noeud 13 à travers le noeud 11, vers le noeud 14 à travers le noeud 5 et vers le noeud 15 à travers le noeud 7,
(v) on route des paquets directement du noeud 4 vers l'un des noeuds 0, 2, 5, 12 et 15, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 0, vers le noeud 9 à travers le noeud 2, vers le noeud 10 à travers le noeud 12, vers le noeud 11 à travers le noeud 0, vers le noeud 13 à travers le noeud 12 et vers le noeud 14 à travers le noeud 15,
(vi) on route des paquets directement du noeud 5 vers l'un des noeuds 1, 3, 4, 13 et 14, et indirectement vers le noeud 0 à travers le noeud 1, vers le noeud 2 à travers le noeud 3, vers le noeud 6 à travers le noeud 13, vers le noeud 7 à travers le noeud 1, vers le noeud 8 à travers le noeud 3, vers le noeud 9 à travers le noeud 1, vers le noeud 10 à travers le noeud 1, vers le noeud 11 à travers le noeud 13, vers le noeud 12 à travers le noeud 13 et vers le noeud 15 à travers le noeud 14,
(vii) on route des paquets directement du noeud 6 vers l'un des noeuds 0, 2, 7, 13 et 14, et indirectement vers le noeud 1 à travers le noeud 0, vers le noeud 3 à travers le noeud 2, vers le noeud 4 à travers le noeud 2, vers le noeud 5 à travers le noeud 14, vers le noeud 8 à travers le noeud 14, vers le noeud 9 à travers le noeud 2, vers le noeud 10 à travers le noeud 2, vers le noeud 11 à travers le noeud 0, vers le noeud 12 à travers le noeud 13 et vers le noeud 15 à travers le noeud 14,
(viii) on route des paquets directement du noeud 7 vers l'un des noeuds 1, 3, 6, 12 et 15, et indirectement vers le noeud 0 à travers le noeud 1, vers le noeud 2 à travers le noeud 3, vers le noeud 4 à travers le noeud 15, vers le noeud 5 à travers le noeud 3, vers le noeud 8 à travers le noeud 3, vers le noeud 9 à travers le noeud 15, vers le noeud 10 à travers le noeud 1, vers le noeud 11 à travers le noeud 3, vers le noeud 13 à travers le noeud 12 et vers le noeud 14 à travers le noeud 15,
(ix) on route des paquets directement du noeud 8 vers l'un des noeuds 0, 3, 9, 12 et 14, et indirectement vers le noeud 1 à travers le noeud 0, vers le noeud 2 à travers le noeud 3, vers le noeud 4 à travers le noeud 12, vers le noeud 5 à travers le noeud 14, vers le noeud 6 à travers le noeud 0, vers le noeud 7 à travers le noeud 12, vers le noeud 10 à travers le noeud 12, vers le noeud 11 à travers le noeud 0, vers le noeud 13 à travers le noeud 12 et vers le noeud 15 à travers le noeud 14,
(x) on route des paquets directement du noeud 9 vers l'un des noeuds 1, 2, 8, 13 et 15, et indirectement vers le noeud 0 à travers le noeud 1, vers le noeud 3 à travers le noeud 2, vers le noeud 4 à travers le noeud 15, vers le noeud 5 à travers le noeud 13, vers le noeud 6 à travers le noeud 13, vers le noeud 7 à travers le noeud 1, vers le noeud 10 à travers le noeud 1, vers le noeud 11 à travers le noeud 13, vers le noeud 12 à travers le noeud 13 et vers le noeud 14 à travers le noeud 15,
(xi) on route des paquets directement du noeud 10 vers l'un des noeuds 1, 2, 11, 12 et 14, et indirectement vers le noeud 0 à travers le noeud 1, vers le noeud 3 à travers le noeud 2, vers le noeud 4 à travers le noeud 2, vers le noeud 5 à travers le noeud 14, vers le noeud 6 à travers le noeud 14, vers le noeud 7 à travers le noeud 12, vers le noeud 8 à travers le noeud 14, vers le noeud 9 à travers le noeud 2, vers le noeud 13 à travers le noeud 12 et vers le noeud 15 à travers le noeud 14,
(xii) on route des paquets directement du noeud 11 vers l'un des noeuds 0, 3, 10, 13 et 15, et indirectement vers le noeud 1 à travers le noeud 0, vers le noeud 2 à travers le noeud 3, vers le noeud 4 à travers le noeud 15, vers le noeud 5 à travers le noeud 3, vers le noeud 6 à travers le noeud 13, vers le noeud 7 à travers le noeud 15, vers le noeud 8 à travers le noeud 3, vers le noeud 9 à travers le noeud 15, vers le noeud 12 à travers le noeud 13 et vers le noeud 14 à travers le noeud 15,
(xiii) on route des paquets directement du noeud 12 vers l'un des noeuds 4, 7, 8, 10 et 13, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 4, vers le noeud 6 à travers le noeud 7, vers le noeud 9 à travers le noeud 8, vers le noeud 11 à travers le noeud 10, vers le noeud 14 à travers le noeud 8 et vers le noeud 15 à travers le noeud 4,
(xiv) on route des paquets directement du noeud 13 vers l'un des noeuds 5, 6, 9, 11 et 12, et indirectement vers le noeud 0 à travers le noeud 11, vers le noeud 1 à travers le noeud 9, vers le noeud 2 à travers le noeud 9, vers le noeud 3 à travers le noeud 5, vers le noeud 4 à travers le noeud 5, vers le noeud 7 à travers le noeud 6, vers le noeud 8 à travers le noeud 9, vers le noeud 10 à travers le noeud 11, vers le noeud 14 à travers le noeud 5 et vers le noeud 15 à travers le noeud 9,
(xv) on route des paquets directement du noeud 14 vers l'un des noeuds 5, 6, 8, 10 et 15, et indirectement vers le noeud 0 à travers le noeud 6, vers le noeud 1 à travers le noeud 10, vers le noeud 2 à travers le noeud 10, vers le noeud 3 à travers le noeud 8, vers le noeud 4 à travers le noeud 5, vers le noeud 7 à travers le noeud 6, vers le noeud 9 à travers le noeud 8, vers le noeud 11 à travers le noeud 10, vers le noeud 12 à travers le noeud 10 et vers le noeud 13 à travers le noeud 6, et
(xvi) on route des paquets directement du noeud 15 vers l'un des noeuds 4, 7, 9, 11 et 13, et indirectement vers le noeud 0 à travers le noeud 11, vers le noeud 1 à travers le noeud 7, vers le noeud 2 à travers le noeud 9, vers le noeud 3 à travers le noeud 11, vers le noeud 5 à travers le noeud 4, vers le noeud 6 à travers le noeud 7, vers le noeud 8 à travers le noeud 9, vers le noeud 10 à travers le noeud 11, vers le noeud 12 à travers le noeud 7 et vers le noeud 13 à travers le noeud 11.

11. Système réparti comprenant sept noeuds dans un réseau qui n'est pas entièrement connecté, les noeuds incluant un noeud 0, un noeud 1, un noeud 2, un noeud 3, un noeud 4, un noeud 5 et un noeud 6, les noeuds étant reliés pour la communication de la façon suivante :
le noeud 0 est relié pour la communication au noeud 1, au noeud 3, au noeud 4, au noeud 5 et au noeud 6;
le noeud 1 est relié pour la communication au noeud 0, au noeud 2, au noeud 3, au noeud 4 et au noeud 5;
le noeud 2 est relié pour la communication au noeud 1, au noeud 3, au noeud 4, au noeud 5 et au noeud 6;
le noeud 3 est relié pour la communication au noeud 0, au noeud 1, au noeud 2, au noeud 5 et au noeud 6;
le noeud 4 est relié pour la communication au noeud 0, au noeud 1, au noeud 2, au noeud 5 et au noeud 6;
le noeud 5 est relié pour la communication au noeud 0, au noeud 1, au noeud 2, au noeud 3 et au noeud 4; et
le noeud 6 est relié pour la communication au noeud 0, au noeud 2, au noeud 3 et au noeud 4.

12. Système réparti comprenant huit noeuds dans un réseau qui n'est pas entièrement connecté, les noeuds incluant un noeud 0, un noeud 1, un noeud 2, un noeud 3, un noeud 4, un noeud 5, un noeud 6 et un noeud 7, les noeuds étant reliés pour la communication de la façon suivante :
le noeud 0 est relié pour la communication au noeud 1, au noeud 3, au noeud 4, au noeud 5 et au noeud 6;
le noeud 1 est relié pour la communication au noeud 0, au noeud 2, au noeud 4, au noeud 5 et au noeud 7;
le noeud 2 est relié pour la communication au noeud 1, au noeud 3, au noeud 4, au noeud 6 et au noeud 7;
le noeud 3 est relié pour la communication au noeud 0, au noeud 2, au noeud 5, au noeud 6 et au noeud 7;
le noeud 4 est relié pour la communication au noeud 0, au noeud 1, au noeud 2, au noeud 5 et au noeud 6;
le noeud 5 est relié pour la communication au noeud 0, au noeud 1, au noeud 3, au noeud 4 et au noeud 7;
le noeud 6 est relié pour la communication au noeud 0, au noeud 2, au noeud 3, au noeud 4, et au noeud 7; et
le noeud 7 est relié pour la communication au noeud 1, au noeud 2, au noeud 3, au noeud 5 et au noeud 6.

13. Système réparti comprenant neuf noeuds dans un réseau qui n'est pas entièrement connecté, les noeuds incluant un noeud 0, un noeud 1, un noeud 2, un noeud 3, un noeud 4, un noeud 5, un noeud 6, un noeud 7, et un noeud 8, les noeuds étant reliés pour la communication de la façon suivante :
le noeud 0 est relié pour la communication au noeud 1, au noeud 3, au noeud 4, au noeud 6 et au noeud 8,
le noeud 1 est relié pour la communication au noeud 0, au noeud 2, au noeud 4, au noeud 5 et au noeud 7;
le noeud 2 est relié pour la communication au noeud 1, au noeud 3, au noeud 4, au noeud 6 et au noeud 7;
le noeud 3 est relié pour la communication au noeud 0, au noeud 2, au noeud 5, au noeud 7 et au noeud 8;
le noeud 4 est relié pour la communication au noeud 0, au noeud 1, au noeud 2, au noeud 5 et au noeud 6;
le noeud 5 est relié pour la communication au noeud 1, au noeud 3, au noeud 4, au noeud 7 et au noeud 8;
le noeud 6 est relié pour la communication au noeud 0, au noeud 2, au noeud 4, au noeud 7, et au noeud 8;
le noeud 7 est relié pour la communication au noeud 1, au noeud 2, au noeud 3, au noeud 5 et au noeud 6; et
le noeud 8 est relié pour la communication au noeud 0, au noeud 3, au noeud 5, au noeud 6.

14. Système réparti comprenant dix noeuds dans un réseau qui n'est pas entièrement connecté, les noeuds incluant un noeud 0, un noeud 1, un noeud 2, un noeud 3, un noeud 4, un noeud 5, un noeud 6, un noeud 7, un noeud 8, et un noeud 9, les noeuds étant reliés pour la communication de la façon suivante :
le noeud 0 est relié pour la communication au noeud 1, au noeud 3, au noeud 4, au noeud 6 et au noeud 8;
le noeud 1 est relié pour la communication au noeud 0, au noeud 2, au noeud 5, au noeud 7 et au noeud 9;
le noeud 2 est relié pour la communication au noeud 1, au noeud 3, au noeud 4, au noeud 6 et au noeud 9;
le noeud 3 est relié pour la communication au noeud 0, au noeud 2, au noeud 5, au noeud 7 et au noeud 8;
le noeud 4 est relié pour la communication au noeud 0, au noeud 2, au noeud 5, au noeud 6 et au noeud 9;
le noeud 5 est relié pour la communication au noeud 1, au noeud 3, au noeud 4, au noeud 7 et au noeud 8;
le noeud 6 est relié pour la communication au noeud 0, au noeud 2, au noeud 4, au noeud 7, et au noeud 8;
le noeud 7 est relié pour la communication au noeud 1, au noeud 3, au noeud 5, au noeud 6, et au noeud 9;
le noeud 8 est relié pour la communication au noeud 0, au noeud 3, au noeud 5, au noeud 6, et au noeud 9; et
le noeud 9 est relié pour la communication au noeud 1, au noeud 2, au noeud 4, au noeud 7 et au noeud 8.

15. Système réparti comprenant onze noeuds dans un réseau qui n'est pas entièrement connecté, les noeuds incluant un noeud 0, un noeud 1, un noeud 2, un noeud 3, un noeud 4, un noeud 5, un noeud 6, un noeud 7, un noeud 8, un noeud 9, et un noeud 10 les noeuds étant reliés pour la communication de la façon suivante :
le noeud 0 est relié pour la communication au noeud 1, au noeud 3, au noeud 4, au noeud 6 et au noeud 8;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 0, au noeud 2, au noeud 5, au noeud 7 et au noeud 8;
le noeud 4 est relié pour la communication au noeud 0, au noeud 2, au noeud 5, au noeud 7 et au noeud 9;
le noeud 5 est relié pour la communication au noeud 1, au noeud 3, au noeud 4, au noeud 8 et au noeud 10;
le noeud 6 est relié pour la communication au noeud 0, au noeud 2, au noeud 7, au noeud 8, et au noeud 10;
le noeud 7 est relié pour la communication au noeud 1, au noeud 3, au noeud 4, au noeud 6, et au noeud 9;
le noeud 8 est relié pour la communication au noeud 0, au noeud 3, au noeud 5, au noeud 6, et au noeud 9;
le noeud 9 est relié pour la communication au noeud 1, au noeud 2, au noeud 4, au noeud 7 et au noeud 8; et
le noeud 10 est relié pour la communication au noeud 1, au noeud 2, au noeud 5, et au noeud 6.

16. Système réparti comprenant douze noeuds dans un réseau qui n'est pas entièrement connecté, les noeuds incluant un noeud 0, un noeud 1, un noeud 2, un noeud 3, un noeud 4, un noeud 5, un noeud 6, un noeud 7, un noeud 8, un noeud 9, un noeud 10 et un noeud 11, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 11;
le noeud 5 est relié pour la communication au noeud 1, au noeud 3, au noeud 4, au noeud 8 et au noeud 10;
le noeud 6 est relié pour la communication au noeud 0, au noeud 2, au noeud 7, au noeud 8, et au noeud 10;
le noeud 7 est relié pour la communication au noeud 1, au noeud 3, au noeud 6, au noeud 9, et au noeud 11;
le noeud 8 est relié pour la communication au noeud 0, au noeud 3, au noeud 5, au noeud 6, et au noeud 9;
le noeud 9 est relié pour la communication au noeud 1, au noeud 2, au noeud 4, au noeud 7 et au noeud 8;
le noeud 10 est relié pour la communication au noeud 1, au noeud 2, au noeud 5, au noeud 6 et au noeud 11; et
le noeud 11 est relié pour la communication au noeud 0, au noeud 3, au noeud 4, au noeud 7 et au noeud 10.

17. Système réparti comprenant treize noeuds dans un réseau qui n'est pas entièrement connecté, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, et un noeud 12, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 12;
le noeud 5 est relié pour la communication au noeud 1, au noeud 3, au noeud 4, au noeud 6 et au noeud 8;
le noeud 6 est relié pour la communication au noeud 0, au noeud 2, au noeud 5, au noeud 7, et au noeud 10;
le noeud 7 est relié pour la communication au noeud 1, au noeud 3, au noeud 6, au noeud 11, et au noeud 12;
le noeud 8 est relié pour la communication au noeud 0, au noeud 3, au noeud 5, au noeud 9, et au noeud 12;
le noeud 9 est relié pour la communication au noeud 1, au noeud 2, au noeud 4, au noeud 8 et au noeud 11;
le noeud 10 est relié pour la communication au noeud 1, au noeud 2, au noeud 6, au noeud 11 et au noeud 12;
le noeud 11 est relié pour la communication au noeud 0, au noeud 3, au noeud 7, au noeud 9 et au noeud 10; et
le noeud 12 est relié pour la communication au noeud 4, au noeud 7, au noeud 8, et au noeud 10.

18. Système réparti comprenant quatorze noeuds dans un réseau qui n'est pas entièrement connecté, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, et un noeud 13 les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 12;
le noeud 5 est relié pour la communication au noeud 1, au noeud 3, au noeud 4, au noeud 8 et au noeud 13;
le noeud 6 est relié pour la communication au noeud 0, au noeud 2, au noeud 7, au noeud 10, et au noeud 13;
le noeud 7 est relié pour la communication au noeud 1, au noeud 3, au noeud 6, au noeud 11, et au noeud 12;
le noeud 8 est relié pour la communication au noeud 0, au noeud 3, au noeud 5, au noeud 9, et au noeud 12;
le noeud 9 est relié pour la communication au noeud 1, au noeud 2, au noeud 4, au noeud 8 et au noeud 13;
le noeud 10 est relié pour la communication au noeud 1, au noeud 2, au noeud 6, au noeud 11 et au noeud 12;
le noeud 11 est relié pour la communication au noeud 0, au noeud 3, au noeud 7, au noeud 10 et au noeud 13;
le noeud 12 est relié pour la communication au noeud 4, au noeud 7, au noeud 8, au noeud 10 et au noeud 13; et
le noeud 13 est relié pour la communication au noeud 5, au noeud 6, au noeud 9, au noeud 11 et au noeud 12.

19. Système réparti comprenant quinze noeuds dans un réseau qui n'est pas entièrement connecté, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, un noeud 13, et un noeud 14 les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 12;
le noeud 5 est relié pour la communication au noeud 1, au noeud 3, au noeud 4, au noeud 13 et au noeud 14;
le noeud 6 est relié pour la communication au noeud 0, au noeud 2, au noeud 7, au noeud 13, et au noeud 14;
le noeud 7 est relié pour la communication au noeud 1, au noeud 3, au noeud 6, au noeud 11, et au noeud 12;
le noeud 8 est relié pour la communication au noeud 0, au noeud 3, au noeud 9, au noeud 12, et au noeud 14;
le noeud 9 est relié pour la communication au noeud 1, au noeud 2, au noeud 4, au noeud 8 et au noeud 13;
le noeud 10 est relié pour la communication au noeud 1, au noeud 2, au noeud 11, au noeud 12 et au noeud 14;
le noeud 11 est relié pour la communication au noeud 0, au noeud 3, au noeud 7, au noeud 10 et au noeud 13;
le noeud 12 est relié pour la communication au noeud 4, au noeud 7, au noeud 8, au noeud 10 et au noeud 13;
le noeud 13 est relié pour la communication au noeud 5, au noeud 6, au noeud 9, au noeud 11 et au noeud 12; et
le noeud 14 est relié pour la communication au noeud 5, au noeud 6, au noeud 8, et au noeud 10.

20. Système réparti selon l'une quelconque des revendications 11-19, dans lequel chacun des noeuds a cinq ports.

21. Système réparti selon la revendication 11, 12, 15, 16 ou 17, dans lequel le noeud 0 et le noeud 1 communiquent par un bus.

22. Système réparti selon la revendication 11, 12, 15, 16 ou 17, dans lequel le noeud 2 et le noeud 3 communiquent par un bus.

23. Système réparti selon la revendication 11, 12, 15, 16 ou 17, dans lequel le noeud 4 et le noeud 5 communiquent par un bus.

24. Système réparti selon la revendication 12, 15, 16 ou 17, dans lequel le noeud 6 et le noeud 7 communiquent par un bus.

25. Système réparti selon la revendication 15, 16 ou 17, dans lequel le noeud 8 et le noeud 9 communiquent par un bus.

26. Système réparti selon la revendication 16 ou 17, dans lequel le noeud 10 et le noeud 11 communiquent par un bus.

27. Système réparti selon la revendication 13, 14, 18 ou 19, dans lequel le noeud 0 et le noeud 1 sont des noeuds qui sont placés dans un même châssis.

28. Système réparti selon la revendication 13, 14, 18 ou 19, dans lequel le noeud 2 et le noeud 3 sont des noeuds qui sont placés dans un même châssis.

29. Système réparti selon la revendication 13, 14, 18 ou 19, dans lequel le noeud 4 et le noeud 5 sont des noeuds qui sont placés dans un même châssis.

30. Système réparti selon la revendication 13, 14, 18 ou 19, dans lequel le noeud 6 et le noeud 7 sont des noeuds qui sont placés dans un même châssis.

31. Système réparti selon la revendication 14, 18 ou 19, dans lequel le noeud 8 et le noeud 9 sont des noeuds qui sont placés dans un même châssis.

32. Système réparti selon la revendication 18 ou 19, dans lequel le noeud 10 et le noeud 11 sont des noeuds qui sont placés dans un même châssis.

33. Système réparti selon la revendication 18 ou 19, dans lequel le noeud 12 et le noeud 13 sont des noeuds qui sont placés dans un même châssis.

34. Procédé pour configurer un système réparti défini dans l'une des revendications 11 à 19, comprenant les étapes suivantes :
on crée un ensemble de topologies de réseau, chacune d'elles étant associée à un groupe de noeuds, chaque groupe ayant un nombre de noeuds différent, chaque topologie de réseau étant configurée sur la base de caractéristiques de performances, chacune de l'ensemble de topologies de réseau ne connectant pas entièrement le groupe de noeuds associé;
on sélectionne l'une de l'ensemble de topologies de réseau pour un réseau avec des noeuds de réseau, sur la base d'un nombre des noeuds de réseau dans le réseau; et
on configure le réseau en utilisant la topologie de réseau sélectionnée.

35. Procédé selon la revendication 34, dans lequel chacune de l'ensemble de topologies de réseau est configurée sur la base d'un diamètre de la topologie de réseau.

36. Procédé selon la revendication 35, dans lequel chacune de l'ensemble de topologies de réseau est configurée sur la base d'une largeur de bande de bissection de la topologie de réseau.

37. Procédé selon la revendication 34, dans lequel chacune de l'ensemble de topologies de réseau est configurée sur la base du fait que la topologie de réseau est symétrique ou non.

38. Procédé selon la revendication 37, dans lequel chacune de l'ensemble de topologies de réseau est configurée sur la base du fait que la topologie de réseau est symétrique ou non en ce qui concerne les noeuds.

39. Procédé selon la revendication 37, dans lequel chacune de l'ensemble de topologies de réseau est configurée sur la base du fait que la topologie de réseau est symétrique ou non en ce qui concerne les bords.

40. Procédé selon la revendication 34, dans lequel chacune de l'ensemble de topologies de réseau est configurée sur la base d'une longueur de chemin moyenne de la topologie de réseau.

41. Procédé selon la revendication 34, dans lequel chaque topologie de réseau est configurée pour faciliter l'amélioration des performances du réseau.

42. Procédé selon la revendication 34, dans lequel chaque topologie de réseau est configurée pour faciliter la réduction des performances du réseau.

43. Procédé selon la revendication 34, dans lequel le nombre de noeuds dans chaque groupe forme une séquence.

44. Procédé selon la revendication 43, dans lequel la séquence commence à sept noeuds et se termine à seize noeuds.

45. Réseau comprenant :
une multiplicité de noeuds partenaires contenus dans un même châssis; et
un noeud non partenaire connecté à l'un au moins de la multiplicité de noeuds partenaires pour envoyer du trafic de réseau à l'au moins un noeud partenaire.

46. Procédé dans un système réparti, comprenant les étapes suivantes :
on établit un réseau ayant sept noeuds qui ne sont pas entièrement connectés, les noeuds incluant un noeud 0, un noeud 1, un noeud 2, un noeud 3, un noeud 4, un noeud 5 et un noeud 6, les noeuds étant reliés pour la communication de la façon suivante :
le noeud 0 est relié pour la communication au noeud 1, au noeud 3, au noeud 4, au noeud 5 et au noeud 6;
le noeud 1 est relié pour la communication au noeud 0, au noeud 2, au noeud 3, au noeud 4 et au noeud 5;
le noeud 2 est relié pour la communication au noeud 1, au noeud 3, au noeud 4, au noeud 5 et au noeud 6;
le noeud 3 est relié pour la communication au noeud 0, au noeud 1, au noeud 2, au noeud 5 et au noeud 6;
le noeud 4 est relié pour la communication au noeud 0, au noeud 1, au noeud 2, au noeud 5 et au noeud 6;
le noeud 5 est relié pour la communication au noeud 0, au noeud 1, au noeud 2, au noeud 3 et au noeud 4; et
le noeud 6 est relié pour la communication au noeud 0, au noeud 2, au noeud 3 et au noeud 4; et
on reconfigure le réseau en effectuant l'une au moins des étapes suivantes :
on ajoute un noeud 7 au réseau, et
on supprime le noeud 6 du réseau.

47. Procédé selon la revendication 46, dans lequel l'étape d'ajout comprend les opérations suivantes :
on supprime la liaison de communication entre le noeud 3 et noeud 1;
on supprime la liaison de communication entre le noeud 5 et noeud 2;
on relie pour la communication le noeud 7 et le noeud 1;
on relie pour la communication le noeud 7 et le noeud 2;
on relie pour la communication le noeud 7 et le noeud 3;
on relie pour la communication le noeud 7 et le noeud 5; et
on relie pour la communication le noeud 7 et le noeud 6.

48. Procédé selon la revendication 46, dans lequel l'étape de suppression comprend les étapes suivantes :
on supprime la liaison de communication entre le noeud 6 et le noeud 0;
on supprime la liaison de communication entre le noeud 6 et le noeud 2;
on supprime la liaison de communication entre le noeud 6 et le noeud 3;
on supprime la liaison de communication entre le noeud 6 et le noeud 4;
on relie pour la communication le noeud 2 et le noeud 0; et
on relie pour la communication le noeud 4 et le noeud 3.

49. Procédé dans un système réparti, comprenant les étapes suivantes :
on établit un réseau ayant huit noeuds qui ne sont pas entièrement connectés, les noeuds incluant un noeud 0, un noeud 1, un noeud 2, un noeud 3, un noeud 4, un noeud 5, un noeud 6, et un noeud 7, les noeuds étant reliés pour la communication de la façon suivante :
le noeud 0 est relié pour la communication au noeud 1, au noeud 3, au noeud 4, au noeud 5 et au noeud 6;
le noeud 1 est relié pour la communication au noeud 0, au noeud 2, au noeud 4, au noeud 5 et au noeud 7;
le noeud 2 est relié pour la communication au noeud 1, au noeud 3, au noeud 4, au noeud 6 et au noeud 7;
le noeud 3 est relié pour la communication au noeud 0, au noeud 2, au noeud 5, au noeud 6 et au noeud 7;
le noeud 4 est relié pour la communication au noeud 0, au noeud 1, au noeud 2, au noeud 5 et au noeud 6;
le noeud 5 est relié pour la communication au noeud 0, au noeud 1, au noeud 3, au noeud 4 et au noeud 7;
le noeud 6 est relié pour la communication au noeud 0, au noeud 2, au noeud 3, au noeud 4 et au noeud 7; et
le noeud 7 est relié pour la communication au noeud 1, au noeud 2, au noeud 3, au noeud 5, et au noeud 6; et
on reconfigure le réseau en effectuant l'une au moins des étapes suivantes :
on ajoute un noeud 8 au réseau, et
on supprime le noeud 7 du réseau.

50. Procédé selon la revendication 49, dans lequel l'étape d'ajout comprend les opérations suivantes :
on supprime la liaison de communication entre le noeud 5 et le noeud 0;
on supprime la liaison de communication entre le noeud 6 et le noeud 3;
on relie pour la communication le noeud 8 et le noeud 0;
on relie pour la communication le noeud 8 et le noeud 3;
on relie pour la communication le noeud 8 et le noeud 5; et
on relie pour la communication le noeud 8 et le noeud 6.

51. Procédé selon la revendication 49, dans lequel l'étape de suppression comprend les opérations suivantes :
on supprime la liaison de communication entre le noeud 7 et le noeud 1;
on supprime la liaison de communication entre le noeud 7 et le noeud 2;
on supprime la liaison de communication entre le noeud 7 et le noeud 3;
on supprime la liaison de communication entre le noeud 7 et le noeud 5;
on supprime la liaison de communication entre le noeud 7 et le noeud 6;
on relie pour la communication le noeud 3 et le noeud 1; et
on relie pour la communication le noeud 5 et le noeud 2.

52. Procédé selon la revendication 49, dans lequel l'étape de reconfiguration comprend :
l'ajout d'un noeud 8 et d'un noeud 9 au réseau.

53. Procédé selon la revendication 51, dans lequel l'étape de reconfiguration comprend les étapes suivantes :
on supprime la liaison de communication entre le noeud 5 et le noeud 0;
on supprime la liaison de communication entre le noeud 6 et le noeud 3;
on supprime la liaison de communication entre le noeud 4 et le noeud 1;
on supprime la liaison de communication entre le noeud 7 et le noeud 2;
on relie pour la communication le noeud 8 et le noeud 0;
on relie pour la communication le noeud 8 et le noeud 3;
on relie pour la communication le noeud 8 et le noeud 5;
on relie pour la communication le noeud 8 et le noeud 6;
on relie pour la communication le noeud 9 et le noeud 1;
on relie pour la communication le noeud 9 et le noeud 2;
on relie pour la communication le noeud 9 et le noeud 4;
on relie pour la communication le noeud 9 et le noeud 7; et
on relie pour la communication le noeud 9 et le noeud 8.

54. Procédé selon la revendication 49, dans lequel l'étape de reconfiguration comprend :
la suppression du noeud 6 et du noeud 7 du réseau.

55. Procédé selon la revendication 54, dans lequel l'étape de reconfiguration comprend les étapes suivantes :
on supprime la liaison de communication entre le noeud 6 et le noeud 0;
on supprime la liaison de communication entre le noeud 6 et le noeud 2;
on supprime la liaison de communication entre le noeud 6 et le noeud 3;
on supprime la liaison de communication entre le noeud 6 et le noeud 4;
on supprime la liaison de communication entre le noeud 7 et le noeud 1;
on supprime la liaison de communication entre le noeud 7 et le noeud 2;
on supprime la liaison de communication entre le noeud 7 et le noeud 3;
on supprime la liaison de communication entre le noeud 7 et le noeud 5;
on supprime la liaison de communication entre le noeud 7 et le noeud 6;
on relie pour la communication le noeud 2 et le noeud 0;
on relie pour la communication le noeud 4 et le noeud 3;
on relie pour la communication le noeud 3 et le noeud 1; et
on relie pour la communication le noeud 5 et le noeud 2.

56. Procédé dans un système réparti, comprenant les étapes suivantes :
on établit un réseau ayant neuf noeuds qui ne sont pas entièrement connectés, les noeuds incluant un noeud 0, un noeud 1, un noeud 2, un noeud 3, un noeud 4, un noeud 5, un noeud 6, un noeud 7, et un noeud 8, les noeuds étant reliés pour la communication de la façon suivante :
le noeud 0 est relié pour la communication au noeud 1, au noeud 3, au noeud 4, au noeud 6 et au noeud 8;
le noeud 1 est relié pour la communication au noeud 0, au noeud 2, au noeud 4, au noeud 5 et au noeud 7;
le noeud 2 est relié pour la communication au noeud 1, au noeud 3, au noeud 4, au noeud 6 et au noeud 7;
le noeud 3 est relié pour la communication au noeud 0, au noeud 2, au noeud 5, au noeud 7 et au noeud 8;
le noeud 4 est relié pour la communication au noeud 0, au noeud 1, au noeud 2, au noeud 5 et au noeud 6;
le noeud 5 est relié pour la communication au noeud 1, au noeud 3, au noeud 4, au noeud 7 et au noeud 8;
le noeud 6 est relié pour la communication au noeud 0, au noeud 2, au noeud 4, au noeud 7 et au noeud 8;
le noeud 7 est relié pour la communication au noeud 1, au noeud 2, au noeud 3, au noeud 5, et au noeud 6; et
le noeud 8 est relié pour la communication au noeud 0, au noeud 3, au noeud 5, et au noeud 6; et
on reconfigure le réseau en effectuant l'une au moins des étapes suivantes :
on ajoute un noeud 9 au réseau, et
on supprime le noeud 8 du réseau.

57. Procédé selon la revendication 56, dans lequel l'étape d'ajout comprend les opérations suivantes :
on supprime la liaison de communication entre le noeud 4 et le noeud 1;
on supprime la liaison de communication entre le noeud 7 et le noeud 2;
on relie pour la communication le noeud 9 et le noeud 1;
on relie pour la communication le noeud 9 et le noeud 2;
on relie pour la communication le noeud 9 et le noeud 4; et
on relie pour la communication le noeud 9 et le noeud 7; et
on relie pour la communication le noeud 9 et le noeud 8.

58. Procédé selon la revendication 55, dans lequel l'étape de suppression comprend les opérations suivantes :
on supprime la liaison de communication entre le noeud 8 et le noeud 0;
on supprime la liaison de communication entre le noeud 8 et le noeud 3;
on supprime la liaison de communication entre le noeud 8 et le noeud 5;
on supprime la liaison de communication entre le noeud 8 et le noeud 6;
on relie pour la communication le noeud 5 et le noeud 0; et
on relie pour la communication le noeud 6 et le noeud 3.

59. Procédé dans un système réparti, comprenant les étapes suivantes :
on établit un réseau ayant dix noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, et un noeud 9, les noeuds étant reliés pour la communication de la façon suivante :
le noeud 0 est relié pour la communication au noeud 1, au noeud 3, au noeud 4, au noeud 6 et au noeud 8;
le noeud 1 est relié pour la communication au noeud 0, au noeud 2, au noeud 5, au noeud 7 et au noeud 9;
le noeud 2 est relié pour la communication au noeud 1, au noeud 3, au noeud 4, au noeud 6 et au noeud 9;
le noeud 3 est relié pour la communication au noeud 0, au noeud 2, au noeud 5, au noeud 7 et au noeud 8;
le noeud 4 est relié pour la communication au noeud 0, au noeud 2, au noeud 5, au noeud 6 et au noeud 9;
le noeud 5 est relié pour la communication au noeud 1, au noeud 3, au noeud 4, au noeud 7 et au noeud 8;
le noeud 6 est relié pour la communication au noeud 0, au noeud 2, au noeud 4, au noeud 7 et au noeud 8;
le noeud 7 est relié pour la communication au noeud 1, au noeud 3, au noeud 5, au noeud 6, et au noeud 9;
le noeud 8 est relié pour la communication au noeud 0, au noeud 3, au noeud 5, au noeud 6, et au noeud 9; et
le noeud 9 est relié pour la communication au noeud 1, au noeud 2, au noeud 4, au noeud 7, et au noeud 8; et
on reconfigure le réseau en effectuant l'une au moins des étapes suivantes :
on ajoute un noeud 10 au réseau, et
on supprime le noeud 9 du réseau.

60. Procédé selon la revendication 59, dans lequel l'étape d'ajout comprend les opérations suivantes :
on supprime la liaison de communication entre le noeud 2 et le noeud 1;
on supprime la liaison de communication entre le noeud 6 et le noeud 4;
on supprime la liaison de communication entre le noeud 7 et le noeud 5;
on relie pour la communication le noeud 10 et le noeud 1;
on relie pour la communication le noeud 10 et le noeud 2;
on relie pour la communication le noeud 7 et le noeud 4;
on relie pour la communication le noeud 10 et le noeud 5; et
on relie pour la communication le noeud 10 et le noeud 6.

61. Procédé selon la revendication 59, dans lequel l'étape de suppression comprend les opérations suivantes :
on supprime la liaison de communication entre le noeud 9 et le noeud 1;
on supprime la liaison de communication entre le noeud 9 et le noeud 2;
on supprime la liaison de communication entre le noeud 9 et le noeud 4;
on supprime la liaison de communication entre le noeud 9 et le noeud 7;
on supprime la liaison de communication entre le noeud 9 et le noeud 8;
on relie pour la communication le noeud 4 et le noeud 1; et
on relie pour la communication le noeud 7 et le noeud 2.

62. Procédé selon la revendication 59, dans lequel l'étape de reconfiguration comprend :
l'ajout d'un noeud 10 et d'un noeud 11 au réseau.

63. Procédé selon la revendication 62, dans lequel l'étape de reconfiguration comprend les étapes suivantes :
on supprime la liaison de communication entre le noeud 2 et le noeud 1;
on supprime la liaison de communication entre le noeud 6 et le noeud 4;
on supprime la liaison de communication entre le noeud 7 et le noeud 5;
on supprime la liaison de communication entre le noeud 3 et le noeud 0;
on relie pour la communication le noeud 10 et le noeud 1;
on relie pour la communication le noeud 10 et le noeud 2;
on relie pour la communication le noeud 10 et le noeud 5;
on relie pour la communication le noeud 10 et le noeud 6;
on relie pour la communication le noeud 11 et le noeud 0;
on relie pour la communication le noeud 11 et le noeud 3;
on relie pour la communication le noeud 11 et le noeud 4;
on relie pour la communication le noeud 11 et le noeud 7; et
on relie pour la communication le noeud 11 et le noeud 10.

64. Procédé selon la revendication 59, dans lequel l'étape de reconfiguration comprend :
la suppression du noeud 8 et du noeud 9 du réseau.

65. Procédé selon la revendication 64, dans lequel l'étape de suppression comprend les étapes suivantes :
on supprime la liaison de communication entre le noeud 8 et le noeud 0;
on supprime la liaison de communication entre le noeud 8 et le noeud 3;
on supprime la liaison de communication entre le noeud 8 et le noeud 5;
on supprime la liaison de communication entre le noeud 8 et le noeud 6;
on supprime la liaison de communication entre le noeud 9 et le noeud 1;
on supprime la liaison de communication entre le noeud 9 et le noeud 2;
on supprime la liaison de communication entre le noeud 9 et le noeud 4;
on supprime la liaison de communication entre le noeud 9 et le noeud 7;
on supprime la liaison de communication entre le noeud 9 et le noeud 8;
on relie pour la communication le noeud 5 et le noeud 0;
on relie pour la communication le noeud 6 et le noeud 3;
on relie pour la communication le noeud 4 et le noeud 1; et
on relie pour la communication le noeud 7 et le noeud 2.

66. Procédé dans un système réparti, comprenant les étapes suivantes :
on établit un réseau ayant onze noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, un noeud 9, et un noeud 10, les noeuds étant reliés pour la communication de la façon suivante :
le noeud 0 est relié pour la communication au noeud 1, au noeud 3, au noeud 4, au noeud 6 et au noeud 8;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 0, au noeud 2, au noeud 5, au noeud 7 et au noeud 8;
le noeud 4 est relié pour la communication au noeud 0, au noeud 2, au noeud 5, au noeud 7 et au noeud 9;
le noeud 5 est relié pour la communication au noeud 1, au noeud 3, au noeud 4, au noeud 8 et au noeud 10;
le noeud 6 est relié pour la communication au noeud 0, au noeud 2, au noeud 7, au noeud 8 et au noeud 10;
le noeud 7 est relié pour la communication au noeud 1, au noeud 3, au noeud 4, au noeud 6, et au noeud 9;
le noeud 8 est relié pour la communication au noeud 0, au noeud 3, au noeud 5, au noeud 6, et au noeud 9;
le noeud 9 est relié pour la communication au noeud 1, au noeud 2, au noeud 4, au noeud 7, au noeud 8; et
le noeud 10 est relié pour la communication au noeud 1, au noeud 2, au noeud 5 et au noeud 6; et
on reconfigure le réseau en effectuant l'une au moins des étapes suivantes :
on ajoute un noeud 11 au réseau, et
on supprime le noeud 10 du réseau.

67. Procédé selon la revendication 66, dans lequel l'étape d'ajout comprend les opérations suivantes :
on supprime la liaison de communication entre le noeud 3 et le noeud 0;
on supprime la liaison de communication entre le noeud 7 et le noeud 4;
on relie pour la communication le noeud 11 et le noeud 0;
on relie pour la communication le noeud 11 et le noeud 3;
on relie pour la communication le noeud 11 et le noeud 4;
on relie pour la communication le noeud 11 et le noeud 7; et
on relie pour la communication le noeud 11 et le noeud 10.

68. Procédé selon la revendication 66, dans lequel l'étape de suppression comprend les opérations suivantes :
on supprime la liaison de communication entre le noeud 10 et le noeud 1;
on supprime la liaison de communication entre le noeud 10 et le noeud 2;
on supprime la liaison de communication entre le noeud 7 et le noeud 4;
on supprime la liaison de communication entre le noeud 10 et le noeud 5;
on supprime la liaison de communication entre le noeud 10 et le noeud 6;
on relie pour la communication le noeud 2 et le noeud 1; et
on relie pour la communication le noeud 6 et le noeud 4; et
on relie pour la communication le noeud 7 et le noeud 5.

69. Procédé dans un système réparti, comprenant les étapes suivantes :
on établit un réseau ayant douze noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, un noeud 9, un noeud 10, et un noeud 11, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 11;
le noeud 5 est relié pour la communication au noeud 1, au noeud 3, au noeud 4, au noeud 8 et au noeud 10;
le noeud 6 est relié pour la communication au noeud 0, au noeud 2, au noeud 7, au noeud 8 et au noeud 10;
le noeud 7 est relié pour la communication au noeud 1, au noeud 3, au noeud 6, au noeud 9, et au noeud 11;
le noeud 8 est relié pour la communication au noeud 0, au noeud 3, au noeud 5, au noeud 6, et au noeud 9;
le noeud 9 est relié pour la communication au noeud 1, au noeud 2, au noeud 4, au noeud 7, au noeud 8;
le noeud 10 est relié pour la communication au noeud 1, au noeud 2, au noeud 5, au noeud 6, et au noeud 11; et
le noeud 11 est relié pour la communication au noeud 0, au noeud 3, au noeud 4, au noeud 7, et au noeud 10;
on reconfigure le réseau en effectuant l'une au moins des étapes suivantes :
on ajoute un noeud 12 au réseau, et
on supprime le noeud 11 du réseau.

70. Procédé selon la revendication 69, dans lequel l'étape d'ajout comprend les opérations suivantes :
on supprime la liaison de communication entre le noeud 11 et le noeud 4;
on supprime la liaison de communication entre le noeud 10 et le noeud 5;
on supprime la liaison de communication entre le noeud 8 et le noeud 6;
on supprime la liaison de communication entre le noeud 9 et le noeud 7;
on relie pour la communication le noeud 12 et le noeud 4;
on relie pour la communication le noeud 9 et le noeud 5;
on relie pour la communication le noeud 11 et le noeud 6;
on relie pour la communication le noeud 12 et le noeud 7;
on relie pour la communication le noeud 12 et le noeud 8; et
on relie pour la communication le noeud 12 et le noeud 10.

71. Procédé selon la revendication 69, dans lequel l'étape de suppression comprend les opérations suivantes :
on supprime la liaison de communication entre le noeud 11 et le noeud 0;
on supprime la liaison de communication entre le noeud 11 et le noeud 3;
on supprime la liaison de communication entre le noeud 11 et le noeud 4;
on supprime la liaison de communication entre le noeud 11 et le noeud 7;
on supprime la liaison de communication entre le noeud 11 et le noeud 10;
on relie pour la communication le noeud 3 et le noeud 0; et
on relie pour la communication le noeud 7 et le noeud 4.

72. Procédé selon la revendication 69, dans lequel l'étape de reconfiguration comprend :
l'ajout d'un noeud 12 et d'un noeud 13 au réseau.

73. Procédé selon la revendication 72, dans lequel l'étape de reconfiguration comprend les étapes suivantes :
on supprime la liaison de communication entre le noeud 11 et le noeud 4;
on supprime la liaison de communication entre le noeud 10 et le noeud 5;
on supprime la liaison de communication entre le noeud 8 et le noeud 6;
on supprime la liaison de communication entre le noeud 9 et le noeud 7;
on relie pour la communication le noeud 12 et le noeud 4;
on relie pour la communication le noeud 12 et le noeud 7;
on relie pour la communication le noeud 12 et le noeud 8;
on relie pour la communication le noeud 12 et le noeud 10;
on relie pour la communication le noeud 13 et le noeud 5;
on relie pour la communication le noeud 13 et le noeud 6;
on relie pour la communication le noeud 13 et le noeud 9;
on relie pour la communication le noeud 13 et le noeud 11; et
on relie pour la communication le noeud 13 et le noeud 12.

74. Procédé selon la revendication 69, dans lequel l'étape de reconfiguration comprend :
la suppression du noeud 10 et du noeud .11 du réseau.

75. Procédé selon la revendication 74, dans lequel l'étape de reconfiguration comprend les étapes suivantes :
on supprime la liaison de communication entre le noeud 10 et le noeud 1;
on supprime la liaison de communication entre le noeud 10 et le noeud 2;
on supprime la liaison de communication entre le noeud 10 et le noeud 5;
on supprime la liaison de communication entre le noeud 10 et le noeud 6;
on supprime la liaison de communication entre le noeud 11 et le noeud 0;
on supprime la liaison de communication entre le noeud 11 et le noeud 3;
on supprime la liaison de communication entre le noeud 11 et le noeud 4;
on supprime la liaison de communication entre le noeud 11 et le noeud 7;
on supprime la liaison de communication entre le noeud 11 et le noeud 10;
on relie pour la communication le noeud 2 et le noeud 1;
on relie pour la communication le noeud 6 et le noeud 4;
on relie pour la communication le noeud 7 et le noeud 5; et
on relie pour la communication le noeud 3 et le noeud 0.

76. Procédé dans un système réparti, comprenant les étapes suivantes :
on établit un réseau ayant treize noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, et un noeud 12, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 12;
le noeud 5 est relié pour la communication au noeud 1, au noeud 3, au noeud 4, au noeud 6 et au noeud 8;
le noeud 6 est relié pour la communication au noeud 0, au noeud 2, au noeud 5, au noeud 7 et au noeud 10;
le noeud 7 est relié pour la communication au noeud 1, au noeud 3, au noeud 6, au noeud 11, et au noeud 12;
le noeud 8 est relié pour la communication au noeud 0, au noeud 3, au noeud 5, au noeud 9, et au noeud 12;
le noeud 9 est relié pour la communication au noeud 1, au noeud 2, au noeud 4, au noeud 8, et au noeud 11;
le noeud 10 est relié pour la communication au noeud 1, au noeud 2, au noeud 6, au noeud 11, et au noeud 12;
le noeud 11 est relié pour la communication au noeud 0, au noeud 3, au noeud 7, au noeud 9, et au noeud 10; et
le noeud 12 est relié pour la communication au noeud 4, au noeud 7, au noeud 8, et au noeud 10;
on reconfigure le réseau en effectuant l'une au moins des étapes suivantes :
on ajoute un noeud 13 au réseau, et
on supprime le noeud 12 du réseau.

77. Procédé selon la revendication 76, dans lequel l'étape d'ajout comprend les opérations suivantes :
on supprime la liaison de communication entre le noeud 9 et le noeud 5;
on supprime la liaison de communication entre le noeud 11 et le noeud 6;
on relie pour la communication le noeud 13 et le noeud 5;
on relie pour la communication le noeud 13 et le noeud 6;
on relie pour la communication le noeud 13 et le noeud 9;
on relie pour la communication le noeud 13 et le noeud 11; et
on relie pour la communication le noeud 13 et le noeud 12.

78. Procédé selon la revendication 76, dans lequel l'étape de suppression comprend les opérations suivantes :
on supprime la liaison de communication entre le noeud 12 et le noeud 4;
on supprime la liaison de communication entre le noeud 9 et le noeud 5;
on supprime la liaison de communication entre le noeud 11 et le noeud 6;
on supprime la liaison de communication entre le noeud 12 et le noeud 7;
on supprime la liaison de communication entre le noeud 12 et le noeud 8;
on supprime la liaison de communication entre le noeud 12 et le noeud 10;
on relie pour la communication le noeud 11 et le noeud 4;
on relie pour la communication le noeud 10 et le noeud 5;
on relie pour la communication le noeud 8 et le noeud 6; et
on relie pour la communication le noeud 9 et le noeud 7.

79. Procédé dans un système réparti, comprenant les étapes suivantes :
on établit un réseau ayant quatorze noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, et un noeud 13, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 12;
le noeud 5 est relié pour la communication au noeud 1, au noeud 3, au noeud 4, au noeud 8 et au noeud 13;
le noeud 6 est relié pour la communication au noeud 0, au noeud 2, au noeud 7, au noeud 10 et au noeud 13;
le noeud 7 est relié pour la communication au noeud 1, au noeud 3, au noeud 6, au noeud 11, et au noeud 12;
le noeud 8 est relié pour la communication au noeud 0, au noeud 3, au noeud 5, au noeud 9, et au noeud 12;
le noeud 9 est relié pour la communication au noeud 1, au noeud 2, au noeud 4, au noeud 8, au noeud 13;
le noeud 10 est relié pour la communication au noeud 1, au noeud 2, au noeud 6, au noeud 11, et au noeud 12;
le noeud 11 est relié pour la communication au noeud 0, au noeud 3, au noeud 7, au noeud 10, et au noeud 13;
le noeud 12 est relié pour la communication au noeud 4, au noeud 7, au noeud 8, au noeud 10, et au noeud 13; et le noeud 13 est relié pour la communication au noeud 5, au noeud 6, au noeud 9, au noeud 11, et au noeud 12; et
on reconfigure le réseau en effectuant l'une au moins des étapes suivantes :
on ajoute un noeud 14 au réseau, et
on supprime le noeud 13 du réseau.

80. Procédé selon la revendication 79, dans lequel l'étape d'ajout comprend les opérations suivantes :
on supprime la liaison de communication entre le noeud 8 et le noeud 5;
on supprime la liaison de communication entre le noeud 10 et le noeud 6;
on relie pour la communication le noeud 14 et le noeud 5;
on relie pour la communication le noeud 14 et le noeud 6;
on relie pour la communication le noeud 14 et le noeud 8; et
on relie pour la communication le noeud 14 et le noeud 10.

81. Procédé selon la revendication 79, dans lequel l'étape de suppression comprend les opérations suivantes :
on supprime la liaison de communication entre le noeud 13 et le noeud 5;
on supprime la liaison de communication entre le noeud 13 et le noeud 6;
on supprime la liaison de communication entre le noeud 13 et le noeud 9;
on supprime la liaison de communication entre le noeud 13 et le noeud 11;
on supprime la liaison de communication entre le noeud 13 et le noeud 12;
on relie pour la communication le noeud 9 et le noeud 5; et
on relie pour la communication le noeud 11 et le noeud 6.

82. Procédé selon la revendication 79, dans lequel l'étape de reconfiguration comprend :
l'ajout d'un noeud 14 et d'un noeud 15 au réseau.

83. Procédé selon la revendication 82, dans lequel l'étape de reconfiguration comprend les étapes suivantes :
on supprime la liaison de communication entre le noeud 8 et le noeud 5;
on supprime la liaison de communication entre le noeud 10 et le noeud 6;
on supprime la liaison de communication entre le noeud 9 et le noeud 4;
on supprime la liaison de communication entre le noeud 11 et le noeud 7;
on relie pour la communication le noeud 14 et le noeud 5;
on relie pour la communication le noeud 14 et le noeud 6;
on relie pour la communication le noeud 14 et le noeud 8;
on relie pour la communication le noeud 14 et le noeud 10;
on relie pour la communication le noeud 15 et le noeud 4;
on relie pour la communication le noeud 15 et le noeud 7;
on relie pour la communication le noeud 15 et le noeud 9;
on relie pour la communication le noeud 15 et le noeud 11; et
on relie pour la communication le noeud 15 et le noeud 14.

84. Procédé selon la revendication 79, dans lequel l'étape de reconfiguration comprend :
la suppression du noeud 12 et du noeud 13 du réseau.

85. Procédé selon la revendication 84, dans lequel l'étape de reconfiguration comprend les étapes suivantes :
on supprime la liaison de communication entre le noeud 12 et le noeud 4;
on supprime la liaison de communication entre le noeud 12 et le noeud 7;
on supprime la liaison de communication entre le noeud 12 et le noeud 8;
on supprime la liaison de communication entre le noeud 12 et le noeud 10;
on supprime la liaison de communication entre le noeud 13 et le noeud 5;
on supprime la liaison de communication entre le noeud 13 et le noeud 6;
on supprime la liaison de communication entre le noeud 13 et le noeud 9;
on supprime la liaison de communication entre le noeud 13 et le noeud 11;
on supprime la liaison de communication entre le noeud 13 et le noeud 12;
on relie pour la communication le noeud 11 et le noeud 4;
on relie pour la communication le noeud 10 et le noeud 5;
on relie pour la communication le noeud 8 et le noeud 6; et
on relie pour la communication le noeud 9 et le noeud 7.

86. Procédé dans un système réparti, comprenant les étapes suivantes :
on établit un réseau ayant quinze noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, un noeud 13, et un noeud 14, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9 et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 9 et au noeud 12;
le noeud 5 est relié pour la communication au noeud 1, au noeud 3, au noeud 4, au noeud 13 et au noeud 14;
le noeud 6 est relié pour la communication au noeud 0, au noeud 2, au noeud 7, au noeud 13 et au noeud 14;
le noeud 7 est relié pour la communication au noeud 1, au noeud 3, au noeud 6, au noeud 11, et au noeud 12;
le noeud 8 est relié pour la communication au noeud 0, au noeud 3, au noeud 9, au noeud 12, et au noeud 14;
le noeud 9 est relié pour la communication au noeud 1, au noeud 2, au noeud 4, au noeud 8, au noeud 13;
le noeud 10 est relié pour la communication au noeud 1, au noeud 2, au noeud 11, au noeud 12, et au noeud 14;
le noeud 11 est relié pour la communication au noeud 0, au noeud 3, au noeud 7, au noeud 10, et au noeud 13;
le noeud 12 est relié pour la communication au noeud 4, au noeud 7, au noeud 8, au noeud 10, et au noeud 13;
le noeud 13 est relié pour la communication au noeud 5, au noeud 6, au noeud 9, au noeud 11, et au noeud 12; et
le noeud 14 est relié pour la communication au noeud 5, au noeud 6, au noeud 8, et au noeud 10; et
on reconfigure le réseau en effectuant l'une au moins des étapes suivantes :
on ajoute un noeud 15 au réseau, et
on supprime le noeud 14 du réseau.

87. Procédé selon la revendication 86, dans lequel l'étape d'ajout comprend les opérations suivantes :
on supprime la liaison de communication entre le noeud 9 et le noeud 4;
on supprime la liaison de communication entre le noeud 11 et le noeud 7;
on relie pour la communication le noeud 15 et le noeud 4;
on relie pour la communication le noeud 15 et le noeud 7;
on relie pour la communication le noeud 15 et le noeud 9;
on relie pour la communication le noeud 15 et le noeud 11; et
on relie pour la communication le noeud 15 et le noeud 14.

88. Procédé selon la revendication 86, dans lequel l'étape de suppression comprend les opérations suivantes :
on supprime la liaison de communication entre le noeud 14 et le noeud 5;
on supprime la liaison de communication entre le noeud 14 et le noeud 6;
on supprime la liaison de communication entre le noeud 14 et le noeud 8;
on supprime la liaison de communication entre le noeud 14 et le noeud 10;
on relie pour la communication le noeud 8 et le noeud 5; et
on relie pour la communication le noeud 10 et le noeud 6.

89. Procédé dans un système réparti, comprenant les étapes suivantes :
on établit un réseau comprenant au moins six noeuds, les noeuds incluant un noeud 0, un noeud 1, un noeud 2, un noeud 3, un noeud 4 et un noeud 5, dans lequel chacun des noeuds est relié pour la communication à chaque autre noeud; et
on ajoute un noeud 6 au réseau en effectuant les étapes suivantes :
on supprime la liaison de communication entre le noeud 2 et le noeud 0;
on supprime la liaison de communication entre le noeud 4 et le noeud 3;
on relie pour la communication le noeud 6 au noeud 0;
on relie pour la communication le noeud 6 au noeud 2;
on relie pour la communication le noeud 6 au noeud 3; et
on relie pour la communication le noeud 6 au noeud 4.

90. Procédé dans un système réparti, comprenant les étapes suivantes :
on établit un réseau comprenant six noeuds, les noeuds incluant un noeud 0, un noeud 1, un noeud 2, un noeud 3, un noeud 4 et un noeud 5, dans lequel chacun des six noeuds est relié pour la communication à chaque autre noeud; et
on ajoute un noeud 6 et un noeud 7 au réseau en effectuant les étapes suivantes :
on supprime la liaison de communication entre le noeud 2 et le noeud 0;
on supprime la liaison de communication entre le noeud 4 et le noeud 3;
on supprime la liaison de communication entre le noeud 3 et le noeud 1;
on supprime la liaison de communication entre le noeud 5 et le noeud 2;
on relie pour la communication le noeud 6 au noeud 0;
on relie pour la communication le noeud 6 au noeud 2;
on relie pour la communication le noeud 6 au noeud 3;
on relie pour la communication le noeud 6 au noeud 4;
on relie pour la communication le noeud 7 au noeud 1;
on relie pour la communication le noeud 7 au noeud 2;
on relie pour la communication le noeud 7 au noeud 3;
on relie pour la communication le noeud 7 au noeud 5; et
on relie pour la communication le noeud 7 au noeud 6.

91. Procédé dans un système réparti comme défini dans l'une des revendications 11 à 19 et contenant un réseau avec des noeuds, chacun des noeuds ayant des ports et une table de routage pour router le trafic à travers le réseau, comprenant les étapes suivantes :
on configure le réseau pour maximiser l'usage des ports;
on rend le réseau opérationnel de façon que les noeuds soient capables de communiquer par l'intermédiaire du réseau en utilisant un routage statique; et
on reconfigure le réseau pendant que le réseau reste opérationnel en fournissant à chacun des noeuds des routages qui routent le trafic de manière à contourner une partie du réseau affectée par la reconfiguration.

92. Procédé selon la revendication 91, dans lequel le routage statique est effectué sans blocage.

93. Procédé selon la revendication 91, dans lequel l'étape de reconfiguration comprend l'ajout d'un nouveau noeud au réseau.

94. Procédé selon la revendication 91, dans lequel l'étape de reconfiguration comprend l'ajout de deux nouveaux noeuds au réseau.

95. Procédé selon la revendication 91, dans lequel l'étape de reconfiguration comprend la suppression de l'un des noeuds du réseau.

96. Procédé selon la revendication 91, dans lequel l'étape de reconfiguration comprend la suppression de deux des noeuds du réseau.

97. Procédé selon la revendication 91, dans lequel l'étape de reconfiguration comprend :
le remplacement des tables de routage par des tables de routage intérimaires qui incluent les routages qui routent le trafic de façon à contourner une partie du réseau affectée par la reconfiguration;
l'accomplissement de la reconfiguration; et
la substitution de nouvelles tables de routage à la place des tables de routage intérimaires.

98. Procédé selon la revendication 97, dans lequel les tables de routage intérimaires sont sans blocage.

99. Procédé selon la revendication 91, dans lequel le réseau a un noeud 0, un noeud 1, un noeud 2, un noeud 3, un noeud 4, un noeud 5, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1 et 3-5, et indirectement vers le noeud 2 à travers le noeud 3,
(ii) on route des paquets directement du noeud 1 vers l'un des noeuds 0 et 2-5,
(iii) on route des paquets directement du noeud 2 vers l'un des noeuds 1 et 3-5, et indirectement vers le noeud 0 à travers le noeud 1,
(iv) on route des paquets directement du noeud 3 vers l'un des noeuds 0-2 et 5, et indirectement vers le noeud 4 à travers le noeud 5,
(v) on route des paquets directement du noeud 4 vers l'un des noeuds 0-2 et 5, et indirectement vers le noeud 3 à travers le noeud 2,
(vi) on route des paquets directement du noeud 5 vers l'un des noeuds 1-4.

100. Procédé selon la revendication 91, dans lequel le réseau a un noeud 0, un noeud 1, un noeud 2, un noeud 3, un noeud 4, un noeud 5, et un noeud 6 et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1 et 3-6, et indirectement vers le noeud 2 à travers le noeud 3,
(ii) on route des paquets directement du noeud 1 vers l'un des noeuds 0, 2, 4 et 5, et indirectement vers le noeud 3 à travers le noeud 2 et vers le noeud 6 à travers le noeud 4,
(iii) on route des paquets directement du noeud 2 vers l'un des noeuds 1 et 3, 4 et 6, et indirectement vers le noeud 0 à travers le noeud 1 et vers le noeud 5 à travers le noeud 4,
(iv) on route des paquets directement du noeud 3 vers l'un des noeuds 0, 2, 5 et 6, et indirectement vers le noeud 1 à travers le noeud 0 et vers le noeud 4 à travers le noeud 5;
(v) on route des paquets directement du noeud 4 vers l'un des noeuds 0-2, 5 et 6, et indirectement vers le noeud 3 à travers le noeud 2,
(vi) on route des paquets directement du noeud 5 vers l'un des noeuds 0, 1, 3 et 4, et indirectement vers le noeud 2 à travers le noeud 3 et vers le noeud 6 à travers le noeud 3, et
(vii) on route des paquets directement du noeud 6 vers l'un des noeuds 0 et 2-4, et indirectement vers le noeud 1 à travers le noeud 0 et vers le noeud 5 à travers le noeud 4.

101. Procédé selon la revendication 91, dans lequel le réseau a un noeud 0, un noeud 1, un noeud 2, un noeud 3, un noeud 4, un noeud 5, un noeud 6, et un noeud 7, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1 et 3, 4 et 6, et indirectement vers le noeud 2 à travers le noeud 3, vers le noeud 5 à travers le noeud 4 et vers le noeud 7 à travers le noeud 6,
(ii) on route des paquets directement du noeud 1 vers l'un des noeuds 0, 2, 4, 5 et 7, et indirectement vers le noeud 3 à travers le noeud 2 et vers le noeud 6 à travers le noeud 7,
(iii) on route des paquets directement du noeud 2 vers l'un des noeuds 1, 3, 4, 6 et 7, et indirectement vers le noeud 0 à travers le noeud 1 et vers le noeud 5 à travers le noeud 4,
(iv) on route des paquets directement du noeud 3 vers l'un des noeuds 0, 2, 5 et 7, et indirectement vers le noeud 1 à travers le noeud 0, vers le noeud 4 à travers le noeud 5, et vers le noeud 6 à travers le noeud 7;
(v) on route des paquets directement du noeud 4 vers l'un des noeuds 0-2, 5 et 6, et indirectement vers le noeud 3 à travers le noeud 2, et vers le noeud 7 à travers le noeud 6;
(vi) on route des paquets directement du noeud 5 vers l'un des noeuds 0, 1, 3, 4 et 7 et indirectement vers le noeud 0 à travers le noeud 1, vers le noeud 2 à travers le noeud 3, et vers le noeud 6 à travers le noeud 7,
(vii) on route des paquets directement du noeud 6 vers l'un des noeuds 0, 2, 4 et 7, et indirectement vers le noeud 1 à travers le noeud 0, vers le noeud 3 à travers le noeud 2, et vers le noeud 5 à travers le noeud 4, et
(viii) on route des paquets directement du noeud 7 vers l'un des noeuds 1-3 et 5, 6, et indirectement vers le noeud 0 à travers le noeud 1, et vers le noeud 4 à travers le noeud 5.

102. Procédé selon la revendication 91, dans lequel le réseau a un noeud 0, un noeud 1, un noeud 2, un noeud 3, un noeud 4, un noeud 5, un noeud 6, un noeud 7, et un noeud 8 et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1, 3, 4, 6 et 8, et indirectement vers le noeud 2 à travers le noeud 3, vers le noeud 5 à travers le noeud 4, et vers le noeud 7 à travers le noeud 6,
(ii) on route des paquets directement du noeud 1 vers l'un des noeuds 0, 2, 5 et 7, et indirectement vers le noeud 3 à travers le noeud 2, vers le noeud 4 à travers le noeud 5, vers le noeud 6 à travers le noeud 7, et vers le noeud 8 à travers le noeud 5,
(iii) on route des paquets directement du noeud 2 vers l'un des noeuds 1, 3, 4 et 6, et indirectement vers le noeud 0 à travers le noeud 1, vers le noeud 5 à travers le noeud 4, vers le noeud 7 à travers le noeud 6, et vers le noeud 8 à travers le noeud 6,
(iv) on route des paquets directement du noeud 3 vers l'un des noeuds 0, 2, 5, 7 et 8, et indirectement vers le noeud 1 à travers le noeud 0, vers le noeud 4 à travers le noeud 5, et vers le noeud 6 à travers le noeud 7,
(v) on route des paquets directement du noeud 4 vers l'un des noeuds 0, 2, 5 et 6, et indirectement vers le noeud 1 à travers le noeud 0, vers le noeud 3 à travers le noeud 2, vers le noeud 7 à travers le noeud 6, et vers le noeud 8 à travers le noeud 0,
(vi) on route des paquets directement du noeud 5 vers l'un des noeuds 1, 3, 4, 7 et 8, et indirectement vers le noeud 0 à travers le noeud 1, vers le noeud 2 à travers le noeud 3, et vers le noeud 6 à travers le noeud 7,
(vii) on route des paquets directement du noeud 6 vers l'un des noeuds 0, 2, 4, 7 et 8, et indirectement vers le noeud 1 à travers le noeud 0, vers le noeud 3 à travers le noeud 2, et vers le noeud 5 à travers le noeud 4,
(viii) on route des paquets directement du noeud 7 vers l'un des noeuds 1, 3, 5 et 6, et indirectement vers le noeud 0 à travers le noeud 1, vers le noeud 2 à travers le noeud 3, vers le noeud 4 à travers le noeud 5, et vers le noeud 8 à travers le noeud 3, et
(ix) on route des paquets directement du noeud 8 vers l'un des noeuds 0, 3, 5 et 6, et indirectement vers le noeud 1 à travers le noeud 0, vers le noeud 2 à travers le noeud 3, vers le noeud 4 à travers le noeud 5 et vers le noeud 7 à travers le noeud 6.

103. Procédé selon la revendication 91, dans lequel le réseau a un noeud 0, un noeud 1, un noeud 2, un noeud 3, un noeud 4, un noeud 5, un noeud 6, un noeud 7, un noeud 8 et un noeud 9, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1, 3, 4, 6 et 8, et indirectement vers le noeud 2 à travers le noeud 3, vers le noeud 5 à travers le noeud 4, vers le noeud 7 à travers le noeud 6, et vers le noeud 9 à travers le noeud 8,
(ii) on route des paquets directement du noeud 1 vers l'un des noeuds 0, 5, 7 et 9, et indirectement vers le noeud 2 à travers le noeud 9, vers le noeud 3 à travers le noeud 5, vers le noeud 4 à travers le noeud 5, vers le noeud 6 à travers le noeud 7, et vers le noeud 8 à travers le noeud 9,
(iii) on route des paquets directement du noeud 2 vers l'un des noeuds 3, 4, 6 et 9, et indirectement vers le noeud 0 à travers le noeud 6, vers le noeud 1 à travers le noeud 9, vers le noeud 5 à travers le noeud 4, vers le noeud 7 à travers le noeud 6, et vers le noeud 8 à travers le noeud 9,
(iv) on route des paquets directement du noeud 3 vers l'un des noeuds 0, 2, 5, 7 et 8, et indirectement vers le noeud 1 à travers le noeud 0, vers le noeud 4 à travers le noeud 5, vers le noeud 6 à travers le noeud 7 et vers le noeud 9 à travers le noeud 8,
(v) on route des paquets directement du noeud 4 vers l'un des noeuds 0, 2, 5 et 9, et indirectement vers le noeud 1 à travers le noeud 0, vers le noeud 3 à travers le noeud 2, vers le noeud 6 à travers le noeud 0, vers le noeud 7 à travers le noeud 9, et vers le noeud 8 à travers le noeud 9,
(vi) on route des paquets directement du noeud 5 vers l'un des noeuds 1, 3, 4, 7 et 8, et indirectement vers le noeud 0 à travers le noeud 1, vers le noeud 2 à travers le noeud 3, vers le noeud 6 à travers le noeud 8, vers le noeud 7 à travers le noeud 1 et vers le noeud 9 à travers le noeud 8,
(vii) on route des paquets directement du noeud 6 vers l'un des noeuds 0, 2, 7 et 8, et indirectement vers le noeud 1 à travers le noeud 0, vers le noeud 3 à travers le noeud 2, vers le noeud 4 à travers le noeud 2, vers le noeud 5 à travers le noeud 8 et vers le noeud 9 à travers le noeud 8,
(viii) on route des paquets directement du noeud 7 vers l'un des noeuds 1, 3, 6 et 9, et indirectement vers le noeud 0 à travers le noeud 1, vers le noeud 2 à travers le noeud 3, vers le noeud 4 à travers le noeud 5, vers le noeud 5 à travers le noeud 3, et vers le noeud 8 à travers le noeud 9,
(ix) on route des paquets directement du noeud 8 vers l'un des noeuds 0, 3, 5, 6 et 9, et indirectement vers le noeud 1 à travers le noeud 0, vers le noeud 2 à travers le noeud 3, vers le noeud 4 à travers le noeud 5 et vers le noeud 7 à travers le noeud 6, et
(x) on route des paquets directement du noeud 9 vers l'un des noeuds 1, 2, 4, 7 et 8, et indirectement vers le noeud 0 à travers le noeud 1, vers le noeud 3 à travers le noeud 2, vers le noeud 5 à travers le noeud 4 et vers le noeud 6 à travers le noeud 7.

104. Procédé selon la revendication 91, dans lequel le réseau a un noeud 0, un noeud 1, un noeud 2, un noeud 3, un noeud 4, un noeud 5, un noeud 6, un noeud 7, un noeud 8, un noeud 9, et un noeud 10, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1, 4, 6 et 8, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8 et vers le noeud 10 à travers le noeud 6,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7 et vers le noeud 8 à travers le noeud 9,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6 et vers le noeud 8 à travers le noeud 9,
(iv) on route des paquets directement du noeud 3 vers l'un des noeuds 2, 5, 7 et 8, et indirectement vers le noeud 0 à travers le noeud 8, vers le noeud 1 à travers le noeud 7, vers le noeud 4 à travers le noeud 5, vers le noeud 6 à travers le noeud 7, vers le noeud 9 à travers le noeud 8, et vers le noeud 10 à travers le noeud 5;
(v) on route des paquets directement du noeud 4 vers l'un des noeuds 0, 2, 5, 7 et 9, et indirectement vers le noeud 1 à travers le noeud 0, vers le noeud 3 à travers le noeud 2, vers le noeud 6 à travers le noeud 7, vers le noeud 7 à travers le noeud 9, vers le noeud 8 à travers le noeud 9 et vers le noeud 10 à travers le noeud 2;
(vi) on route des paquets directement du noeud 5 vers l'un des noeuds 1, 3, 4, 8 et 10, et indirectement vers le noeud 0 à travers le noeud 1, vers le noeud 2 à travers le noeud 3, vers le noeud 6 à travers le noeud 8, vers le noeud 7 à travers le noeud 1 et vers le noeud 9 à travers le noeud 8,
(vii) on route des paquets directement du noeud 6 vers l'un des noeuds 0, 2, 7, 8 et 10, et indirectement vers le noeud 1 à travers le noeud 0, vers le noeud 3 à travers le noeud 2, vers le noeud 4 à travers le noeud 2, vers le noeud 5 à travers le noeud 8 et vers le noeud 9 à travers le noeud 8,
(viii) on route des paquets directement du noeud 7 vers l'un des noeuds 1, 3, 6 et 9, et indirectement vers le noeud 0 à travers le noeud 1, vers le noeud 2 à travers le noeud 3, vers le noeud 4 à travers le noeud 9, vers le noeud 5 à travers le noeud 3, vers le noeud 8 à travers le noeud 9 et vers le noeud 10 à travers le noeud 1,
(ix) on route des paquets directement du noeud 8 vers l'un des noeuds 0, 3, 5, 6 et 9, et indirectement vers le noeud 1 à travers le noeud 0, vers le noeud 2 à travers le noeud 3, vers le noeud 4 à travers le noeud 5, vers le noeud 7 à travers le noeud 6 et vers le noeud 10 à travers le noeud 6,
(x) on route des paquets directement du noeud 9 vers l'un des noeuds 1, 2, 4, 7 et 8, et indirectement vers le noeud 0 à travers le noeud 1, vers le noeud 3 à travers le noeud 2, vers le noeud 5 à travers le noeud 4, vers le noeud 6 à travers le noeud 7 et vers le noeud 10 à travers le noeud 1, et
(xi) on route des paquets directement du noeud 10 vers l'un des noeuds 1, 2, 5 et 6, et indirectement vers le noeud 0 à travers le noeud 1, vers le noeud 3 à travers le noeud 2, vers le noeud 4 à travers le noeud 5, vers le noeud 7 à travers le noeud 6, vers le noeud 8 à travers le noeud 6 et vers le noeud 9 à travers le noeud 2.

105. Procédé selon la revendication 91, dans lequel le réseau a un noeud 0, un noeud 1, un noeud 2, un noeud 3, un noeud 4, un noeud 5, un noeud 6, un noeud 7, un noeud 8 un noeud 9, un noeud 10 et un noeud 11, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8 et vers le noeud 10 à travers le noeud 11,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9 et vers le noeud 11 à travers le noeud 10,
(iii) on route des paquets directement du noeud 2 vers l'un des noeuds 3, 4, 6, 9 et 10, et indirectement vers le noeud 0 à travers le noeud 4, vers le noeud 1 à travers le noeud 10, vers le noeud 5 à travers le noeud 4, vers le noeud 7 à travers le noeud 6, vers le noeud 8 à travers le noeud 9 et vers le noeud 11 à travers le noeud 10,
(iv) on route des paquets directement du noeud 3 vers l'un des noeuds 2, 5, 7, 8 et 11, et indirectement vers le noeud 0 à travers le noeud 8, vers le noeud 1 à travers le noeud 7, vers le noeud 4 à travers le noeud 5, vers le noeud 6 à travers le noeud 7, vers le noeud 9 à travers le noeud 8 et vers le noeud 10 à travers le noeud 11,
(v) on route des paquets directement du noeud 4 vers l'un des noeuds 0, 2, 5, 9 et 11, et indirectement vers le noeud 1 à travers le noeud 0, vers le noeud 3 à travers le noeud 2, vers le noeud 6 à travers le noeud 0, vers le noeud 7 à travers les noeuds 0 et 6, vers le noeud 8 à travers le noeud 9 et vers le noeud 10 à travers le noeud 11,
(vi) on route des paquets directement du noeud 5 vers l'un des noeuds 1, 3, 4 et 8, et indirectement vers le noeud 0 à travers le noeud 1, vers le noeud 2 à travers le noeud 3, vers le noeud 6 à travers les noeuds 1 et 7, vers le noeud 7 à travers le noeud 1, vers le noeud 9 à travers le noeud 8, vers le noeud 10 à travers le noeud 1 et vers le noeud 11 à travers le noeud 3,
(vii) on route des paquets directement du noeud 6 vers l'un des noeuds 0, 2, 7 et 10, et indirectement vers le noeud 1 à travers le noeud 0, vers le noeud 3 à travers le noeud 2, vers le noeud 4 à travers le noeud 2, vers le noeud 5 à travers les noeuds 2 et 4, vers le noeud 8 à travers le noeud 0, vers le noeud 9 à travers le noeud 2 et vers le noeud 11 à travers le noeud 10,
(viii) on route des paquets directement du noeud 7 vers l'un des noeuds 1, 3, 6 et 11, et indirectement vers le noeud 0 à travers le noeud 1, vers le noeud 2 à travers le noeud 3, vers le noeud 4 à travers les noeuds 3 et 5, vers le noeud 5 à travers le noeud 3, vers le noeud 8 à travers le noeud 3, vers le noeud 9 à travers le noeud 1 et vers le noeud 10 à travers le noeud 11,
(ix) on route des paquets directement du noeud 8 vers l'un des noeuds 0, 3, 5 et 9, et indirectement vers le noeud 1 à travers le noeud 0, vers le noeud 2 à travers le noeud 3, vers le noeud 4 à travers le noeud 5, vers le noeud 6 à travers le noeud 0, vers le noeud 7 à travers le noeud 3, vers le noeud 10 à travers les noeuds 0 et 11, et vers le noeud 11 à travers le noeud 0,
(x) on route des paquets directement du noeud 9 vers l'un des noeuds 1, 2, 4 et 8, et indirectement vers le noeud 0 à travers le noeud 1, vers le noeud 3 à travers le noeud 2, vers le noeud 5 à travers le noeud 4, vers le noeud 6 à travers le noeud 2, vers le noeud 7 à travers le noeud 1, vers le noeud 10 à travers le noeud 1, et vers le noeud 11 à travers les noeuds 1 et 10,
(xi) on route des paquets directement du noeud 10 vers l'un des noeuds 1, 2, 6 et 11, et indirectement vers le noeud 0 à travers le noeud 1, vers le noeud 3 à travers le noeud 2, vers le noeud 4 à travers le noeud 2, vers le noeud 5 à travers le noeud 1, vers le noeud 7 à travers le noeud 6, vers le noeud 8 à travers les noeuds 2 et 9, et vers le noeud 9 à travers le noeud 2, et
(xii) on route des paquets directement du noeud 11 vers l'un des noeuds 0, 3, 7 et 10, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 7, vers le noeud 8 à travers le noeud 3, et vers le noeud 9 à travers les noeuds 3 et 8.

106. Procédé selon la revendication 91, dans lequel le réseau a un noeud 0, un noeud 1, un noeud 2, un noeud 3, un noeud 4, un noeud 5, un noeud 6, un noeud 7, un noeud 8 un noeud 9, un noeud 10, un noeud 11, et un noeud 12 et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11 et vers le noeud 12 à travers le noeud 4,
(ii) on route des paquets directement du noeud 1 vers l'un des noeuds 0, 5, 7 et 9, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10 et vers le noeud 12 à travers le noeud 7,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10 et vers le noeud 12 à travers le noeud 10,
(iv) on route des paquets directement du noeud 3 vers l'un des noeuds 2, 5, 7, 8 et 11, et indirectement vers le noeud 0 à travers le noeud 8, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11 et vers le noeud 12 à travers le noeud 7,
(v) on route des paquets directement du noeud 4 vers l'un des noeuds 0, 2, 5, 9 et 12, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 9, vers le noeud 10 à travers le noeud 12 et vers le noeud 11 à travers le noeud 0,
(vi) on route des paquets directement du noeud 5 vers l'un des noeuds 1, 3, 4 et 8, et indirectement vers le noeud 0 à travers le noeud 1, vers le noeud 2 à travers le noeud 3, vers le noeud 6 à travers les noeuds 1 et 7, le noeud 7 à travers le noeud 1, vers le noeud 9 à travers le noeud 8, vers le noeud 10 à travers le noeud 1, vers le noeud 11 à travers le noeud 3 et vers le noeud 12 à travers le noeud 8,
(vii) on route des paquets directement du noeud 6 vers l'un des noeuds 0, 2, 7 et 10, et indirectement vers le noeud 1 à travers le noeud 0, vers le noeud 3 à travers le noeud 2, vers le noeud 4 à travers le noeud 2, vers le noeud 5 à travers les noeuds 2 et 4, vers le noeud 8 à travers le noeud 0, vers le noeud 9 à travers le noeud 2, vers le noeud 11 à travers le noeud 10 et vers le noeud 12 à travers le noeud 10,
(viii) on route des paquets directement du noeud 7 vers l'un des noeuds 1, 3, 6, 11 et 12, et indirectement vers le noeud 0 à travers le noeud 1, vers le noeud 2 à travers le noeud 3, vers le noeud 4 à travers le noeud 12, vers le noeud 5 à travers le noeud 3, vers le noeud 8 à travers le noeud 3, vers le noeud 9 à travers le noeud 1 et vers le noeud 10 à travers le noeud 11,
(ix) on route des paquets directement du noeud 8 vers l'un des noeuds 0, 3, 5, 9 et 12, et indirectement vers le noeud 1 à travers le noeud 0, vers le noeud 2 à travers le noeud 3, vers le noeud 4 à travers le noeud 5, vers le noeud 6 à travers le noeud 0, vers le noeud 7 à travers le noeud 12, vers le noeud 10 à travers le noeud 12 et vers le noeud 11 à travers le noeud 0,
(x) on route des paquets directement du noeud 9 vers l'un des noeuds 1, 2, 4, 8 et 11, et indirectement vers le noeud 0 à travers le noeud 1, vers le noeud 3 à travers le noeud 2, vers le noeud 5 à travers le noeud 4, vers le noeud 6 à travers le noeud 2, vers le noeud 7 à travers le noeud 1, vers le noeud 10 à travers le noeud 1, vers le noeud 11 à travers les noeuds 1 et 10, et vers le noeud 12 à travers le noeud 4,
(xi) on route des paquets directement du noeud 10 vers l'un des noeuds 1, 2, 6, 11 et 12, et indirectement vers le noeud 0 à travers le noeud 1, vers le noeud 3 à travers le noeud 2, vers le noeud 4 à travers le noeud 2, vers le noeud 5 à travers le noeud 1, vers le noeud 7 à travers le noeud 6, vers le noeud 8 à travers le noeud 12 et vers le noeud 9 à travers le noeud 2,
(xii) on route des paquets directement du noeud 11 vers l'un des noeuds 0, 3, 7 et 10, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 7, vers le noeud 8 à travers le noeud 3, vers le noeud 9 à travers les noeuds 3 et 8, et vers le noeud 12 à travers le noeud 7, et
(xiii) on route des paquets directement du noeud 12 vers l'un des noeuds 4, 7, 8 et 10, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 4, vers le noeud 6 à travers le noeud 7, vers le noeud 9 à travers le noeud 8 et vers le noeud 11 à travers le noeud 10.

107. Procédé selon la revendication 91, dans lequel le réseau a un noeud 0, un noeud 1, un noeud 2, un noeud 3, un noeud 4, un noeud 5, un noeud 6, un noeud 7, un noeud 8 un noeud 9, un noeud 10, un noeud 11, un noeud 12 et un noeud 13, et dans lequel l'étape de reconfiguration comprend:
le routage de paquets à travers le réseau pendant la reconfiguration sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11, vers le noeud 12 à travers le noeud 4 et vers le noeud 13 à travers le noeud 6,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10, vers le noeud 12 à travers le noeud 7 et vers le noeud 13 à travers le noeud 9,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10, vers le noeud 12 à travers le noeud 10 et vers le noeud 13 à travers le noeud 6,
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11, vers le noeud 12 à travers le noeud 7 et vers le noeud 13 à travers le noeud 11,
(v) on route des paquets directement du noeud 4 vers l'un des noeuds 0, 2, 5, 9 et 12, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 9, vers le noeud 10 à travers le noeud 12, vers le noeud 11 à travers le noeud 0 et vers le noeud 13 à travers le noeud 12,
(vi) on route des paquets directement du noeud 5 vers l'un des noeuds 1, 3, 4 et 13, et indirectement vers le noeud 0 à travers le noeud 1, vers le noeud 2 à travers le noeud 3, vers le noeud 6 à travers le noeud 13, vers le noeud 7 à travers le noeud 1, vers le noeud 8 à travers le noeud 3, vers le noeud 9 à travers le noeud 1, vers le noeud 10 à travers le noeud 1, vers le noeud 11 à travers le noeud 13 et vers le noeud 12 à travers le noeud 13,
(vii) on route des paquets directement du noeud 6 vers l'un des noeuds 0, 2, 7 et 13, et indirectement vers le noeud 1 à travers le noeud 0, vers le noeud 3 à travers le noeud 2, vers le noeud 4 à travers le noeud 2, vers le noeud 5 à travers le noeud 13, vers le noeud 8 à travers le noeud 0, vers le noeud 9 à travers le noeud 2, vers le noeud 10 à travers le noeud 2, vers le noeud 11 à travers le noeud 0 et vers le noeud 12 à travers le noeud 13,
(viii) on route des paquets directement du noeud 7 vers l'un des noeuds 1, 3, 6, 11 et 12, et indirectement vers le noeud 0 à travers le noeud 1, vers le noeud 2 à travers le noeud 3, vers le noeud 4 à travers le noeud 12, vers le noeud 5 à travers le noeud 3, vers le noeud 8 à travers le noeud 3, vers le noeud 9 à travers le noeud 1, vers le noeud 10 à travers le noeud 11 et vers le noeud 13 à travers le noeud 12,
(ix) on route des paquets directement du noeud 8 vers l'un des noeuds 0, 3, 9 et 12, et indirectement vers le noeud 1 à travers le noeud 0, vers le noeud 2 à travers le noeud 3, vers le noeud 4 à travers le noeud 12, vers le noeud 5 à travers le noeud 3, vers le noeud 6 à travers le noeud 0, vers le noeud 7 à travers le noeud 12, vers le noeud 10 à travers le noeud 12, vers le noeud 11 à travers le noeud 0 et vers le noeud 13 à travers le noeud 12,
(x) on route des paquets directement du noeud 9 vers l'un des noeuds 1, 2, 4, 8 et 13, et indirectement vers le noeud 0 à travers le noeud 1, vers le noeud 3 à travers le noeud 2, vers le noeud 5 à travers le noeud 4, vers le noeud 6 à travers le noeud 13, vers le noeud 7 à travers le noeud 1, vers le noeud 10 à travers le noeud 1, vers le noeud 11 à travers le noeud 13 et vers le noeud 12 à travers le noeud 13,
(xi) on route des paquets directement du noeud 10 vers l'un des noeuds 1, 2, 11 et 12, et indirectement vers le noeud 0 à travers le noeud 1, vers le noeud 3 à travers le noeud 2, vers le noeud 4 à travers le noeud 2, vers le noeud 5 à travers le noeud 1, vers le noeud 6 à travers le noeud 2, vers le noeud 7 à travers le noeud 12, vers le noeud 8 à travers le noeud 12, vers le noeud 9 à travers le noeud 2 et vers le noeud 13 à travers le noeud 12,
(xii) on route des paquets directement du noeud 11 vers l'un des noeuds 0, 3, 7, 10 et 13, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 7, vers le noeud 8 à travers le noeud 3, vers le noeud 9 à travers le noeud 13 et vers le noeud 12 à travers le noeud 13,
(xiii) on route des paquets directement du noeud 12 vers l'un des noeuds 4, 7, 8, 10 et 13, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 4, vers le noeud 6 à travers le noeud 7, vers le noeud 9 à travers le noeud 8 et vers le noeud 11 à travers le noeud 10, et
(xiv) on route des paquets directement du noeud 13 vers l'un des noeuds 5, 6, 9, 11 et 12, et indirectement vers le noeud 0 à travers le noeud 11, vers le noeud 1 à travers le noeud 9, vers le noeud 2 à travers le noeud 9, vers le noeud 3 à travers le noeud 5, vers le noeud 4 à travers le noeud 5, vers le noeud 7 à travers le noeud 6, vers le noeud 8 à travers le noeud 9 et vers le noeud 10 à travers le noeud 11.

108. Procédé selon la revendication 91, dans lequel le réseau a un noeud 0, un noeud 1, un noeud 2, un noeud 3, un noeud 4, un noeud 5, un noeud 6, un noeud 7, un noeud 8 un noeud 9, un noeud 10, un noeud 11, un noeud 12, un noeud 13, et un noeud 14 et dans lequel l'étape de reconfiguration comprend:
le routage de paquets à travers le réseau pendant la reconfiguration sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11, vers le noeud 12 à travers le noeud 4, vers le noeud 13 à travers le noeud 6 et vers le noeud 14 à travers le noeud 8,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10, vers le noeud 12 à travers le noeud 7, vers le noeud 13 à travers le noeud 5 et vers le noeud 14 à travers le noeud 5,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10, vers le noeud 12 à travers le noeud 10, vers le noeud 13 à travers le noeud 6 et vers le noeud 14 à travers le noeud 6,
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11, vers le noeud 12 à travers le noeud 7, vers le noeud 13 à travers le noeud 11 et vers le noeud 14 à travers le noeud 5,
(v) on route des paquets directement du noeud 4 vers l'un des noeuds 0, 2, 5 et 12, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 0, vers le noeud 9 à travers le noeud 2, vers le noeud 10 à travers le noeud 12, vers le noeud 11 à travers le noeud 0, vers le noeud 13 à travers le noeud 12 et vers le noeud 14 à travers le noeud 5,
(vi) on route des paquets directement du noeud 5 vers l'un des noeuds 1, 3, 4, 13 et 14, et indirectement vers le noeud 0 à travers le noeud 1, vers le noeud 2 à travers le noeud 3, vers le noeud 6 à travers le noeud 13, vers le noeud 7 à travers le noeud 1, vers le noeud 8 à travers le noeud 3, vers le noeud 9 à travers le noeud 1, vers le noeud 10 à travers le noeud 1, vers le noeud 11 à travers le noeud 13 et vers le noeud 12 à travers le noeud 13,
(vii) on route des paquets directement du noeud 6 vers l'un des noeuds 0, 2, 7, 13 et 14, et indirectement vers le noeud 1 à travers le noeud 0, vers le noeud 3 à travers le noeud 2, vers le noeud 4 à travers le noeud 2, vers le noeud 5 à travers le noeud 14, vers le noeud 8 à travers le noeud 14, vers le noeud 9 à travers le noeud 2, vers le noeud 10 à travers le noeud 2, vers le noeud 11 à travers le noeud 0 et vers le noeud 12 à travers le noeud 13,
(viii) on route des paquets directement du noeud 7 vers l'un des noeuds 1, 3, 6 et 12, et indirectement vers le noeud 0 à travers le noeud 1, vers le noeud 2 à travers le noeud 3, vers le noeud 4 à travers le noeud 12, vers le noeud 5 à travers le noeud 3, vers le noeud 8 à travers le noeud 3, vers le noeud 9 à travers le noeud 1, vers le noeud 10 à travers le noeud 1, vers le noeud 11 à travers le noeud 3, vers le noeud 13 à travers le noeud 12 et vers le noeud 14 à travers le noeud 6,
(ix) on route des paquets directement du noeud 8 vers l'un des noeuds 0, 3, 9, 12 et 14, et indirectement vers le noeud 1 à travers le noeud 0, vers le noeud 2 à travers le noeud 3, vers le noeud 4 à travers le noeud 12, vers le noeud 5 à travers le noeud 14, vers le noeud 6 à travers le noeud 0, vers le noeud 7 à travers le noeud 12, vers le noeud 10 à travers le noeud 12, vers le noeud 11 à travers le noeud 0 et vers le noeud 13 à travers le noeud 12,
(x) on route des paquets directement du noeud 9 vers l'un des noeuds 1, 2, 8 et 13, et indirectement vers le noeud 0 à travers le noeud 1, vers le noeud 3 à travers le noeud 2, vers le noeud 4 à travers le noeud 2, vers le noeud 5 à travers le noeud 13, vers le noeud 6 à travers le noeud 13, vers le noeud 7 à travers le noeud 1, vers le noeud 10 à travers le noeud 1, vers le noeud 11 à travers le noeud 13, vers le noeud 12 à travers le noeud 13 et vers le noeud 14 à travers le noeud 8,
(xi) on route des paquets directement du noeud 10 vers l'un des noeuds 1, 2, 11, 12 et 14, et indirectement vers le noeud 0 à travers le noeud 1, vers le noeud 3 à travers le noeud 2, vers le noeud 4 à travers le noeud 2, vers le noeud 5 à travers le noeud 14, vers le noeud 6 à travers le noeud 2, vers le noeud 7 à travers le noeud 12, vers le noeud 8 à travers le noeud 14, vers le noeud 9 à travers le noeud 2 et vers le noeud 13 à travers le noeud 12,
(xii) on route des paquets directement du noeud 11 vers l'un des noeuds 0, 3, 10 et 13, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 13, vers le noeud 7 à travers le noeud 3, vers le noeud 8 à travers le noeud 3, vers le noeud 9 à travers le noeud 13, vers le noeud 12 à travers le noeud 13 et vers le noeud 14 à travers le noeud 10,
(xiii) on route des paquets directement du noeud 12 vers l'un des noeuds 4, 7, 8, 10 et 13, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 4, vers le noeud 6 à travers le noeud 7, vers le noeud 9 à travers le noeud 8, vers le noeud 11 à travers le noeud 10 et vers le noeud 14 à travers le noeud 8,
(xiv) on route des paquets directement du noeud 13 vers l'un des noeuds 5, 6, 9, 11 et 12, et indirectement vers le noeud 0 à travers le noeud 11, vers le noeud 1 à travers le noeud 9, vers le noeud 2 à travers le noeud 9, vers le noeud 3 à travers le noeud 5, vers le noeud 4 à travers le noeud 5, vers le noeud 7 à travers le noeud 6, vers le noeud 8 à travers le noeud 9, vers le noeud 10 à travers le noeud 11 et vers le noeud 14 à travers le noeud 5, et
(xv) on route des paquets directement du noeud 14 vers l'un des noeuds 5, 6, 8 et 10, et indirectement vers le noeud 0 à travers le noeud 6, vers le noeud 1 à travers le noeud 10, vers le noeud 2 à travers le noeud 10, vers le noeud 3 à travers le noeud 8, vers le noeud 4 à travers le noeud 5, vers le noeud 7 à travers le noeud 6, vers le noeud 9 à travers le noeud 8, vers le noeud 11 à travers le noeud 10, vers le noeud 12 à travers le noeud 10, et vers le noeud 13 à travers le noeud 6.

109. Procédé selon la revendication 91, dans lequel le réseau a un noeud 0, un noeud 1, un noeud 2, un noeud 3, un noeud 4, et un noeud 5, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1 et 3-5, et indirectement vers le noeud 2 à travers le noeud 3.
(ii) on route des paquets directement du noeud 1 vers l'un des noeuds 0 et 2, 4 et 5, et indirectement vers le noeud 3 à travers le noeud 2,
(iii) on route des paquets directement du noeud 2 vers l'un des noeuds 1, 3 et 4, et indirectement vers le noeud 0 à travers le noeud 1, et vers noeud 5 à travers le noeud 4,
(iv) on route des paquets directement du noeud 3 vers l'un des noeuds 1, 2 et 5, et indirectement vers le noeud 1 à travers le noeud 0, et vers le noeud 4 à travers le noeud 5,
(v) on route des paquets directement du noeud 4 vers l'un des noeuds 0-2, et 5, et indirectement vers le noeud 3 à travers le noeud 2,
(vi) on route des paquets directement du noeud 5 vers l'un des noeuds 0, 1, 3 et 4, et indirectement vers le noeud 2 à travers le noeud 3.

110. Procédé selon la revendication 91, dans lequel le réseau a un noeud 0, un noeud 1, un noeud 2, un noeud 3, un noeud 4, un noeud 5, un noeud 6, et un noeud 7, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1 et 3, 4 et 6, et indirectement vers le noeud 2 à travers le noeud 3, vers le noeud 5 à travers le noeud 4 et vers le noeud 7 à travers le noeud 6,
(ii) on route des paquets directement du noeud 1 vers l'un des noeuds 0, 2, 5, et 7, et indirectement vers le noeud 3 à travers le noeud 2, vers le noeud 4 à travers le noeud 5 et vers le noeud 6 à travers le noeud 7,
(iii) on route des paquets directement du noeud 2 vers l'un des noeuds 1, 3, 4 et 6 et indirectement vers le noeud 0 à travers le noeud 1, vers noeud 5 à travers le noeud 4, et vers le noeud 7 à travers le noeud 6,
(iv) on route des paquets directement du noeud 3 vers l'un des noeuds 0, 2, 5 et 7 et indirectement vers le noeud 1 à travers le noeud 0, vers le noeud 4 à travers le noeud 5 et vers le noeud 6 à travers le noeud 7,
(v) on route des paquets directement du noeud 4 vers l'un des noeuds 0, 2, 5 et 6 et indirectement vers le noeud 1 à travers le noeud 0, vers le noeud 3 à travers le noeud 2 et vers le noeud 7 à travers le noeud 6,
(vi) on route des paquets directement du noeud 5 vers l'un des noeuds 0, 1, 3, 4 et 7, et indirectement vers le noeud 0 à travers le noeud 1, vers le noeud 2 à travers le noeud 3 et vers le noeud 6 à travers le noeud 7,
(vii) on route des paquets directement du noeud 6 vers l'un des noeuds 0, 2, 4 et 7, et indirectement vers le noeud 1 à travers le noeud 0, vers le noeud 3 à travers le noeud 2, et vers le noeud 5 à travers le noeud 4, et
(viii) on route des paquets directement du noeud 7 vers l'un des noeuds 1, 3, 5 et 6, et indirectement vers le noeud 0 à travers le noeud 1, vers le noeud 2 à travers le noeud 3, et vers le noeud 4 à travers le noeud 5.

111. Procédé selon la revendication 91, dans lequel le réseau a un noeud 0, un noeud 1, un noeud 2, un noeud 3, un noeud 4, un noeud 5, un noeud 6, un noeud 7, un noeud 8 et un noeud 9, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1, 4, 6 et 8, et indirectement vers le noeud 2 à travers le noeud 4, vers le noeud 3 à travers le noeud 8, vers le noeud 5 à travers le noeud 4, vers le noeud 7 à travers le noeud 6, et vers le noeud 9 à travers le noeud 8,
(ii) on route des paquets directement du noeud 1 vers l'un des noeuds 0, 5, 7 et 9, et indirectement vers le noeud 2 à travers le noeud 9, vers le noeud 3 à travers le noeud 5, vers le noeud 4 à travers le noeud 5, vers le noeud 6 à travers le noeud 7, et vers le noeud 8 à travers le noeud 9,
(iii) on route des paquets directement du noeud 2 vers l'un des noeuds 3, 4, 6 et 9, et indirectement vers le noeud 0 à travers le noeud 6, vers le noeud 1 à travers le noeud 9, vers le noeud 5 à travers le noeud 4, vers le noeud 7 à travers le noeud 6, et vers le noeud 8 à travers le noeud 9,
(iv) on route des paquets directement du noeud 3 vers l'un des noeuds 2, 5, 7 et 8, et indirectement vers le noeud 0 à travers le noeud 8, vers le noeud 1 à travers le noeud 7, vers le noeud 4 à travers le noeud 5, vers le noeud 6 à travers le noeud 7 et vers le noeud 9 à travers le noeud 8,
(v) on route des paquets directement du noeud 4 vers l'un des noeuds 0, 2, 5 et 9, et indirectement vers le noeud 1 à travers le noeud 0, vers le noeud 3 à travers le noeud 2, vers le noeud 6 à travers le noeud 0, vers le noeud 7 à travers le noeud 9, et vers le noeud 8 à travers le noeud 9,
(vi) on route des paquets directement du noeud 5 vers l'un des noeuds 1, 3, 4 et 8, et indirectement vers le noeud 0 à travers le noeud 1, vers le noeud 2 à travers le noeud 3, vers le noeud 6 à travers le noeud 8, vers le noeud 7 à travers le noeud 1 et vers le noeud 9 à travers le noeud 8,
(vii) on route des paquets directement du noeud 6 vers l'un des noeuds 0, 2, 7 et 8, et indirectement vers le noeud 1 à travers le noeud 0, vers le noeud 3 à travers le noeud 2, vers le noeud 4 à travers le noeud 2, vers le noeud 5 à travers le noeud 8 et vers le noeud 9 à travers le noeud 8,
(viii) on route des paquets directement du noeud 7 vers l'un des noeuds 1, 3, 6 et 9, et indirectement vers le noeud 0 à travers le noeud 1, vers le noeud 2 à travers le noeud 3, vers le noeud 4 à travers le noeud 9, vers le noeud 5 à travers le noeud 3, et vers le noeud 8 à travers le noeud 9,
(ix) on route des paquets directement du noeud 8 vers l'un des noeuds 0, 3, 5, 6 et 9, et indirectement vers le noeud 1 à travers le noeud 0, vers le noeud 2 à travers le noeud 3, vers le noeud 4 à travers le noeud 5 et vers le noeud 7 à travers le noeud 6, et
(x) on route des paquets directement du noeud 9 vers l'un des noeuds 1, 2, 4, 7 et 8, et indirectement vers le noeud 0 à travers le noeud 1, vers le noeud 3 à travers le noeud 2, vers le noeud 5 à travers le noeud 4 et vers le noeud 6 à travers le noeud 7.

112. Procédé selon la revendication 91, dans lequel le réseau a un noeud 0, un noeud 1, un noeud 2, un noeud 3, un noeud 4, un noeud 5, un noeud 6, un noeud 7, un noeud 8 un noeud 9, un noeud 10 et un noeud 11, et dans lequel l'étape de reconfiguration comprend :
le routage de paquets à travers le réseau pendant la reconfiguration sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8 et vers le noeud 10 à travers le noeud 11,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9 et vers le noeud 11 à travers le noeud 10,
(iii) on route des paquets directement du noeud 2 vers l'un des noeuds 3, 4, 6, 9 et 10, et indirectement vers le noeud 0 à travers le noeud 4, vers le noeud 1 à travers le noeud 10, vers le noeud 5 à travers le noeud 4, vers le noeud 7 à travers le noeud 6, vers le noeud 8 à travers le noeud 9 et vers le noeud 11 à travers le noeud 10,
(iv) on route des paquets directement du noeud 3 vers l'un des noeuds 2, 5, 7, 8 et 11, et indirectement vers le noeud 0 à travers le noeud 8, vers le noeud 1 à travers le noeud 7, vers le noeud 4 à travers le noeud 5, vers le noeud 6 à travers le noeud 7, vers le noeud 9 à travers le noeud 8 et vers le noeud 10 à travers le noeud 11,
(v) on route des paquets directement du noeud 4 vers l'un des noeuds 0, 2, 5 et 9, et indirectement vers le noeud 1 à travers le noeud 0, vers le noeud 3 à travers le noeud 2, vers le noeud 6 à travers le noeud 0, vers le noeud 7 à travers les noeuds 0 et 6, vers le noeud 8 à travers le noeud 9 et vers le noeud 10 à travers le noeud 2,
(vi) on route des paquets directement du noeud 5 vers l'un des noeuds 1, 3, 4 et 8, et indirectement vers le noeud 0 à travers le noeud 1, vers le noeud 2 à travers le noeud 3, vers le noeud 6 à travers les noeuds 1 et 7, vers le noeud 7 à travers le noeud 1, vers le noeud 9 à travers le noeud 8, vers le noeud 10 à travers le noeud 1 et vers le noeud 11 à travers le noeud 3,
(vii) on route des paquets directement du noeud 6 vers l'un des noeuds 0, 2, 7 et 10, et indirectement vers le noeud 1 à travers le noeud 0, vers le noeud 3 à travers le noeud 2, vers le noeud 4 à travers le noeud 2, vers le noeud 5 à travers les noeuds 2 et 4, vers le noeud 8 à travers le noeud 0, vers le noeud 9 à travers le noeud 2 et vers le noeud 11 à travers le noeud 10,
(viii) on route des paquets directement du noeud 7 vers l'un des noeuds 1, 3, 6 et 11, et indirectement vers le noeud 0 à travers le noeud 1, vers le noeud 2 à travers le noeud 3, vers le noeud 4 à travers les noeuds 3 et 5, vers le noeud 5 à travers le noeud 3, vers le noeud 8 à travers le noeud 3, vers le noeud 9 à travers le noeud 1 et vers le noeud 10 à travers le noeud 11,
(ix) on route des paquets directement du noeud 8 vers l'un des noeuds 0, 3, 5 et 9, et indirectement vers le noeud 1 à travers le noeud 0, vers le noeud 2 à travers le noeud 3, vers le noeud 4 à travers le noeud 5, vers le noeud 6 à travers le noeud 0, vers le noeud 7 à travers le noeud 3, vers le noeud 10 à travers les noeuds 0 et 11, et vers le noeud 11 à travers le noeud 0,
(x) on route des paquets directement du noeud 9 vers l'un des noeuds 1, 2, 4 et 8, et indirectement vers le noeud 0 à travers le noeud 1, vers le noeud 3 à travers le noeud 2, vers le noeud 5 à travers le noeud 4, vers le noeud 6 à travers le noeud 2, vers le noeud 7 à travers le noeud 1, vers le noeud 10 à travers le noeud 1, et vers le noeud 11 à travers les noeuds 1 et 10,
(xi) on route des paquets directement du noeud 10 vers l'un des noeuds 1, 2, 6 et 11, et indirectement vers le noeud 0 à travers le noeud 1, vers le noeud 3 à travers le noeud 2, vers le noeud 4 à travers le noeud 2, vers le noeud 5 à travers le noeud 1, vers le noeud 7 à travers le noeud 6, vers le noeud 8 à travers les noeuds 2 et 9, et vers le noeud 9 à travers le noeud 2, et
(xii) on route des paquets directement du noeud 11 vers l'un des noeuds 0, 3, 7 et 10, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 7, vers le noeud 8 à travers le noeud 3, et vers le noeud 9 à travers les noeuds 3 et 8.

113. Procédé selon la revendication 91, dans lequel le réseau a un noeud 0, un noeud 1, un noeud 2, un noeud 3, un noeud 4, un noeud 5, un noeud 6, un noeud 7, un noeud 8 un noeud 9, un noeud 10, un noeud 11, un noeud 12 et un noeud 13, et dans lequel l'étape de reconfiguration comprend:
le routage de paquets à travers le réseau pendant la reconfiguration sur la base de l'une au moins des configurations de routage suivantes :
(i) on route des paquets directement du noeud 0 vers l'un des noeuds 1, 4, 6, 8 et 11, et indirectement vers le noeud 2 à travers le noeud 4, vers le noeud 3 à travers le noeud 8, vers le noeud 5 à travers le noeud 4, vers le noeud 7 à travers le noeud 6, vers le noeud 9 à travers le noeud 8, vers le noeud 10 à travers le noeud 11, vers le noeud 12 à travers le noeud 8 et vers le noeud 13 à travers le noeud 6,
(ii) on route des paquets directement du noeud 1 vers l'un des noeuds 0, 5, 7, 9 et 10, et indirectement vers le noeud 2 à travers le noeud 9, vers le noeud 3 à travers le noeud 5, vers le noeud 4 à travers le noeud 5, vers le noeud 6 à travers le noeud 7, vers le noeud 8 à travers le noeud 9, vers le noeud 11 à travers le noeud 10, vers le noeud 12 à travers le noeud 7 et vers le noeud 13 à travers le noeud 9,
(iii) on route des paquets directement du noeud 2 vers l'un des noeuds 3, 4, 6, 9 et 10, et indirectement vers le noeud 0 à travers le noeud 6, vers le noeud 1 à travers le noeud 10, vers le noeud 5 à travers le noeud 4, vers le noeud 7 à travers le noeud 6, vers le noeud 8 à travers le noeud 9, vers le noeud 11 à travers le noeud 10, vers le noeud 12 à travers le noeud 10 et vers le noeud 13 à travers le noeud 6,
(iv) on route des paquets directement du noeud 3 vers l'un des noeuds 2, 5, 7, 8 et 11, et indirectement vers le noeud 0 à travers le noeud 11, vers le noeud 1 à travers le noeud 7, vers le noeud 4 à travers le noeud 5, vers le noeud 6 à travers le noeud 7, vers le noeud 9 à travers le noeud 8, vers le noeud 10 à travers le noeud 11, vers le noeud 12 à travers le noeud 7 et vers le noeud 13 à travers le noeud 11,
(v) on route des paquets directement du noeud 4 vers l'un des noeuds 0, 2, 5 et 12, et indirectement vers le noeud 1 à travers le noeud 0, vers le noeud 3 à travers le noeud 2, vers le noeud 6 à travers le noeud 0, vers le noeud 7 à travers le noeud 12, vers le noeud 8 à travers le noeud 0, vers le noeud 9 à travers le noeud 2, vers le noeud 10 à travers le noeud 12, vers le noeud 11 à travers le noeud 0 et vers le noeud 13 à travers le noeud 12,
(vi) on route des paquets directement du noeud 5 vers l'un des noeuds 1, 3, 4 et 13, et indirectement vers le noeud 0 à travers le noeud 1, vers le noeud 2 à travers le noeud 3, vers le noeud 6 à travers le noeud 13, vers le noeud 7 à travers le noeud 1, vers le noeud 8 à travers le noeud 3, vers le noeud 9 à travers le noeud 1, vers le noeud 10 à travers le noeud 1, vers le noeud 11 à travers le noeud 13 et vers le noeud 12 à travers le noeud 13,
(vii) on route des paquets directement du noeud 6 vers l'un des noeuds 0, 2, 7 et 13, et indirectement vers le noeud 1 à travers le noeud 0, vers le noeud 3 à travers le noeud 2, vers le noeud 4 à travers le noeud 2, vers le noeud 5 à travers le noeud 13, vers le noeud 8 à travers le noeud 0, vers le noeud 9 à travers le noeud 2, vers le noeud 10 à travers le noeud 2, vers le noeud 11 à travers le noeud 0 et vers le noeud 12 à travers le noeud 13,
(viii) on route des paquets directement du noeud 7 vers l'un des noeuds 1, 3, 6 et 12, et indirectement vers le noeud 0 à travers le noeud 1, vers le noeud 2 à travers le noeud 3, vers le noeud 4 à travers le noeud 12, vers le noeud 5 à travers le noeud 3, vers le noeud 8 à travers le noeud 3, vers le noeud 9 à travers le noeud 1, vers le noeud 10 à travers le noeud 1, vers le noeud 11 à travers le noeud 3, et vers le noeud 13 à travers le noeud 12,
(ix) on route des paquets directement du noeud 8 vers l'un des noeuds 0, 3, 9 et 12, et indirectement vers le noeud 1 à travers le noeud 0, vers le noeud 2 à travers le noeud 3, vers le noeud 4 à travers le noeud 12, vers le noeud 5 à travers le noeud 3, vers le noeud 6 à travers le noeud 0, vers le noeud 7 à travers le noeud 12, vers le noeud 10 à travers le noeud 12, vers le noeud 11 à travers le noeud 0 et vers le noeud 13 à travers le noeud 12,
(x) on route des paquets directement du noeud 9 vers l'un des noeuds 1, 2, 8 et 13, et indirectement vers le noeud 0 à travers le noeud 1, vers le noeud 3 à travers le noeud 2, vers le noeud 4 à travers le noeud 2, vers le noeud 5 à travers le noeud 13, vers le noeud 6 à travers le noeud 13, vers le noeud 7 à travers le noeud 1, vers le noeud 10 à travers le noeud 1, vers le noeud 11 à travers le noeud 13 et vers le noeud 12 à travers le noeud 13,
(xi) on route des paquets directement du noeud 10 vers l'un des noeuds 1, 2, 11 et 12, et indirectement vers le noeud 0 à travers le noeud 1, vers le noeud 3 à travers le noeud 2, vers le noeud 4 à travers le noeud 2, vers le noeud 5 à travers le noeud 1, vers le noeud 6 à travers le noeud 2, vers le noeud 7 à travers le noeud 12, vers le noeud 8 à travers le noeud 12, vers le noeud 9 à travers le noeud 2 et vers le noeud 13 à travers le noeud 12,
(xii) on route des paquets directement du noeud 11 vers l'un des noeuds 0, 3, 10 et 13, et indirectement vers le noeud 1 à travers le noeud 0, vers le noeud 2 à travers le noeud 3, vers le noeud 4 à travers le noeud 0, vers le noeud 5 à travers le noeud 3, vers le noeud 6 à travers le noeud 13, vers le noeud 7 à travers le noeud 3, vers le noeud 8 à travers le noeud 3, vers le noeud 9 à travers le noeud 13 et vers le noeud 12 à travers le noeud 13,
(xiii) on route des paquets directement du noeud 12 vers l'un des noeuds 4, 7, 8, 10 et 13, et indirectement vers le noeud 0 à travers le noeud 8, vers le noeud 1 à travers le noeud 10, vers le noeud 2 à travers le noeud 4, vers le noeud 3 à travers le noeud 8, vers le noeud 5 à travers le noeud 4, vers le noeud 6 à travers le noeud 7, vers le noeud 9 à travers le noeud 8 et vers le noeud 11 à travers le noeud 10, et
(xiv) on route des paquets directement du noeud 13 vers l'un des noeuds 5, 6, 9, 11 et 12, et indirectement vers le noeud 0 à travers le noeud 11, vers le noeud 1 à travers le noeud 9, vers le noeud 2 à travers le noeud 9, vers le noeud 3 à travers le noeud 5, vers le noeud 4 à travers le noeud 5, vers le noeud 7 à travers le noeud 6, vers le noeud 8 à travers le noeud 9 et vers le noeud 10 à travers le noeud 11.

114. Procédé dans un système réparti, comprenant les étapes suivantes :
on établit un réseau comprenant seize noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, un noeud 13, un noeud 14 et un noeud 15, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9, et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 12 et au noeud 15;
le noeud 5 est relié pour la communication au noeud 1, au noeud 3, au noeud 4, au noeud 13 et au noeud 14;
le noeud 6 est relié pour la communication au noeud 0, au noeud 2, au noeud 7, au noeud 13 et au noeud 14;
le noeud 7 est relié pour la communication au noeud 1, au noeud 3, au noeud 6, au noeud 12 et au noeud 15;
le noeud 8 est relié pour la communication au noeud 0, au noeud 3, au noeud 9, au noeud 12 et au noeud 14;
le noeud 9 est relié pour la communication au noeud 1, au noeud 2, au noeud 8, au noeud 13 et au noeud 15;
le noeud 10 est relié pour la communication au noeud 1, au noeud 2, au noeud 11, au noeud 12 et au noeud 14;
le noeud 11 est relié pour la communication au noeud 0, au noeud 3, au noeud 10, au noeud 13 et au noeud 15;
le noeud 12 est relié pour la communication au noeud 4, au noeud 7, au noeud 8, au noeud 10 et au noeud 13;
le noeud 13 est relié pour la communication au noeud 5, au noeud 6, au noeud 9, au noeud 11 et au noeud 12;
le noeud 14 est relié pour la communication au noeud 5, au noeud 6, au noeud 8, au noeud 10 et au noeud 15; et
le noeud 15 est relié pour la communication au noeud 4, au noeud 7, au noeud 9, au noeud 11 et au noeud 14;
et on reconfigure le réseau en effectuant les étapes suivantes :
on supprime la liaison entre le noeud 15 et le noeud 4;
on supprime la liaison entre le noeud 15 et le noeud 7;
on supprime la liaison entre le noeud 15 et le noeud 9;
on supprime la liaison entre le noeud 15 et le noeud 11;
on supprime la liaison entre le noeud 15 et le noeud 14;
on ajoute une liaison entre le noeud 9 et le noeud 4; et
on ajoute une liaison entre le noeud 11 et le noeud 7.

115. Procédé dans un système réparti, comprenant les étapes suivantes :
on établit un réseau comprenant au moins seize noeuds qui ne sont pas entièrement connectés, les noeuds incluant un noeud 0, un noeud 1, un noeud 2, un noeud 3, un noeud 4, un noeud 5, un noeud 6, un noeud 7, un noeud 8, un noeud 9, un noeud 10, un noeud 11, un noeud 12, un noeud 13, un noeud 14 et un noeud 15, les noeuds étant reliés pour la communication de la façon suivante :
le noeud 0 est relié pour la communication au noeud 1, au noeud 4, au noeud 6, au noeud 8 et au noeud 11;
le noeud 1 est relié pour la communication au noeud 0, au noeud 5, au noeud 7, au noeud 9, et au noeud 10;
le noeud 2 est relié pour la communication au noeud 3, au noeud 4, au noeud 6, au noeud 9 et au noeud 10;
le noeud 3 est relié pour la communication au noeud 2, au noeud 5, au noeud 7, au noeud 8 et au noeud 11;
le noeud 4 est relié pour la communication au noeud 0, au noeud 2, au noeud 5, au noeud 12 et au noeud 15;
le noeud 5 est relié pour la communication au noeud 1, au noeud 3, au noeud 4, au noeud 13 et au noeud 14;
le noeud 6 est relié pour la communication au noeud 0, au noeud 2, au noeud 7, au noeud 13 et au noeud 14;
le noeud 7 est relié pour la communication au noeud 1, au noeud 3, au noeud 6, au noeud 12 et au noeud 15;
le noeud 8 est relié pour la communication au noeud 0, au noeud 3, au noeud 9, au noeud 12 et au noeud 14;
le noeud 9 est relié pour la communication au noeud 1, au noeud 2, au noeud 8, au noeud 13 et au noeud 15;
le noeud 10 est relié pour la communication au noeud 1, au noeud 2, au noeud 11, au noeud 12 et au noeud 14;
le noeud 11 est relié pour la communication au noeud 0, au noeud 3, au noeud 10, au noeud 13 et au noeud 15;
le noeud 12 est relié pour la communication au noeud 4, au noeud 7, au noeud 8, au noeud 10 et au noeud 13;
le noeud 13 est relié pour la communication au noeud 5, au noeud 6, au noeud 9, au noeud 11 et au noeud 12;
le noeud 14 est relié pour la communication au noeud 5, au noeud 6, au noeud 8, au noeud 10 et au noeud 15; et
le noeud 15 est relié pour la communication au noeud 4, au noeud 7, au noeud 9, au noeud 11 et au noeud 14;
et on reconfigure le réseau en effectuant les étapes suivantes :
on supprime la liaison entre le noeud 14 et le noeud 5;
on supprime la liaison entre le noeud 14 et le noeud 6;
on supprime la liaison entre le noeud 14 et le noeud 8;
on supprime la liaison entre le noeud 14 et le noeud 10;
on supprime la liaison entre le noeud 15 et le noeud 4;
on supprime la liaison entre le noeud 15 et le noeud 7;
on supprime la liaison entre le noeud 15 et le noeud 9;
on supprime la liaison entre le noeud 15 et le noeud 11;
on supprime la liaison entre le noeud 15 et le noeud 14;
on ajoute une liaison entre le noeud 8 et le noeud 5;
on ajoute une liaison entre le noeud 10 et le noeud 6;
on ajoute une liaison entre le noeud 9 et le noeud 4; et
on ajoute une liaison entre le noeud 11 et le noeud 7.
